(19) Europäisches Patentamt
European Patent Office
Office européen des brevets

(11) **EP 4 582 320 A1**

(12) **EUROPEAN PATENT APPLICATION**
published in accordance with Art. 153(4) EPC

(43) Date of publication:
**09.07.2025 Bulletin 2025/28**

(21) Application number: **23845353.4**

(22) Date of filing: **14.07.2023**

(51) International Patent Classification (IPC):
***B60W 20/10*** (2016.01)    ***B60K 6/44*** (2007.10)
***B60W 30/18*** (2012.01)    ***B60W 50/00*** (2006.01)

(52) Cooperative Patent Classification (CPC):
**B60K 6/44; B60W 10/06; B60W 10/08;
B60W 20/10; B60W 30/18; B60W 50/00;
Y02T 10/62**

(86) International application number:
**PCT/CN2023/107593**

(87) International publication number:
**WO 2024/022141 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 CN 202210901733**

(71) Applicants:
• **LCB International Inc.
Tortola, VG1110 (VG)**

• **Gesang, Wangjie
Shanghai 201603 (CN)**
• **Cha, Wei
Shanghai 201603 (CN)**

(72) Inventors:
• **GESANG, Wangjie
Shanghai 201603 (CN)**
• **CHA, Wei
Shanghai 201603 (CN)**

(74) Representative: **Murgitroyd & Company
165-169 Scotland Street
Glasgow G5 8PL (GB)**

(54) **INTELLIGENT MULTI-MODE HYBRID ASSEMBLY AND INTELLIGENT CONNECTED ELECTRIC HEAVY TRUCK**

(57)    An intelligent connected electric (ACE) heavy truck system equipped with an intelligent multi-mode hybrid (iMMH) assembly system, as well as a vehicle supervision and control method, is presented. This system ensures industry-leading power performance and braking effectiveness for ACE heavy trucks while automatically optimizing both energy conservation and emission reduction based on the vehicle's driving data and three-dimensional electronic map information of roads. In this application, the conventional analog electric control (AEC) strategy is replaced by a novel digital pulse control (DPC) strategy. This transformation converts the complex working conditions of the AEC engine in hybrid vehicles into preset fixed linear working conditions for the DPC engine. Consequently, the multi-variable nonlinear technical challenge of simultaneously minimizing actual fuel consumption and pollutant emissions of an ACE heavy truck is significantly simplified, enabling multi-variable orthogonal decoupling. Furthermore, the demands on vehicle-end computing resources for real-time supervision and control of hybrid vehicles are reduced, enhancing the performance, convergence speed, and robustness of the monitoring algorithm. Ultimately, the system achieves an infinitely close approximation to the real-time global optimal solution for energy conservation and emission reduction at high cost-effectiveness.

Fig. 1A

**Description**

Technical Field

The disclosure relates to an AI-connected-electrified (ACE) heavy-truck configured with an intelligent multimode hybrid (iMMH) powertrain, the digital pulse-control (DPC) engine in the iMMH powertrain, and the ACE heavy-truck whole vehicle intelligent predictive supervisory control (iPSC) strategy and algorithm. Leveraging rule-based or machine learning (ML) based iPSC strategy and algorithm to implement predictive SoC control (PSC) on the battery pack, the disclosure achieves simultaneous minimization of long-haul ACE heavy-truck real-world fuel-consumption and pollutant-emissions.

Background Technology

Road freight is vital to all major economies in the world. The long-haul heavy-truck (mainly refers to a heavy-truck with an average working day range over 500 kilometers, over 80 % of the running mileage on a controlled-access expressway, and the maximum total weight of a compliant vehicle is not less than 30 tons) is the backbone force of the road freight industry in various countries, It is also a major player of fuel consumption (CO2) and pollutant emissions (nitrogen oxide NOx, particulate matter PM and so on) in the transportation field , and it is one of the key areas of the energy-saving and emission-reduction supervision and control by various levels of governments and industries.

USA is the world leader in the promulgation and implementation of heavy-truck energy-saving and emission-reduction mandatory regulations. The second phase of greenhouse gas regulations for medium/heavy engines (diesel or natural gas) and commercial vehicles (GHG-II for short) clearly stipulates that from 2021 to 2027, all new medium/heavy engines and commercial vehicles registered and sold in USA will be required to increase the vehicle fuel economy (FE, mile/gallon) year by year, to reduce fuel consumption (FC, liter/a hundred mile) or carbon emission (CO2, gram/kilometer) under the condition of keeping the pollutant emission limits . At the end of 2021, ultra-low (NOx) emission Omnibus regulations were formally promulgated in California, requiring new diesel heavy-trucks sold in California from 2024 onwards to reduce NOx emissions by 75 % compared to the EPA-2010 limits; the new diesel heavy-truck sold in California after 2027, the NOx emission must be reduced by 90 % comparing with EPA-2010 limit value; "California Omnibus regulations." For short. The US federal government is expected to promulgate an ultra-low emission regulation similar to that of California at the end of 2022, which will be implemented in USA after 2028.

In 2019, the EU passed its first mandatory regulation on the emission of heavy-truck carbon emission in history ("European heavy-truck carbon emission regulation" for short); Under the premise of keeping the exhuast gas pollutant emission limit value of the heavy-truck Euro-VI unchanged, the regulation takes the 2019 diesel heavy-truck carbon emission (fuel consumption) as the base-line, and requires that the European new heavy-truck carbon emission (CO2, gram/kilometer) is reduced by 15 % in 2025 by 30 % in 2030. In the next two years, the European Union will also promulgate new pollutant emission regulations for diesel commercial vehicles. It is expected to be implemented by 2030, and the NOx emission limit for new diesel commercial vehicles will be at least 75 percent lower than that for Euro-VI vehicles.

China began nationwide implementation of the GB-5 mandatory emission regulations for large commercial vehicles in 2017, and began nationwide implementation of the GB-6 mandatory emission regulations in July 2021; the GB-6 standard is basically the same as the Euro-VI standard and the US EPA-2010 standard in terms of the emission limit value of the exhuast gas pollutant, and some individual limit value can be even more stringent; At the same time, China also has laws on heavy-truck fuel consumption or carbon emission. Emission regulations are the most important market driving forces for the development of vehicle powertrain technology in all countries of the world. Starting 2021, the powertrain of China's BG-6 heavy-truck will be at the same level as the powertrain of the current North American or European heavy-truck for the first time in history. Based on the historical experience of the promulgation of China BG-1 to BG-6 regulations using Euro-I to Euro-VI regulations as templates over the past 20 years, it is expected that China will most likely follow up the European Union to introduce the GB-7 mandatory emission regulations.

After 2021, the world's three major heavy-truck markets (China, North America, and the European Union) will further focus on reducing the real-world fuel consumption and carbon emissions of heavy-trucks under the preconditions of year-over-year more stringent vehicle emission control. A long-haul diesel heavy-truck has an average fuel cost of more than 60,000 US dollars per year in Europe and US, and annual fuel cost of heavy-truck diesel in China can be as high as 400,000 RMB per year. Nearly 2.5 million freight heavy-trucks operating in North America (mainly in USA and Canada) have an annual total fuel cost of more than 100 billion US dollars, and more than 5 million freight heavy-trucks in China have an annual total fuel cost of more than 1,000 billion RMB. It is of great significance to the vehicle manufactures, drivers, trucking fleets, cargo carriers, governments, society and other stake holders to simultaneously reduce real-world fuel consumption and pollutant emissions of the heavy-trucks through technical innovations.

USA has been among the most advanced in the world in terms of heavy-truck emissions and fuel consumption regulations and technological research and development. The US Energy Department (DOE) led and funded a total of 100 million US dollars of "SuperTruck" project (SuperTruck I, 2011-2016), four technical teams led by the four major US heavy-truck OEMs developed four super heavy-truck sample vehicles through five years of research and development. At the end of 2016, the targets of 50 % improvement in fuel economy (gallon/ton) and 50 % improvement in diesel engine thermal efficiency (BTE) over the 2009 baselines were achieved and exceeded by the end of 2016. In $tag1 year, the US Energy Department again subsidized five technical teams totaling with 80 million US dollars for research and development in the SuperTruck II project. It is expected that these five SuperTruck sample vehicles will achieve a diesel thermal efficiency (BTE) of 55 % and a heavy-truck cargo fuel economy (gallon/ton) improvement of 100 % by 2022. Each technical team is led by a heavy-truck OEM, the total resource investment of the enterprise itself is higher than the subsidy amount obtained from the US government; The two-phase SuperTruck I&II projects took ten years in total (2011 ~ 2022), and the U.S. federal government invested more than 400 million US dollars in total; The technical pathways, R&D, and test results of the nine super heavy-truck sample vehicles represent the top technical level of the global heavy-truck industry today.

The SuperTruck project in USA includes a set of various heavy-truck energy-saving and emission-reduction technical solutions that the North American heavy-truck industry believes to be commercially available by 2027. The main challenge in the future is how to improve the comprehensive performance-price ratio of the volume production of various energy-saving and emission-reduction technical solutions, and to speed up the pace of the mass production and commercialization. At present, the long-term challenge in the US heavy-truck industry is how to meet the mandatory requirement of GHG-II heavy-truck fuel consumption in 2027 on the premise of effectively controlling the price increase of new heavy-trucks. It is worth noting that none of the nine technical teams in the US SuperTruck project mentioned above have adopted a heavy-truck technical pathway of full deisel-electric hybrid truck; Obviously, the mainstream view of the US heavy-truck industry today believes that the Full Hybrid HDT technical solution for long-haul is difficult to achieve mass-production by 2027.

In the past ten years, in the world's major automobile markets, especially in the world's largest China automobile market, passenger vehicles and large buses of pure electric or fuel-electricity hybrid power have set a successful precedent for large-scale commercialization under the strong government subsidies. However, in China/US/EU, the three world-wide largest markets with the most advanced technology in the long-haul heavy-trucks, experts at home and abroad generally believe that it is very difficult to achieve volume commercialization of pure electric heavy-trucks or near-zero-emission full-hybrid heavy-trucks before 2030 under the condition of no large-scale and long-term government subsidies, limited by the current production ready lithium ion power battery technology and performance limits, and lack of charging infrastructure. In other words, the volume commercialization of the long-haul heavy electric truck is the top technical challenge that the global new energy vehicle industry has not yet solved. According to the Bloomberg NEF 2019 edition of the global electric vehicle forecast report, it is expected that by 2040, the sale of new long-haul trucks in China, United States, and the European Union will have only 20% take-rate of electric heavy-trucks (battery heavy-trucks, hydrogen fuel battery heavy-trucks, full hybrid trucks), of all in the long-haul heavy-trucks in use, electric heavy-truck market penetration is only 10 %; In other words, more than 90 % of the heavy duty trucks still contain engines (diesel engines or natural gas engines). Reports on Heavy Vehicle Technology Potential and Cost Analysis are available in Europe and USA. 1) Reports on Ritrucko, Inc. 2017, entitled "Heavy Vehicle Technology Potential and Cost Analysis". Ritrucko (2017), Final Report for ICCT; 2) ICCT Oscar Delgado and other experts published in January 2018: European Heavy-Duty Vehicles: Cost Effectiveness Fuel-Efficiency Technologies for Long-Haul Tractor-Trailers in the 2025-2030 Timeframe "; 3) ICCT Felipe Rrodriguez, June 28, 2018 "HDV Fuel-Efficiency Technologies"; 4) US Energy Department Report "Adoption of New Fuel-Efficient Technologies from SuperTruck" submitted to Congress in June 2016. 5) North American Freight Efficiency Association (NACFE) 2019 Annual Report entitled "Pure electric, Mixing, or Alternative Fuel Heavy-trucks"; "Viable Class 7/8Electric, Hybrid and Alternative Fuel Tractors", North American Council for Freight Efficiency, level 2019.

The real-world fuel consumption (liter/one-hundred-kilometer) of the fuel-electricity hybrid vehicle is highly correlated with the duty-cycle of the vehicle. Under the urban working condition, the average vehicle speed is low (less than 40 kilometers per hour (kph)) with frequent vehicle active acceleration, deceleration, or braking; under expressway working condition, the average vehicle speed is high (more than 60 kph) with infrequent active acceleration, deceleration or braking. The hybrid vehicle recycles the energy by the regenerative braking of the traction motor so as to save the energy and reduce the emission. For a long time, the global automotive industry and academia have reached the following consensus on the fuel-saving potential of hybrid vehicles (light vehicles or heavy vehicles): under the urban working condition, the hybrid vehicle can save more fuel than the traditional fuel vehicle, and the comprehensive fuel consumption can be reduced by more than 30 %; However, under the expressway working condition (the average speed over60 kph; little active acceleration or braking deceleration), the engine can work stably in its high-efficiency area for a long time, the chance of regenerative braking to recover energy is less, the fuel-saving effect of the hybrid vehicle is not obvious compared with the traditional fuel vehicle, the comprehensive fuel consumption reduction is not more than 10 %; Especially for the series hybrid vehicle, because the engine electric power generation and the pure electric propulsion need to go through several energy conversions, the fuel saving effect is obviously less than that of the parallel hybrid vehicle under the charge sustaining mode and the expressway working condition, and it may even consume more fuel than the traditional fuel vehicle.

Among the mass production long-haul heavy-trucks, the diesel engine accounts for more than 95%, and the remaining 5% is mainly natural gas engine, and the other alternative fuel (methane, hydrogen and so on) engine accounts for less than 1%; The heavy-truck diesel engine can work stably in the combustion high-efficiency area under the high-speed working condition, the fuel-saving marginal benefit is gradually reduced after being continuously improved for several decades, the technical challenge of the fuel consumption and emission reduction of the traditional diesel engine is getting larger, and the cost is getting higher. In the past 25 years, the average fuel consumption in the US, Europe, and China long-haul heavy-truck industry (L /100 kM) has been reduced by less than 1.5 % per year; For heavy-truck manufacturers in Europe, United States or China, the actual comprehensive fuel consumption of long-haul heavy-trucks (liter/one-hundred-kilometer) annual reduction in a market validated high cost effectiveness manner are enormous technical and commercial challenges. See ACEA, European Automobile Manufacturers' Association (ACEA)'s working document on the European Union's new CO2 emission standards in August 2018, " The European Commission Proposal on CO2 Standards for New Heavy-Duty "; At that time, ACEA believed that in the mandatory standard of new carbon emission (CO2) to be approved by the European Union, the fuel consumption in 2025 to be reduced by 15 %, and the fuel consumption in 2030 to be reduced by 30 % to be overly aggressive, the development time of the new heavy-truck powertrain is very long, at present, there is no technical route with high cost to performance ratio and production ready, so as to realize the 2025 EU fuel-saving regulation targets; It can be seen that further double-digit percentage fuel consumption reduction of the modern heavy-truck is extremely challenging in both technology and commerce. Obviously, any fuel-saving technology has the dual benefits of reducing vehicle exhaust emissions and greenhouse gas (or carbon) emissions. In other words, the energy saving of the vehicle is beneficial to the emission reduction (pollutant and CO2), but the active emission reduction of the exhuast gas pollutants is not necessarily beneficial to the fuel saving; In fact, most of the technical solutions that reduce the emissions of exhuast gas pollutants (represented by NOx) already in volume production or production ready are generally at the cost of increasing fuel consumption (i.e., CO2 emission).

Under the premise of guaranteeing the vehicle propulsion performance, the simultaneous optimizations of actual operation of the whole vehicle (that is, RDE operation) energy-saving and emission-reduction (CO2 and NOx emission are minimized at the same time) are the two ultimate goals that the global auto industry have been pursuing forever; In the past 20 years, the mainstream heavy-truck OEM and related research institutions in Europe and USA have invested huge amount of manpower and material resources to actively explore and develop various heavy-truck fuel-saving and emission-reducing technologies; But by the end of 2021, European and American mainstream heavy-truck OEMs and tier-1 suppliers have not yet publicized any innovative technical pathway or solution for ultra-low emission diesel heavy-truck or full fuel-electricity hybrid heavy-truck that can meet Euro-VII emission regulations and European CO2 regulations 2030 carbon emission target values or California ultra-low emission Omnibus regulations and US Federal GHG-II regulations 2027 carbon emission target values and are production ready.

For the traditional internal combustion engine heavy-truck or fuel-electricity hybrid heavy-truck, the energy-saving core index (Core Metrics) is fuel consumption (FC, L/100kM) or carbon emission (CO2, gram/kilometer); The emission reduction core index is NOx emission (gram/kilowatt hour or gram/horsepower hour). The technical problem to be solved by the disclosure is how to explore and implement the innovative technical solution which is feasible in both economic and engineering aspects, so as to realize the energy-saving and emission-reduction simultaneous optimization of long-haul heavy-truck. The connotation and extension of "energy-saving and emission-reduction" in the present disclosure include: 1) energy saving refers to reducing CO2 emission (i.e., reducing fuel consumption or gas consumption), and emission reduction refers to reducing NOx emission; 2) energy saving or emission reduction, referring to CO2 or NOx optimization one-out-of-two (namely minimization), belonging to zero-sum balance; 3) energy-saving and emission-reduction, which means that both CO2 and NOx are optimized (i.e., minimized) at the same time, belonging to the positive-sum balance. Obviously, how to realize the simultaneous optimization of energy-saving and emission-reduction of long-haul heavy-trucks starting from 2027, to meet the US Federal GHG-II regulation (CO2) and the US California Ultra Low Emission Omnibus Regulations (NOx), the European Union (EU) and China upcoming new CO2/NOx emission regulations is an urgent technical problem to be solved by the global heavy-truck industry.

The vast majority of mass-produced or production ready (within five years) diesel engine energy-saving and emission-reduction technical measures can only achieve "zero-sum balance" (Zero-sum Trade-off) between CO2 and NOx emissions; that is, the two can only be one down and another up, it is very difficult to be one down and another flat or both down; However, the technical solution with high performance-to-cost ratio and near-term production-ready and having "Positive-sum Balance" between CO2 and NOx emissions (Positive-sum Trade-off; one down and one flat or both down) is very rare (such as the heavy diesel engine cylinder-deactivation (CDA) technology at the current R&D stage) and is the Holy Grail that the global heavy-truck industry has been pursuing for decades.

Under the premise of the same level of the total cost of the vehicle, the design of the traditional internal combustion engine vehicle has the "Impossible Triangle": The three metrics of high performance/low fuel consumption/low emission can only be optimized by selecting two among the three, and all three cannot be optimized at the same time. The buyer or user is more concerned about the high performance and low fuel consumption when the vehicle is actually used, the government (through the regulation) or society is more concerned about the low fuel consumption and low emission when the vehicle is actually used; and the vehicle OEM must balance among all three metrics, and at the same time meet the needs of customers and government regulations.

A world-famous automobile group sold nearly 600,000 clean diesel passenger vehicles in USA, claiming to have found a high performance-to-cost ratio and production-ready technical solution capable of simultaneous optimizing the diesel engine $CO_2$ and NOx emissions; However, in 2015, the automobile group publicly admitted to the US government (EPA and CARB) that the emission control software was cheating and faking during the vehicle energy-saving and emission-reduction certification process; In the vehicle emission certification test, the software commands the diesel engine to adopt emission reduction control strategy to ensure the NOx emission to meet the standard stably, but at this time, the software does not care about the cost of high real-world fuel consumption (namely high $CO_2$ emission) or vehicle power reduction; while in vehicle actual driving environment (RDE - Real Driving Environment), the software directs the diesel engine to adopt a high performance and low fuel consumption control strategy, ensuring the minimum $CO_2$ emission (i.e., minimum fuel consumption); however at this time, the actual NOx emission is more than 20 times higher than the limit value of the regulation. The automobile group was eventually fined more than 20 billion US dollars by the governments of USA-led countries, and the reputation of the enterprise was greatly damaged; This "Diesel Gate" event shocked the world, reflects from one aspect that the technical solution with high performance-to-cost ratio and mass production, so as to achieve the beneficial effect of simultaneous optimization of diesel engine RDE fuel consumption and emission (namely $CO_2$ and NOx emission are minimized at the same time) is an important and urgent technical problem to be solved in the current global automobile industry. It should be emphasized that in the engine emission regulation certification process, as the hardware related to the emission, once the calibration software version is determined, as if it is carved in stone, it cannot be modified without permission; All engine calibration software must be re-authenticated after engineering changes.

The International Clean Transport Association (ICCT) issued a white paper in May 2020 on the analysis of emission standards for the actual operation of heavy-trucks in Europe and USA " In-use NOx Evaluation and Compliance Evaluation for Modern Heavy-Duty Vehicles in Europe and United States ", White Paper, ICCT, May 2020; According to the white paper, the modern diesel heavy-truck in Europe and US, under the actual driving environment (RDE), especially the low-speed low-load working condition or idle speed working condition with extremely challenging vehicle fuel consumption and emission, using a portable emission tester (PEMS) to measure emissions, the actual NOx emission value generally exceeds the standard; and under the urban working condition of engine low speed low load or idle speed operations, the modern US diesel heavy-truck (satisfying EPA-2010) RDE NOx emission value is 100% higher than that of the modern European diesel heavy-truck (satisfying Euro-VI), and both RDE values exceed the established standards; For example, when the vehicle speed is less than 25 mph (i.e., miles per hour, urban condition), the actual NOx emission average of the US heavy-truck is 1.1 g/bhp-hr (gram per horsepower-hour) and the NOx regulation limit of EPA-2010 is 0.2 g/bhp-hr; The NOx actual emission of the European heavy-truck is 0.5 g/bhp-hr and the NOx regulatory limit of the Euro-VI is 0.34 g/bhp-hr; When the vehicle speed is higher than 50 mph, the NOx actual emission average of the American and European heavy-trucks both meet the standard stably. Under the urban working condition filled with low speed and low load, the actual NOx emission of the US heavy-truck is generally obviously higher than that of the bottom layer of the European heavy-truck, the reason is that the US EPA-2010 emission regulation used for testing the actual operation emission of the RDE (that is, not exceeding the regulation, NTE Protocol; NTE specification for short) comparing with RDE actual operation emission test specification in Euro-VI (i.e., mobile average window specification, MAW Protocol) has major design flaws in terms of ensuring the high correlation between the laboratory emission certification test result and the RDE actual operation emission test result.

Global automobile industry consensus is that the diesel engine actual $CO_2$ and NOx emission values (RDE fuel consumption & emission) in low speed low load or idle speed working condition are obviously higher than the high-speed high-load working condition $CO_2$ and NOx emission values. However, the US NTE specification allows the emission data of all diesel engine torque loading rate (i.e., actual torque/peak torque) less than 30 %, power loading rate (i.e., actual power/peak power) less than 30 %, the engine exhaust temperature lower than 250 degrees C working condition to be excluded when judging whether the actual emission measurement result of the diesel heavy-truck RDE meets the emission standard; or, one can legally and regularly remove most (more than 90 %) high fuel consumption and high exhaust discharge RDE emission data when the engine exhaust temperature is lower than 250 degrees C under urban working condition;; leading to diesel heavy-truck nominally NTE standard NOx emission limit value meets the standard under the urban working condition, but the actual NOx emission limit value (RDE value) is most likely to be obviously over the standard limit and to be "legally over the limit". The US Federal Government (EPA) and the California Government (CARB) have recognized the design flaws of the NTE test specification in the current EPA-2010 regulations, and are actively preparing for the revision of relevant emission regulations and test regulations. For example, it increases the low-load and idle-speed circulation and comprehensive scoring weight in the engine emission certification, modifies the NTE test specification and so on, and blocks the loophole of the vehicle RDE emission running "legally over the standard limit" (NOx or PM). The characteristics of the vehicle urban working condition includes low vehicle speed (less than 25 miles per hour) or low engine load (power or torque loading rate less than 25 %). Because of the serious design flaws inherent in the US EPA-2010 emission regulation ISC emission NTE measurement method, nearly 2.5 million heavy vehicles in use in North America are "legally over the standard limit" under urban working condition with bad health effects on the urban population (especially the middle and low income urban residents close to the highway or logistics centers); It is a technical problem that cannot be solved by the existing technology (prior art). It is very difficult to reduce the emission of NOx and other pollutants generated by the high volume long-haul heavy-trucks under the urban working condition in the coming ten years through volume deployment of new zero emission heavy-trucks with governmental subsidies.

In December 2021, the California government formally approved the ultra-low emission regulation of diesel heavy-trucks (Heavy-Duty Engine and Vehicle Omnibus Regulation), It is required that all new heavy diesel vehicles (including buses and heavy-trucks) sold in California to reduce the NOx certification emission limit from the current 0.2 g/bhp-hr to 0.05 g/bhp-hr in 2024, reducing by as much as 75 %; the NOx certification emission limit value to be further reduced to 0.02 g/bhp-hr in 2027, the reduction rate is as high as 90 %; California Omnibus regulations also include newly added diesel engine low-load test cycles (LLC-Low Load Cycle) and new test specifications for the actual operation of RDE in place of NTE test specifications. The U.S. federal government is currently proceeding with the Cleaner Truck Initiative legislative process, which is expected to be completed in 2022, to be mandatory by 2028. The NOx tailpipe emissions of all new large commercial vehicles sold throughout USA will be reduced to 0.02 g/bhp-hr. The EU is also preparing for EU-VII legislation, and it is expected that the NOx emissions from all new large commercial vehicles sold throughout the EU will be reduced by about 90 % from the EU-VI limit by 2030. It is expected that China will follow the European Union and implement the BG-7 emission regulations around 2030. In other words, NOx tailpipe emissions and CO2 emissions of all new heavy diesel vehicles sold in the three major markets of United States, European Union, and China in 2030 will be obviously lower than the NOx and CO2 emissions of the current (2020) model; Energy-saving and emission-reduction simultaneous optimization of heavy diesel vehicles will go on forever. North American Truck and Engine Manufacturers Association (EMA) published a long technical review of 342 pages in August 2020, "Comments on CARB Heavy-Duty Engine and Vehicle Omnibus Regulations, Truck and Engine Manufacturers The Association, August 13, 2020 ", stating the Omnibus regulations to be Cost Prohibitive, Infeasible, and Unenforceable. The EMA report illustrates from aspect that the heavy-truck industry has not yet found any high performance to cost ratio 2027~2030 production ready technical solution with market acceptable cost increase and significant reduction of heavy diesel truck CO2 and NOx. The global heavy-truck industry needs to be able to break the Zero-sum Tradeoff between the CO2 and NOx of the internal combustion engine and to achieve the Positive-sum Tradeoff. That is to say, the much needed technical solution that can simultaneously optimize the energy-saving and emission-reduction of heavy-trucks and can be production ready in the near future with high performance-to-cost ratio, so as to satisfy the US Federal GHG-II carbon emission regulation and California ultra-low NOx emission Omnibus regulations by 2027, or satisfy the carbon emission regulations of the European Union by 2030 and the future Euro-VII pollutant emission regulations. In the present disclosure, unless expressly stated, "modern engine" refers to an engine satisfying the current emission regulations (EPA-2010, Euro-VI, GB-6); "near-zero emission engine" (NZE engine for short) refers to the mass-production commercial engine meeting the California Omnibus regulations, US Federal GHG-II carbon emission regulations and ultra-low emission new regulations after 2027, Euro-VII, GB-7 and other carbon emission or pollutant emission regulations.

The long-haul heavy-truck is a productive tool and has a statutory service life in Europe and US of more than 20 years while the longest statutory service life in China is 15 years. Any new technology for saving energy and reducing emission of heavy-truck deployed into the market will need a long transition period of more than ten years to gradually replace and penetrate , so as to evolve into the mainstream of the heavy-truck market (the market share reaches 50 %); at the same time, the fuel consumption and emission of the old heavy-trucks are obviously higher than that of the new heavy-trucks; It is necessary to quickly and obviously reduce the total amount of CO2 and NOx emissions at the macro market level of all heavy duty trucks; that is, a new heavy duty truck with the latest energy-saving and emission-reducing technologies needs to be quickly and commercially deployed at volume. It also needs effective technology and commercial or administrative means to speed up the upgrading or elimination of all the used trucks. The current laws and regulations in the US and Canada heavy-truck market allow a used heavy-truck with an internal combustion engine to be converted into a fuel-electricity hybrid heavy-truck. Business people can exercise self-discipline and self-certify the converted hybrid vehicle without the mandatory requirement for government re-certification, and then directly putting the retrofitted hybrid heavy-truck (Converted Hybrid Heavy-truck) into the market for operation; However, the current laws and regulations of the EU and China Heavy-truck market do not allow a second-hand diesel heavy-truck to be converted into a fuel-electricity hybrid heavy-truck and then directly put it into the market; Each new heavy-truck type (based on "vehicle frame plus powertrain") must be certified by the qualified heavy-truck OEM before it can be put into the European Union or China for commercial use. In other words, because of the different laws and regulations, it is possible to create a Blue-Ocean market with a total addressable market amount of over 100 billion US dollars for "converted hybrid heavy-trucks" in North America, however it is impossible to do so in Europe or China; It is obvious that the three major heavy-truck markets mentioned above all allow and welcome the new hybrid heavy-truck production and commercial use.

In the disclosure, the actual running fuel consumption (RDE fuel consumption or real-world fuel consumption for short) of the vehicle is equal to the actual fuel consumption (liter) of the vehicle divided by the accumulated mileage; The RDE fuel consumption of the vehicle is obviously higher than the certification fuel consumption of the vehicle (the vehicle is certified according to the regulations of the government; also called rated fuel consumption); It is obvious that RDE fuel consumption is more practical than certification fuel consumption for the owner or driver of long-haul vehicle. Vehicle RDE operational emissions data (abbreviated as "RDE emissions" or "actual emissions") with the pollutant emissions measured by the portable emission tester (PEMS) when the vehicle runs in the actual driving environment, comprising oxynitride NOx and particulate matter PM, is equal to the accumulated discharge weight (g) of the actual pollutant of the vehicle divided by the total output of the accumulated mileage engine work, its dimension is gram/kilowatt hour (g/kWh) or gram/horsepower hour (g/bhp-hr); Vehicle NTE emission data (NTE emission for short) or MAW emission data ("MAW emission" for short) aiming at the RDE emission data-set, according to the NTE technical specification in the US EPA-2010 regulation or the MAW technical specification in the Euro-VI regulation, allowing the emission data computed after legally eliminating the emission data of part of the engine non-high-efficiency area working condition point according to the regulation; Engine certification emission data (abbreviated as "certification emissions" or "rated emissions") according to EPA-2010 or Euro-VI regulation, the engine in the laboratory bench according to the certification emission calculation standard of the corresponding law; (In Service Compliance Emission; "ISC Emission" for short) and the NTE emission/-MAW emission data of the vehicle engine. Obviously, for various vehicle engine pollutant emission limiting values, the certification emission limit value of the engine is less than the ISC emission limit value of the whole vehicle and less than the RDE emission limit value of the whole vehicle; The biggest difference between the RDE emission test of the whole vehicle and the bench certification emission test in the laboratory of the engine is that the duty-cycle working condition and the external environment of the former vehicle are not fixed and difficult to repeat, and the two new variables of the driver driving style and weather are added; It is necessary to ensure that the RDE emission limit value of the heavy-truck meets the technical and commercial requirements stably for a long period of time. However, the whole vehicle's RDE emissions are the touchstone of the government and the public on the regulation of vehicle emissions, and the certification of emissions should be consistent with the RDE emissions to the largest extend. After nearly 20 years of relentless efforts, the heavy-truck industry in Europe and USA still cannot effectively solve the hard technical problem of long-term RDE emission of heavy-truck RDE stably meeting the standard; The US NTE specification allows legal elimination of all emission data of less than 30 % of engine torque or power load, while the EU MAW specification requires the retention of emission data of most engine emission high challenging low-speed low-load or idling conditions, This is the underlying technical reason leading to a obviously lower RDE emission of a Euro-VI diesel heavy-truck compared to a EPA-2010 diesel heavy-truck in USA.

Different from the vehicle fuel consumption, the RDE emission of a modern heavy-truck cannot be seen or touched; For the vehicle fleet or driver, as long as the vehicle certification or ISC emission meets the standard, and there is no motivation to continuously reduce the vehicle RDE emission; What the government and the public are concerned about is to minimize the difference between "nominal emissions" (certified or ISC) and the RDE emissions and to continue to reduce the RDE emissions. The heavy-truck is a productive tool, the vehicle fleet or driver always has market motivation in terms of vehicle energy saving, the lower the RDE fuel consumption is, the better, reducing cost and increasing efficiency for the vehicle owner; Moreover, the driver or fleet only recognizes the RDE fuel consumption, and does not care too much about the certification fuel consumption by the truck OEM or the engine manufacture; However, in terms of vehicle emission reduction, it is completely driven by the mandatory government emission regulation , the vehicle fleet requires that the nominal emission of the heavy-truck meets the standard; it is not necessarily better to further lower the RDE emission, especially when such reduction is to be carried out at the expense of slightly higher RDE fuel consumption.

It should be emphasized that in 2027, the US federal GHG-II law heavy-truck CO2 emission limit (that is, fuel consumption limit) and California's ultra-low NOx emission Omnibus regulations limit represent the most advanced and most radical heavy-truck emission regulation set in the global heavy-truck industry today, and it is expected that the European Union and China will, before and after 2030, also promulgate and implement similar heavy-truck CO2 and NOx emission regulations (Euro-VII or GB-7); A high performance-to-cost ratio mass production (High-value & Production-ready) technical solution meeting the emission limit of CO2 and NOx of a US diesel heavy-truck by 2027 is an important and urgent technical problem to be solved by the global heavy-truck industry today.

In recent years, there have been frequent extreme weather conditions uncommon in the world for a hundred years. According to the Paris agreement, climate action has been extensively and deeply carried out in the world, and it is urgent to see a complete reduction of carbon. European and American developed countries have promised to realize carbon neutral (that is, net zero carbon emission) in the whole society in 2050; China has promised to achieve carbon neutral by 2060. The global long-haul freight industry is a major carbon emission contributor; that is, its carbon reduction is both a focus and a difficult point. The urgent technical problem for the global heavy-truck industry to solve is how to reduce the total carbon emission of the global long-haul heavy-truck in a large scale in a commercial feasible way under the precondition of stably meeting the current regulations of the pollutant emission in various countries.

The information of this background is only intended to increase the understanding of the general technical background of the present disclosure, and should not be considered to admit or imply in any form that the information has become a prior art known to those of ordinary skill in the art.

Invention Content

The disclosure provides an intelligent multi-mode hybrid powertrain (iMMH powertrain for short) and an AI-connected-electrified (ACE) heavy-truck technical solution configured with the iMMH powertrain. The purpose is to solve the difficult problem facing the global trucking industry of how a new diesel heavy-truck can meet the US federal $CO_2$ emission regulations (GHG-II) and the California diesel large vehicle (including heavy-truck, motor coach, engineering vehicle and so on) ultra-low NOx emission Omnibus regulations with a high performance-to-cost ratio and production ready technology pathway; It also provides a high performance-to-cost ratio and production ready technical solution to convert the nearly 2.5 million traditional used heavy-trucks (diesel or natural gas) in North America (United States and Canada) into fuel-electricity hybrid ACE trucks achieving nearly 30% RDE fuel consumption (L/100KM) and ensuring long term stable compliance of current standard (EPA-2010) in RDE operation NOx emission (g/bhp-hr). The essential elements of an iMMH powertrain include an engine, two electric motors, a clutch, a transmission, a battery pack, and an electrical power splitting device to be described in details later.

Under the long-haul freight application scene, an ACE heavy-truck of the disclosure compared with a traditional diesel heavy-truck, under the premise of ensuring industry leading vehicle propulsion performance, can achieve RDE fuel consumption (L/100kM) reduction as high as 30 %, obviously improve the vehicle brake performance, and ensure long term stable RDE emission compliance with the standard in the useful life of 700 thousand kilometers (namely 435,000 miles). If the nearly 2.5 million second-hand heavy-trucks (97 % of diesel; 3 % natural gas) in US and Canada were to be converted into ACE heavy-truck ("converted ACE heavy-truck " for short) , in addition to enjoying the benefits of 20 % to 30 % RDE fuel consumption reduction, the vehicle owner can rely on dynamic software defined and over-the-air upgrade (OTA) to solve the industry known hard problem of US diesel heavy-truck RDE emission to exceed the standard legally without increasing the hardware cost of the whole vehicle, The converted ACE heavy-truck can ensure that the actual NOx emission can meet the standard stably for a long time (such as: EPA-2010, NOx certification emission limit: 0.2 g/bhp-hr) under any whole vehicle operation working condition.. The main sub-systems of the ACE heavy-truck of the present disclosure have been industrialized, are independent of any products or technologies that are currently immature or cannot be produced in large quantities in the near future, are capable of achieving commercial volume deployment by 2024, can meet the carbon emission target of the European Union $CO_2$ law 2025 or the carbon emission target of USA greenhouse gas second phase (GHG-II) law 2027 and the ultra-low NOx emission law of California in 2027 ahead of schedule, detailed descriptions to follow.

Unless explicitly specified, the software defined powertrain (SDPt) technical solution refers to adopting the set of multiple technical measures in the present disclosure, with the iMMH powertrain as the hardware base, matched with a novel synchronous digital pulse-control (DPC-Digital Pulse-control) of the transient power time-varying function of the engine and the duo-motor (equivalent to the battery pack) ; ACE heavy-truck refers to a full hybrid heavy-truck (Full Hybrid) configured with the iMMH powertrain; The conventional heavy-truck (or vehicle) refers to a heavy-truck (or vehicle) which is provided with only an internal combustion engine (diesel engine, natural gas engine, etc.) but does not include a hybrid device; Modern heavy-truck mainly refers to the heavy-truck satisfying the current emission regulations (EPA-2010, Euro-VI, GB-6) of the US/Europe/China; The hybrid vehicle refers to a deep fuel-electricity hybrid vehicle (Full Hybrid), wherein the maximum total continuous electric power (drive or regenerative braking) of the vehicle exceeds 65 % of the peak power of the engine.

The so-called "near-zero emission" (NZE) technology (also referred to as "ultra-low emission") refers to a diesel heavy-truck with certification NOx emission limit value reduced by 75 % to 90 % against that of the current emission regulation (EPA-2010, Euro-VI, GB-6). For example, in California ofUSA, the NOx emission value of a heavy-truck diesel engine is to be reduced by 90 % to 0.02 g/bhp-hr from the current EPA-2010 certification emission limit of 0.2 g/bhp-hr by 2027; It is expected that the federal government of USA will complete the new emission legislative procedure in 2022, and it is expected that the national NZE emission standards similar to those in California will be enforced in USA from 2027; It is expected that the European Union and China will implement the NZE emission standards similar to that of California in a mandatory and comprehensive manner by 2030. It needs to be emphasized that natural gas engines and heavy-trucks meeting NZE emission standards have already been mass-produced and have begun small-scale commercial use in California and other places in USA, but its market share is far less than 5 percent; How to invent the energy-saving and emission-reduction technology of diesel heavy-truck with high performance-to-cost ratio and production ready, especially the novel powertrain technology, so that the new diesel heavy-truck in USA starting from 2027, satisfies the NZE emission regulation and the II-stage carbon regulation in USA ($CO_2$ emission limit value, That is, fuel consumption) simultaneously is still a urgent and difficult technical problem to be solved by the industry.

In the three major heavy-truck markets of US, Europe, and China, the government emission certification of each type of engine is only on the laboratory engine bench, according to the specific duty-cycle curve to measure; under the premise of not changing the engine system (including after-treatment system) hardware and calibration software version, it can be assembled in any commercial vehicle, without the need of full vehicle -re-certification. However, the whole vehicle must meet the actual emission regulation limits of various countries, such as NTE limits in EPA-2010 of USA or MAW limits in Euro-VI regulations. The traditional heavy-truck engine is the only power source, so the bench discharge of the engine and the

RDE emission of the vehicle should be the same; However, the ACE heavy-truck has two power sources of an engine and a motor + battery pack, so the bench discharge of the engine and the RDE emission of the vehicle are actually two different things, and the RDE emission value of the ACE heavy-truck can be obviously lower than the bench discharge value of the engine; the ACE heavy-truck equipped with a modern diesel engine (EPA-2010, Europe-VI and so on) and through optimal supervisory control strategy,, can achieve RDE near-zero emission of the whole vehicle stably for a long time, with detailed description later.

The software and hardware decoupling of the so-called software defined iMMH powertrain (SDPt) in the present disclosure refers to not only the technical features of the iMMH powertrain, but also the technical functions thereof, including the following meanings:

1) there is a bidirectional one-to-one mapping relationship between the ACE heavy-truck working condition and the iMMH powertrain working condition, and therefore the two are equivalent to each other; In other words, the ACE heavy-truck road-load power function is equivalent to the iMMH powertrain power function, which are both analog time-varying functions; under the normal high speed road working condition of the vehicle, the road-load power is slowly and continuously changing in sub-second level, except for the emergency brake;

2) the transient working condition point of the iMMH powertrain (namely the total transient rotating speed and torque of the output shaft of the powertrain) and the transient working condition point of the engine have many-to-many bidirectional mapping relationships; In other words, one working condition point of the iMMH powertrain corresponds to multiple different working condition points of the engine, and multiple different working condition points of the iMMH powertrain can correspond to the same working condition point of the engine;

3) the dynamic control of the ACE heavy-truck road-load power function and the dynamic control of the engine power function are substantially & independently decoupled from each other, and do not affect each other;

4) the transient or steady-state power parameters of the iMMH powertrain (including second-level pulse peak power or hour-level maximum continuous power) are substantially independent of the corresponding configuration parameters of the engine, the motor and the battery pack, that is, the hardware combination of the iMMH powertrain is redundant and over-specified in terms of performance and function;

5) the iMMH powertrain can respectively perform digital pulse-control (DPC) on the power function of the engine or the battery pack; At this time, the ACE heavy-truck road-load power slow-varying analog function can be decomposed into two synchronous complementary digital pulse sequence functions of the engine power function and the battery pack power function; (In the hybrid vehicle supervisory control strategy, the power function of the battery pack is equivalent to the power function of the motor from the perspective of electromechanical power balance).

6) under any operation condition of the ACE heavy-truck, the power performance of the iMMH powertrain, the RDE fuel consumption of the engine, and the RDE pollutant emissions of the engine are basically without cross coupling and independent from each other; each of the three can be independently controlled in real time through software, and be optimized at the same time;

Obviously, the software and hardware decoupling is the necessary technical feature and technical foundation of the software defined iMMH powertrain; the engine of a traditional heavy-truck can only operate in the first quadrant complex surface working condition in the normal driving mode, the whole vehicle working condition and the engine working condition are only mapped one-to-one bidirectionally, leading to strong coupling of the engine software and hardware, the software defined powertrain cannot be realized in this case; The fuel-electricity hybrid vehicle in the existing technology respectively performs analog electronic control (AEC-Analog Electronic Control) on the transient power functions of the engine and the motor and the battery pack, although the working condition of the engine can be dynamically adjusted within a limited range, However, the operational trace of the engine in the normal driving mode is still a complex surface working condition in the first quadrant (of the engine fuel map), which only increases the time ratio of the engine running in the combustion high-efficiency area, and the time ratio of the engine running in the non-high-efficiency area cannot be reduced to a negligible level (for example, less than 5 %); At this time, the cross-coupling effects among sub-systems of the powertrain are not negligible, and the software and hardware are not completely decoupled, so it is very difficult for a fuel-electricity hybrid system in the existing technology to realize the software defined powertrain. The iMMH powertrain of the disclosure respectively performs novel synchronous digital pulse-control (such as series-hybrid iSS or parallel-hybrid iPS technology, detailed descriptions later) to the transient power function of the engine and the battery pack (duo-motor); any analog electric control (AEC) volume production engine can be converted into a digital pulse-control (DPC) engine; The DPC engine switches its operation between at least two pre-defined working condition lines (that is, at least one high-state line working condition in the engine universal characteristic first quadrant combustion high-efficiency area and the low-state line working condition in the fourth quadrant zero fuel consumption zero emission non-combustion high-efficiency area) in time, The algebraic sum of the simple line working condition of the DPC engine and the duo-motor complex surface working condition is used to completely cover all the duty-cycle working conditions of the ACE heavy-truck, which firstly realizes the software and hardware decoupling of a series-parallel powertrain system in engineering and finally realizes the industrialization of the software defined powertrain.

A heavy-truck is a productive tool and its actual (RDE) duty-cycle working condition can be very different. In order to optimize the RDE fuel consumption, a traditional internal combustion engine heavy-truck needs to customize the hardware parameters of the powertrain according to the main-stream duty-cycle working condition of the vehicle. However, from the consideration of optimizing the RDE fuel consumption, the technical requirements to the hardware parameters for the expressway working condition and the urban working condition are often contradictory to each other, and it is difficult to have the cake and eat it at the same time. For example, the technical measures such as engine downsizing and transmission overspeed drive are the mainstream mature technologies of energy-saving and emission-reduction in the modern traditional heavy-truck in expressway working condition; However, the above technical solution has negative impacts on the traditional heavy-truck running in the urban working condition, in terms of vehicle dynamic performance, the service life of the system, and the actual fuel saving effect. The iMMH powertrain technical solution of the disclosure can effectively remove many constraints on hybrid vehicle propulsion performance, RDE fuel consumption, or emission optimization caused by hardware configurations of the subsystems with existing technology. An iMMH powertrain with one set of mainstream volume-production engine, motor, power battery pack, and transmission can completely cover any duty-cycle working condition of an ACE heavy-truck, and the hardware need not be changed; the propulsion property and the drivability of the iMMH powertrain can be defined or customized by the software dynamically so as to realize the thousand-vehicle thousand-face; according to the dynamic duty-cycle working condition of each ACE heavy-truck and each freight event, the supervisory control algorithm can automatically or intelligently optimize three technical metrics of the whole vehicle power performance, RDE fuel consumption and emission.

The iMMH powertrain technology of ACE heavy-truck belongs to the active vehicle energy saving technology for improving the driving efficiency, which can be combined with other passive energy saving technology mainly for reducing the inherent load of the vehicle, such as the whole vehicle wind resistance reduction technology, low wheel resistance tire technology, or vehicle light weight technology and so on, combined to enhance the whole effect of vehicle energy-saving and emission-reduction; It should be emphasized that, compared with a traditional heavy-truck, the unique regenerative braking function of the ACE heavy-truck, combined with said other passive energy saving technologies, can generate a synergistic effect of one plus one to be more than two; In other words, if the real-world fuel consumption of the traditional heavy-truck is reduced by 15 % than the reference baseline by reducing the wind resistance coefficient and the wheel resistance coefficient of the whole vehicle and the light weight and other energy-saving technical combinations, the same energy-saving technical combination can reduce the real-world fuel consumption of the ACE heavy-truck obviously more than 15 %; The more effective the combination of the inherent load reduction technology of the vehicle is, the more chance the iMMH powertrain has to recover energy by regenerative braking, the more comprehensive synergistic effect of the ACE heavy-truck RDE fuel consumption and emission reduction is.

The disclosure solves the above said technical problem by the following technical features and reaches the above said beneficial technical effects.

Currently, a fuel-electricity hybrid passenger vehicle or a large commercial vehicle in various system architectures (series hybrid, parallel hybrid, mixed hybrid), under the urban working condition with frequent active acceleration or braking and average vehicle speed less than 40 kilometers/hour, the working condition point of the engine is effectively moved by the motor and the power battery pack, making the engine run in the high-efficiency area of the universal characteristics curve as much as possible; and the traction motor can also charge the battery pack through regenerative braking, effectively recycling energy, its RDE fuel consumption (L/100kM) is greatly reduced (the fuel saving rate can be as high as 30 % to 60 %) compared with that of a traditional engine vehicle ; The energy-saving and emission-reducing effects are significant, the performance-price ratio is high, and large-scale commercial application has been realized in each main automobile market in the world. However, for the long-haul heavy-truck, most of the running time and mileage (more than 80 %) in its life cycle is the expressway working condition with infrequent active acceleration or braking; The highway network in China's economically developed regions is congested year long, and the average speed of the long-haul heavy-truck highway is about 60 kilometers per hour; On the other hand, the average speed of the American long-haul truck on expressway is about 96 kilometers per hour. The engine can work stably in its high-efficiency area for a long time, the RDE fuel consumption is already low, and the further reduction space is limited; it is more challenging to realize RDE fuel consumption and emission minimization at the same time; at this time, the fuel-electricity hybrid vehicle seldomly brakes, and the regenerative braking energy recycling function is of little use; at the same time, the fuel-electricity hybrid vehicle, especially the extended-range serial hybrid vehicle, is loaded with extra loss of multiple energy conversions among chemical energy, mechanical energy, electric energy and mechanical energy; Therefore, there has been a long-term consensus among experts and ordinary technical personnel in the global automobile and road transport industry: In the long-haul application scene, the hybrid heavy-truck has limited RDE fuel consumption reduction space compared with that of a traditional diesel heavy-truck, and the maximum fuel saving rate will not exceed 12 %; Especially, for a series hybrid vehicle under the high speed working condition, its comprehensive fuel consumption might even be slightly increased; According to the technology level of the current global three-electric-system (battery, electric motor, electric control) and the current state of industrial development, the cost of the hybrid heavy-truck is obviously increased compared with that of the traditional diesel heavy-truck; If the actual fuel-saving rate cannot exceed 20 %, the performance-price ratio of the hybrid heavy-truck is not high enough, the investment return period (ROI) for making up the comprehensive cost difference between the hybrid heavy-truck and the traditional fuel heavy-truck by saving fuel cost will be longer than three years, which will cause the hybrid heavy-truck without government subsidy to lack sustainable market competitiveness.

As described above, current global heavy-truck industry experts and ordinary technicians generally believe that in the three major heavy-truck markets of China, United States, and Europe before 2030, it will be very difficult to realize the volume commercial deployment of long-haul hybrid heavy-trucks without government subsidies; limited by the current automobile power lithium battery technology level and industrial development, the long-haul zero-emission pure electric heavy-truck needs to be configured with a lithium ion battery pack of at least 1000 kilowatt hour effective capacity , such battery pack is too large, too heavy, too expensive, and there is a severe lack of convenient fast charging (megawatt level) infrastructure throughout the country;, it is difficult to grab the mainstream in the new heavy-truck sales before 2030 even if there is large government subsidy; In addition, a zero-emission hydrogen electric hybrid heavy-truck with a hydrogen fuel cell as the low-carbon cleaning range extender, is also limited by the technology maturity level, the supply chain, the hydrogen production/hydrogenation infrastructure to be immature and of high cost, and it is possible to achieve volume commercialization gradually after 2030. In other words, in stark contrast with the rapid growth of the market share of the pure electric propulsion passenger vehicle, the long-haul heavy-truck is the vehicle type which is most difficult and the last to realize zero exhaust emission pure electric propulsion. In the next 20 years, the brand new long-haul heavy-truck will still take the internal combustion engine (especially the diesel engine) as the core power source, and take the fuel-electricity hybrid powertrain as the auxiliary; The zero-emission lithium heavy-truck or hydrogen fuel cell heavy-truck will not become the mainstream new models of the market until well beyond 2030; A number of world-renowned institutions predict that the zero-emission heavy-truck industry penetration rate in the US, China and EU long-haul heavy-truck markets will only be more than 10 % by the year 2040.

Another major challenge facing the freight industry in Europe and USA is that the vacancy rate and the turnover rate of heavy-truck drivers have been high throughout the year. A heavy-truck, with the same cargo and freight route, under different driver, has actual comprehensive fuel consumption (L/100kM) difference rate of + -12 % (namely statistical spread is as high as 24 %); The real-world fuel consumption of the long-haul heavy-truck is highly driver dependent, the turn-over rate of the heavy-truck driver is high, the daily management and training of drivers consuming vehicle fleet management resource and its efficiency is not high, these combined is another big pain point of the road freight industry. Many freight companies strive to reduce the difference between the real-world fuel consumption and the optimal fuel consumption caused by the human factor by training the drivers, offering fuel-saving reward or punishment, adding vehicle-mounted sensors and analyzing the big data of the driving behavior of the driver and adding the fuel-saving assistant; However, the above said methods only treat the symptoms but not the root causes, and for most long-haul vehicles, the real-world fuel consumption of the heavy-truck varies according to people, and its high spread has always been one of the key pain points of the industry.

In order to compete and win over the traditional diesel heavy-truck for a long time without government subsidies, the long-haul ACE heavy-truck must improve its performance-price ratio greatly, so as to realize large-scale commercial use at an early date. The average selling price of the long-haul heavy-truck in USA or China (the US retail price is 150K US dollars/vehicle or the Chinese retail price is 400K RMB/vehicle) is five to eight times of the average vehicle price of a normal passenger vehicle in the country market, but because the heavy-truck has high fuel consumption and high mileage, the annual fuel expense is nearly 30 times higher than that of passenger vehicles. The retail prices of gasoline or diesel oil in USA and China are both obviously lower than that in Europe, and the proportion of European passenger vehicles to heavy-truck prices and annual oil prices is similar to those in China and USA. There are two effective methods for improving performance-price ratio of long-haul hybrid heavy-truck, comprising the following steps: firstly, increasing the fuel saving rate of the long-haul hybrid heavy-truck compared with the traditional diesel vehicle, and secondly, reducing the difference between the cost of the traditional diesel vehicle and the sum of the operation and maintenance cost of the accumulated vehicle, namely, opening source and throttling; Under the premise of ensuring the power, safety and attendance rate of the ACE heavy-truck, the saved fuel cost can be directly converted into the profit of the fleet.

Up to now (mid 2022), there is no global publication of Full Hybrid Truck, in particular dual-motor range-extended series hybrid or mixed hybrid heavy-trucks, "Three-Real" (Real Truck, Real Road, Real Payload) large-scale road test analysis report or paper to compare its RDE fuel consumption with that of a traditional diesel heavy-truck; there is no precedent of long-haul hybrid heavy-truck commercial use case. However, the industry consensus of the long-haul hybrid heavy-truck maximum fuel saving rate of not more than 10 % is like the so-called "white swan consensus", which has its historical constraints and can be proved to be false through scientific experiments; Industry experts overlooked a secret source of the long-haul hybrid heavy-truck that could obviously reduce its real-world fuel consumption: Under the working condition of high speed driving, because of the road longitudinal grade(" grade " for short) minor change (1.0-degree) of the longitudinal grade power time-variable function Pg (t) of the hundred-kilowatt level change and heavy-truck high speed downgrade generated by the regenerative braking of the hundred-kilowatt level traction motor to recycle kilowatt time (kWh) level electric energy; In other words, for the heavy-truck running at high speed, the expressway is distributed with many 1 % grade changes equivalent to many 100 kilowatt level acceleration or brake chances.

The First Principle of the ACE heavy-truck energy-saving and emission-reduction technology is the following vehicle (longitudinal) dynamics equation well known in the automotive industry:

$$P_v = \frac{V}{1000\eta} \left( Mgf_r\cos\alpha + \frac{1}{2}\rho_a C_D A_f V^2 + Mg\sin\alpha + M\delta\frac{dV}{dt} \right)$$

$$[1\text{-}1]$$

wherein $P_v$ is vehicle power, also called road-load power, which is determined by the road traffic condition in front of the vehicle and the driving operation of the driver (accelerator or brake pedal position), comprising four power items with different physical meanings, all power items are in units of kilowatt (kW).

The first item of the wheel resistance power $P_r$ refers to the power required to overcome the rolling friction resistance of the tires when the vehicle is travelling, which is a non-negative number and can be represented by the following formula (1-2):

$$P_r = \frac{V}{1000\eta} \left( Mgf_r\cos\alpha \right)$$

$$[1\text{-}2]$$

The second item of wind resistance power $P_d$ refers to the power required to overcome the air resistance (in the case of no wind weather) when the vehicle is travelling, which is a non-negative number and can be represented by the following formula (1-3):

$$P_d = \frac{V}{1000\eta} \left( \frac{1}{2}\rho_a C_D A_f V^2 \right)$$

$$[1\text{-}3]$$

The third item of longitudinal grade power $P_g$ refers to the driving power needed by the vehicle for overcoming the gravity and increasing the potential energy when the vehicle runs uphill at a fixed speed, which is a positive number; when the vehicle runs downhill, the longitudinal grade power is negative, which represents the driving power generated by the conversion of the vehicle potential energy into kinetic energy; The longitudinal grade power $P_g$ can be represented by the following formula (1-4):

$$P_g = \frac{V}{1000\eta} \left( Mg\sin\alpha \right)$$

$$[1\text{-}4]$$

The fourth item of acceleration power $P_a$ is the additional power needed to reach the predetermined acceleration value when the vehicle runs on the flat road. When the acceleration is a negative value, it represents deceleration braking; it can be frictional mechanical braking where the kinetic energy of the vehicle is converted into heat energy to be consumed, and it can also be non-frictional electric regenerative braking where part of the kinetic energy of the vehicle is converted into electric energy to the battery pack and to recover the energy. The acceleration power $P_a$ can be represented by the following formula (1-5):

$$P_a = \frac{V}{1000\eta} \left( M\delta\frac{dV}{dt} \right)$$

$$[1\text{-}5]$$

In the above five formulas (1-1) to (1-5): V is the space-time-varying function (meter/second) of the longitudinal linear velocity of the vehicle, a positive value represents forward movement of the vehicle, and a negative value represents reverse movement; $\eta$ is vehicle driveline system efficiency; M is the total mass (kg) of the vehicle; g equals to 9.8 (meter/second square), which is the gravity acceleration; $f_r$ is the rolling friction coefficient of the tires; $\alpha$ is the space distribution function of the road longitudinal grade, the positive value represents the upslope, the negative value represents the downslope, and zero is the absolute level (or flat) road; $\rho_a$ is the air density (kg/cubic meter); $C_D$ is the wind resistance coefficient of the vehicle; $A_f$ is the projected area in front of the vehicle (square meter); $\delta$ is rolling mass conversion coefficient; dV/dt is the vehicle longitudinal acceleration (meter/second square), a positive value means vehicle acceleration, and a negative value means vehicle deceleration or braking.

The longitudinal grade of each road is only a spatial distribution function ; unless the road is temporarily repaired or collapsed, the longitudinal grade function of the road is determined as the fingerprint of the earth and does not change with the time; because the longitudinal speed of the vehicle is a space-time-varying function when travelling, according to the equation (1-4), the longitudinal grade power is also a space-time-varying function; and when the vehicle runs at a substantially constant speed on the expressway, the dynamic equation (1-1) only has one item of longitudinal grade power, which is a function term with a second-level variation amplitude of of one hundred-kilowatt level; the other three terms (wind resistance power, wheel resistance power, the acceleration power) can be viewed approximately as constants with second level amplitude variation of each at only ten kilowatt level. Based on the longitudinal speed space-time-varying function of the vehicle and the vehicle-mounted satellite navigation (GNSS) dynamic positioning data, when the vehicle runs normally (the wheel does not skid), there is a one-to-one bidirectional mapping relationship between the time and the vehicle geographical position; in any freight event, the time and the vehicle position can be converted uniquely; Therefore, each power spatial-temporal function is equivalent to a power time-varying function or a power spatial function. When a freight event optimizes the energy-saving and emission-reduction of the ACE heavy-truck, all the power space-time-varying functions of the ACE heavy-truck are projected onto the single dimension of the road longitudinal line, then the detailed mathematical analysis makes more engineering sense and is more convenient. In the disclosure, the letter g or G not only represents the weight, but also represents the gravity acceleration, the common technician can clearly judge which is which according to the context, and there is no ambiguity.

Under the expressway working condition, a vehicle seldom actively brakes and decelerates or accelerates, and the vehicle speed is kept in a narrow band range with slow and continuous changes. When a vehicle is cruising at a substantially constant speed, according to the dynamic equation (1-1), the acceleration power is approximately zero, the wheel resistance power along a road section of small longitudinal grade (that is, the longitudinal grade within +/-5 %) is approximately a positive constant, the wind resistance power also equals to a positive constant approximately, only the longitudinal grade power is a time varying function, its change amplitude is directly proportion to the sine value of the longitudinal grade angle of the road section, the vehicle speed, and the total mass of the vehicle; the absolute value of the change amplitude of the longitudinal grade power second level (or ten meter level longitudinal distance) can be obviously more than the sum of the other three power items (wheel resistance, wind resistance, acceleration); In other words, under the expressway working condition, in the four power items of the road power of a heavy-truck, the longitudinal grade power is the only variable with fast and large changes, and the specific change amplitude is mainly determined by the longitudinal grade of the road at the location of the vehicle. The road longitudinal grade is usually called "longitudinal grade" for short and there are two measuring units, one is the degree of the angle between the road surface and the horizontal plane, and the other is the ratio of the elevation of the road surface to the horizontal projection distance of the road section, expressed in %. The design and construction of expressways in various countries mostly limit the longitudinal grade to be within the range of - 7.0 % to +7.0 %, mainly based on the consideration of the safe travel of a full-load truck on the expressway. The total weight of the China long-haul heavy-truck is less than 41 tons, the highest statutory speed limit is 90 kilometers per hour; most China main expressway is congested for a long time with the average speed of a heavy-truck in the road freight industry to be about 60 kilometers per hour; The total weight limit of the US long-haul heavy-truck is 36 tons, the highest statutory speed limit can be as high as 125 kilometers per hour, and the average driving speed of the road freight heavy-truck is about 95 kilometers per hour. Most American transportation companies, for fuel saving and safety reasons, typically limit the maximum speed of heavy-trucks to 105 kilometers per hour.

For example, a heavy-truck of full load of 40 tons and vehicle speed of 60 kilometer/hour, when travelling along a section of a highway with 2.0 degree longitudinal grade at constant speed, the required longitudinal grade power is up to 228 kilowatt, at this time, the sum of the wheel resistance power and the wind resistance power of the vehicle is only 71 kilowatt, the acceleration power is approximately zero; If the power reserve of the powertrain is not enough at this time, then the heavy-truck must reduce the gear and reduce the speed before going uphill. In comparison with a passenger vehicle with a total mass of 2 tons, and a longitudinal grade of 2.0 degrees at the same constant speed, the longitudinal grade power of the vehicle is 11.4 kW (only 5.0 % of the heavy-truck longitudinal grade power), and the sum of the wheel resistance power and the wind resistance power is only 3.6 kW; For passenger vehicles with a peak power of 100 kW, such small slopes are considered insignificant, as if they were on flat ground. In other words, for each full load heavy-truck running at a high speed, the road-load power of the heavy vehicle (mainly from the change of the power of the longitudinal grade) will have a large change of more than 100 kW at every 1.0-degree change of the longitudinal grade, hardly noticeable by the naked eyes. Whenever there is an upslope, there must be a corresponding downslope with the heavy-truck grade power of the 100 kilowatt-level and is a negative value, the vehicle speed can be maintained constant by the regenerative braking of the traction motor (equal to the negative acceleration power during the active braking), part of the mechanical energy of the vehicle during the downslope is converted into the electric energy to charge the battery pack and to recover the energy. Although the ACE heavy-truck seldom actively brakes under the expressway working condition, but due to the minor road grade change of the of 1.0-degree along the highway, it can bring about the grade power change of 100 kW level; for an ACE heavy-truck running at a substantially constant speed, there are still many passive braking opportunities for recycling the kilowatt hour level electric energy through downhill regenerative braking, the fine water flows for a long time resulting in large accumulation; This is the secret that a long-haul ACE heavy-truck can save more fuel than a traditional diesel heavy-truck.

When a vehicle is travelling at 60 kilometer/hour speed, to realize deceleration of 2 meter/second square (namely 0. 2G, G is gravity acceleration; a middle intensity braking), for a passenger vehicle with total mass of 2. 0 tons, the needed brake power is 67 kW; However, for a heavy-truck with a total mass of 40 tons, the required braking power is as high as 1333 kW; The total mass of the urban electric bus is about 20 tons, the average speed per hour is 30 kilometers per hour, and the braking power required by the urban electric bus to achieve a speed reduction of 0.2 G is about 333 kW. Due to the peak power limitation of the vehicle-mounted traction motor and/or the motor controller (power electronics) in volume production in the world today, the power peak engineering upper limit of the recyclable energy of a fuel-electricity hybrid vehicle through regenerative braking is less than 550 kilowatt; the portion of the vehicle instantaneous brake power higher than 550 kilowatt cannot be converted into electric energy through motor regenerative brake to charge the battery pack, only to be wasted through the mechanical brake system of the vehicle by converting the vehicle kinetic energy into heat energy; In comparison, the current world commercial maximum power direct current fast charger is 375 kW. The fuel-electricity hybrid vehicle (light vehicle or large bus) can utilize regenerative braking to recover energy through the opportunity of multiple hundred-kilowatt level active brakings under the driving working condition of the city or suburb with frequent acceleration/deceleration, achieving significant fuel-saving compared with the traditional engine vehicle, and the actual fuel-saving rate is 30 % to 60 %. In other words, the long-haul ACE heavy-truck has few active brake opportunities under the expressway working condition, but still has more hundred-kilowatt grade passive braking (downgrade) opportunities, which can utilize motor regenerative brake to recover energy and reduce fuel consumption; However, when the heavy-truck under expressway working condition brakes in emergency, it mainly depends on the mechanical brake system to output more than one megawatt of brake power, and most ACE heavy-truck kinetic energy cannot be effectively recovered through the motor regenerative braking.

Under the normal highway working condition where the active acceleration and deceleration are not frequent, the average speed per hour of the vehicle is higher than 60 kilometers per hour, the traditional engine can work stably in its high-efficiency area, the fuel-electricity hybrid vehicle has little fuel-saving effect (less than 10 %) than the traditional engine vehicle; especially for a series hybrid vehicle, because of its extra energy loss through multiple energy conversions, its comprehensive fuel consumption is not reduced and can even be increased; The above "consensus" of the global automotive industry is applicable to all petrol-electric hybrid passenger vehicles (total weight of less than 3.5 tons) and single-motor hybrid large commercial vehicles, such as a medium-sized motor with a peak power of less than 200 kW mechanically connected in parallel with an engine with a peak power of more than 250 kW. However, the inventors believe that the above "Consensus" in the industry is not applicable to the ACE trucks constructed by the 100 kilowatt level rated power dual-motor range-extender series-hybrid or mixed hybrid (series-parallel) system architectures in the case of long-haul application. Although the ACE heavy-truck under the expressway working condition seldom actively accelerates or brakes, due to the slight change of 1.0-degree of the longitudinal grade along the highway, there are many passive braking opportunities for recovering the kilowatt-hour-level electric energy by using the 100 kilowatt-level longitudinal grade power at the time of downhill, through the regenerative braking of the traction motor; long time flow of fine water accumulates to large volume. In other words, when the heavy-truck drives at a constant speed on the expressway, the longitudinal grade function slight changes at 1.0-degree level along the way can cause the change of the longitudinal grade power at a hundred-kW level, and the influence on the road-load power is equivalent to the frequent active acceleration or braking of the passenger car or bus on the urban horizontal road.

USA has an expressway network of nearly 130,000 miles. According to a research report by the National Renewable Energy Laboratory (NREL) of USA in 2016, 20 % of the road sections in the total mileage of U.S. expressways have a longitudinal grade of less than 0.2 %, which can be considered as a flat road for ACE heavy-trucks (the amplitude of longitudinal grade power variation is in the order of 10 kW); while the longitudinal grade of nearly 75 % of the total expressway mileage is distributed between 0.2 % and 3.0 %, for the ACE heavy-truck, it is no longer a flat road (the change amplitude of the longitudinal grade power is in a hundred-kilowatt level); Only 5 % of the total expressway mileage has more than 3.0 % of the longitudinal road grade, which is a relatively large uphill and downhill slope for the ACE heavy-truck running at high speed. In other words, about 80 % of the expressway sections in USA are not considered flat for any heavy truck.

In the past ten years, some middle and high-end internal combustion engine heavy-trucks in Europe and USA use the vehicle-mounted 3D maps containing the road longitudinal grade information to realize additional fuel saving through the predictive cruise control (PCC) technology along the hilly or mountainous highways. However, the traditional heavy-truck PCC has its limitations: Firstly, the pure mechanical powertrain is not suitable for high-frequency fast (sub-second level) and large output power changes of the engine or frequently shift the transmission; the PCC is mainly suitable for the long slopes with the longitudinal grade angle of more than 2.0 degrees and the slope length of more than a kilometer; What is more important is that the traditional heavy-truck has no regenerative braking function, and it cannot recover energy when it goes down a long slope; The real-world fuel consumption of the traditional heavy-truck PCC is limited to less than 3.0 %, and the function is currently only commercially available on some of the high-end heavy-trucks.

If the vehicle preinstalls a vehicle-mounted 3D electronic map with highway longitudinal meter-level spacing density, road positioning meter-level precision (latitude and longitude), and longitudinal grade measuring precision of 0.1 degree, adding a vehicle-road cooperative networking or a meter-level high precision satellite navigation unit (GNSS) and an inertial measurement unit (IMU) to collaborate and determine vehicle positioning (longitude and latitude) and orientation (longitudinal grade) in real-time, according to the vehicle dynamic equation (1-1) and the pre-determined vehicle cruising speed, the vehicle controller (VCU) can predict in real time (sub-second level refreshing; kilowatt-level precision) road-load power time-varying function in front of the vehicle in the range of one-hundred-kilometer level, especially the time-varying function of longitudinal grade power $P_g$ (t) and road-load power $P_v$ (t) in kilowatt-level granularity; the VCU power prediction refreshing frequency can reach more than 10.0 Hz; that is to say, the VCU can dynamically compute and refresh the predicted road-load power function space-time distribution -in the electronic horizon whenever the vehicle travels for 2 to 3 meters; the relative error between the predicted power function and the actual power function is less than 10 %, and the shorter the time interval of the current space time point or the closer the distance interval of the vehicle working condition point is, the smaller the relative error of the power prediction; the ACE heavy-truck travelling in the city or suburb working condition has frequent active acceleration or braking, the vehicle speed change range is wide and the change is fast, using the vehicle dynamic equation (1-1) to predict one hundred kilometer level electronic horizontal line load power distribution in real time, the prediction relative error will be more than 15 %; In other words, when the heavy-truck runs normally on the expressway, the time or one-dimensional space distribution of the road-load power function in the hundred kilometer level in the electronic horizon can be predicted, the prediction precision is ten kW level, the relative error is within 10 %, the prediction refreshing frequency is higher than 5 Hz, and the smaller the space-time interval between the prediction refreshing frequency and the current space-time point of the vehicle (ten seconds or hundred meters), the higher the power prediction precision of the working condition point.

Various ADAS electronic navigation map or HD map supporting L3 + automatic driving currently commercially available in many countries around the world can be used as the 3D map of the present disclosure. providing an electronic horizon (Electronic Horizon) priori road information for the vehicle; The so-called "electronic horizon" refers to various kinds of road information covered by the 3D electronic map within a specific range of road in front of the vehicle, especially the three-dimensional information such as the longitude, latitude, and longitudinal grade along the highway. A traditional diesel heavy-truck carries out PCC, which is limited by the fact that it is not suitable for frequently and quickly changing the working condition of the engine or frequently shifting the transmission, and has no function of regenerative braking and energy recovery, and only can effectively use the electronic horizon information in the range of about 5 kilometers; The ACE heavy-truck of the disclosure implements PCC, which can effectively use the electronic horizon road information in the range of hundreds of kilometers, so the fuel-saving effect is greatly improved; Details later.

For the ACE heavy-truck which normally runs on the expressway, it seldom actively brakes or accelerates, the vehicle speed is basically constant, the time-dependent change of the vehicle road-load power is mainly from the longitudinal grade power caused by the longitudinal grade changes along the highway. However, the vehicle driving route and the longitudinal grade distribution function along the road line are determined and known in advance, so the VCU of the ACE heavy-truck can, according to the vehicle dynamic equation (1-1), the vehicle configuration parameters and its dynamic working condition data, the electronic horizon a priori 3D road information, and real-time road traffic information, compute in real-time (sub-second level) the vehicle road-load power time-varying function distribution in the electronic horizon, predicting the future (hour level or hundred kilometer level) vehicle road-load power time-varying function with kilowatt level granularity, so that the ACE heavy-truck is well prepared for its future energy needs and can make full use of the power battery pack ten-kilowatt-hour level electric energy storage function and hundred-kilowatt level electric power peak-cutting and valley-filling function, according to the fuel-saving machine learning (ML) algorithm, allows the iMMH powertrain of the ACE heavy-truck to achieve intelligent predictive supervisory control (iPSC) and to realize the vehicle energy-saving and emission-reduction simultaneous optimization. The ACE heavy-truck iMMH powertrain system of the disclosure can transform the global difficult technical problem of long-haul ACE heavy-truck RDE fuel consumption and emission minimization into the equivalent narrow artificial intelligence (Narrow AI) problem of computer playing the game of go (such as AlphaGo), The specific method to be described in detail later. People can use the sea of fuel-saving data generated by many ACE heavy-trucks in nation-wide long-haul operations, combining with the machine learning algorithm and cloud-end computing power, firstly set up and train the AI fuel-saving model at the cloud-end; then the AI inference chip on-vehicle performs local inference operations according to the fuel saving AI model, in which the path, direction, and amplitude of the engine mechanical power flow or battery pack power flow of the ACE heavy-truck is controlled in real time, under the premise of ensuring industry-leading whole vehicle power performance and braking performance, to achieve vehicle energy-saving and emission-reduction simultaneous optimization; In terms of RDE fuel consumption and emission simultaneous minimization, AI can be much better than human driver, and the actual fuel saving effect are basically decoupled from the skill level of the driver and the performance parameters of the ACE heavy-truck engine. In other words, the traditional internal combustion engine heavy-truck of the existing technology adopting predictive cruise control (PCC) technology, because the lack of regenerative braking energy recovery function, the actual fuel saving rate is less than 3 %, and the effect is limited; However the dual-motor hybrid ACE heavy-truck of the disclosure, because of its energy recovery function enabled by the iMMH powertrain having total regenerative braking peak power of 500 kilowatt and a power battery pack with a capacity of 100 kilowatt-hour level, and adding a vehicle-cloud cooperative artificial intelligence (AI) with super computing power and self-learning evolution function, can realize the beneficial effect of 30 % RDE fuel saving rate and near-zero emission compared with the traditional heavy-truck; more details later.

The ACE heavy-truck of the present disclosure can adopt the mixed hybrid system architecture of duo-motor and single clutch, more details later. The ACE heavy-truck can command the clutch to open or close through the vehicle controller (VCU) to respectively realize the series-hybrid mode or parallel-hybrid mode operation and mode switching. Under the urban working condition, the average speed of the vehicle is low (less than 45 kilometers per hour) and the active acceleration and deceleration are frequent, the series-hybrid mode is preferred, the engine working condition and the vehicle road-load working condition are completely decoupled, the engine can work stably at its preset high efficiency point, the traction motor also has many opportunities to recover energy through regenerative braking, compared with the traditional fuel vehicle, the hybrid vehicle has significant fuel-saving effect (more than 30 %) at this time; under the expressway working condition, the average speed of the vehicle is high (more than 50 kilometers per hour) and there is little active acceleration and deceleration; the engine, even if it is directly mechanically coupled with the driving wheels of the vehicle, can work stably in its high-efficiency area by the dynamic gear shift of the transmission, at this time, the parallel-hybrid mode is preferred. From the two angles of vehicle fuel-saving and propulsion performance under the expressway working condition, the parallel-hybrid mode with the direct-drive function of the engine has more significant advantages than the series-hybrid mode. The power-split mixed hybrid power system represented by the Toyota Prius has the function of series hybrid and parallel hybrid at the same time, which can optimize the power performance and fuel-saving performance of the vehicle, and it has been the international benchmark of the passenger vehicle hybrid power performance-price ratio for nearly twenty years. However, due to the current metal material and the production process, the core component planetary gear of the power split hybrid system must bear the combined power of an engine, a generators and a traction motors each with peak power of more than 250 kW; At present, there is no such heavy-duty planetary gear in production in the world, the design and mass production of such new product can take several years and its unit cost is difficult to reduce for a long time, so the mechanical power split hybrid system based on the planetary gear is difficult to expand to the heavy vehicle applications with high performance-to-cost ratio; Even Toyota Automobile Group did not apply its unique single planetary gear power split hybrid powertrain technology to hybrid heavy vehicles.

The disclosure provides an iMMH powertrain architecture capable of dynamically switching between series-hybrid mode and parallel-hybrid mode, comprising: The generator (MG1) at hybrid P1 position is mechanically connected to the engine bidirectionally to form the gen-setfor converting the chemical energy of the vehicle fossil fuel into the electric energy (under the series-hybrid mode) or direct vehicle propulsion (under the parallel-hybrid mode); a hundred-kilowatt-level large electrical power splitting device (ePSD) configured as a power electronic network having three ports, wherein a first port (i.e., port I) of the ePSD is bidirectionally and electrically coupled to the AC port of a generator (MG1); the second port (namely port II) of the ePSD is bidirectionally and electrically connected with the traction motor (MG2) at the hybrid P2 position; the port III (namely port III) of the ePSD is bidirectionally and electrically connected with at least one power battery pack in DC; at the same time, it is also electrically connected with a brake resistor in one-way direct current; a drive-by-wire clutch is arranged between the generator and the traction motor; an automatic transmission whose output shaft is mechanically connected with the driving axle of the vehicle; a map unit with a pre-stored 3D electronic map, comprising three-dimensional information such as longitude, latitude and longitudinal grade of all vehicle driving roads; a traction motor (MG2), which is connected with the second port of the ePSD in the bidirectional alternating current manner, and the output shaft of the traction motor is connected with the input shaft of the automatic transmission, the traction motor (MG2) can be operated as follows: converting the electric energy into mechanical energy for driving the vehicle (electric propulsion mode), or converting the mechanical energy of the vehicle into electric energy (regenerative braking mode) and charging the battery pack through the inverter (namely the motor controller) in the second port of the ePSD to recover energy; wherein the engine flywheel is mechanically connected with the mechanical shaft of the generator (MG1) in a bidirectional manner, the torque coupling type mechanical connection mode can be single-shaft same rotating speed (coaxial connection), and can also be parallel double-shaft gear reduction coupling (parallel shaft connection); the output shaft of the engine is mechanically connected with the main traction motor (MG2) in bi-directionally through a heavy-duty clutch; at the same time, the traction motor (MG2) is further mechanically connected with the input shaft of the automatic transmission in bidirectional manner, the output shaft of the transmission is mechanically connected with the driving axle of the vehicle in bidirectional manner; and the vehicle further comprises: a vehicle control unit (VCU), through a vehicle data bus (such as CAN bus) and based on the 3D map data in the vehicle-mounted satellite navigation unit (GNSS) and/or the map unit (MU), at least one of the engine, the generator, the clutch, the ePSD, the traction motor, the automatic transmission, and the battery packs is dynamically controlled in an independent manner.

The iMMH powertrain of the disclosure dynamically controls the two different one-hundred-kilowatt level mechanical or electric power flow closed loops (Power Flow Loop) among the five sub-systems of the engine, the generator, the battery pack, the traction motor, the flow path, amplitude, and direction to switch between vehicle series-hybrid mode and parallel-hybrid mode by opening or closing the clutch; Such series-parallel architecture effectively combines the specific advantages of the series hybrid system and parallel hybrid system, overcomes their respective specific disadvantages, optimizes the dynamic performance and fuel-saving performance of the vehicle simultaneously, and is better than the duo-motor range-extender pure series hybrid system or the single-motor pure parallel hybrid system in terms of the comprehensive performance-to-price ratio, and RDE energy saving and emission reducing.

The said iMMH powertrain can realize the full digital software defined powertrain with ePSD as one of its core hardware; The two transient power time-variable functions of the engine or the battery pack are controlled by synchronized digital pulses; no matter in series hybrid or parallel-hybrid mode, the engine's working condition and the whole vehicle's working condition are decoupled, and the powertrain hardware and software are also decoupled; when the ePSD three-port power electronic network hardware is designed, the hardware configuration function and performance thereof should be overdesigned so as to increase the future lexibility of the product; after vehicle mass production, the software remote updating iteration (OTA) of each ACE heavy-truck in its full operation life-cyclecan be used for continuously upgrading and evolving the products. Depending on the continuous software OTA, based on the artificial intelligence of big data and cloud -vehicle interaction, the actual (RDE) energy-saving and emission-reduction performance of each ACE heavy-truck can be continuously and iteratively optimized in a customized manner, to ensure that each ACE heavy-truck, within 700,000 kilometers of Useful Life required by the emission regulations, can meet the RDE operation emission regulation limits steadily for a long time, and can even realize the vehicle RDE near-zero emission, can also realize the vehicle RDE fuel consumption minimization and the optimization of the intelligent operation maintenance (iMR - intelligent Maintenance and Repair).

The ePSD can be configured as a three-port power electronic network (PEN-Power Electronic Network), which contains at least three unique power electronic functional modules of a-hundred-kilowatt level rated power: The first port is internally connected with a bidirectional AC-DC conversion module (inverter; also called motor controller MCU1), the second port is internally connected with at least one bidirectional AC-DC conversion module (inverter; also called motor controller MCU2), the port III is internally connected with at least one bidirectional buck-boost DC-DC conversion module (chopper); another DC chopper or a one-way DC voltage control switch module (VCS-Voltage Control Switch) can also be connected in parallel. The present disclosure focuses the main peripheral input/output electrical characteristics of the ACE heavy-truck ePSD and the core technical features, functions, or effects of the three power electronic (PE) modules (i.e., inverter, chopper, voltage control switche); Various sets of circuit topology structures capable of realizing the said three PE modules and mutual electromechanical connections belong to the range of the disclosure. The physical packaging configuration of the ePSD can be that the three PE functional modules are integrally packaged and arranged in one metal box, or the three PE functional modules can be respectively distributed in multiple metal box packaging with the generator (MG1), the main traction motor (MG2) and the battery pack.

The iMMH powertrain of the ACE heavy-truck can respectively realize two distinctive system architectures or working modes of series hybrid (clutch open) or parallel hybrid (clutch close) by controlling the on-off state of the clutch; Under each system architecture, multiple different operational sub-modes can be subdivided. The vehicle controller (VCU) commands the drive-by-wire electromechanical clutch in an electrically controlled (rather than purely mechanical) manner, smoothly switching between series hybrid and parallel-hybrid mode, as described in details later respectively. In order to optimize the fuel-saving performance and power performance of the vehicle at the same time, under the expressway working condition (non-congested expressway, the average vehicle speed is more than 50 kilometers/hour, the active acceleration or braking is not frequent) or running down a long slope (the absolute value of the longitudinal grade along the way is more than 2.0 degrees, the slope length is more than 3 kilometers) under any vehicle working condition (any vehicle speed, needing the retarding function of the engine and the motor for driving safety), the parallel-hybrid mode is strongly preferred; Under the urban working condition (average vehicle speed is less than 40 kilometer per hour, frequent active acceleration or braking), series-hybrid mode is preferred.

Firstly in the ACE heavy-truck series-hybrid mode, from the engine to the driving wheels, there is only one electric power flow loop and no mechanical power flow loop, the DC ends of the three PE functional modules in the ePSD are all electrically & bidirectionally connected to the DC bus bar current collection point X, at which point the product of the DC voltage and the current time-varying function is the electric power time-varying function of each corresponding to the energy conversion device, and these power terms satisfy the following three equations in real time:

$$P_V = \boldsymbol{\eta}_{dt}\, P_{MG2} \qquad\qquad (2\text{-}1)$$

$$P_{MG1} + P_{MG2} - P_{BAT} = 0 \qquad\qquad (2\text{-}2)$$

$$P_{ICE} = -P_{MG1}/\boldsymbol{\eta}_g \qquad\qquad (2\text{-}3)$$

In the above three equations, all power terms are hundred-kilowatt-level time-varying continuous functions; and it is simplified to assume that the primary round-trip energy conversion coefficients of the generator (MG1), the battery pack, and the traction motor (GM2) are approximately 1.0; A person of ordinary skill in the art can easily deduce the corresponding modified equation when the actual round-trip energy conversion coefficient is a positive number less than 1.0 without extra creativity; It should be emphasized that whether the conversion coefficient is truly 1.0 has no substantive effects on the innovative technologies in the present disclosure.
wherein:

$P_{MG1} > 0$, which is the electric propulsion power of the generator (MG1)to convert the electric energy into mechanical energy by taking the non-fuel low-state operation of the engine or the non-fuel braking of the engine as the load; $P_{MG1} < 0$, which is the generating power, and is produced by the generator directly driven by the engine to convert the mechanical energy into the electric energy;

$P_{MG2} > 0$, which is main traction motor (MG2) electric propulsion power to covert the electric energy into mechanical energy; $P_{MG2} < 0$, is regenerative braking power to convert the vehicle kinetic energy into electric energy for the battery pack charging and energy recovery;

$P_{BAT} > 0$, which is the total discharge power of all battery pack to convert the chemical energy in the battery pack into electric energy output; the $P_{BAT} < 0$, which is the total charging power of all battery packs to convert the electric energy into the chemical energy and stores it in the battery pack;

The $P_{ICE} < 0$, which is the effective output driving power of engine combustion work (namely active working condition or high-state working condition) to convert the fossil fuel chemical energy into mechanical energy output; $P_{ICE} < 0$, which is the mechanical load effective power (the mutual conversions between various mechanical energies) of the engine being dragged without fuel (no fuel injection) or the engine being braked (both being passive working condition or low working condition);

The preferred configuration principle of the power parameters of the four energy conversion devices is as follows: $P_{ICE\text{-}P} >= P_{MG2\text{-}m} >= P_{MG1\text{-}m}$; $P_{BAT\text{-}m} > P_{MG2\text{-}m}$. Wherein $P_{ICE\text{-}p}$ is the peak power of the engine (i.e., the maximum continuous power), $P_{MG1\text{-}m}$, $P_{MG2\text{-}m}$, $P_{BAT\text{-}m}$ are the maximum continuous power of the generator, the traction motor, and the battery pack respectively. Different from a mechanical systems such as an engine or a transmission, electric power systems such as an electric motor or a battery can bear a ten-second level short-time power overload, for example, the peak power pulse (10 seconds) of an electric motor can be more than 50 % higher than its rated power; the peak power pulse (10 seconds) of a power battery pack can be more than 100 % higher than its rated power. In the series-hybrid mode, the system peak power of the iMMH powertrain (i.e., the maximum continuous drive power of the vehicle) is completely determined by the $P_{MG2\text{-}m}$ of the traction motor (MG2). In order to improve the dynamic performance, fuel-saving performance and safety of the vehicle, an auxiliary traction motor (MG3) can be added; MG3 may be positioned at the hybrid P3 position (between the transmission output shaft and the first drive axle or the second drive axle input shaft); If the third motor is added, of course, the complexity and total cost of the system will also increase while improving vehicle power and redundancy.

In the series-hybrid mode, the traction motor power $P_{MG2}$ is the control dependent variable, which is in direct proportion to the vehicle road-load power $P_v$; the road-load power is the control independent variable, which is determined by the driving intention of the driver and the dynamic traffic environment of the road in front of the vehicle (ego vehicle); and $\eta_{dt}$ is the efficiency of the drivetrain system (a positive number less than 1.0). Referring to equations (2-2) and (2-3), $P_{MG1}$ is another control independent variable, which is proportional to the independent variable of the engine net output power $P_{ICE}$, and the working condition of the engine is completely decoupled from the vehicle working condition , which is independently determined by the supervisory control strategy of the ACE heavy-truck; the battery pack power $P_{BAT}$ is the dependent variable; $\eta_g$ is the efficiency of the gen-set(a positive number less than 1.0). Obviously under the series-hybrid mode, the engine working condition is completely decoupled from the vehicle working condition, the iMMH powertrain can independently and dynamically set the engine (ICE) and the generator (MG1) to operate at the respective efficient working condition point (specific rotating speed and torque point) of each universal characteristics curve. At such time, the combustion thermal efficiency of the engine is ensured to be highest (that is the minimum value of its fuel consumption BSFC, g/kWh); at the same time, the exhaust gas temperature of the engine is also ensured to be high enough to optimize the vehicle tailpipe emissions. The battery pack power function $P_{BAT}$ is equal to the algebraic sum of the two electric motor power functions $P_{MG1}$ and $P_{MG2}$, which is also a dependent variable. The three large power electronic function modules inside the ePSD, the engines, the generator, the traction motor, the automatic transmission, the battery pack, and other related sub-systems, under the uniform command of the vehicle controller (VCU) and according to the supervisory control strategy of the whole vehicle, dynamically adjust the independent variable $P_{ICE}$ and the dependent variable $P_{BAT}$, performing peak clipping and valley filling on the road-load transient power function, to satisfy the vehicle dynamic equation (1-1) in real time, to achieve the best fuel-saving effect under the premise of ensuring the dynamic performance and freight timeliness of the vehicle.

Recombining equations (2-1), (2-2), and (2-3) to obtain a transient power balance equation ("series hybrid equation" in short) describing the relationship among road-load power, engine power, and battery pack power when operating the ACE heavy-truck in series-hybrid mode:

$$P_V(t) = \eta_{dt} \left( \eta_g P_{ICE}(t) + P_{BAT}(t) \right) \qquad (2\text{-}4)$$

The restrictive boundary condition of the series hybrid equation (2-4) is as follows:

a) when the electric charge of the battery pack is substantially sufficient (i.e., operating in the high efficiency region; BLL < SoC < BUL),

$$P_{MG1\text{-}m} < \max(|P_V(t)|) < P_{MG2\text{-}m} \qquad (2\text{-}4c1)$$

b) when the electric charge of the battery pack is substantially exhausted (that is, SoC < LRL),

$$\max(|P_V(t)|) < P_{MG1\text{-}m} < P_{MG2\text{-}m} \qquad (2\text{-}4c2)$$

c) the rotational speed and torque of the engine are arbitrarily continuously adjustable within a specified range; (2-4c3)

Wherein $\max(|P_V(t)|)$ is the maximum value that the ACE heavy-truck power absolute value $|P_V(t)|$ can be achieved in the non-braking driving condition in the series-hybrid mode; Obviously under the condition of vehicle braking, the mechanical braking power item must be added.

The equivalent formula variation of the series hybrid equation (2-4) is as follows:

$$P_{BAT}(t) = P_V(t)/\eta_{dt} - \eta_g P_{ICE}(t) \qquad (2\text{-}4A)$$

The external end of the port III of the ePSD can be connected with at least one power battery pack in bidirectional DC manner, each battery pack's rated voltage $V_{bat} < V_{bus0}$ ; at the same time, the external end of the port III also can be connected with a hundred-kilowatt level brake resistor $R_{bk}$ with a heat sink in one-way DC manner. When the battery pack is basically full of electric charge (SoC reaches URL) down a long slope by the ACE heavy-truck, the traction motor still needs to generate electricity continuously via regen braking so as to keep the effective electric power load when the vehicle is in non-friction retarder function; The brake resistor $R_{bk}$ and the voltage control switch (VCS) can cooperate to eliminate the transient high voltage pulse on the DC bus inside the ePSD and automatically protect other power sub-systems. The above equation (2-2) assumes that the voltage control switch module (VCS) inside the ePSD is turned off, and the brake resistance does not function; if the VCS is activated, then the brake resistor is used as an electric load and connected with the battery pack in parallel; at this time, the left side of the equation (2-2) should be added with the brake resistor power item $P_{BR}$, which is a positive number; at the same time, the series hybrid power balance equation (2-4) also needs corresponding adjustment; this can be easily done by an industry normal technician; It should be emphasized that whether the series equation (2-4) contains the $P_{BR}$ term or not has no substantial effect on the technical discussion of the present disclosure.

Secondly, in the parallel-hybrid mode, the clutch is closed and locked, the engine and the duo-motor are directly and mechanically connected with the driving wheelss, the mechanical power flow loop and the electric power flow loop are both closed, the engine, the generator (MG1), and the traction motor (MG2) can work independently or cooperatively (two-out-of-three or three-out-of-three) to satisfy the vehicle dynamic equation (1-1) in real time. The DC ends of the three functional modules inside the ePSD are all bi-directionally & electrically connected to the direct current bus bar junction point X, the product of the direct current voltage at X and the current of each circuit branch is the electric power time-varying function of the corresponding energy conversion device, and these power items meet the following two power balance equations:

$$P_V = \eta_{dt} \ (P_{ICE} + P_{MG1} + P_{MG2}) \qquad (3\text{-}1)$$

$$P_{MG1} + P_{MG2} - P_{BAT} = 0 \qquad (3\text{-}2)$$

The equation (3-2) assumes that the voltage control switch (VCS) module inside the ePSD is turned off and the brake resistance is not functioning; However, if the module is closed (activated), the brake resistor is used as the extra load and is connected in parallel with the battery pack, at this time, the left side of the equation (3-2) should add the brake resistor power item $P_{BR}$, which is a positive number. Unless the ACE heavy-truck is travelling down a long slope, when the battery pack is basically overfilled (SoC reaches URL), the brake resistor is switched on to realize the non-friction retarder function, in most operation time of the ACE heavy-truck, the brake resistor is not needed to realize the vehicle retarder function, the circuit between the brake resistor and the ePSD junction point X is cut off.

Recombining equations (3-1) and (3-2) to obtain a transient power balance equation ("parallel-hybrid equation" for short) describing the relationship among road-load power, engine power, and battery pack power when the following ACE heavy-truck is operating in parallel-hybrid mode:

$$P_V(t) = \eta_{dt} \ (P_{ICE}(t) + P_{BAT}(t)) \qquad (3\text{-}3)$$

The restriction boundary condition of the parallel-hybrid equation (3-3) is as follows:

a) when the electric charge of the battery pack is substantially sufficient (i.e., in its high efficiency region; BLL < SoC <BUL),

$$P_{ICE\text{-}p} < \max(|P_V(t)|) < P_{ICE\text{-}p} + P_{MG2\text{-}m} + P_{MG1\text{-}m} \qquad (3\text{-}3c1)$$

b) when the electric charge of the battery pack is substantially exhausted (that is, SoC < LRL),

$$P_{MG2\text{-}m} < \max(|P_V(t)|) < P_{ICE\text{-}p} \qquad (3\text{-}3c2)$$

c) the rotating speed of the engine is proportional to the rotating speed of the wheel, and the torque is randomly adjustable (3-3c3)

The equivalent formula variation of the parallel-hybrid equation (3-3) is as follows:

$$P_{BAT}(t) = P_V(t)/\eta_{dt} - P_{ICE}(t) \qquad (3\text{-}3A)$$

The physical meaning of the series hybrid equation (2-4) or the parallel-hybrid equation (3-3) is that the transient road-load power function of the ACE heavy-truck is equal to the algebraic sum of the transient mechanical power function of the engine and the transient electric power function of the battery pack; according to the equation (2-2) or (3-2) and the electric conversion efficiency of the motor, the motor controller, the battery pack and other sub-systems is approximated to be 100 %; in the engineering sense, the battery pack power function is completely equivalent to the duo-motor total power function; in addition, compared with the universal characteristics curve high-efficiency area (more than 42 % of efficiency) (rotating speed/torque) limited range of the diesel engine, the high-efficiency area (more than 90 % of efficiency) range of the modern AC motor is wide, and the control precision and speed of the AC motor vector control algorithm to its torque or rotating speed are one order of magnitude higher respectively than that of the modern electric injection engine, the (electric) motor can quickly and accurately track the torque or rotating speed changes of the engine; Therefore, when the ACE heavy-truck implements the supervisory control strategy or algorithm, it only needs to consider the power function of the engine and the battery pack explicitly, and does not need to consider the power function of the motor explicitly; Of course, the performance parameters of the dual motor will be embodied in the restrictive boundary conditions of the series-

hybrid equation (2-4) or the parallel-hybrid equation (3-3). No matter in the series-hybrid mode or the parallel-hybrid mode, the road-load power of the ACE heavy-truck is equal to the linear superposition of the engine power and the battery pack power, the difference of the two supervisory control or the energy management strategy is mainly embodied in a series of restrictive boundary conditions corresponding to the two equations (2-4) or (3-3). Comparing the series hybrid boundary condition (2-4c1) with the parallel hybrid boundary condition (3-3c1), it is apparent that the power performance of the ACE truck in the parallel-hybrid mode is obviously higher than that in the series-hybrid mode.

The port III of the ePSD can be bidirectionally & electrically connected with two battery packs with complementary strength and having different rated voltages or different electrochemical battery cells through the two built-in DC choppers respectively, which can not only improve the overall performance of the battery pack and increase the redundancy of the battery pack system, but also reduce the comprehensive cost of the vehicle battery pack and bring multiple benefits for optimizing the performance-price ratio of the ACE heavy-truck. The battery pack of the ACE heavy-truck is the Peak Power Source capable of the super-long cycle-life, wide working temperature range and continuous high rate partial state of charge (HRPSoC) operations; In the series-hybrid mode, the main function of the battery pack is to provide the transient electric power of the hundred-kilowatt-level for fast peak-cutting and valley-filling, together with the transient electric power provided by the gen-setcooperatively supply electric power to the traction motor, to satisfy the vehicle dynamic equation (1-1) in real time in pure electric propulsion. A diesel heavy-truck with 500-liter level large fuel tank has normal acceleration force but long endurance (range), which can continuously drive for more than 1000 kilometers; whereas the power battery pack is more like a large horsepower engine with ten liter level small fuel tank, having strong acceleration force but seriously insufficient endurance, only capable of pure electric drive for dozens of kilometers at high speed and full load; the combination of the engine and the battery pack can take advantages and make up for the short-comings of both sides; the total acceleration force and endurance of the series-parallel powertrain are superior. From the perspective of whole vehicle propulsion power balance and energy management, an electric motor neither generates nor stores energy, it is a high-efficiency energy converter with no memory and no hysteresis effect, converting electric energy to mechanical energy bidirectionally in real time; In the supervisory control strategy and algorithm of the ACE heavy-truck focusing on energy-saving and emission-reduction simultaneous optimization, the configuration parameters and performance of the two electric motors only appear in the constraining boundary conditions of the series hybrid equation (2-4) or the parallel-hybrid equation (3-3).

The preferred capacity of the power battery pack of the ACE heavy-truck is preferrably dozens of kilowatt-hour and rarely more than 200 kilowatt-hours. It should be noted that since the rated voltages of various battery packs can be different, the present disclosure relates to a battery pack capacity with the unit dimension of kilowatt-hour (kWh), rather than the ampere-hour (Ah) commonly used in the battery industry. If the ACE heavy-truck encounters the special road condition of ten-kilometer level of continuous uphill a mountain or a long slope (the longitudinal grade is more than 2 %), in the series-hybrid mode, it is very likely that the battery pack charge is substantially exhausted (i.e. SoC reaches LRL) before the vehicle reaches the top; At this time, the gradeability of the series hybrid vehicle will depend entirely on the maximum continuous power $P_{MG1-m}$ of the generator set. In order to maintain the same power performance as the traditional engine heavy-truck, the series-hybrid heavy-truck needs to be configured with a generator (MG1), a traction motor (MG2) and the corresponding motor controllers with the same rated power as the peak power of the engine. At present, the peak power (the maximum continuous power of the engine) of the global main-stream long-haul heavy-truck engine (displacement 10L-16L) exceeds 275 kW, and the peak power of the top 16L diesel engine is even as high as 460 kW. Although automotive grade large motors and inverters with rated power (in terms of the maximum continuous power of an electric motor) over 250 kW have been industrialized, because the voltage platform (800V platform) and the continuous power upper limit requirement of the above products are higher (250kW +) and the annual volumeir are smaller, they cannot be shared with new energy passenger vehicles with nearly two orders of magnitude in annual sales (the mainstream platform is 400V/125kW), resulting in high-power motor and inverter products being expensive in unit cost for a long period of time. For example, the cost of a 300 kW continuous power automotive grade large motor (with motor controller) is obviously higher than the total cost of two 150 kW continuous power automotive grade medium motor (with motor controller); the number of qualified suppliers for the former is one order of magnitude less than that of the latter, making it more difficult to reduce the cost continuously for a long time and guarantee the quality and supply; The comprehensive cost of the range-extender series hybrid system with high power motor configuration is difficult to reduce for a long time, and the performance-price ratio of the whole vehicle is not high. When the ACE heavy-truck encounters high mountains or long slopes, parallel-hybrid mode should be preferred from the perspective of vehicle power and safety and regardless of the average vehicle speed, whereas the series-hybrid mode is the suboptimal selection.

Comparing the series hybrid equation (2-4) with the parallel-hybrid equation (3-3) and the corresponding two sets of constraining boundary conditions, it is obvious that, as long as the battery pack is maintained in its high efficiency area (i.e., BLL < SoC <BUL), the maximum road-load power of the iMMH powertrain under the parallel-hybrid mode is obviously greater than that of the series-hybrid mode, so the power performance of the ACE heavy-truck in parallel hybrid operation is obviously better than that of the series-hybrid mode; at the same time, the engine can directly drive the wheel under the parallel-hybrid mode, which avoids the extra loss caused by the multiple energy conversions between the mechanical energy and the electric energy and is good for reducing the vehicle fuel consumption; and at this time, the generator MG1 and the traction motor MG2 are equivalently combined to form a larger motor with a peak power exceeding 500 kW, which can effectively recycle more whole vehicle kinetic energy through regenerative braking, which is also good for reducing fuel consumption; under the expressway working condition, the ACE heavy-truck in parallel-hybrid mode has lower real-world fuel consumption, and the power or brake performance is better than that of series-hybrid mode. Of course, it is also possible to make full use of the prior 3D road data of the electronic horizon, and combine the configuration parameters and the dynamic working condition data of the ACE heavy-truck, so as to predictively and intelligently dynamically switch between the series-hybrid mode and the parallel-hybrid mode (that is, the intelligent mode switching technology; iMS), fully using the unique characteristics and advantages of these two modes, further realizing the RDE fuel consumption minimization of the whole transportation event; The supervisory control strategy of the ACE heavy-truck is like playing the game Go, it does not compete for the local gain and loss of each stone, it needs to look at the overall situation and seek the overall victory of the final situation, it realizes the simultaneous optimization of energy-saving and emission reduction of the whole freight event, detailed later.

When the ACE heavy-truck runs normally on expressways, the vehicle road-load power function PV (t) is a slow changing analog function in the second-level time granularity; the vehicle travels on the non-congested expressway normally, the absolute value of the vehicle acceleration is less than 0.05G (where G is the gravity acceleration), the road-load power time-variying function distribution (or trace) in the hundred-kilometer level electronic horizon can be dynamically predicted according to the vehicle dynamic equation (1-1) with refreshing frequency higher than 2 Hz and kilowatt level granularity; In other words, when the ACE heavy-truck runs on the expressway normally, the vehicle speed changes slowly in the narrow speed band range of + -25 % around the average vehicle speed (in second level). The time or spatial distribution of the road-load power function of the vehicle during the next ten minute or an hour period can be dynamically predicted and computed using a vehicle-mounted 3D map and vehicle dynamic equation (1-1).

The core difference between the engine control of the hybrid vehicle and that of the traditional internal-combustion engine vehicle is that the engine working condition of the former (hybrid vehicle) and the vehicle working condition are the multi-point to multi-point bidirectional mapping, and the engine working condition of the latter (traditional vehicle) and the vehicle working condition are the single-point to single-point bidirectional mapping. Specifically, the control degree of freedom or dimensionality of the hybrid vehicle for optimizing engine energy-saving and emission-reduction is much higher than that of the traditional internal combustion engine vehicle; However, in the prior art, the transient power time-varying functions of the engine, the electric motor, and the battery pack are all under the analog electronic control (AEC), which also means that each sub-system in the hybrid vehicle powertrain system is mutually influenced and cross-coupled, especially the working condition of the engine and the whole vehicle working condition (equivalent to the powertrain working condition) cannot be completely decoupled, causing the powertrain hardware and its control software to be correlated , which cannot realize the decoupling of the powertrain software and hardware in the engineering sense; The decoupling of the software and hardware of the system is the prerequisite and foundation stone for software defined system. In other words, the supervisory control strategy of the serial or parallel hybrid vehicle in the existing technology cannot realize the decoupling of the software and hardware of the powertrain (that is, the software defined powertrain) in the engineering sense, and it is difficult to optimize the real-world fuel consumption and emission of the vehicle in real time simultaneously. In the existing technology, the hybrid vehicle performs analog electronic control on the transient power functions of the hybrid vehicle engine or battery pack respectively through various supervisory control strategies and embodiments, satisfying the series-hybrid equation (2-4) or parallel-hybrid equation (3-3) in real time; which is limited by the so called vehicle impossible triangle, it is only possible to optimize two-out-of-three factors among vehicle power performance, fuel consumption, or vehicle emission at the expense of the third factor, and it is extremely difficult to enlarge all three sides of the vehicle impossible triangle at the same time.

The ACE heavy-truck has two independent power sources, an engine mechanical power source and a battery pack electric power source; The generator (MG1) and the traction motor (or driving motor, MG2) can be regarded as a high-efficiency passive energy conversion device, which bidirectionally converts mechanical energy and electrical energy at an efficiency of about 90 %. From the whole vehicle energy management strategy perspective, the electric power functions of the dual-motors and the battery pack are equivalent, and the supervisory control strategy of the ACE heavy-truck does not need to specifically consider the motor power function. The core of the disclosure is that, according to the vehicle dynamic equation (1-1) and the series-hybrid equation (2-4) or the parallel-hybrid equation (3-3), by performing novel digital pulse-control technology (DPC) on the iMMH powertrain, the complex surface working condition of the engine is simplified into two pre-set high-efficiency line working conditions (high-state or low-state), the real-time global optimization technical problem of monitoring and controlling the non-linear multi-variable strong coupling hybrid vehicle is reduced in dimension, decoupled and linearized, and the vehicle propulsion performance property, RDE fuel consumption and RDE emission can be optimized at the same time to be the best in industry.

In essence, the vehicle dynamic equation (1-1), the series-hybrid equation (2-4), and the parallel-hybrid equation (3-3) describe the transient power balance (Instantaneous Power Balance) of the ACE heavy-truck configured with the iMMH powertrain under any operating condition and system architecture (series-hybrid or parallel-hybrid), among the three power items of the vehicle road mechanical power function PV (t), engine mechanical power function $P_{ICE}$ (t), battery pack power function $P_{BAT}$ (t) ; no matter in series-hybrid operation or parallel-hybrid operation, the vehicle road-load transient power is equal to the linear superposition of the vehicle engine transient power and the battery pack transient power; At the same time, the transient power and working condition of the engine and the battery pack must satisfy the full set of restrictive boundary conditions corresponding to the series-hybrid or parallel-hybrid equation (2-4) or (3-3). If there is no particular indication in the present disclosure, each power function generally refers to a transient power function. A new function (MTA) called "moving time average" is further defined below, and an integral operation based on moving time average is performed on the original function within the window period $T_w$, as shown in the following equation:

$$\overline{P}(t) = \frac{1}{T_w} \int_{t-T_w}^{t} P(t)\, dt \qquad \text{(MTA)}$$

Wherein P (t) is a transient power function, referred to as a "power function" for short; the $\overline{P}(t)$ is the "average power function" after the " moving-time-average " computation; t is the time variable; $T_w$ is the moving-time-average window period, and $T_w$ is a pre-set minute level parameter. For each freight event, the range of the time variable t is from the starting point of the vehicle to the end point (i.e., freight time at hour level or day level). The difference between the upper integration limit and the lower integration limit of the equation (MTA) must be equal to $T_w$, but the specific value of the upper limit and the lower limit of the equation (MTA) is only one of many possible combinations; Specifically, from the perspective of energy-saving and emission-reduction of the vehicle in the entire freight event, as long as the difference between the upper limit and the lower limit of the integral is $T_w$, various specific settings of the upper limit and the lower limit of the integral are equivalent. It should be emphasized that the specific operation of the "moving-time-average" per equation (MTA) is not the inventive idea and various mainstream "moving-time-average" algorithms (operations) are essentially equivalent in the present disclosure. In the present disclosure, "transient" has two different meanings, the first meaning is instantaneous, while the second meaning is a transient state in which the system quickly switches from one steady-state to another; Those skilled in the art can determine which meaning is applicable according to the context and will not create ambiguity.

The equation (2-4) or the equation (3-3) is still valid after moving-time-average operations per equation (MTA) on all the original "transient power" items; at this time, the original "transient power" items are converted into the corresponding "average power" items in one-to-one bidirectional mapping. The two transient power functions or average power functions of the ACE heavy-truck engine or battery pack are independently regulated and controlled respectively; this is one of the core inventive points of the present disclosure; by performing synchronous complementary digital pulse-control (DPC) on the transient power functions of the engine or the battery pack, the technical requirement of "instantaneous (sub-second level) power balancing" among the vehicle road-load power, engine power, and battery pack power to satisfy the vehicle dynamic equation (1-1) and the series-hybrid power equation (2-4A) or the parallel-hybrid power equation (3-3A) in real-time (the so called "fast control loop") and the technical requirement of "steady state (minute level) SoC adjustment" of the hybrid vehicle's battery pack through the dynamic adjustment of the difference function between the vehicle road-load average power function and the engine average power function (i.e. the three cases of battery pack average power function near zero, obviously larger than zero, obviously smaller than zero) to regulate the operation mode of the battery pack (work stablying in one out of three modes or dynamic switching among the three modes; charge sustaining CS, charge depletion CD, charge increasing CI) in order to achieve dynamic control of the battery pack average SoC time-varying function (the so called "slow control loop") are completely decoupled; enabling the complete decoupling of the technical problem of "instantaneous power control problem" of the ACE heavy-truck (directly impacting vehicle propulsion performance and local instantaneous fuel consumption and emissions; basically independent from the battery pack average SoC control or vehicle global cumulative fuel consumption and emissions) and that of "average power control problem" (related to battery pack average SoC control and vehicle operational mode selection, the local and global fuel consumption and emissions; but independent from the vehicle power performance); the instantaneous power (the fast control loop) and the average power (the slow control loop) of the ACE heavy-truck can be controlled separately and independently to achieve simultaneous optimization of both. To apply digital pulse-control on the transient (or instantaneous) power functions of the engine and the battery pack enables the complete decoupling of the three key dynamic metrics of vehicle instantaneous power performance (sub-second level), engine real-time fuel consumption and pollutant emissions and the simultaneous optimization of all three metrics; whereas the average power control determines that regardless of the operating conditions of the ACE heavy-truck, both the engine and the battery pack can be controlled to operate stably in the respective high efficiency zones for a long time (with over 97% probability) , to eliminate almost completely the low efficiency and high emission working conditions of the engine and the battery pack (with less than 2% probability), and to avoid engine idling working conditions completely; according to the 3D road data in the electronic horizon to achieve real-time predicative control of the average SoC time varying function of the battery pack through stable operation of the battery pack in one out of three modes of CS, CD, CI or dynamic switching among the three modes, optimize the vehicle fuel consumption and pollutant emissions simultaneously in macro steady state sense (minute level) and to decouple the two key technical problems of transient state optimization or steady state optimization of the vehicle fuel saving and emission reduction and to realize the beneficial effects of simultaneous optimization of the ACE heavy-truck RDE fuel consumption and pollutant emissions of the entire fright event. The transient state power function (vehicle, engine, battery pack or motor and so on) or transient state SoC function (battery pack) as analog time-varying functions further contain high-frequency low-amplitude noise components besides useful signals; in the process of analog signal communication, the signal-to-noise ratio will gradually reduce along with time; calculating the average power function of the DPC engine or the average SoC function of the synchronous battery pack according to the moving-time-average equation (MTA) is essentially the digital signal processing of the transient state functions in engineering sense to enhance the medium and low frequency effective components of the analog signal, to reduce the high frequency noise elements obviously, and to increase the signal-to-noise ratio; comparing the control or optimization algorithms of $\overline{P}(t)$ against that of P (t), the former has better accuracy, faster convergence, and is more robust than the latter, and can achieve twice the benefits with half of the effort.

Obviously, according to the series-hybrid equation (2-2) and the parallel-hybrid equation (3-2), the transient power function of the battery pack and the algebraic sum of the two transient power functions of the double motors MG1 and MG2 are completely equivalent mathematically; but the power function of the motor is different from that of the battery pack in physical sense; the former has electromechanical duality, on one hand, it represents mechanical power flow determined by the product of the rotating speed of the motor shaft and the torque, on the other hand, it represents electric power flow determined by the product of the AC voltage of the motor and the current both in complex numbers; the latter only represents the electric power determined by the product of the DC voltage and the current of the battery pack; and the universal characteristics curve of the modern motor has a wide high-efficiency region (with efficiency 90 % +), and the mechanical power flow and the electric power flow in the high-efficiency region can be viewed as approximately equivalent. In the series-hybrid equation (2-4) and the parallel-hybrid equation (3-3), the motor power function, although not mathematically significant, appears only implicitly in the boundary conditions of the above equations; However, in the physical sense, the dual-motor MG1 and MG2 are just the solid bridge and engineering foundation for connecting the three items of the ACE heavy-truck road-load mechanical power function, engine mechanical power function, and the battery pack electric power function with low loss and high efficiency.

In the ACE heavy-truck parallel-hybrid mode, there is direct bidirectional mechanical connection between the engine and the vehicle driving axle, so the rotating speed of the engine is controlled by the vehicle working condition (especially the vehicle speed and the gear of the transmission); the road-load power $P_V$ is an independent variable to be controlled independently, which embodies the control intention (such as longitudinal vehicle speed or acceleration) of the driver to the vehicle driving and the dynamic traffic conditions of the vehicle (the ego vehicle), its value is proportional to the product of the rotational speed of the vehicle driving wheelss (when the tire is not slipping) and the total vehicle driving torque; When the vehicle runs normally (that is, when the driving wheelss do not slip), the rotating speed of the engine is in direct proportion to the rotating speed of the driving wheelss, which is dependent variable and cannot be independently adjusted; the torque of the engine is an independent variable within the effective peak torque range under such rotating speed, which can be dynamically controlled independently according to the vehicle supervisory control strategy; In other words, in the parallel-hybrid mode, the transient power function of the engine can still be an independent variable for independent control; it needs to be emphasized that the rotating speed of the engine is controlled by the speed of the vehicle and the gear of the transmissionand it cannot be independently controlled, however the engine torque is still independently controlled. Considering from the perspective of vehicle RDE energy-saving and emission-reduction simultaneous optimization, under the urban working condition (the average speed of the vehicle is less than 40 kilometer per hour, frequent active acceleration or braking), it is preferred to select the series-hybrid mode; In the expressway working condition (that is, the average speed of the vehicle is more than 60 kilometers per hour, the active acceleration and braking are not frequent), the parallel-hybrid mode is preferred.

At present, more than 95 % of the heavy-trucks in the world use diesel engines; The high efficiency area of the heavy-truck diesel engine (that is, the working condition area in the equal fuel consumption curve of 105 % of the minimum specific fuel consumption BSFC value of the engine) is generally in the rotating speed range of 1000 to 1600 rpm, the torque is 50 % to 90 % of the maximum torque value (that is, the torque loading rate is 50 % to 90 %), while the power loading rate is more than 40 %; outside the high-efficiency region, the specific fuel consumption value (BSFC; g/kWh) of the engine will increase obviously (much more than 6 %); Especially when the diesel engine operates in its low load working condition area (torque loading rate or power loading rate is less than 30 %), besides the fuel consumption (BSFC) significant increase (more than 10 %), the exhaust gas temperature of the engine exhaust port is much less than 250 degrees C, the catalyst conversion efficiency of the after-treatment system is reduced, and the vehicle RDE pollutant emissions (NOx and PM) are increased obviously. The fuel consumption of the whole vehicle can be reduced by the engine down-speeding or downsizing, which has been the big trend of the European and American heavy-truck industry for over ten years; However, these two fuel-saving measures are contradictory to the power optimization of the vehicle under any duty-cycle working condition, and have negative impact on the reliability and durability of the vehicle transmission system. Under the parallel-hybrid mode of the ACE heavy-truck, the generator and the traction motor, each with rated power of 100 kilowatt level, can cooperate with the engine to generate electric power, at this time, the power performance of ACE heavy-truck is obviously better than that of all traditional diesel engine heavy-trucks or extended range serial hybrid heavy-trucks (the peak power is less than 450 kilowatt), It can realize the total peak value driving power (namely the maximum road-load power) or regenerative braking power of 500 kW with best-in-industry vehicle acceleration and gradeability and non-friction braking or retarder capability.

The accumulated useful work done by the ACE heavy-truck in the freight event is directly or indirectly derived from the time integration of the engine transient power function, that is, accumulated effective mechanical energy (also called effective drive work, or Effective Propulsion Work). One of the key elements of the ACE heavy-truck fuel-saving strategy is to keep the engine running stably for a long time in the high-efficiency area of the universal characteristics curve to the utmost extent possible, and to reduce the running time of the engine in the low-efficiency area as much as possible, especially to reduce the running time in the low-load working condition area or the idle working condition point to the utmost extent possible. The engine start-stop technology (SS - Start-Stop) and the engine cylinder deactivation technology (CDA-cylinders Deactivation) are the existing technologies of vehicle energy-saving and emission-reduction well known by people in the global automobile industry, and have been widely applied to the global passenger vehicle industry; However, the shortcomings and constraints of these two existing technologies are also common knowledge of the industry.

The long-haul heavy-truck operates most time (85 % +) in expressway working conditions with very few vehicle starting and stopping and hardly any traffic lights, at the same time the vehicle active acceleration or braking frequency is also rather low; the vehicle noise vibration harshness (NVH) problem caused by start-stop switching of a heavy-truck engine is much more severe than that of a passenger vehicle engine; when the engine stops, multiple mechanical auxiliary sub-systems (such as the cooling fan, the water pump, the oil pump, the brake air pump, the steering booster pump, the air conditioner compressor and so on) on the heavy-truck cannot obtain mechanical energy directly from the engine to maintain normal operations, which will cause multiple negative effects; the frequent starting and stopping of the engine can shorten the service life of these sub-systems such as the engine block, the starting motor, the clutch, and the storage battery; The actual fuel-saving effect of the long-haul heavy-truck engine start-stop technology is very small (the fuel-saving rate is less than 2 %); As described above, the engine start-stop technology (SS) in the prior art of energy-saving and emission-reduction of passenger vehicles (total vehicle weight less than 3.5 tons) is not suitable for long-haul heavy-trucks, and the engine start-stop technology (SS) of heavy-truck has not been commercially available globally. It should be emphasized that the engine start-stop technology (SS) in the prior art is essentially a static start-stop technology, and the differentiating feature is that the engine either runs stably in one of the two states (or working condition points) or switches between these two states dynamically; one steady state is the rotational operation of the engine by combustion work (the first quadrant working condition of the engine universal characteristics curve, the positive rotating speed and the torque) and the other steady state is the engine oil-cut-off, no combustion and no rotation (the absolute zero working condition of the zero rotating speed and the zero torque).

If the long-haul heavy-truck engine copies the cylinder-deactivation technology (CDA) used by the passenger vehicle engine for commercial use, it is necessary to add a set of complex multi-channel variable valve actuation device (VVA), by dynamically cutting off some but not all of the cylinders of the engine (such as from all 6 cylinders down to 4 cylinders, 3 cylinders, or 2 cylinders) and continuously close all the intake/exhaust valves of the passive cylinders (deactivated cylinders) during each complete cycle of the four-stroke engine (crankshaft rotating two turns or rotating angle 720 degrees), to keep the same engine output power the actual loading rate of the other active cylinders doing combustion work is obviously increased, which is good for fuel saving and emission reduction; It should be emphasized that the primary purpose of the diesel engine CDA technology is to raise the temperature of the engine exhaust under the low load operation condition of the vehicle, so that various catalysts in the engine after-treatment system (EATS) can be operated in the high efficiency area (250-500 degrees C), and the vehicle pollutant emissions out of the tailpipe can be reduced greatly; The secondary purpose is to save fuel by adjusting the actual working condition points of the active cylinders. The engine cylinder deactivation technology (CDA) increases the structural complexity and cost of the engine, reduces its reliability and service life thereof; the high-efficiency cruising speed of the heavy-truck engine is obviously lower than that of the passenger vehicle engine, under the vehicle partial operation working condition, the problem of vehicle NVH caused by the CDA of the heavy-truck engine is more severe than that of the passenger car engine; for the long-haul truck, the comprehensive energy-saving and emission-reducing effect of the CDA technology is rather limited, and the performance-to-price ratio is not high; The global long-haul heavy-truck market currently (by early 2022) does not have any mass-production commercial heavy-truck engine start-stop technology (SS) or cylinder deactivation technology (CDA). Of course, if diesel heavy-trucks were to meet the ultra-low emission Omnibus regulations in California 2027 (that is, 90 % less than the NOx limit in the EPA-2010 regulation) and the US Federal GHG-II regulations at the same time, it is necessary to use the mass-production commercial cylinder deactivation technology (CDA) for heavy-truck diesel engines starting from 2027. It should be emphasized that the engine cylinder deactivation technology (CDA) in the prior art is actually a "multi-element cylinder deactivation technology", which needs to give considerations to the running vibration noise characteristic (NVH) of the CDA engine and maintaining the abrasion loss and service life balance of each cylinder part; in the differentiating technical feature is that the total number of the different " arrangements " (related to the sequence of the combustion work of each cylinder of the engine) of active cylinders of the engine is more than 2, and the total number of the independent control channels of the variable valves (air inlet or air outlet) of the engine is more than 1. The extreme case is that the six-cylinder diesel engine adopts the Dynamic-Skip-Firing technology (DSF) in the prior art, and the six-cylinder engine needs to be configured with 12 independent valve control channels in total, which can independently control the intake valve or exhaust valve of each cylinder; At this time, the six cylinders engine can have up to 720 different kinds of cylinder firing sequence in total, which consumes a lot of time and labor in the development and implementation project, and the hardware and software cost of such vehicle-mounted system is high.

The mechanical driving power loop and the electric propulsion power loop of the ACE heavy-truck iMMH powertrain can work independently or work cooperatively to satisfy the vehicle dynamic equation (1-1), the series-hybrid equation (2-4) or the parallel-hybrid equation (3-3) in real time. The ACE heavy-truck can maintain high-speed and full-load running for at least five minutes (or more than five miles) even if the engine is in a passive operation mode of operation (shutdown or non-combustion dragged), and the traction motor is powered solely by the battery pack (series or parallel); From the perspective of hybrid vehicle supervisory control strategy (also called hybrid vehicle energy management strategy), the driving process of the ACE heavy-truck can be regarded as a high-inertia time-varying electromechanical system with minute-level response time (enabled by the battery pack); according to the impulse equivalent principle, digital-pulse-control (DPC) strategies can be used for its engine transient output power, such as pulse-width-modulation control (PWM) or pulse-amplitude-modulation control (PAM); It can ensure that the engine runs stably in the combustion high efficiency area or the non-combustion passive area with zero fuel consumption and zero emission (which can also be regarded as the best high efficiency area) for a long time, the time ratio of the engine running in the combustion low efficiency area (low rotating speed and/or low torque, idle speed and so on) is reduced to the negligible degree (less than 2 %); then using the characteristics that the rotating speed control accuracy or the electric power control precision and the adjustment speed of the motor/battery pack are one order of magnitude higher than that of the engine, performing synchronous dynamic compensation on the engine transient power pulse sequence function through the transient power function of the power battery pack (cutting the peak and filling the valley) after the two are linearly combined, reproducing the analog and slow-varying road-load power function, satisfying the vehicle dynamic equation (1-1) and the series-hybrid equation (2-4) or the parallel-hybrid equation (3-3) in real time; The present disclosure lays the physical foundation and paves the road for leveraging various digital communication or signal processing technologies, digital control technologies, big data (BD) technologies, and the machine learning (ML) technologies to achieve simultaneous optimization of the ACE heavy-truck energy-saving and emission-reduction.

The transient power function of the battery pack can completely track the difference function between the transient road-load power function and the engine power function according to the series-hybrid equation (2-4A) or the parallel-hybrid equation (3-3A) quickly and accurately (ten-millisecond-level time delay or kilowatt-level granularity)to satisfy the vehicle dynamic equation (1-1) in real time, the details are shown in the following examples; an ACE heavy-truck (high vehicle speed preferred parallel-hybrid mode; low vehicle speed preferred series-hybrid mode) is obviously better than all traditional heavy-trucks in terms of vehicle power performance, brake performance, NVH characteristics, RDE fuel consumption value or emission value. The present disclosure upgrades the control strategy for the transient output power function of an ACE heavy-truck iMMH powertrain engine from an analog electronic control strategy (AEC; its essence is amplitude modulation AM control) to the new digital pulse-control strategy (DPC; the essence is to implement pulse width modulation PWM or pulse amplitude modulation PAM control); The disclosure provides the technical foundation, device and method with high performance-to-cost ratio for optimizing the energy-saving and emission-reduction of the long-haul heavy-truck by using the new digital technologies such as artificial intelligence (AI), big data, and cloud computing (ABC). The upgrade from the prior art analog electric control technology (AEC) to digital pulse-control technology (DPC) of the engine power can be compared to the analog signal processing technology in the IT industry to the digital signal processing technology in the IT industry or the analog communication technology to the digital communication technology in the telecommunication industry.

One of the core invention points of the present disclosure will be described in detail below, these two novel technologies can overcome the constraints of the engine analog electric control technology in the prior art and the original deficiencies of the engine static start-stop technology (SS) or the multi-element cylinder deactivation technology (CDA) and still retain their respective own original advantages, and achieve simultaneous optimization of the ACE heavy-truck fuel-saving and emission-reduction; they are: 1) series-hybrid " intelligent start-stop " (iSS - intelligent Start-Stop) technology; 2) parallel-hybrid "intelligent Power Switch" (iPS) technology.

The disclosure firstly describes the intelligent start-stop (iSS) control technology of the ACE heavy-truck in the series-hybrid mode. At this time, the engine is mechanically decoupled from the driving wheelss of the vehicle (that is, no mechanical connection) completely; the working condition point (namely rotating speed or torque) of the engine can be set at-will dynamically, which is unrelated to the vehicle working condition point. According to the specific configuration parameters of the engine, the maximum power point in the optimum working condition area defined by the fuel consumption minimum value contour line in the universal characteristics curve of the engine can be selected as the optimal working condition point; this operating condition point is generally near the maximum rotational speed (i.e., base speed) corresponding to the engine peak torque, the torque loading rate is between 80 % and 90 % (the ratio of the actual torque to the peak torque), and the output power value of the engine at the optimum operating condition point (defined as "optimum output power") is generally between 60 % and 80 % of its peak power; the specific fuel consumption (BSFC; g/kWh) of the engine at this working condition point; is minimum (that is, the thermal efficiency BTE is highest); at the same time, the temperature of the exhaust gas at the exhaust port of the engine is also stably higher than 250 degrees C, which is good for the efficient operation of the vehicle exhaust-gas after-treatment system (EATS). The pollutant emissions are reduced to the utmost extent and the effective service life of the after-treatment system in the real driving environment (RDE) is prolonged. The optimal output power of the engine should be set as slightly less than the maximum continuous power (also called rated power) of the generator (MG1); The peak power of the engine is clearly greater than the optimum output power and should also be greater than the rated power of the generator (MG1), except that the specific fuel consumption (BSFC) and the peak power of the engine at such an operating point is generally not the minimum. In addition, the engine can operate stably at a passive working condition point with zero fuel consumption and zero emission: (NCIP - Non-Combustion Idle Point), the rotating speed value of the NCIP point can be set between 400 r/min and 700 r/min, so as to ensure that each auxiliary sub-system of the ACE heavy-truck can obtain mechanical power from the engine directly and work normally; At this time, the engine cuts off the fuel injection (fuel cutoff) on all its cylinders and enters into the passive operation mode (POM), its torque becomes a negative number with an absolute value substantially less than 300 NM; at this time, the engine is driven to rotate by the generator (MG1) in its driving mode, the engine power of this working condition point is defined as the "non-combustion idle power", which is a negative number and its absolute value is generally less than 10 % of the engine peak power; The engine is in passive operation mode (POM) and its action is equivalent to a one-in-and-multiple-out transmission (namely mechanical power divider), the ten-kilowatt-level mechanical power output by the generator in the driving mode is reversely transferred to each auxiliary sub-system of the vehicle which needs to obtain continuous mechanical energy supply from the engine enabling these auxiliary sub-systems to operate normally. Specifically, at the NCIP working point, the engine has zero fuel consumption and no emissions, belonging to the best high-efficiency working point; but at this time, the generator will consume electricity in the driving mode. the optimum output power of the engine in iSS mode is also called the high-state rated power; The NCIP power is also called the low-state rated power.

For a basic engine without variable valve actuation (VVA) function, a complete four-stroke engine cycle (crankshaft angle of 720 degrees; It is a complete four-stroke cycle of the engine, which is also called engine cycle for short) Pumping Loss will be generated in the two strokes of air in-take or air exhaust, but the two strokes of compression and combustion will benefit from the extension of the compressed air spring inside the cylinder, and there is basically no pumping loss; The engine's own mechanical loss (including friction loss and pumping loss) is positively associated with its rotational speed. The engine working at NCIP is used as the mechanical load, the average value of the non-combustion idle power is basically less than 20 kW; The generator with rated power of one-hundred-kilowatt level can easily drag the operation of the engine, and the power consumption in minute time level is limited and it is only in one-hundred-watt level. For the advanced engine with variable valve actuation (VVA) function, all the intake/exhaust valves of all the cylinders can be dynamically controlled to stay in the continuously closed state when the engine is in passive operation mode (POM), which can obviously reduce the pumping loss, further reduce the "non-combustion idle power" and reduce the power consumption; In addition, a more important point is that when the engine runs in passive operation mode (POM), if it can keep all the intake/exhaust valves continuously closed, it also can avoid the low-temperature exhuast gas generated when the engine runs at NCIP from quickly cooling the engine after-treatment system and negatively impacting its emission reduction (NOx) efficiency. When the engine runs in the passive operation mode, if all the intake/exhaust valves of all the cylinders of the engine are kept in the continuously closed state at the same time, it is defined as a "binary cylinder deactivation" function (bCDA), the variable valve actuation (VVA) technical measure for realizing this bCDA function is called binary cylinder deactivation (bCDA) technology. The bCDA technology of the engine in the present disclosure has essential difference with the multi-element cylinder-deactivation technology (CDA) of the engine in the prior art in terms of both the necessary technical features and the beneficial technical effects, with detailed descriptions later. The binary cylinder deactivation (bCDA) technology not only can obviously reduce the pumping loss of the engine, which is good for saving fuel; but also has more important advantages of avoiding the problem of cooling down various catalysts in the EATS by the large amount of clean low-temperature exhaust gas generated when the engine is operated in passive operation mode and reducing the temperature of these catalyst inside the EATS to below the light-off temperature (that is, below +200 degrees C) and is a novel engine after-treatment system thermal management technology capable of keeping the internal temperature of various catalyst subsystems inside the EATS above the light-off temperature stably and enabling the RDE emissions of the hybrid vehicle to satisfy the CARB Omnibus regulation ultra-low NOx limit (90% lower than the EPA-2010 Nox limit) steadily in long term. It should be emphasized that if the iMMH powertrain of the ACE heavy-truck only adopts the intelligent start-stop technology (iSS) but not the binary cylinder deactivation (bCDA) technology, it can completely satisfy the current diesel heavy-truck NOx emission regulation limits (EPA-2010, Euro-VI, GB-6), and the RDE emission (NOx) can be nearly 75 % lower than that of a modern diesel heavy-truck; However, in order to meet the mandatory legal requirement and the ultra-low NOx emission limit of 0.02 g/bph-hr of the California CARB Omnibus regulations in 2027, the binary cylinder deactivation (aCDA) technology must be adopted, and the active intelligent waste temperature control technology (iETM) of the after-treatment system also needs to be added, which is described in further detail later.

The so-called intelligent start-stop technology (iSS) refers to the vehicle controller (VCU), according to the system configuration parameters of the ACE heavy-truck operating in the series-hybrid mode, the longitudinal driving intention (accelerator or brake pedal) of the driver, the vehicle dynamicdriving data, the electronic horizon road 3D information, and a supervisory control strategy and algorithms focusing on optimizing vehicle energy-saving and emission-reduction, commanding the engine to stably operate in one of the " no-combustion idle point " (low-state) and the " best working condition point " (high-state) or dynamically and smoothly switch between the two, performing bipolar asymmetric pulse width modulation control (PWM) on the transient power time-varying function of the engine; at the same time, through the electric power splitting device (ePSD), the synchronous and complementary pulse modulation control (PWM or PAM) is also performed on the battery pack transient power time-varying function in order to satisfy the vehicle dynamic equation (1-1) and the series-hybrid equation (2-4A) and the corresponding boundary conditions in real time; the disclosure optimizes the energy-saving and emission-reduction of the vehicle simultaneously under the precondition of assuring the driving power and the braking performance of the vehicle. The period of the PWM pulse sequence is one-minute level, and its duty-cycle $k_s$ is defined as the ratio (%) of the high-state operation time in each pulse period (High-state time) to the pulse period and is continuously adjustable between 0 and 1; the complementary low-state duty-cycle is equal to $1-k_s$; The transient power function or the average power function (see equation (MTA)) of the engine can be continuously adjustable between the "non-combustion idle power" and the "optimal output power" by dynamically adjusting the duty-cycle $k_s$; Specifically, at this time, the transient power function of the engine is a bipolar non-constant amplitude PWM pulse sequence function, which includes a second-level rapidly changing rising edge or a falling edge, while the average power function is a slow-varying analog function (ten second-level time window), which does not contain any rapidly changing part. Preferably, the dynamic switching control mode of the engine working condition is as follows: when the engine is switched from low-state to high-state, the generator (MG1) firstly drags the non-combustion engine, after the rotating speed is lifted from the idle speed point to the best working condition point, the engine starts to spray and then burn fuel to do positive work; from the consideration of the engine NVH performance, the torque (second-level time) should be gradually increased along the fixed rotating speed vertical line of the fuel map so as to stably operate after reaching the optimal working condition point; when switching from high-state to low-state reversely, the engine reduces the fuel injection at the best working condition point quickly (sub-second level time) until the fuel injection is completely cut off, depending on the inertia of the flywheel of the engine, the engine quickly enters into the non-combustion state (passive working condition, doing negative work); The torque is rapidly reduced to a negative number (sub-second level time) under the fixed rotating speed of the optimal working condition point, and then the generator drags the non-combustion engine to work stably at reducing the speed to the non-combustion idle point. Specifically, in the series-hybrid iSS control mode, the transient power function of the engine is converted into an asymmetric bipolar PWM pulse sequence function from an analog time-varying function in the prior art; The physical meaning is that the control mode of the transient power function of the engine is converted from the analog electric control (AEC) of the complex global working condition to the digital pulse-control (DPC) of the novel and distinctive settable duo working condition points or lines. In the series-hybrid mode, the ACE heavy-truck engine is mechanically decoupled from the driving wheels and the vehicle is purely driven by electric power, the ten-kWh level power battery pack can independently support the minute level full load operation (that is rated power minute level or peak power second level) of the traction motor (MG2) ; at the same time, the response speed or control precision of the battery pack transient charging and discharging power is one order of magnitude better than that of the engine transient power, the transient power value is continuously adjustable between the negative peak power and the positive peak power of the battery pack, completely capable of quickly and accurately tracking the difference function of the road-load transient power function and the engine transient power function (ten millisecond time delay and kilowatt-level granularity), cutting the peak and filling the valley, according to the series-hybrid equation (2-4A); It not only can ensure that the whole vehicle transient power (total driving power of the iMMH powertrain ) is not affected by the dynamic switching between the two working condition points (high-state or low-state) of the engine, and satisfies the vehicle dynamic equation (1-1) in real time; but also can ensure that the NVH performance of the whole vehicle is obviously better than that of the traditional internal combustion engine heavy-truck equipped with the iMMH powertrain and operated under the prior art analog electronic control of the engine; from the perspective of optimizing the NVH performance of the whole vehicle, the transition time for bidirectionally switching between the high-state and the low-state of the engine should not be too short, and the transition time should be in the second level but not the sub-second level; Furthermore, the transition time (rising edge time) for the engine to switch from the low-state to the high-state should be obviously higher than the transition time (falling edge time) for the engine to switch from the high-state to the low-state. For the ACE heavy-truck series-hybrid iSS operation, the low-state engine is the mechanical load of the generator in the driving mode; in the electric power generation mode, the generator is the mechanical load of the high-state engine. When the engine works at the optimum operating point, the output electric power of the generator (MG1) is referred to as "optimum electric generation power", which is a positive number and is generally higher than 85 % of the rated power of the generator and its upper limit is the rated power of the generator; when the engine works at the non-combustion idle point, the power consumption of the generator (MG1) is called "non-combustion electric consumption power", which is a negative number and its average absolute value is less than 15 % of the rated power of the hundred-kilowatt-level generator; In other words, in the series-hybrid iSS control mode, the transient electric power function or the average electric power function (see the MTA equation) of the gen-set(that is, the engine and the generator) can be continuously adjusted between the non-combustion electric consumption power and the optimum electric generation power by dynamically adjusting the PWM sequence duty-cycle $k_s$.

Essentially, the intelligent start-stop technology (iSS) greatly simplifies the actual combustion operation area of the ACE heavy-truck engine in the series-hybrid mode from the complex surface working condition to a single optimal working condition point (fixed rotating speed and torque; the minimum fuel consumption), by performing asymmetric bipolar rectangular pulse width modulation (PWM) control on the constant output mechanical power generated by the operation of the engine at the optimal working condition point, to dynamically and continuously adjust the average output mechanical power of the engine and the average power generated by the corresponding generator set, according to the three different conditions when the difference function value between the mechanical road-load average power function and the electric gen-set average power function is near zero, obviously greater than zero, or obviously less than zero, the battery pack is working stably in one of the three working modes of charge sustaining (CS), charge depleting (CD), or charge increasing (CI) or dynamically and smoothly switching among the three modes; through the continuous and dynamic predication (in second-level time delay and kilowatt-level granularity) of the distribution of the road-load average power time-varying function within the vehicle electronic horizon (hour-level or hundred-kilometer-level) and dynamical adjustment of the engine average power function, to make the battery pack work stably in its high-efficiency area (BLL < SoC < BUL) to the utmost extent possible; the disclosure avoids the undesirable working conditions that the power of the ACE heavy-truck is reduced because the battery pack is basically exhausted (SoC =< LRL), or the regenerative braking electric charges cannot be effectively recovered because the battery pack is basically overfilled (SoC >= URL); The gen-set (engine + generator) and the battery pack supply electric power cooperatively to ensure that the traction motor can meet the vehicle road-load power requirement in real time and realize the simultaneous minimization of RDE fuel consumption and pollutant emission (NOx) under the premise of ensuring ACE heavy-truck power performance.

The most simple and effective series-hybrid iSS control strategy of the iMMH powertrain is as follows: once the non-combustion idle point and the best working condition point of the engine are selected, they are fixed; The minute-level average power function of the gen-set is continuously adjusted between the non-combustion electric consumption power and the optimum electric generation power by dynamically adjusting the duty-cycle $k_s$ of the engine transient power bipolar rectangle PWM pulse sequence. Of course, the intelligent start-stop (iSS) function can also be expanded to other technical solutions for dynamically switching between the adjustable non-combustion idle point of the engine and at least two high-efficiency working condition points (that is, two different optimal working condition power values); However, these adjustable multi-working condition point iSS technical solutions are more complex and their comprehensive performance-to-price ratios are not any better than the fixed duo-working-condition-point iSS technical solution. Because the adjustment speed and precision of the rotating speed or torque amplitude of the traction motor are one order of magnitude better than that of the transmission, in the series-hybrid iSS mode, if the vehicle needs to shift gear, the traction motor (MG2) can easily finish the operations of the transient torque interruption and fast rotating speed synchronization, enabling the transmission to finish the gear shifting quickly and smoothly; the gear shifting operation of the whole transmission is unrelated to the working condition of the engine; and when the iSS technical solution is used for shifting the transmission, the vibration noise characteristic (NVH) of the ACE heavy-truck and the torque interruption hesitation are obviously better than that of the modern diesel heavy-truck.

Modern heavy-truck diesel engine generally adopts turbocharger; The intelligent start-stop technology (iSS) is suitable for the basic engine without variable valve actuation (VVA) function and configured with low-cost fixed geometry turbocharger (FGT), It is also suitable for advanced engine with variable valve actuation (VVA) function and/or variable section turbocharger (VGT). Although the basic engine and the advanced engine are in the universal characteristics curve high efficiency region (size or shape), dynamic characteristic (such as turbocharger delay Turbo Lag and so on), The difference in price and the like is significant, but the minimum specific fuel consumption (BSFC) value or the optimal output power value of the two engines are substantially the same. the ACE heavy-truck of the basic engine is configured in comparison with the ACE heavy-truck of the advanced engine by means of the ACE heavy-truck series hybrid intelligent start-stop technology (iSS), which can reach the same dynamic performance and energy-saving and emission-reduction effect under various operation conditions and application scenes; In other words, compared with the traditional diesel heavy-truck, the ACE heavy-truck greatly reduces the requirement of the technical advancement and comprehensive performance of the engine, so that the universal characteristic of the engine is no longer the bottleneck of ACE heavy-truck power, RDE fuel consumption or emission; Obviously, the ACE heavy-truck can be flexibly adapted to any modern heavy-truck engine (diesel engine or natural gas engine) used by the industry. China-6 new ACE heavy carat can optimize vehicle power and fuel economy at the same time under the premise of ensuring the long-term stable standard of 700,000 kilometer RDE emission (NOx) of challenging heavy carat, even if it is configured with low-cost domestic basic engine. the optimal output power of the majority of engines is between 55 % and 85 % of its peak power; At full load (loading rate > 90 %) or light load (loading rate < 30 %), the specific fuel consumption (gram/kilowatt hour) of the engine is obviously higher than the minimum value, more expensive. in the universal characteristics curve of the engine, the contour line of the specific fuel consumption (gram/kilowatt hour) is a plurality of irregular closed-loop or open-loop curve sets which are not intersected with each other, the area contained in the internal part of the specific fuel consumption global minimum value contour line is called the best working condition area, commonly known as the "Sweet Spot" of the engine, wherein each point is the best working condition point (special rotating speed and torque), and the specific fuel consumption value is the same; the area contained by the contour line with the fuel consumption equal to 105 % of the minimum value can be called high efficiency working condition area (" high efficiency area "); It is apparent that the area of the high efficiency region is obviously larger than the dessert and completely contains the dessert. The rotational speed corresponding to the dessert of most heavy-truck engines is in the range of 95 % to 125 % of its base speed

(i.e., the rotational speed of the peak torque point), and the corresponding torque is between 65 % and 90 % of its peak torque. The high-efficiency area of the modern heavy-truck engine (diesel or natural-gas) basic model (Base Model) is small, and the high-efficiency area of the advanced model (Advanced Model) is large; The minimum specific fuel consumption value of the two diesel engines at the dessert can be as low as 186 gram per kilowatt hour. In order to continuously reduce fuel consumption (L/100kM), in the last ten years, the trend for the research and development of heavy-truck engines in Europe and US is to reduce the displacement (Down-Size) or reduce the rotating speed (Down-Speed), The basic speed of the engine (i.e., the peak torque point rotational speed) is gradually reduced from 1200 rpm to less than 1100 rpm, even approaching 1000 rpm; The displacement of the mainstream engine also gradually gathers to 12L or 15L. no matter what the specific application scene is, the ACE heavy-truck can completely decouple the working condition of the whole vehicle and the working condition of the engine under the series-hybrid iSS control mode, under the condition of ensuring the power performance of the whole vehicle, The disclosure makes the engine work in the high-efficiency area or the non-fuel idle speed area with zero fuel consumption and zero emission at more than 97 % time, basically completely eliminates the full load of the engine power, low load, or the running condition of the fuel idle speed (the time ratio is less than 3 %), so as to reach the beneficial effect of optimizing the energy-saving and emission-reduction at the same time.

The "intelligent power switching" (iPS) control technology in the parallel-hybrid mode is described in detail below. When the long-haul ACE heavy-truck runs in the parallel-hybrid mode, because the engine is directly & mechanically connected with the driving wheels (that is, mechanically coupled), the engine rotating speed is completely determined by the gear of the transmission and the vehicle speed and changes slowly (second level) along with the time axis, which is a dependent variable and cannot be independently & dynamically regulated; but the torque of the engine is still an independent variable, which can be adjusted independently and dynamically; At this time, for the transient or average power function of the engine, the above iSS control technology cannot be used and the intelligent Power Switching (iPS) control technology must be used. When the ACE heavy-truck runs normally on an expressway (the average running speed is higher than 50 kilometers/hour, there is no emergency braking and the wheels are not slipping), the parallel-hybrid mode is preferred over the series-hybrid mode; in the road section without a long slope, the road-load average power is substantially greater than 35 % of the engine peak power, most time of the whole vehicle operates in medium or high load working condition; the vehicle speed changes slowly over time in a narrow speed band above or below the average speed(in the range of +-20 %), so the absolute value of the relative change of the engine speed of the vehicle is also less than 20 %; the absolute value of the vehicle active acceleration is substantially less than 5.0 % of the gravity acceleration G (i.e., 0.5 meter/second square); At this time, the transient output torque of the engine is still independently and dynamically adjustable in a wide range. The automatic shift control strategy of the ACE heavy-truck transmission can always keep the engine to operate stably in a narrow spped range (high efficiency zone) round its base speed (i.e., the rotational speed of the peak torque point), such as between 1000 and 1600 RPM, under the vehicle expressway condition. In the iMMH powertrain parallel-hybrid mode, the rotating speeds of the generator (GM1) and the traction motor (GM2) are also proportional to the rotating speed of the engine, the three (engine/generator/traction motor) are mechanically connected through one clutch and two torque couplers, which can drive the vehicle cooperatively. The transient torques of the double motors (GM1 and GM2) are independently and dynamically adjustable in a wide range. By respectively performing synchronous complementary bipolar non-rectangular pulse width modulation control (PWM) or bipolar non-equal amplitude (i.e., non-rectangular) pulse amplitude modulation control (PAM) on the transient mechanical power function of the engine and the transient electric power function (charge or discharge) of the power battery pack, the vehicle dynamic equation (1-1) and the parallel-hybrid equation (3-3A) are satisfied in real time, and the engine average power function can be dynamically and continuously adjusted by dynamically controlling the duty-cycle of the engine transient power function PWM pulse sequence, the difference function between the vehicle road-load average power and the engine average power (equation 3-3A) is maintained at one of three states of near zero (for example, the absolute value is not greater than 15 kW), obviously greater than zero or less than zero (the absolute value is greater than 15 kW), so that the battery pack is kept operating stably in one of the three working modes of charge sustaining (CS), charge depleting (CD), and charge increasing (CI) or is switched dynamically and smoothly among the three modes; The disclosure effectively ensures that the battery pack runs in the high-efficiency region (BLL < SoC < BUL) for most time (90 % +), and completely prevents the battery pack from running outside the upper or lower red line. (SoC < LRL or SoC > URL); detailed descriptions of the preferred embodiments later.

When the long-haul freight ACE heavy-truck is operated in parallel-hybrid mode, the transient output power function of the engine can be pulse modulated and controlled (PM; comprising PWM or PAM), realizing the "intelligent Power Switching" (iPS) control function. The specific technical measures are as follows: the vehicle controller (VCU) performs bipolar non-rectangular pulse width modulation control (PWM) on the transient output power function of the engine through a vehicle data bus (such as a CAN bus), the period T of the pulse sequence is at minute level; The engine transient power function bipolar non-rectangular (that is, non-constant amplitude) PWM pulse sequence can be divided into high-state working condition or low-state working condition in the same period; The low-state working condition can be set as the pre-defined working condition line (universal characteristics curve fourth quadrant; the power is a negative number with small range fluctuations), the torque value's range of the low-state working condition line is determined by the set of all sub-systems on the vehicle which must continuously obtain mechanical power from the engine in order to work normally, which is a negative number with the absolute value in one-hundred-NM level; the engine rotating speed range is determined by the vehicle speed time-varying function of the ACE heavy-truck and the transmission gear position, generally the rotating speed range of the engine is 1000 ~ 1800 RPM; the high-state working condition line can be set in the fluctuation range of the engine rotating speed in the pulse period, a pre-determined working condition line (first quadrant of the universal characteristics curve) formed by connecting multiple working condition points with relatively large power value in the high-efficiency area of the engine's brake specific fuel consumption (BSFC) (for example, the area where the BSFC is below 105 % of the minimum BSCF of the engine; torque or power is a positive number with small range fluctuations); the parallel-hybrid duty-cycle $k_p$ is defined as the ratio of the operation time of the high-state working condition to the PWM pulse sequence period T, which is adjustable between 0 and 1; the complementary low-state working condition time in the same period is equal to $(1-k_p)T$; Because the engine speed is determined by the vehicle speed and the transmission gear position when the parallel-hybrid ACE heavy-truck runs normally, there is a small range of fluctuations of the engine speed during the PWM pulse period T (sub-minute level), the engine transient power function high-state pulse part or low-state pulse part is generally non-equal amplitude (namely non-rectangular) pulse. Under the control mode of series-hybrid intelligent start-stop (iSS) control, the transient output power time-varying function of the engine can be converted into a bipolar equal amplitude (rectangular) PWM pulse sequence, directly setting the non-combustion electric consumption power and the optimum electric generation power as two constants unrelated to the dynamic working condition of the vehicle; However, under the parallel-hybrid intelligent power switching (iPS) control mode, the transient output power time-varying function of the engine can only be converted into the specific shape of the bipolar non-rectangular PWM pulse sequence, the shape of the high-state pulse and the low-state pulse part is highly correlated with the vehicle dynamic working condition; The top amplitude curve of the PWM pulse fluctuates slowly in a small range along with time. In the parallel-hybrid iPS mode, the equal amplitude power value of the same time integral area (i.e., equal impulse) as the full high-state pulse sequence (i.e., duty-cycle of 1.0) within the period T is defined as "high-state equivalent power", which is a positive number greater than 70 % of the peak power of the engine; the equal amplitude power value of the same time integral area (i.e., equal impulse) as one cycle of the full low-state pulse sequence (i.e., duty-cycle of 0) is defined as "low-state equivalent power", which is a negative number with an absolute value less than 15 % of the peak power of the engine. In the iPS control mode, the average power function value of the engine is adjustable between the low-state equivalent power and the high-state equivalent power, which is a slow-changing analog (sub-minute clock level) time-varying function. The PWM control solution makes the engine switch dynamically and smoothly between the high-state working condition line inside its combustion high-efficiency area and the low-state working condition line with zero fuel consumption and zero emission and along the vertical line of the universal characteristics curve of the engine (that is, the fixed rotating speed, variable torque), actively adjusting the engine average power function distribution (or trace; referring to equation (MTA)), so that the difference function of the vehicle road-load average power and the engine average power (equation (3-3A)) is dynamically adjustable among the three state of near zero (such as absolute value is not greater than 15kW), continuously obviously more than zero (> 15kW), and continuously obviously less than zero (< -15 kW) ; making the battery pack of the ACE heavy-truck work stably in one of the three working modes of charge sustaining (CS), charge depleting (CD), and charge increasing (CI) or dynamically switch among the three working modes (see equation (3-3A)); the battery pack is kept operating (charged or discharged) in the high-efficiency area to the usmost extent possible, which avoids the undesirable working conditions that the battery pack cannot continue to supply electric power to the traction motor because the battery pack is basically exhausted (SoC =< LRL), and the ACE heavy-truck power performance is reduced, or because the battery pack is basically full (SoC >= URL) and cannot continue to recover the energy of the whole vehicle through regenerative braking; the engine, the generator (MG1) and the traction motor (MG2) work cooperatively to drive the vehicle and to satisfy the vehicle dynamic equation (1-1) and the parallel-hybrid equation (3-3) in real time.

In the ACE heavy-truck parallel-hybrid mode, the engine, the generator (MG1), and the traction motor (MG2) are all directly mechanically connected with the driving wheels of the vehicle, while the rotating speed of the three is completely controlled by the independent variable of the vehicle speed time-varying function when the transmission gear is fixed, and is the dependent variable time-varying function with second-level slow and small amplitude changes (the second-level amplitude change rate is less than 5 %); the torque of the three is the independent variable time-variable function which can be rapidly and greatly changed in one-hundred-millisecond level (the change rate of each level is more than 25 %); The transient torques of the three can be directly combined, the total peak value of the driving torque at the input shaft of the vehicle transmission can theoretically exceed 4000 NM, which is obviously higher than the peak torque (about 2800 NM) of the 16L diesel engine of the top configuration long-haul heavy-truck in the world today; therefore, the parallel-hybrid ACE heavy-truck can work stably at the highest gear (one-to-one direct-drive gear or less than one-to-one over-drive gear) of the transmission for a long time under the expressway working condition; In fact, in order to ensure the mechanical life of the transmission and the driveline system, it is necessary to dynamically limit the maximum propulsion torque at the transmission input shaft of the ACE heavy-truck in parallel-hybrid mode (at present, the maximum input torque of the long-haul heavy-truck grade mass production transmission in the world is around 3000 NM). If there is a need to shift gear in the ACE heavy-truck parallel-hybrid mode operation, especially a downward shift (i.e., from a high gear to a low gear), because the adjustment speed or precision of the torque or rotating speed of the double motors (MG1 and MG2) is nearly ten times higher than that of the engine, the fuel injection of the engine can be firstly cut off before the start of the shift, the duty-cycle is dynamically adjusted to zero to make the engine run in the non-combustion low-state working condition line, and then the double motors (MG1 and MG2) work cooperatively in the drive mode to drag the non-combustion engine and drive the vehicle; at this time, it does not need to open the clutch, it can finish the torque interruption and speed synchronization between the engine flywheel and the input shaft of the transmission in the second-level time, and complete the gear shift, then the engine can restart fuel injection and combustion to operate on the high-state working condition line; The whole set of shifting action is done automatically and smoothly in second-level time. When the ACE heavy-truck shifts in the parallel-hybrid iPS control mode, there is no noticeable vehicle driving torque interruption, which eliminates the obvious propulsion hesitation feeling when the traditional internal combustion engine heavy-truck transmission shifts (especially downward shift), and also obviously improves the vehicle NVH performance. In other words, in the parallel-hybrid iPS mode, if the ACE heavy-truck needs to shift gear, the whole shifting operation must be completed during the low-state pulse part of the engine transient power PWM pulse sequence function (second level); compared with the traditional internal combustion engine heavy-truck shifting operation (especially the downward shifting operation is different), at this time, the shifting does not need to open the clutch, the double motors (MG1 and MG2) cooperatively drive the vehicle and drag the engine under the low-state working condition, realizing the transient driving torque interruption and rotating speed synchronization at the input shaft of the transmission, finishing shifting operation; The disclosure not only reduces the wear-and-tear of the clutch and prolongs its service life, but also improves the dynamic performance and NVH performance of the whole vehicle when shifting the gear; the Clutch-less Gear Shift (CGS), also called "Closed Clutch Gear Shift"(CCGS), technical measure has essential difference and significant advantages comparing with the traditional internal combustion engine vehicle or hybrid vehicle clutch shift method in the existing technology, , and detailed description later. The ACE heavy-truck has an average vehicle speed of over 50 kmph when it travels normally on the expressway, with little active acceleration or braking, and is preferred to operate in the parallel-hybrid mode.

The mechanical power of the engine in the parallel-hybrid mode can be used to drive the vehicle directly, and the generator and the traction motor can work in the same mode, equivalent to a combined motor with larger peak torque and power, which can either obtain electric power from the battery pack to drive the vehicle (pure electric propulsion or cooperative driving with the engine), or charge the battery pack in high C rate via regenerative braking to recover energy. When the traditional ICE heavy-truck runs normally on expressway, the actual gear shifting frequency of the transmission mainly depends on the driving style of the driver, the actual road longitudinal grade function, the whole vehicle configuration parameters, and the vehicle working condition, the larger the engine displacement is, the larger the torque or power is, the lower the gear-shifting frequency is. The ACE heavy-truck in parallel-hybrid mode, the torque or power of the engine, the generator, and the traction motor can be combined, at this time, the vehicle total driving torque (more than 3500 NM) or power (more than 450 kW) is obviously higher than that of the top-of-the-line traditional ICE heavy-truck equipped with a 16L diesel engine, it not only can improve the dynamic performance and NVH performance of the vehicle, but also can prolong the service life of the automatic gear-shifting mechanism of the transmission; Under some special road conditions, the generator and the traction motor can also operate in the opposite mode; that is, one is in the generation mode and the other is in the driving mode. Of course, the intelligent power switching (iPS) function can also be implemented by other digital pulse-control technologys beside pulse width modulation control (PWM), such as non-rectangular pulse amplitude modulation (PAM) control of engine transient output power; The ordinary technicians can leverage the innovative teachings of the present disclosure, the mature modern digital communication or digital signal processing technologies combined with the mature engine analog electric control technology , to come up with multiple equivalent technical solutions or measures for implementing the digital pulse-control (DPC; such as series-hybrid iSS and parallel-hybrid iPS) to the transient output power function of the engine of the iMMH powertrain; However, these equivalent technical solutions or technical measures have no obvious advantages in terms of iMMH powertrain system performance, cost, reliability, energy saving, emission reduction and actual effect, compared with the above PWM technical solutions.

The series-hybrid iSS or parallel-hybrid iPS technology of ACE heavy-truck iMMH powertrain of the present disclosure can convert any modern analog electric control (AEC) heavy-truck engine of global mass-production & commercial-use, under the premise of keeping the engine hardware (including engine main body and after-treatment system) and calibration software (firmware) unchanged, into a novel digital pulse-control (DPC) engine, which is referred to as pulse-control engine for short; Specifically, from the perspective of the energy-saving and emission-reduction of the DPC engine, in addition to that all the high-state operating point/line is the high-efficiency working condition of the engine, all the low-state operating point/line is also the absolute high-efficiency working condition with zero fuel consumption and zero emission; however at this time, it needs to consume electricity from the battery pack at the one-hundred-watt-hour level; The pulse-control engine's high-efficiency operation time ratio is as high as 98 %, the non-high-efficiency operation time ratio is less than 2 %, almost completely eliminates the low-speed low-load non-efficient operation time (less than 1 %) and completely eliminates the engine idle operation. Compared with the AEC engine of the existing technology, the DPC engine converts the transient power time-varying function from the analog function into the bipolar pulse sequence function (PWM or PAM) through the series-hybrid iSS or parallel-hybrid iPS technical measures, and simplifies the stable operation condition of the DPC engine with a time ratio of about 98 % from the complex surface working condition into at least two pre-defined high-efficiency working condition lines or points, the engine working condition is completely decoupled from that of the ACE heavy-truck, the actual operating condition of the engine is independently controlled by the supervisory control algorithm of the VCU; In other words, no matter what the duty-cycle of the ACE heavy-truck is, the actual operation condition of the DPC engine is always either stable operation in the high-state or the low-state with 98% probability or bidirectional dynamic switching between the high-state and the low-state with 2% probability; The DPC engine of the iMMH powertrain realizes not only the decoupling of the engine working condition and the ACE heavy-truck working condition (no matter series-hybrid mode or parallel-hybrid mode) but also the decoupling of the iMMH powertrain supervisory control software and the system hardware, which lays a solid technical foundation for the software defined powertrain. From the engineering point of view, the DPC engine can be regarded as a binary state machine with pre-determined high-state and low-state, enabling the generalization, abstraction, and hardware-software decoupling of the engine; The disclosure greatly simplifies the model complexity and computing load of the ACE heavy-truck RDE energy-saving emission-reduction online real-time global optimization algorithm, and improves the computing speed, convergence, accuracy, and robustness of the algorithm. It should be emphasized that the analog electric control (AEC) engine and the digital pulse-control (DPC) engine in the disclosure are the same in terms of hardware (the main engine body with electric control and the after-treatment system), and the difference between the two is mainly in two aspects: 1) the real-time control method of the engine output transient power function and the whole vehicle layer supervisory control strategy are different; 2) the configurations of other related sub-systems in the powertrain except the engine are obviously different; The dual-motors (MG1 & MG2), the power battery pack, and the electric power splitting device (ePSD) are the necessary and differentiating technical features (class B) for the DPC engine. It is obvious that the ICE heavy-truck or mild-hybrid heavy-truck cannot realize the DPC engine. In engineering sense, the iMMH powertrain of the disclosure upgrades the mature analog power source of the ICE heavy-truck AEC engine into the novel digital power source of the ACE heavy-truck DPC engine through the series-hybrid iSS or parallel-hybrid iPS technologies; it opens new technical pathways to break the zero-sum trade-off constraints imposed by the "Impossible Triangle" (high performance/low fuel consumption/low emissions) of the ICE heavy-truck, to explore positive-sum trade-off opportunities, and to achieve simultaneous optimization of long-haul freight ACE truck fuel-saving and emission-reduction under the premise of ensuring industry leading vehicle performance; It is analogous to the upgrade from analog communication to digital communication.

The long-haul ACE heavy-truck can, according to the 3-D information (including longitude/latitude/longitudinal grade) of the hundred kilometer level electronic horizon road, vehicle configuration parameter (vehicle total weight, wind resistance/wheel resistance coefficient of vehicle, configuration parameter of engine/transmission/battery pack/motor and so on) and dynamic operation data (vehicle speed function, vehicle positioning function, battery pack SoC function and so on), and an intelligent cruise control (iCC) sub-mode selected by the driver, according to the vehicle dynamic equation (1-1) at the vehicle-end in real time accurately calculating (second level time delay and kilowatt level granularity) vehicle on the non-congested highway on the future hour level electronic horizon range in the road-load transient power function or average power function; at this time, the parallel-hybrid mode is preferred, the vehicle controller (VCU) performs iPS control on the engine, the average power function value is dynamically adjusted by dynamically controlling the duty-cycle kp of the DPC engine transient power function, making the power battery pack in the charge sustaining (CS) mode (the average power of the engine is basically equal to the average power of the road-load), the charge depleting (CD) mode (the average power of the engine is obviously less than the average power of the road-load), and charge increasing (CI) mode (the average power of the engine is obviously more than the average power of the road-load); performing in-time (JIT) charging and discharging on the battery pack, ensuring the battery pack to work in the high efficiency area (BLL < SoC < BUL) to the largest extent, increasing the accumulated throughput electric charge of the battery pack, keeping the high efficiency operation time of the battery pack to be more than 95 %, it completely avoids the battery packet entering the red line working condition of emptying (SoC is less than LRL) or overflowing (SoC is more than URL); The engine, the generator (MG1) and the traction motor (MG2) are cooperatively driven to meet the vehicle dynamic equation (1-1) and the parallel-hybrid equation (3-3) in real time to realize the beneficial effect of the ACE heavy-truck real-world fuel consumption and pollutant emissions at the same time.

The total driving torque of the engine, the generator and the traction motor can be linearly overlapped at the input shaft of the transmission; At present, the peak torque of the 16-liter heavy-truck engine configured at the top of the mass production long-haul heavy-truck is less than 3000; Most of the maximum input torque of the existing heavy-truck transmission for mass production in the world is less than 3000 meters, and the iMMH powertrain needs to actively limit the torque at 3000-3500 meters in the parallel-hybrid mode so as to protect the transmission and the driving bridge; The maximum torque at the input shaft of the existing mass production heavy-truck transmission is mainly limited by the transmission, the transmission shaft, or the original design mechanical strength and service life of the driving bridge, if re-designing and mass-producing the reinforced heavy-truck transmission with peak input torque greater than 3500 bovine meters, the recent research and production unit cost will be high, which is difficult for commercial production in the near future. In other words, even if only a low-cost and good-quality basic heavy-truck engine (for example, a displacement of 9 liters to 12 liters; the peak power is greater than 260 kW; the peak torque is less than 2500 cow meter) and the main stream high performance-to-cost ratio of the hundred-kilowatt level generator (MG1) and the traction motor (MG2), the ACE heavy-truck configured with the iMMH powertrain of the disclosure also can be in the minute level short time, The explosive output combined drive power (the sum of mechanical power and electric power power) exceeds 450 kW, the combined peak torque exceeds 3500 meters, and its power is obviously higher than the mass-produced top-level 16-liter diesel truck in the global market, and the whole vehicle power long-haul industry is the best. At present, the maximum input torque of the input end of the long-haul heavy-truck transmission for mass production is basically less than 3000; In order to adapt to the ACE heavy-truck, the existing heavy-truck transmission or other transmission sub-systems (driving shaft, axle and so on) need to be redesigned in terms of mechanical strength and service life; The peak torque of the input end of the mass production enhanced heavy-truck AMT transmission should be increased to more than 3500 meters, and the total number of the gears can be reduced from 10 to 16 gear to 5 to 8 gear; The reinforced AMT transmission can obviously improve the actual dynamic upper limit of the ACE heavy-truck and further optimize the energy-saving and emission-reduction of the whole vehicle.

In the prior art, the hybrid vehicle supervisory control strategy (SCS) generally includes the following seven vehicle operation sub-modes (also called control sub-modes); unless specifically indicated, a certain mode shall apply to serial or parallel hybrid; The switching between each control sub-mode is not frequent, and the average switching interval is generally at the minute level or ten minutes level.

1) Pure battery driving mode: At this time, the engine does not work, and the battery pack works in the charge depleting (CD) mode to independently supply power to the traction motor so as to meet the requirement of road-load power. At this time, the average power of the engine is zero, which is obviously lower than the road-load average power.

2) pure engine driving mode: At this time, the vehicle is directly mechanically driven (parallel mixed) by combustion work of the engine or indirectly mechanically driven (series mixed) by driving the generator to generate electricity, and the battery pack basically does not participate in work (that is, no discharge; It has regenerative braking charging), belonging to charge sustaining (CS) mode. At this time, the average power of the engine is basically equal to the road-load average power.

3) Hybrid drive mode: The engine, the generator, the traction motor and the battery pack cooperatively drive the vehicle. at this time, the average power of the engine is basically the same as that of the road-load; the battery pack is charged and discharged with high multiplying power to cut the peak and fill the valley of the road-load transient power so as to meet the dynamic equation of the vehicle in real time; The battery pack operates in a charge sustaining (CS) mode.

4) Engine driving and charging mode: The remaining power of the engine is charged to the battery pack by the generator, and the battery pack works in the charge sustaining (CS) or charge increasing (CI) mode. At this time, the average power of the engine is obviously higher than the road-load average power.

5) regenerative braking mode: At this time, the road-load power is negative (downgrade or brake), the engine does not do positive work without burning, the traction motor generates electricity by regenerative braking, charges the battery pack to recycle the mechanical energy of the vehicle, and decelerates the vehicle. at this time, the battery pack works in the charge sustaining (CS) or charge increasing (CI) mode; The average power of the engine is not positive, but is obviously higher than the road-load average power.

6) Parking Charging Mode: At this time, the vehicle is stopped and the on-road power is zero. the power of the engine is completely used for charging the battery pack through the generator, the traction motor does not work, at this time, the battery pack works in the charge increasing (CI) mode; The average power of the engine is obviously higher than the road-load average power.

7) mixed charging mode: at this time, the road-load power is negative (downgrade or brake), the engine charges the battery pack through the generator, at the same time, the traction motor regenerative brake also charges the battery pack, at this time, the battery pack works in the charge increasing (CI) mode; The average power of the engine is obviously higher than the road-load average power.

Obviously, the supervisory control strategy and operation sub-mode of the ACE heavy-truck in the disclosure are essentially different from the existing technology set; by series-hybrid iSS or parallel-hybrid iPS, the ACE heavy-truck makes the six control sub-modes except the parking charging sub-mode in the existing control technology of the hybrid vehicle to perform various simulation control technical measures on the hundred-kilowatt-level mechanical power flow or electric power power flow of the hybrid vehicle, applying and digitalizing after organically integrating in each pulse period (sub-clock level) of the engine transient power pulse width modulation (PWM) sequence; The pulse-control engine of the disclosure equivalently converts the complex multi-dimensional non-linear analog electric control problem of the mechanical power flow or the electric power flow when the hybrid vehicle is operated into a simpler dimension-reducing quasi-linear digital pulse-control problem, The disclosure lays the road for solving the global technical problem of energy-saving and emission-reduction of the heavy-truck of the internal combustion engine by a new digital information technical solution, and solves the technical problem of the energy-saving and emission-reduction of the heavy-truck of the internal combustion engine by the new digital information technical solution. so that the ACE heavy-truck can simultaneously optimize three key metrics of the power performance of the whole vehicle, RDE emission (gram/kilowatt hour) and fuel consumption (liters/one-hundred-kilometer ); The RDE fuel-saving rate of the diesel heavy-truck and the ACE heavy-truck can reach 30 % under the long-haul application scene, the RDE emission (such as NOx) is reduced by 75 % to 90 %, and the dynamic performance and brake effectiveness of the whole vehicle are better than the 16-liter diesel heavy-truck configured at the top of the industry.

The technical features of the seven control sub-modes of the internal combustion engine vehicle engine start-stop technology (SS), the engine cylinder deactivation technology (CDA) and the fuel-electricity hybrid vehicle in the existing technology set are summarized as follows: 1) engine " static start-stop technology " (SS), engine at " real zero working condition point " (namely zero rotating speed/torque and zero fuel consumption/discharge) and combustion working surface working condition (universal characteristics curve first quadrant; one of the positive rotating speed/torque and the positive fuel consumption/discharge) is stably operated or dynamically switched between the two; 2) engine " multiple cylinder deactivation technology " (CDA), engine various cylinder stable combustion arrangement (each cylinder combustion sequence related) total is far higher than 2, variable valve independent control channel total is at least 2, only can partially stop cylinder (such as six cylinder engine stopping two cylinder, three cylinder, four cylinders) or non-stop cylinders (six cylinders are all working), not allowing all cylinders to be stopped; 3) the switching between the seven different control sub-modes of the hybrid vehicle is associated (tightly coupled) with the current numerical value of the vehicle road-load transient power function (namely the whole vehicle transient working condition), and is basically independent (decoupled) with the distribution of the road-load average power function in the electronic horizon (hour level or hundred kilometer level).

The ACE heavy-truck iMMH powertrain digital pulse-control (DPC) technical solution of the present disclosure (including series hybrid intelligent start-stop technology (iSS), parallel hybrid intelligent power switching technology (iPS), and intelligent mode conversion technology (iMS) and so on), compared with the prior art, the distinguishing technical features are summarized as follows: 1) the series-hybrid iSS or parallel-hybrid iPS is substantially a novel "dynamic start-stop technology" of the DPC engine, the engine always rotates, and there is no real zero working condition point; the engine stably operates or dynamically switches between one of high-state working condition point or line (universal characteristics curve first quadrant high-efficiency area, positive rotating speed/torque and positive fuel consumption/emission) and low-state working condition point or line (universal characteristics curve fourth quadrant high-efficiency area, positive rotating speed, negative torque, zero fuel consumption/emission), High-efficiency operation (high-state or low-state) time ratio is more than 97 %, middle state operation (high-state and low-state bidirectional switching, also called " transient state ") the time is less than 3 %; 2) for the DPC engine configured with variable valve technology (VVA), in addition to the multi-element cylinder-deactivation technology, it also can adopt novel " bCDA-binary CDA " (bCDA-binary CDA), The difference technology characteristic comprises engine various cylinder stable combustion array (each cylinder combustion sequence related) is equal to 2, variable valve independent control channel total minimum can be simplified as single control channel, namely only full cylinder operation (completely not stopping cylinder) or all cylinder stopping two stable state; 3) DPC engine high-state working condition and low-state working condition of one of the stable operation or between the dynamic switching, or battery pack three modes (CS, CI, The steady-state operation of one of CD one-out-of-three or the dynamic switching between CD one-out-of-three) is substantially independent (decoupling) of the current value of the vehicle road-load transient power function (i.e., the whole vehicle transient condition), and is highly associated with the distribution of the vehicle road-load average power function in the electronic horizon range (hour level or hundred kilometer level). It should be understood by those skilled in the art that the technical features of the prior art SS and CDA and the novel technologies iSS, iPS and bCDA of the present disclosure are not described in detail.

The iMMH powertrain DPC engine (series-hybrid iSS or parallel-hybrid iPS control technology) of the disclosure retains the main advantages of AEC engine start-stop technology (SS) and cylinder deactivation technology (CDA) in the existing technology (such as engine fuel-saving, exhuast gas temperature control and so on), but also effectively overcomes the main defects of the two (such as vehicle air conditioner refrigeration function is interrupted when the engine is stopped; the vibration noise NVH characteristic of the whole vehicle is deteriorated; The disclosure increases the complexity and cost of the system, reduces the reliability and service life of the engine sub-system and realizes the ACE heavy-truck energy-saving and emission-reduction optimization with higher performance-price ratio without adding any hardware. It needs to be emphasized that in theory, the serial/mixed iSS control or parallel/parallel-hybrid iPS control is suitable for the whole vehicle working condition of the ACE heavy-truck from the static state to the highest legal vehicle speed; However, when the average vehicle speed of the ACE heavy-truck is less than 40 miles per hour and the active acceleration or frequent braking (that is, congestion expressway working condition or urban working condition), the series-hybrid iSS control has obvious advantages in the aspect of vehicle power performance and energy-saving and emission-reduction effect and so on, compared with the parallel-hybrid iPS control, it should be the first choice; When the ACE heavy-truck runs normally on the expressway (the average vehicle speed is higher than 40 miles per hour, and the active acceleration or braking is not frequent, that is, the expressway condition), the iPS control mode should be preferred and mixed. Obviously, the parallel-hybrid iPS control can realize higher total driving power or regenerative braking power of the whole vehicle layer than the series-hybrid iSS control, the dynamic performance and braking effectiveness of the whole vehicle are both higher than those of the latter one, which is the main operation mode of the long-haul ACE heavy-truck.

At present, some high-end internal combustion engine heavy-trucks in Europe and US use " neutral sliding " control technology (commercial name e-Coast or SmartCoast and so on) to further save oil; The vehicle controller (VCU) of the heavy-truck can dynamically compute and predict the distribution of the transient road-load power function according to the 3D road information of the ten-mile electronic horizon, if the absolute value of the vehicle road-load power function of a certain road section is less than a predetermined threshold value (for example, the absolute value is less than 20 kW; heavy-truck lower long slow slope), VCU can command automatic transmission (AMT) shifting neutral gear sliding (Neutral) or cutting off the wire-controlled clutch sliding; at this time, the engine is mechanically decoupled from the output shaft of the transmission or the driving wheels of the vehicle, the engine firstly reduces the torque and then reduces the rotating speed, switches to the idle speed working condition point to operate, further reduces the mechanical power consumption, the vehicle can still slide for a distance (mile level or minute level) with slow deceleration and no power by its huge inertia, it reaches the effect of saving fuel; when the absolute value of the road-load power exceeds a specific threshold value (e.g., the absolute value is greater than 20 kW), the VCU directs the engine to further increase the rotating speed to synchronize the rotating speed of the engine with the rotating speed of the input shaft of the transmission, closing the wire-controlled clutch, then the transmission automatically shifts again, The second-level time recovers the normal driving mode or braking mode of the engine. the heavy-truck engine is low in rotating speed and low in load under idle speed working condition, which is higher than fuel consumption (BSFC), and still has fuel consumption and discharge, but at this time, because the engine load is low (the power loading rate is less than 10 %), the total fuel consumption is not high, but the vehicle tail pipe pollutant emissions intensity will be obviously increased; The disclosure can save oil, but the vehicle loses the braking function of the engine, which obviously increases the burden of the mechanical braking system, and also loses the ability of quickly accelerating the vehicle, which is obviously bad for the driving safety of the vehicle; From the consideration of the driving active safety, the vast majority of motorcyclists clearly prohibit the driver from driving the manual shift heavy-truck to slow down the slope, so as to save oil by using the neutral gear to slide. the reaction speed of the mechanical system such as the engine and the transmission is limited to be slow (second level), the mode switching interval of the current neutral gear sliding control technology is in minute level, it is difficult for the second level interval to switch back and forth with high frequency; Only a small number of basic horizontal road sections (the absolute value of the longitudinal grade is less than 0.5 %) of the actual running road of the long-haul heavy-truck are suitable for the neutral sliding mode (for example, the total distance of the expressway is less than 30 %), the actual fuel-saving effect is not obvious (less than 1 %), and it also needs to balance the contradiction between the neutral gear sliding fuel-saving and brake safety at any time; at the same time, the neutral gear sliding mode will greatly increase the gear-shifting accumulation times of the transmission or the clutch switch accumulation times, which has negative influence on the service life of the transmission gear-shifting mechanism and the clutch, and may also negatively influence the vibration noise performance (NVH) of the whole vehicle.

The ACE heavy-truck iMMH powertrain is in series-hybrid iSS or parallel-hybrid iPS control mode, in each PWM pulse sequence period of the transient power function of the DPC engine, in most time, the engine operates efficiently (high or low-state), but in parallel-hybrid mode, the rotating speed or power absolute value of the engine in low-state operation is obviously higher than the rotating speed or power absolute value in series-hybrid mode (that is, the low-state series hybrid power consumption is obviously less than the parallel hybrid power consumption); The ACE heavy-truck can also adopt the following "Intelligent Mode Switching" (iMS-Intelligent Mode Switching) control technology to further save fuel; The specific technical measures of the iMS are as follows: under the expressway working condition, ACE heavy-truck according to dynamic equation (1-1), vehicle configuration parameter and dynamic working condition data, In addition, the electronic horizon firstly checks the 3D road data and other information, which can compute and predict the distribution of the road-load transient power function or the average power function in the future hour-level or hundred kilometer-level front road section with kilowatt-level granularity in real time (second-level time delay); The absolute value of the road-load average power function is less than a preset threshold value (e.g., 50 kW) of the kilometer-level road section, and the road-load average power function can be preferably switched to the series-hybrid iSS control mode for operation, at this time, the duty-cycle is substantially less than 0.2; if the absolute value of the average power on the road is greater than the preset threshold (e.g., 50 kW), the other road sections are preferably switched to the parallel-hybrid iPS control mode for operation; Obviously, the rotating speed and the equivalent energy consumption of the low-state working condition of the PWM period under the series-hybrid iSS mode are obviously lower than the rotating speed and the equivalent energy consumption of the low-state working condition of the corresponding PWM period under the parallel-hybrid iPS mode; It needs to stress, no matter in the series-hybrid iSS mode or the parallel-hybrid iPS mode, the transmission of the ACE heavy-truck is always in gear-shifting operation, which can always stop the neutral gear sliding, which can both save oil and brake effectiveness, that is to say, all the advantages of the neutral gear sliding control in the existing technology are reserved, It also overcomes the shortcomings. The peak torque of the traction motor (MG2) is equivalent to the peak torque flag of the engine, but the working condition (i.e., torque or speed) of the motor adjusts the speed or precision by an order of magnitude higher than that of the engine; no matter the series-hybrid iSS or the parallel-hybrid iPS mode, the traction motor (MG2) can provide hundreds of kW of driving positive power or regenerative braking negative power to the vehicle through the transmission within ten milliseconds of response time, which not only optimizes the fuel consumption and emission of the engine at the same time, but also completely avoids the defect of neutral gear sliding, it ensures the effective brake, at the same time, it can reduce the shifting times of the automatic transmission, and improve the vibration and noise performance (NVH) of the whole vehicle; As described above, the actual fuel-saving effect of the intelligent mode switching technology (iMS) is obviously better than that of the neutral gear sliding existing technology; the two implement technical means have different qualities and obvious technical feature difference; The iMS can completely overcome the negative influence on the transmission shifting mechanism service life, the drive-by-wire clutch service life and the whole vehicle NVH performance caused by the obvious increase of the transmission shifting times in the existing technology, and the disadvantages of the whole vehicle braking performance reduction and the brake sheet abrasion increase.

The clutch of the internal combustion engine heavy-truck is similar to the tires and the brake sheet, which are consumables; the core function of the clutch is to perform time domain switch control on the torque transfer between the engine and the input shaft of the transmission, in the second-level transition state of bidirectional switching between the two stable states of complete disconnection and complete closing of the clutch, the clutch finishes the rotating speed synchronization and torque transmission between the engine flywheel and the input shaft of the transmission through the friction plates at the two ends of the inner part; the normal service life of the clutch is obviously lower than the service life of the engine or the transmission, and is highly associated with the driving style of the heavy-truck driver; the clutch and the brake system are always one of the key points of the daily operation and maintenance work of the long-haul heavy-truck; The replacement or maintenance of the clutch has been one of the pain of many fleet daily operations, which is cost-effective and affects the attendance rate of the vehicles. When the traditional internal combustion engine heavy-truck is shifting on the way of driving, especially shifting downwards (Downshift; the clutch must be cut off firstly, so as to realize torque interruption, when the engine increases the rotating speed under low loading rate and the rotating speed is basically the same as the input shaft of the transmission, the clutch is closed again; in the second-level gear-shifting transition period, the rotating speed difference between the flywheel of the engine and the input shaft of the transmission is eliminated by the sliding of the inner friction plate at the two ends of the clutch, the rotating speed difference between the engine and the input shaft of the transmission is realized, the rotating speed of the engine and the input shaft of the transmission is synchronous, after the clutch is completely closed, the engine can efficiently transmit the torque, recovering the operation with high loading rate and driving the vehicle; the shifting operation of the whole heavy-truck transmission is generally finished within several seconds; Because the engine is hard to control the rotating speed quickly and accurately, the friction plate slides in different degrees when the clutch is closed every time; It is obvious that the factors such as frequent shift of the transmission and the rotating speed difference or torque difference between the driving end and the driven end of the clutch in the second-level transition period (that is, before completely closing) have negative effects on the service life of the clutch and the NVH performance of the whole vehicle; The driving style of the driver can cause the shift frequency of the unit mileage of the heavy-truck to be greatly increased, and the actual life mileage of the clutch is shortened by more than 50 %. the modern AC motor realizes the dynamic precise control of the rotating speed and torque of the motor through the vector control; the response speed and precision of the motor rotating speed control are one order of magnitude higher than that of the engine rotating speed control; The hundred-kilowatt-level traction motor of the hybrid P2 position can easily complete the transient torque interruption and speed regulation synchronization (sub-second level) necessary for the gear shifting operation of the transmission through vector control (Vector Control) without any assistance of the clutch.

The ACE heavy-truck of the disclosure can command the iMMH powertrain and realize the CGS-Clutch-less Gear Shift function of the vehicle; That is, the ACE heavy-truck does not need the synchronous switch action of the clutch when the transmission shifts no matter in the series hybrid or parallel-hybrid mode, in the transmission shifting operation process (second level), the clutch is always in the completely closed state (parallel hybrid) or completely disconnected state (series hybrid); The specific technical measures are as follows: when the ACE heavy-truck stably runs in the series-hybrid iSS mode, the clutch is always cut off, the engine and the transmission are completely decoupled, The electric power splitting device (ePSD) commands the traction motor (MG2) through the vector control technology to easily realize the transient driving torque interruption and speed change synchronization at the input end of the transmission, so that the transmission smoothly finishes the clutch-less gear shift operation; When the ACE heavy-truck stably runs in the parallel-hybrid iPS mode, the clutch is always closed (the clutch does not have switch action when the transmission shifts), at this time, the engine is synchronous or in the same proportion with the rotating speed of the double motors (MG1 and MG2) and the input shaft of the transmission; if the transmission needs to shift, the duty-cycle of the engine transient power function PWM pulse sequence can be dynamically adjusted, after the working condition of the engine is switched to the low-state working condition, the generator (MG1) drags the low-state operation of the DPC engine in the driving mode, At this time, the engine is equivalent to a mechanical load with an average power consumption of less than 15 kW; 100 kilowatt-level generator (MG1) and the traction motor (MG2) have the same rotating speed (coaxial connection) or fixed speed ratio (parallel shaft connection), the torque can be linearly overlapped, the total peak value torque of the double motors is higher than 3000 meters, the total driving peak value power can be as high as 500 kW; the electric power splitting device (ePSD) through the vector control technology, commanding the cooperation of the double motors (MG1 and MG2), which not only can drag the low-state operation of the DPC engine, but also can realize the transient driving torque interruption and gear shifting and speed changing synchronization of the input end of the transmission, The transmission smoothly finishes the gear shifting operation (second level) without clutch (CGS), after the gear shifting, the DPC engine can be switched to the high working condition again to operate. Obviously, for the duty-cycle dynamic control of the pulse-controlled engine in a certain PWM period, the switching requirement satisfying the clutch-less gear shift (CGS) function of the transmission is higher than the priority satisfying the switching requirement of the battery pack working modes (CS/CD/CI).

The intelligent mode switching control technology (iMS) refers to the controlled bidirectional dynamic switching between the ACE heavy-truck series-hybrid iSS mode and the parallel-hybrid iPS mode, at this time, the clutch must complete a switching action (switching on or switching off); switching from series-hybrid to parallel hybrid (that is, from disconnection to closing of clutch), firstly making the pulse-control engine to operate in a low-state working condition (transition under a second stage), after the generator (MG1) drags the low-state pulse-control engine to realize the synchronization of the engine rotating speed and the rotating speed between the mechanical shaft of the traction motor and the rotating speed of the input shaft of the transmission, then closing the clutch, and then the pulse-control engine can enter the high working condition again; Because the rotating speed and torque of the generator and the traction motor can be dynamically and accurately controlled, it can ensure that the generator (MG1) and the traction motor (MG2) can realize fast synchronization under various working conditions of the whole vehicle, the rotating speed synchronous relative error of the two ends of the clutch can be strictly controlled within 0.5 %, basically eliminating the sliding of the friction plate of the two ends of the clutch; when the traditional internal combustion engine is in heavy gear shift, the synchronous relative error of the rotating speed at the two ends of the clutch can reach 5 %, the friction plate at the two ends of the clutch has obvious skid, and it is associated with the driving style of the driver; Therefore, in the iMS control mode, the abrasion degree of each switch of the ACE heavy-truck clutch is greatly reduced (close to an order of magnitude) compared with the abrasion degree of each switch of the traditional internal combustion engine heavy-truck clutch, which can obviously improve the actual service life of the clutch; The clutch of the ACE heavy-truck is preferably capable of stably operating in one of normally open or continuously closed two steady states, which is different from most conventional clutches that are continuously closed only one steady state, and the technical requirements of both other aspects are substantially the same. In other words, only when the series-hybrid mode and the parallel-hybrid mode are switched, the ACE heavy-truck needs the clutch to be cut off or closed for one time, in other cases, the CGS function can eliminate the switch operation of the clutch; the traction motor is mechanically connected with the input shaft of the transmission all the time so as to provide hundreds of kW of transient driving power or regenerative braking power to the ACE heavy-truck; Compared with the existing technology (such as neutral sliding technology and so on), the iMS technology has obvious advantages in power performance, fuel saving effect and braking performance of the whole vehicle; If the transmission needs to shift (in the series-hybrid iSS mode or the parallel-hybrid iPS mode) during the steady-state operation of the ACE heavy-truck, a clutch-free shift (CGS) control function may be preferred without any operation of the clutch. In other words, in order to further save oil, the ACE heavy-truck passes through the iMS technology, even under the expressway working condition, the ACE heavy-truck can be operated in the series-hybrid mode.

A long-haul internal combustion engine heavy-truck runs an average of 500 miles per day, and needs to complete hundreds of transmission shifting operations; In order to further save energy and reduce emission, the AMT transmission in the mainstream of the European and American heavy-truck market is obviously improved than the actual gear-shifting frequency of the manual transmission; the traditional heavy-truck needs at least one clutch switch operation every time of shifting; The power of the ACE heavy-truck (i.e., the total peak power or peak torque of the whole vehicle powertrain) is obviously better than that of all long-haul internal combustion engine heavy-truck in the market, which can reduce the number of AMT transmission shifting operations by more than 70 % per day; The daily average times of the intelligent mode switching control operation (iMS) is only dozens of times, and the abrasion of the friction plate caused by each ACE heavy-truck clutch operation is obviously less than the abrasion of the friction plate of the traditional heavy-truck clutch operation; at the same time, there is no clutch shifting function (CGS), which can basically eliminate the clutch switch operation caused by the gear shifting of the transmission (series-hybrid or parallel hybrid); In summary, the ACE heavy-truck can reduce the total number of switching operations of the clutch by more than 70 % in comparison with the modern diesel heavy-truck clutch (that is, the existing technology) through the clutch-less gear shift technology (CGS) and the intelligent mode switching technology (iMS), the effective service life of the clutch (namely replacing mileage number) is improved by more than 200 %, the vehicle operation and maintenance cost is obviously reduced, the attendance rate is improved, under the premise of not adding any hardware, the high performance-to-cost ratio solves the pain point of frequent maintenance or replacement of the clutch in the daily operation and maintenance of the heavy-truck driver and the vehicle fleet; It should be emphasized that during the transition period of the clutch switch operation, the pulse-control engine (DPC) of the disclosure stably operates in a low-state (passive operation mode), all clutch operations are completed by a computer (VCU) automatically controlling double motors (MG1 and MG2), The disclosure can completely avoid the obvious negative influence of the violent driving style of some drivers to the actual service life of the clutch and realize the beneficial effect of decoupling the actual service life of the clutch and the duty-cycle working condition of the ACE heavy-truck and the driving style of the driver.

When the traditional internal combustion engine heavy-truck runs, the transient power of the engine is equal to the vehicle road-load transient power, both of them are analog time-variable functions; A computer simulation analysis is performed on the energy-saving and emission-reduction optimization problem of a vehicle, and a modelling analysis is required by using a single combustion power stroke of an engine cylinder as a basic unit. The operation of the engine in its universal characteristics curve global surface working condition is a very complex multivariable nonlinear system problem, the total time of the combustion working stroke of each cylinder of the engine is less than 100 milliseconds, human body still cannot burn the working stroke layer in the engine global surface working condition, it is difficult to realize the high fidelity computer real-time simulation (hundred millisecond level) of the engine dynamic characteristic, specific fuel consumption and emission index; it also can not collect the engine operation big data in the four stroke periods of the single cylinder of the engine in real time (gasin/compressing/combustion/exhaust), which can completely describe the engine operation big data of the energy-saving and emission-reduction optimization problem under the global working condition of the engine; The fuel injection electronic control technology of the existing AEC internal combustion engine actually takes the single-cylinder four-stroke period of the engine (crankshaft two circles, corner 720 degrees) as the minimum basic unit, performs the analog signal processing or analog electronic control to the analog time-varying function of the transient power output by the flywheel end of the engine; at this time, the engine and each sub-system of the powertrain are cross-coupled, and the hardware and software of each sub-system are also highly coupled; and the corresponding relationship between the engine working condition and the whole vehicle working condition is bidirectional one-to-one mapping, the engine design and calibration can only seek face-to-face, the complex surface working condition of the universal characteristics curve fixed by the AEC engine is used to adapt to various driving requirements of different vehicle types or appointed vehicle different operation working condition (duty-cycle), the hardware (engine main body and after-treatment system) of the engine and the calibration software (that is, the firmware Firmware at the lowest layer) are completely fixed through the mandatory emission regulation certification; The design idea of the traditional engine is that (universal characteristics curve) is invariant (applied to vehicle), so as to realize "one surface of a thousand vehicles"; The traditional vehicle cannot adjust the characteristics of the engine sensitively to optimize the energy-saving and emission-reduction of the vehicle in accordance with different application scenes of the vehicle so as to achieve the purpose of " thousand vehicle and thousand face ".

The ACE heavy-truck iMMH powertrain of the disclosure can be controlled by implementing serial-to-mix iSS or parallel-to-mix iPS, converting the transient power function of the DPC engine from the hardware-hardware strongly coupled and complex non-linear second-level graded analog time-variable function (universal characteristics curve surface working condition) in the existing technology (AEC engine) into the software-hardware decoupled and simple digital pulse sequence function (at least two fixed point working condition and line working condition; comprising at most one reciprocating switching between the high-state and the low-state in each PWM pulse period; covering any vehicle type or vehicle duty-cycle working condition), the vehicle power optimization problem (mainly based on transient power control), RDE fuel consumption optimization problem (mainly based on average power control), RDE pollutant emission long-term stable standard problem (based on transient power control and average power control at the same time) three highly non-linear and cross-coupled complex analog signals (Analog Signal) processing and control problem decoupling is simplified to three digital signal (digital signal) processing and control problems which can be linearized and without cross-coupling, which really realizes the software defined and full digital fuel-electricity hybrid powertrain. In the disclosure, the ACE heavy-truck iMMH powertrain can make any one modern analog electric control (AEC) engine (satisfying EPA-2010, ohm-VI, GB-6), The system is converted into a digital pulse-control (DPC) engine through the technical solution of serial intelligent start-stop control (iSS) or parallel intelligent power switching (iPS), and the hardware or calibration software of the engine does not need any change.

The "pulse modulation and control" technology can have two different meanings; in the first meaning, the pulse sequence function is the digital carrier, one specific parameter of this carrier (such as pulse width PW, pulse amplitude PA, the pulse position PP) changes along with the analog modulation signal with much lower frequency spectrum relative to the pulse sequence repetition frequency, that is, the digital carrier signal is modulated and controlled by the low-frequency analog signal; whereas the second meaning is to take the pulse sequence function as the digital modulation signal to regulate the analog time-varying function (such as the high-frequency oscillation carrier), that is to directly change the shape of the analog time-varying function by the digital pulse signal. Using the power electronic IGBT or silicon carbide (SiC) module to perform dynamic switch control on the transient analog power function (namely Analog Modulating Signal) of the motor or battery, generating corresponding digital pulse sequence power function (that is digitally modulated signal) based on pulse width modulation (PWM) or pulse amplitude modulation (PAM) control technology under the first meaning; whereas according to the "Equivalent Impulse Principle" of a system with inertia, the output response functions of two input signals of an analog modulation function and a pulse modulation signal with the equal impulse (time integration of the signal) are basically equivalent in the engineering meaning; and the DPC engine technology (series-hybrid iSS or parallel-hybrid iPS) of the ACE heavy-truck of the disclosure is based on the pulse-control technology under the second meaning; the PWM or PAM pulse modulation signal is used to perform synchronous digital pulse-control directly on the transient analog power function of the engine and the battery pack, respectively, generating two synchronized and complementary bipolar pulse width modulation (PWM) or pulse amplitude modulation (PAM) pulse sequence digital functions; the three items of the engine transient power, the battery pack transient power, and the vehicle road-load transient power satisfy the vehicle dynamic equation (1-1) and the series-hybrid equation (2-4) or the parallel-hybrid equation (3-3) in real-time; The so-called synchronous complementary jumps (or switching) of the engine power pulse-sequence function and the battery pack power pulse-sequence function mean that when the engine transient power function jumps from the high-state to the low-state, the transient power function of the battery pack jumps from the low-state to the high-state (the discharge power is increased or the charge power is reduced), and vice versa; according to the series-hybrid equation (2-4) or the parallel-hybrid equation (3-3), the algebraic sum of the transient power pulse-sequence function of the DPC engine and the synchronous transient power pulse-sequence function of the battery pack is equal to the transient road-load power analog slow-changing function (second level) of the ACE heavy-truck. Obviously, the transient power analog function of the ACE engine and the transient power digital pulse function (PAM or PWM) of the DPC engine have intrinsic differences in mathematical or physical sense; In terms of engineering, the analog transient power function of the AEC engine corresponds to its complex surface working condition, whereas the digital pulse transient power function of the DPC engine icorresponds to its high-efficiency area simple line working condition; The vehicle transient road-load power is always in the surface working condition; therefore, according to the series-hybrid equation (2-4) or parallel-hybrid equation (3-3), the double motors (MG1 & MG2) in the pulse-control iMMH powertrain must also operate in the surface working condition; The universal characteristics curve high-efficiency area (efficiency is 90 % +) of the electric motor is wide, the control speed and precision of the rotating speed or torque of the motor is one order of magnitude higher than that of the engine, and can accurately track or compensate any changes of the rotating speed or torque of the engine in real time, and can completely meet the requirements of the pulse-control iMMH powertrain. From the physical meaning, the surface working condition of the AEC engine refers to that for every rotating speed value at any moment, the torque can have any continuous positive value below the peak torque, and the specific torque value selection is highly correlated with the whole vehicle working condition, the driving style of the driver, or the whole vehicle supervisory control strategy; whereas the line working condition of the DPC engine refers to that for every rotating speed value at any moment, the torque is only selected from one of at least two preset discrete torque values and is basically decoupled from the whole vehicle working condition, the driving style of the driver, or the whole vehicle supervisory control strategy; In other words, there is a significant difference between the torque probability density function of the DPC engine and that of the AEC engine.

The normal technicians in the automobile industry all know that if the actual stable working condition distribution of the engine can be greatly simplified from the complex surface working condition to several fixed point working conditions or line working conditions in its high-efficiency area, under the premise of industry-leading power performance under any vehicle duty-cycle working condition of the hybrid vehicle, the disclosure greatly reduces the running time ratio of the low-speed low-load running and idle running of the engine, or the running time ratio of the highly-challenging low-efficiency running working condition such as frequently and quickly switching among various working condition points of the engine, which not only significantly simplifies the dynamic control of the engine, but also optimizes the energy-saving and emission-reduction of the vehicle simultaneously; However, so far, the global automobile industry has not found and published a set of feasible technical solutions for the implementation of the above idea (to simplify the surface working condition into the line working condition) for hybrid vehicles (especially heavy hybrid vehicles) via digital pulse control; The disclosure claims a feasible technical solution for realizing the said idea (especially simplifying the complex surface working condition of the engine into line working condition under the parallel-hybrid mode) in a way of high performance-to-cost ratio. Through digital pulse-control (DPC) on the transient power time-varying function of the ACE heavy-truck engine (series-hybrid iSS or parallel-hybrid iPS), the operation condition of the DPC engine is greatly simplified from the traditional complex surface condition into at least one high-state working condition point or line in the high-efficiency area of the universal characteristics curve in the first quadrant (positive rotating speed, positive torque), and additionally adding at least one novel low-state working condition point or line in the fourth quadrant (positive rotating speed, negative torque) of the universal characteristics curve with zero fuel-consumption zero pollutant-emission; The synchronous complementary pulse modulation control (PWM or PAM) is performed to the transient power of the engine and that of the battery pack respectively, so that the engine working condition and the whole vehicle working condition are almost completely decoupled, and the control software of the hybrid powertrain layer is decoupled from the physical layer hardware; through the hardware standardized redundant design, using the invariant (engine foundation hardware and calibration software) to deal with all the variations (vehicle operation); with the addition of iMMH powertrain supervision control (Supervisory Control) software dynamic customization and over-the-air iteration (OTA), to realize the software-defined hybrid powertrain; The disclosure has the beneficial effect of realizing Agile Mass Customization with high performance-to-cost ratio; The disclosure can optimize the multi-dimensional key metrics such as power performance, RDE fuel-consumption and pollutant-emissions of ACE heavy-truck at the same time. The so-called "thousand-vehicles and thousand-faces" has two meanings, one is a powertrain control technical solution with high performance-to-cost ratio and capable of being quickly customized in batch aiming at different types of vehicles; secondly, aiming at different duty-cycle of each working day of each vehicle, there is a powertrain control technical solution customized in batch with high performance-to-cost ratio; the control strategy of double dynamic customization powertrain aiming at any ACE heavy-truck type or any duty-cycle working condition of a specific vehicle can be realized by software definition and over-the-air iteration (OTA); no matter what the specific configuration parameters of the whole vehicle are, each ACE heavy-truck has industry-leading power performance and braking performance, aiming at any whole vehicle duty-cycle working condition in each work-day, it can simultaneously optimize the two key metrics of vehicle RDE fuel-consumption and pollutant-emissions, it solves the technical problem that for the traditional heavy-truck powertrain parameter configuration in the existing technology, it is difficult to optimize for the expressway working condition and the urban working condition at the same time; The disclosure also can continuously improve the existing function and performance of the vehicle powertrain through software OTA in the life cycle of the ACE heavy-truck and can also increase new functions continuously.

It should be emphasized that any one of the modern heavy-truck AEC engines, that has been used by manufacturers in the three major global heavy-truck markets of China, Europe, and USA (with a displacement of 9 to 16 liters; basic or advanced diesel engine or natural gas engine), can be converted into a digital pulse-control (DPC) engine through the technical solutions of the present disclosure (for the ACE heavy truck); the actual operation condition of the DPC engine is greatly simplified from the overall complex surface condition to at least two point or line working conditions, which can be preset in the high-efficiency area (high-state or low-state), effectively shielding the impacts of the heavy-truck engine with different displacement or different technical level in the universal characteristics curve overall surface condition, the transient or steady-state dynamic performance (torque or power performance), brake specific fuel consumption (BSFC), pollutant emissions and other characteristic on the RDE power performance, fuel-consumption and pollutant-emissions of the ACE heavy-truck; The engine is no longer the system bottleneck of the ACE heavy-truck's vehicle power and actual energy-saving and emission-reducing effects, which can improve the performance-price ratio of the ACE heavy-truck configured with the iMMH powertrain significantly. The ACE heavy-truck relies on two sets of mutually independent & redundant electromechanical power systems of dual-motor with rated power of 100 kilowatt level and the power-type battery pack with capacity of 10 kWh level, and the heavy truck engine at 100-kWh level to complement each other, under the premise of improving vehicle power performance and brake effectiveness, to optimize the vehicle fuel-consumption and pollutant-emissions simultaneously, and the actual energy-saving and emission-reduction effects are basically decoupled from the performance parameters of the engine of the ACE heavy-truck or the driving level or style of the driver; The ACE heavy-truck in the present disclosure can also effectively solve the long-term pain point of the long-haul freight industry that the RDE fuel-consumption value of the long-haul truck with similar payload weight has a large statistical spread caused by different configuration parameters of the heavy-truck powertrain and different driving skills of the drivers; , whereas each ACE heavy-truck under the control of the machine learning (ML) software algorithm and other technical measures of the disclosure, can realize the simultaneous optimization of the energy-saving and emission-reduction of the long-haul heavy-truck with high consistency, and the effect is obviously better than that of the human driver.

Energy management (steady state, time integral of the power function) or power management (transient state, time differential of the energy function) technical problem of long-haul freight ACE heavy-truck in the whole transportation event, once through the combination of technical measures such as series-hybrid iSS technology, the parallel-hybrid iPS technology, the intelligent mode switching technology (iMS), the clutch-less gear shift technology (CGS), the intelligent cruise control technology (iCC) and so on, to complete the tasks of digitization and hardware-software decoupling, the technical problem of the long-haul freight event "whole vehicle fuel-consumption pollutant-emissions simultaneous optimization" is converted into an equivalent narrow artificial intelligence (Narrow AI) technical problem of "computer playing Go" (such as AlphaGo of Google), which is very suitable for using various mainstream machine learning (ML) algorithms to automatically solve the problem; AlphaGo has surpassed all human players in the game of Go, and the ACE heavy-truck, leveraging fuel-saving ML algorithms, can also surpass all human drivers in the specific vertical application field of long-haul ACE heavy-truck energy-saving and emission-reduction.

The diesel engine's various technical measures of reducing the pollutant-emissions represented by NOx and the fuel-consumption represented by CO2 and other greenhouse gases are generally contradictory to each other; that is, it is a "Zero-Sum Balance" technical solution; almost all existing technologies to reduce pollutant-emissions are disadvantageous to fuel-saving; for example, increasing the proportion of exhaust gas recirculation (EGR) and the idle speed of the diesel engine, adding a micro-fuel heater (Mini-burner) to the exhaust after-treatment system (EATS) and other technical measures can reduce NOx emissions during low-speed low-load operations of the diesel heavy-truck effectively, however these measures generally increase fuel-consumption (i.e., increase CO2 emissions); vice versa, for example, reducing the EGR ratio down to zero, the technical measures such as exhaust-gas waste-heat recovery (WHR) are beneficial for optimizing the fuel-consumption of the whole vehicle and the CO2 emission (namely FC minimization), but these technical measures have obvious negative effects on the minimization of the vehicle RDE pollutant-emissions (NOx and PM and so on) under the challenging low-speed and low-load city or suburb working conditions; it is very rare and precious to find a "Positive-Sum Balance" technical solution in the prior art that can optimize the RDE fuel-consumption (CO2) and pollutant-emission (NOx) of the diesel heavy-truck simultaneously and is production ready, and it is the technology "Holy Grail" that has been continuously pursued by the technical personnel in the global auto industry. Heavy-truck diesel engine cylinder deactivation (CDA) technology, catalyst electric heating (ECH) technology, urea heating injection (Heated Dosing) technology, the fuel-electricity hybrid technology (Hybrid) and other technical measures may reduce the RDE CO2 and NOx emissions of the diesel heavy-truck simultaneously under various highly challenging working conditions including low-speed, low-load or idle-speed working conditions; However, the above technical measures are currently (at the end of 2021) not yet commercially available in the global diesel heavy-truck market.

The effective technical measures for reducing the RDE emissions of the diesel heavy-truck are mainly divided into two types, the first type is reducing the pollutants in the engine exhaust gas, such as the exhaust gas recirculation (EGR) technology; the second type is through a variety of passive or active thermal management technical measures, making the vehicle after-treatment system (EATS) to work stably at or above its light-off temperature for a long time (200 degrees C), improving the conversion efficiency (90 % +) of various catalysts, and furthest reducing the pollutant emissions value at the vehicle tail pipe (tail-pipe emissions).

Firstly, the series-hybrid iSS or parallel-hybrid iPS technology of the disclosure, when operating under any duty-cycle of the ACE heavy-truck, can ensure that the DPC engine (diesel engine or natural gas engine) almost always operates in at least two (high-state or low-state) working condition points or lines in its high-efficiency area, and almost completely eliminates the low-efficiency engine working conditions such as active idle speed or low-load; adjusts the average power function of the engine dynamically by controlling the duty-cycle of the transient power function pulse width modulation (PWM) of the engine in real time; no matter in series-hybrid or parallel-hybrid mode, the working condition of the DPC engine is completely decoupled from that of the ACE heavy-truck, when the DPC engine operates in high-state working condition, the fuel-consumption is low (BSFC), the thermal efficiency is high (BTE), at the same time, the temperature of the exhaust gas (exhaust gas) at the outlet of the exhaust pipe of the engine is significantly higher than the light-off temperature (more than 250 degrees C); when the engine operates in low-state working condition, it is absolutely efficient with zero fuel-consumption and zero pollutant-emissions, however at this time, the low-state engine has kWh-level continuous electric power consumption; The DPC engine can realize the simultaneous minimization of the actual CO2 and NOx emissions of the whole vehicle. No matter what the actual working condition of the ACE heavy-truck is, the pulse period in the iSS and iPS technology is always at the minute level; when the engine is switched from the low-state working condition (zero fuel-consumption and zero-emissions) to the high-state working condition (the high-efficiency area has fuel-consumption and pollutant-emissions) after the first code start each working day, it is equivalent to the frequent hot starts of the engine at minute level interval, then the EATS will not be cold; and once the engine enters into the high-state working condition, the engine-out exhaust gas (Engine-out water) has sufficient flow and the temperature is obviously higher than the light-off temperature, even if the EATS only adopts the passive mechanical heat insulation and heat preservation measure, and does not have any active temperature control measure, it can also ensure that various catalysts in the after-treatment system can work efficiently (such as SCR catalytic conversion efficiency is more than 90 %), and the ACE heavy-truck RDE emissions can reach the regulatory standard stably for a long time (EPA-2010, Euro-VI, GB-6 and so on). It should be emphasized that, although the DPC engine of the present disclosure has the same engine bench test emission values (CO2 or NOx) compared to the AEC engine of the prior art under the current global emission regulations, the RDE fuel-consumption or pollutant-emissions difference between the ACE heavy-truck configured with the diesel engine and the traditional internal combustion engine heavy-truck under the long-haul application scene is significant, the former FC is reduced by nearly 30 % than the latter one, and the RDE emission (NOx) of the former is reduced by 75 % to 90 % than that of the latter. At present, there is no industry testing specification for testing fuel-consumption & emissions of the ACE heavy-truck iMMH powertrain in the lab; however, the ultimate testing standard of any engineering technology should always be the "three R" (real vehicle, real road, real payload) operation and test data of the ACE heavy-truck against that of the modern diesel heavy-truck, , the former is significantly better than the latter in terms of vehicle propulsion performance and braking performance, RDE fuel-consumption, and RDE pollutant emissions and so on.

In order to meet the ultra-low emission requirements of the diesel heavy-truck NOx in California (CARB) 2027 (quasi - zero emission NZE; 0.02 g/hp-hr) and US Federal GHG-II regulation CO2 emission limits (abbreviated as "NZE-2027 fuel-consumption & emissions"), in addition to the series-hybrid iSS and parallel-hybrid iPS and other technical measures, it is also necessary to basically retain the design of the modern engine main body or the design of the mainstream integrated after-treatment system (EATS = DOC/PDF/SCR/ASC), an novel engine binary deactivation technology (bCDA) and/or an after-treatment system active temperature control technology, such as urea injection electric heating (Heated Dosing) and/or catalyst electric heating (ECH) and the like, are added, as described in details later.

The dual-motor extended-range serial-hybrid heavy-truck can be regarded as a special example of the ACE heavy-truck in the disclosure, whereas the clutch is continuously opened or the clutch is cancelled, while the single-motor parallel-hybrid vehicle can be regarded as another special example of the ACE heavy-truck, when the clutch is continuously closed,;tt this time, the two mechanically connected generator and traction motos with fixed rotating speed proportion can be combined into one equivalent larger motor, with rated power as the sum of the two motors. According to the series-hybrid equation (2-4) or the parallel-hybrid equation (3-3) and the corresponding boundary conditions, it can be inferred and proven in the engineering sense, under the premise of ensuring the power performance and active safety within the whole vehicle global working conditions to seek simultaneous optimization of the energy-saving and emission-reduction of the ACE heavy-truck, the performance-price ratio of the hybrid ACE heavy-truck of the disclosure is significantly better than that of the duo-motor range-extended series-hybrid heavy-truck or single-motor parallel-hybrid heavy-truck configured in the similar way. The ACE heavy-truck configured with the iMMH powertrain is an all-round player capable of completely covering all running sub-modes of other three types of vehicles above; 1) the clutch is continuously closed, the duo-motors are idling without propulsion power, the engine is only power source, at this time, it is equivalent to a traditional internal combustion engine heavy-truck, short for "engine direct drive" mode; 2) continuously closed clutch, double motors, battery pack in normal operations; at this time, it is equivalent to a P2 single motor parallel-hybrid heavy-truck, short for "parallel-hybrid" mode; 3) the clutch is kept open continuously, the engine and the generator are changed into the generator set, the vehicle is completely driven by the pure electric power of the traction motor; at this time, it is equivalent to a duo-motor range-extended series-hybrid heavy-truck, short for " series-hybrid " mode.

The ACE heavy-truck also includes: a satellite navigation unit (GNSS), which can be a double-antenna carrier phase real-time dynamic difference (RTK) receiver and can real-time measure the parameters such as longitude, latitude, altitude, longitudinal road grade and linear speed during the driving process of the vehicle; or it can be a high-precision single-antenna satellite navigation unit, capable of measuring the longitude, latitude, and linear speed during the driving process of the vehicle in real time (the relative precision is better than 3 %) with the absolute locating precision of better than ten meters; The inertia measurement unit (IMU) containing the dynamic (second grade) inclination angle sensor can measure the road longitudinal grade in real time (at the repetition frequency of at least 1.0 Hz), and the measuring absolute precision reaches 0.15 %. The vehicle controller VCU of the ACE heavy-truck may be configured to: based on the real-time measurement and computation of the longitude, latitude, longitudinal grade, vehicle speed, and vehicle acceleration of the vehicle in the driving process by the satellite navigation unit (GNSS), and combining with the prior 3D road information (longitude, latitude, longitudinal grade and so on) in the vehicle electronic horizon, to perform the intelligent predictive supervisory control (iPSC) on the iMMH powertrain (comprising engine, an electric generator, a clutch, a traction motor, an automatic transmission, an ePSD, and a battery pack, etc.); The iPSC technology set includes predictive control technology (Predicative Control) and adaptive cruise control technology (ACC), followed by detailed descriptions later.

The battery pack of the ACE heavy-truck can work in three different modes: 1) under the charge-sustaining mode (CS), the transient (second level) state-of-charge function (SoC) of the battery pack and the minute level time average SoC function are always kept in the high-efficiency region (between the best upper limit BUL and the best lower limit BLL) fluctuating up and down; 2) under the charge-depleting mode (CD), the transient SoC function of the battery pack always keeps the continuous fluctuation changes between the upper red line (URL) and the lower red line (LRL), while the average SoC function is continuously reduced along with time between the upper red line (URL) and the lower red line (LRL); 3) under the charge-increasing mode (CI), the transient SoC function of the battery pack always keeps the continuous fluctuation changes between the upper red line (URL) and the lower red line (LRL), while the average SoC function continuously rises along with time between the upper red line (URL) and the lower red line (LRL). Optimal working area of battery pack (also called "high-efficiency area") is the average state-of-charge function (SoC) fluctuating between the best lower limit (BLL) and the best upper limit (BUL); In the high-efficiency area, the high-rate partial SoC (HRPSoC) performance (charging/discharging) of the battery pack is the best, and the actual equivalent cycle-life (that is, the ratio of the total throughput electric charge to the effective capacity of the battery pack) in the whole life period is the longest; and when the battery pack SoC operates between the lower red line (LRL) and the best lower line (BLL) or between the best upper line (BUL) and the upper red line (URL), the charging and discharging performance of the battery pack is not optimal, but will not cause permanent damage to the electric cells of the battery pack, and will not reduce the equivalent cycle life; the battery pack SOC is referred to as a "operation area" between the LRL and the URL. Obviously, URL > BUL > BLL > LRL for the SoC function of the battery pack; the operation area includes the entire high-efficiency area; the limiting values of said four SoC of each battery pack are determined by the battery cell and/or battery pack manufacturer; In order to protect the battery pack from permanent damages, the battery pack should be completely prevented from running outside the red lines of the operation area (i.e. transient SoC <LRL or transient SoC > URL). It should be emphasized that one of the key inventive ideas of the present disclosure is to define and control the three battery pack operation modes (CS/CD/SI) of the battery pack through the average SoC function (via equation (MTA)) instead of the traditional transient SoC function in the prior art.

The core of the ACE heavy-truck intelligent predictive supervisory control strategy (iPSC) of the disclosure is the combination-set of the various iMMH powertrain novel technical measures described in the specification, which collectively can transform and divide the complex "multi-variable nonlinear analog control problem" for the simultaneous optimization of the RDE fuel-consumption and pollutant-emissions of the ACE truck in long-haul freight application (Analog Control) into two simpler " reduced-dimension quasi-linear digital control" problem (Digital Control) ; one is the technical problem of digital control on the sub-second level " transient power function" , the other is the technical problem of digital control on the minute level " average power function"; these two problems of transient power control and average power control are mutually decoupled and can be solved independently. Firstly, in terms of transient power control, by implementing serial-hybrid iSS or parallel-hybrid iPS control, the transient electric power analog function of the battery pack and the transient mechanical power analog function of the engine are respectively converted into two synchronous and complementary bipolar pulse sequence functions (PAM or PWM), satisfying the vehicle dynamic equation (1-1) and the series-hybrid equation (2-4) or the parallel-hybrid equation (3-3) in real time; At this time, the transient state of charge (SoC) function of the battery pack fluctuates up and down continuously and rapidly in the battery pack operation area; secondly, in terms of the steady-state average power control, by dynamically adjusting the amplitude of the PAM pulse sequence or the duty-cycle of the PWM pulse sequence respectively, and then adding the rolling time average computation (equation (MTA)) to these pulse sequences, the average power function of the battery pack or the average power function of the engine can be dynamically and continuously regulated respectively; it can also, according to vehicle dynamic equation (1-1) and combined with vehicle satellite positioning (GNSS) and road 3D electronic map, predict and compute the distributions of the road-load transient power function or the average power function (equation (MTA)) in the electronic horizon (hour level or hundred-kilometer level) in real-time (second level time delay) with kilowatt level granularity; then the difference function between the road-load average power function and the engine average power function can be dynamically regulated (see series-hybrid equation (2-4A) or parallel-hybrid equation (3-3A)), so that the battery pack operates stably in one of the three modes including the charge sustaining (CS) mode (the difference value is basically near zero; ), the charge depleting (CD) mode (difference value is significantly larger than zero), and the charge increasing (CI) mode (the difference value is significantly less than zero) or dynamically switches among the three modes, so that the power battery pack can work stably in its high-efficiency area for a long time to the maximum extent, the battery pack regeneration charge turnover rate is maximized and the engine charge turnover rate is minimized, under the premise of ensuring the power performance of the ACE heavy-truck and the optimal brake effectiveness, and simultaneously optimizing the RDE fuel-consumption and pollutant-emissions of the ACE heavy-truck.

There are two types of "charges" (also referred to as "electric charges") stored in the battery pack of the ACE heavy-truck: One is a high-cost charge derived from the direct power generation by the combustion of the engine, the so called "Engine Charge"; and the other is a near-zero cost charge derived from the vehicle kinetic energy recovered through the regenerative braking of the traction motor, (so called "Regen Charge"); Obviously, the regenerative charge also indirectly comes from the combustion work of the engine, but it belongs to the waste utilization, which is more beneficial for energy-saving and emission-reduction, and all potential regenerative charges should be recycled as much as possible. Unless specifically indicated, the dimension of various charges or electric quantities in the present disclosure is kilowatt-hour. During the entire freightage event (Freight Event), the supervisory control strategy (SCS) of the ACE heavy-truck focuses on the simultaneous optimization of the vehicle RDE fuel-consumption and pollutant-emissions ($CO_2$/$NO_x$) by dynamically adjusting the 100 kilowatt-level mechanical power flow and/or electric power flow at the whole vehicle layer under the premise of ensuring the optimal vehicle power performance and braking performance; From the engineering point of view, firstly, the accumulated charge of the battery pack in the freight event should be increased as much as possible (equivalent to the accumulated charge of completing the charging-discharging complete cycle (Round Trip)), and the electric energy is used for driving the vehicle; secondly, the proportion of the regenerated charge in the total charge should be maximized, and the proportion of the engine charge in the total charge should be minimized; Obviously, the total charge is equal to the sum of the regenerative charge and the engine charge; The ratio of the total accumulated charge to the effective capacity of the battery pack is defined as the "total charge turnover rate", whereas the ratio of the accumulated regenerated charge to the effective capacity of the battery pack is defined as the "regenerated charge turnover rate", and the ratio of the accumulated engine charge to the effective capacity of the battery pack is defined as the "engine charge turnover rate". If the loss of the complete cycle of charging and discharging of the battery pack is approximated to be zero and ignored, and it is assumed that the SoC of the battery pack at the beginning and the end of the freight event is the same, then the following formula can be obtained:

$$\text{Total Charge Turnover Rate} = \text{Regenerative Charge Turnover Rate} + \text{Engine Charge Turnover Rate}$$

$$( 8\text{-}1)$$

The total charge turnover rate, the regenerated charge turnover rate and the engine charge turnover rate are all positive numbers, and the total charge turnover rate is always more than the regenerated charge turnover rate.

The expression of "the ACE heavy-truck energy-saving and emission-reduction optimization" in the disclosure can be the technical problem or technical target to be solved, and can also be the beneficial technical effect (namely the real-world fuel consumption and CO2/NOx emission minimization) or the benefits obtained by solving the said technical problem, and the exact meaning can be judged based on the context. The ACE heavy-truck intelligent cruise control function (iCC, belonging to SAE L1 level automatic driving function) refers to the technical solution, through intelligent predictive supervisory control strategy (iPSC) and combined with vehicle adaptive cruise function, to realize the beneficial effect of simultaneous minimization of the vehicle RDE fuel-consumption and pollutant- emissions (namely CO2 and NOx minimization), which is the set of multiple specific novel technical measures in the disclosure; The iCC in essence is actually the whole vehicle supervisory control strategy of ACE heavy-truck based on agile mass customization (that is, thousand vehicle & thousand face), one of the core technical measures for minimizing the RDE fuel-consumption is, under the premise of maximizing the total charge turnover rate of the battery pack in the freight event, achieve the maximum value of the regenerative charge turnover rate and the minimum value of the engine charge turnover rate. The market driving force (Market Force) has no limit to the pursuit of ACE heavy-truck energy saving target, the fuel consumption or fuel cost can only be lower, not the lowest; whereas the pursuit of the emission reduction target is clear, ensuring that the local heavy-truck pollutant emission regulation (new vehicle certification emission, effective service life, actual emission verification (NTE or MAW) and so on) is stably satisfied for a long time, after the emission meets the regulatory standard, there is no market motivation to spend any resource to reduce the emissions further.

The VCU of the ACE truck may be configured as: taking the precise time service of the GNSS receiver as the reference of the whole vehicle system time, timely calibrating the built-in clock of each sub-system microprocessor including the built-in clock of VCU at minute intervals, The uni-directional and unique system time stamp (Time Stamp) is used to automatically label the dynamic operation data of the ACE heavy-truck whole vehicle and each vehicle sub-system associated with the vehicle driving lateral control or longitudinal control, performing operation data measurement with sampling frequency higher than 5 Hz (at least five times per second) and storing the vehicle; In the first dimension, it will be from a GNSS receiver, a map unit, an engine, a generator, an electric power splitting device (ePSD), a clutch, a traction motor, an automatic transmission, and the configuration parameters and/or dynamic working condition data of at least two sub-systems in the battery pack are spliced into a data group after time synchronization; and calibrating, aligning, or arranging a plurality of data-sets in a second dimension according to a system time stamp to form structured big data about ACE heavy-truck operation (also called " fuel saving data-set ") it is used for describing the dynamic operation condition, especially focusing the energy-saving and emission-reduction of the vehicle and the automatic driving safety; optionally, in order to protect the privacy and commercial secret of the driver and the fleet, anonymous desensitization encryption is performed on the fuel-saving data-set, then in a secure manner, through the mobile internet or the wired internet, real-time (sub-second time delay) or timely (hour-level time delay) uploading to the cloud computing platform for storage, It is used for the subsequent big data analysis processing.

The VCU may also be configured to: based on 3D map prior road longitudinal grade distribution function in electronic horizon range, vehicle GNSS positioning, universal characteristics curve digital model of engine, universal characteristic digital model of generator, charging and discharging characteristic digital model of battery pack, mechanical performance digital model of transmission, and at least one of a universal characteristic digital model of the traction motor to real-time control at least one of an engine, a generator, a battery pack, an ePSD, a transmission, and a traction motor.

The VCU may also be configured to: in the driving process of the vehicle, multiple vehicle-mounted sensors and a microprocessor are commanded to collect and locally store the fuel-saving data-set operated by the ACE heavy-truck in real time; and sending and storing the fuel-saving data-set stored in the vehicle to the remote cloud computing platform in real time (sub-second time delay) or in time (hour time delay) via wireless mobile or wired internet, so as to analyze and process at the cloud subsequently. on the cloud platform, using the machine learning algorithm, the cloud platform computes the power, takes the fuel-saving data-set of multiple ACE heavy-trucks as training set data, to train the AI brain at the cloud platform of the ACE heavy-truck (namely AI training chip), establishes and continuously automatically iterates and optimizes the model of AI fuel-saving algorithm, and wirelessly downloads or wirelessly remotely pushes (OTA) the fuel-saving algorithm aiming at the specific freight event to the appointed ACE heavy-truck, then the vehicle-end AI brain (namely AI inference chip; generally contained in the VCU) aiming at the fuel-saving data-set (namely test set data) of the vehicle transportation event to perform localized real-time inference operation, automatically searching the vehicle energy-saving and emission-reduction online real-time global optimal solution, implementing the whole vehicle intelligent predictive supervisory control strategy (iPSC), The disclosure can optimize the fuel consumption and emission of the vehicle RDE at the same time. according to the specific ACE heavy-truck and the specific freight path, in combination with the operation big data of all ACE heavy-trucks on the same path history, the cloud AI brain can quickly compute the default optimal fuel-saving power control scheme for the vehicle to travel on the path, downloading and pushing to the vehicle, Then the vehicle-end AI brain according to the specific vehicle condition and road condition, local inference operation, real time correcting ACE heavy-truck supervisory control strategy, the vehicle RDE fuel consumption (L/100kM) and emission optimal (namely minimum).

The engine after-treatment system (EATS) of the China GB-6 heavy-truck diesel engine and the modern European and American heavy-truck diesel engine (US EPA-2010, Euro-VI) adopts substantially the same technical route, which is composed of a diesel oxidation catalyst (DOC), a diesel particulate filter (DPF), a selective catalytic reduction device (SCR) for removing nitrogen oxides (NOx), and a urea leakage catalyst (ASC) are sequentially connected in series from the front to the back; The after-treatment system (EATS) according to the present disclosure mainly refers to the above integrated after-treatment system, referred to as EATS, unless otherwise specified. EATS various catalyst emission-reduction conversion high-efficiency temperature range is generally between 250 degrees C (degrees C) and 550 degrees C; the diesel engine is under medium-high load working condition (the torque or power loading rate is greater than 40 %), the exhaust gas temperature is generally between 250 °C and 500 °C, at this time, the EATS system operates in the high efficiency area, the catalyst conversion efficiency is higher than 90 %, which is good for greatly reducing emission, ensuring the stable discharge of the tail pipe of the vehicle to reach the standard; while the engine is in cold start, when the idle speed or low-load operation (the loading rate is less than 25 %) and other challenging (low-efficiency high-discharge) working condition operation, the engine-out engine exhaust temperature is obviously lower than 250 degrees C, the temperature of the working surface of each catalyst in the EATS cannot quickly reach the high-efficiency area threshold value, The so-called off-lamp temperature (Light-off Temperature; about 250 °C), a catalyst conversion efficiency below the off-lamp temperature (e.g., less than 50 %), and a higher emission of pollutants (particulate matter, NOx, etc.). most of the vehicle operation accumulated pollutant emissions is from the engine cold start, low load or idle speed, and the transient state of other rotating speed and torque sudden change and so on; In the effective working period of the 700 thousand kilometer EATS system, how to stably meet the pollutant emission regulations under the actual driving environment (RDE) of the vehicle for a long period of time is a technical problem to be solved urgently for all modern diesel heavy-trucks including China's -6 new heavy-trucks; After 2027, the US-EU three-place heavy-truck industry must also have a batch of commercial capacity to meet the original diesel heavy-truck with lower RDE fuel consumption limit and RDE near-zero emission limit at the same time.

Under the control of the vehicle self-diagnosis module (OBD-II) for real-time monitoring the discharge condition of the vehicle tail pipe, the modern diesel heavy-truck must stop to complete the Active Regeneration (Active Regeneration) every a period of time (kilometer level), removing carbon particles deposited inside the DPF; The frequency of active regeneration (frequency/one-hundred-kilometer ) mainly depends on the configuration parameter of the vehicle and its main running condition (duty-cycle); DPF active regeneration not only consumes time (about 30 minutes of parking idle speed diesel engine), but also wastes oil to do useless work, and also increases RDE emission; The DPF active regeneration has always been one of the pain points of heavy-truck drivers and motorcyclists in Europe and USA, and will also become one of the pain points of Chinese drivers and motorcyclists using the new -6 heavy-truck. The iMMH powertrain of the disclosure can convert the AEC engine of the current technology into the novel DPC engine, and can basically eliminate the long-term pain point of the vehicle fleet and the driver of the active regeneration of the diesel engine DPF system of the ACE heavy-truck in the running life cycle of the DPC engine.

The ACE heavy-truck of the disclosure can, according to the prior road 3D data (longitude, latitude, longitudinal grade), vehicle configuration parameters and dynamic operation data (total weight, rolling friction coefficient, wind resistance coefficient, vehicle speed, vehicle acceleration, real time vehicle locating and so on), and vehicle dynamic equation (1-1), with more than 1. 0 Hz of refreshing frequency and kilowatt level granularity, dynamic predict the transient road power space-time-varying function distribution within the electronic horizon (hour level or hundred miles level), then using the machine learning (ML) algorithm focusing on energy-saving and emission-reduction, to automatically generate and execute the ACE heavy-truck supervisory control strategy (Supervisory Control) at the vehicle-end in real time (sub-second level), commanding the ACE heavy-truck to dynamically implement the series-hybrid iSS or parallel-hybrid iPS control, the intelligent mode switching control (iMS), the clutch-less gear shift (CGS), the clean cold start control (CCS), the intelligent cruise control (iCC) and a series of other technical measures in combination, then adding cloud-vehicle cooperation, and realizing continuous improvement of the energy-saving and emission-reduction ML algorithm through software over-the-air (OTA) updates, under the premise of ensuring industry-leading vehicle power performance and braking performance, to satisfy the vehicle dynamic equation (1-1) and series-hybrid equation (2-4) or parallel-hybrid equation (3-3) in real time, the ACE heavy-truck RDE fuel-consumption and pollutant-emissions are optimized at the same time, especially the RDE fuel consumption is minimized; The set of the above various technical measures is defined as the "intelligent predictive supervision control" (iPSC) technical solution of the ACE heavy-truck. In comparison with the traditional internal combustion engine heavy-truck without any hybrid function, on the same delivery route, with the same load, under the condition of the same freight lead-time, the ACE heavy-truck through the iPSC technical solution, the vehicle energy-saving and emission-reduction optimization control can be fully automated, which can realize the RDE fuel-consumption average reduction as high as 30 %, the RDE fuel-consumption statistical spread (namely fuel-consumption variance) is one order of magnitude less than that when the human driver operates the vehicle (from about 24 % of the latter down to 3 % of the former), and the RDE fuel-consumption value is basically decoupled from the driving style or skill of the ACE heavy-truck human driver or the performance parameters of the engine. The intelligent cruise control (iCC) technical solution is a subset of the iPSC technical solution, including the two types of functions such as the predictive cruise control (PCC) focusing on fuel saving and the adaptive cruise control (ACC) focusing on active safety and driving convenience in the prior art; at the same time, the iCC makes significant technical improvements over the PCC or ACC functions in the prior art, which is further described in the following.

For the ACE heavy-truck of the present disclosure, all core sub-systems or parts thereof are based on the industrialized products and technologies; under the expressway long-haul freight application scene, compared with the diesel heavy-truck of the existing technology, the disclosure can realize the beneficial effect that the RDE fuel saving rate can be as high as 30 % under the premise that the industry-leading vehicle performance (power/brake) and the long-term consistent compliance of the RDE emissions. Under the condition of no government subsidy, the ACE heavy-truck saves vehicle fuel cost, transportation and maintenance cost, the productivity of heavy-truck drivers is increased so that vehicle fleet or individual vehicle owners can recover the cost difference (the difference between the ACE heavy-truck and the traditional diesel heavy-truck) within two years or 400,000 kilometers. The mass-production new ACE heavy-truck (that is, the OEM new ACE heavy-truck) can reach the carbon emission target value of the CO2 regulation 2025 recently issued by the European Union and the carbon emission target value of the US GHG-II by 2027; It can also satisfy the ultra-low NOx emission Omnibus regulations of the diesel heavy-truck in California 2027 in USA under the premise that the modern diesel engine and after-treatment system have no major design changes.

In North America (USA/Canada), the long-haul truck (especially chassis or frame) has an average service life of more than 20 years or 1.5 million miles, and every truck may be equipped with two to three sets of the powertrain (engine + transmission; about 600,000 miles), the second or third set of the powertrain is mostly the second-hand powertrain (remanufactured) remanufactured by a company approved by the engine or vehicle OEM. The average annual sales of new heavy-trucks in North America are about 250,000, and the number of repowered heavy-trucks (that is, the second-hand heavy-truck-to-powertrain) is more than 250,000; At present, there are nearly 2.5 million used long-haul heavy-trucks in USA and Canada, 97 % of which are diesel heavy-trucks and 3 % are natural-gas heavy-trucks. Taking advantages of the current North American flexible heavy-truck industry supervision laws and regulations, the disclosure allows the second-hand traditional ICE heavy-trucks to be changed into converted ACE heavy-trucks; and these converted ACE trucks don't need to be recertified by the government agencies, and can be directly deployed into commercial operations in the North American market; the iMMH powertrain technology of the disclosure not only can be adapted to the new OEM ACE heavy-trucks, but also can be used for volume conversion of a portion of the roughly 2.5 million used heavy-trucks in the current North American market, can realize the volume commercialization of up to one million converted ACE heavy-trucks by 2030; so that a large number of the converted ACE heavy-trucks can also reach the carbon emission target value of the US GHG-II law for year 2027 in advance, just like a completely new original ACE heavy-truck. The disclosure obviously reduces the RDE fuel consumption (L/100kM) of the traditional diesel heavy-truck with a large amount of stock in USA and ensures that the emission of the converted ACE heavy-truck RDE can reach the standard stably for a long time, so the disclosure has great and far-reaching economic and social significance to the long-haul freight industry in USA; at the same time, promoting the global range (especially the US, Europe, China and the three places) original new ACE heavy-truck for commercial production by about 2025; The power-assisted long-haul industry has been reducing carbon in a large scale over the past 20 years. It should be emphasized that China and Europe adopt a government mandatory certification system for the production and sales of all road vehicles, and the direct commercial use after mixed remodeling of heavy-trucks is not feasible under the current legal framework of China or Europe; However, the early commercialization of the converted ACE heavy-truck of the present disclosure in North America will greatly promote the commercial process of the original ACE heavy-truck in USA, China, or Europe.

The average life expectancy of heavy-trucks in USA is more than 20 years. According to a media announcement of the Clean Diesel Forum 2020, by the end of 2018, Only 43 % of all diesel engines in USA satisfy the current US emission regulation EPA-2010 (that is, the market penetration is 43 %), and the rest diesel heavy-trucks do not satisfy the EPA-2010 and the old diesel engine with higher pollutant emission; In other words, USA will have to use a transitional period of nearly 20 years, until 2028, most of the diesel heavy-trucks (more than 90 % of the market penetration) will use modern diesel engines that meet the current pollutant emission standards EPA-2010. It is obvious that in the North American Heavy-truck market, the market penetration rate of a new powertrain technology has been slow, computed in ten years. In general, fuel the consumption and emission of about 2.5 million used Class 8 trucks in North America are obviously higher than those of the original heavy-truck after 2022 years; North American laws and regulations allow for mixed modification of second-hand traditional heavy-trucks, and then there is no need to undergo time-consuming and costly government re-certification, and the modified hybrid heavy-trucks can be directly shipped for operation; The iMMH powertrain of the disclosure can be used to refit a mass of second-hand diesel heavy-trucks in North America into an ACE heavy-truck (RetrofitACE Truck), which can quickly and obviously reduce the fuel consumption and emission of a million-vehicle heavy-truck in USA with high performance-to-cost ratio, which has technical and commercial feasibility, It has great economic and social value, and can be used for commercial use immediately. The disclosure is the only technical solution capable of realizing large-scale decarburization of North American highway long-haul industry by 2032 (one million converted ACE heavy-trucks) and commercial feasible technical solution.

The content of the disclosure is as follows: although the focusing long-haul heavy-truck, the technical problem to be solved, the specific technical solution and measures of the disclosure, and the beneficial technical effect are suitable for the operation of large and medium-sized road hybrid commercial vehicle (truck or passenger car) with a total weight of more than five tons; at the same time, the series hybrid intelligent start-stop control technology (iSS), the parallel hybrid intelligent power switching control technology (iPS), the intelligent mode switching technology (iMS), the clutch-less gear shift technology (CGS), The intelligent cruise control technology (iCC) and other single technology or combined technology are also suitable for the duo-motor hybrid light vehicle (the total weight is less than four tons).

Several embodiments of the present disclosure focus on describing the long-haul ACE heavy-truck, mainly because the global automotive industry generally believes that Electric mass production engineering technology (PRET - Production Ready Engineering Technology) of long-haul heavy-truck has extremely high challenge. It is mainly limited by the super-high specific energy (battery pack is higher than 300Wh/KG) lithium ion power battery technology and super-high power (megawatt level) direct current quick charging technology cannot be commercialized for nearly five years, which cannot directly expand the mixed or pure electric technology of the passenger car to the field of long-haul heavy-truck, the long-haul full-hybrid heavy-truck or zero-emission pure electric heavy-truck is difficult to mass-produce and commercial in the global range before 2030; The inventive contribution of the present disclosure to the prior art is: Under the condition of making full use of the modern diesel heavy-truck used by the manufacturers in 2022, under the premise that there is no need to carry out hardware design modification to the engine and the after-treatment system, It provides a US GHG-II heavy-truck carbon emission emission limit (i.e., fuel consumption) and California ultra-low NOx emission combination limit (90 % less than EPA-2010 limit) that can be enforced by 2027 at the same time before 2025. The disclosure Claims an engineering technical solution with high performance-to-cost ratio and mass production. The iMMH powertrain and all key sub-system hardware of the ACE heavy-truck of the disclosure have been regulated for commercial production, the disclosure point is centralized in the powertrain system architecture, the electromechanical connection mode, the digital pulse-control method of transient or average power function of engine and battery pack, the whole vehicle layer supervisory control strategy, Design of fuel-saving data-set (including " feature construction ") in the aspects of collecting and storing method, the focusing long-haul heavy-truck is discussed in the technology; The common technician in the automobile industry is inspired by the disclosure, without creative brainpower, the technical solution of the iMMH powertrain of the disclosure can be used (especially serial-to-mix iSS and parallel-to-mix iPS control technology, intelligent mode switching (iMS), intelligent cruise control (iCC) technology and so on) is widely applied to other road or non-road hybrid light vehicles (total weight is less than 4.5 tons) or hybrid large and medium-sized commercial vehicles (total weight is more than 5 tons).

Description of Figures

Fig. 1A shows a system block diagram of an AI-connected-electrified (ACE) heavy-truck configured with an iMMH powertrain; The iMMH powertrain has a main-stream single-input-shaft heavy-truck automated mechanical transmission (AMT);

Fig. 1B shows a system block diagram of an ACE heavy-truck configured with an iMMH powertrain; it adopts a new advanced double-input-shaft heavy-truck automated mechanical transmission (AMT);

Fig. 2 shows a system block diagram of an electric power splitting device (ePSD) of an ACE heavy-truck;

Fig. 3 shows the architecture diagram of the Supervisory Control Strategy (SCS) of an ACE heavy-truck;

Fig. 4A shows the universal characteristics curve of an ACE heavy-truck engine (Engine Fuel Map);

Fig. 4B shows two external characteristics curves of an ACE heavy-truck and its engine;

Fig. 5A shows the block diagram of the vehicle-cloud collaborative system for the ACE heavy-truck;

Fig. 5B shows the block diagram of a machine learning (ML) system of an ACE truck;

Fig. 5C shows the block diagram of a reinforcement learning (RL) system of an ACE heavy-truck;

Fig. 6A shows the transient engine power function and the transient vehicle road-load power function of an ACE heavy-truck with digital pulse-control (DPC);

Fig. 6B shows the duty-cycle function of an ACE heavy-truck digital pulse-control (DPC) engine;

Fig. 6C shows the probability density function of the torque/power loading rate of an AEC engine or a DPC engine;

Fig. 6D shows the probability density function of various heavy-truck's fuel consumption;

Fig. 7 shows the block diagram of the engine after-treatment system (EATS) of the ACE heavy-truck;

Fig. 8A shows the average SoC function distribution of the ACE heavy-truck battery pack;

Fig. 8B shows the operation loss function of an ACE heavy-truck battery pack.

In the drawings, the same or similar reference symbols or reference numerals refer to the same or similar elements or apparatus.

Specific Implementation Examples

The present disclosure will now be discussed with reference to a number of exemplary embodiments. It should be understood that these embodiments are discussed only to enable those of ordinary skill in the art to better understand and thus implement this disclosure, and not to imply any limitation to the scope of this disclosure.

As used herein, the term "includes" and variants thereof is to be interpreted as an open term that means "includes, but is not limited to". The term "based" is to be interpreted as "at least partially based". The terms "one embodiment" and "one example" are to be interpreted as "at least one embodiment". The term "another embodiment" is to be interpreted as "at least one other embodiment". The terms "first", "second", and the like may refer to different or identical objects. The following may also include other explicit and implicit definitions. In this context, "unidirectional" or "bidirectional" coupling refers to whether the direction of the power or energy flow from its power source to the load is reversible, and whether the roles of the source and load can be exchanged. The power source and the load are fixed when they are connected in a single direction, and the power flows from the source to the load in a single direction (unidirectionally) and is irreversible; The role of power source and the load can be dynamically switched when they are connected bidirectionally; that is to say the power flow direction is reversible and can flow bidirectionally in time domain. Unless otherwise specified, all electromechanical components, modules or devices and the like in the present disclosure are defaulted to be automotive grade parts. The vehicle engine includes automotive grade internal combustion engine or turbine. At present, nearly 95 % of the global heavy-trucks use diesel engines, and few of them use natural-gas engines. The torque and rotational torque are synonyms. In the present disclosure, a "vehicle" may generally refer to an on-road or off-road motor vehicle having at least 4 wheels and a gross vehicle weight (GVW, vehicle weight plus maximum statutory load) of at least 1.5 tons, and a heavy-truck may generally refer to an on-road or off-road motor vehicle having at least 6 wheels and a total vehicle weight of at least 10 tons (i.e., a large commercial vehicle).

The technical solution of the present disclosure will be described below with reference to the accompanying drawings and several embodiments.

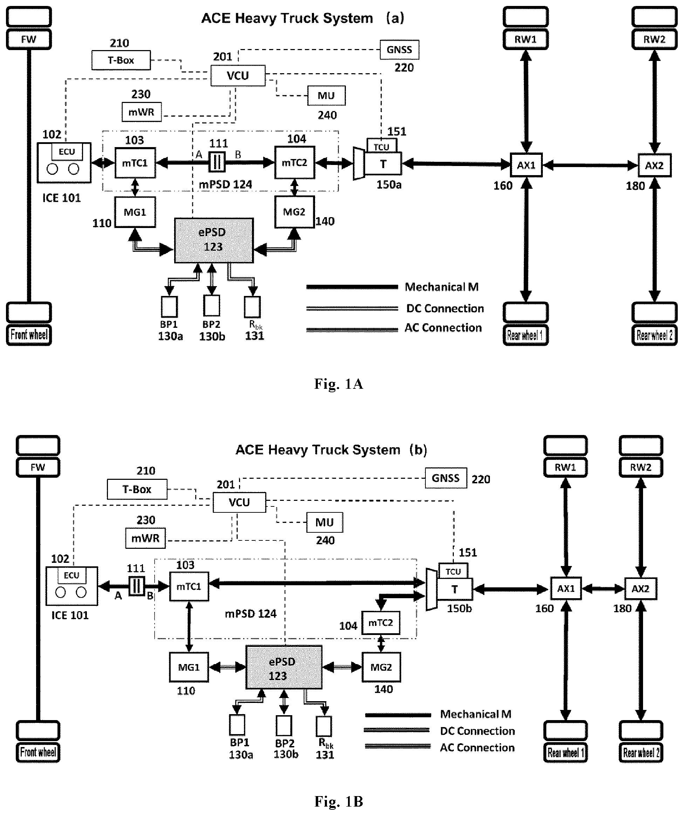

Fig. 1A shows the block diagram of an ACE truck system 010 configured with an iMMH powertrain in accordance with one embodiment of the present disclosure. The system may be configured as a 6x2 powertrain system comprising two motors, i.e., a generator (MG1) 110 at the hybrid P1 position and a traction motor (MG2) 140 at the hybrid P2 position, an active drive axle 160 and a passive drive axle 180, or a 6x4 powertrain system of two active drive axles 160 and 180. In some embodiments, the heavy-truck may be a hybrid heavy-truck for long-haul freight having a gross vehicle weight of more than 25 tons.

As shown in Fig. 1A, in general, the standard fitting (s) of the ACE heavy-truck iMMH powertrain include: an engine 101, an engine control unit (ECU) 102, a mechanical torque coupler (mTC1) 103, a generator (MG1) 110, an electric power splitting device (ePSD) 123, a clutch 111, a mechanical torque coupler (mTC2) 104, The traction motor (MG2) 140, the main battery pack 130a, the transmission (T) 150, the transmission control unit (TCU) 151, the vehicle controller (VCU) 201, the main drive axle 160, and the like. The secondary battery pack 130b, the brake resistor 131, the secondary driving bridge 180 and the like are the selection parts (selection parts) of the iMMH powertrain. The mechanical or electrical/-electronic coupling relationship between the above-described sub-systems or devices with unique designations is clearly shown. The transmission 150a is a single input shaft heavy-truck transmission for the mass production, preferably a long-haul heavy-truck automatic mechanical transmission (AMT) with at least 5 forward gears, the higher the maximum input torque of the transmission is, the better, the maximum input torque of most modern heavy-truck transmission is less than 3000 NM; Unless otherwise specified, the transmission or automatic transmission in this disclosure mainly refers to an AMT which can automatically complete the shift by electronic drive-by-wire.

Specifically, the flywheel end of the engine 101 is mechanically coupled bidirectionally to the mechanical shaft of the generator (MG1) 110 and the A end of the clutch 111 disposed at the hybrid P1 position by the mechanical torque coupler 103, respectively, and is controlled by the engine controller (ECU) 102; The flywheel end of the engine 101, the mechanical shaft of the generator 110, and the A end of the wire-controlled clutch 111 are respectively and mechanically connected bidirectionally through the three-port mechanical torque coupler 103; The mechanical torque coupler (mTC1) 103 can be implemented by using the simplest Coaxial structure (abbreviated as coaxial coupling; The flywheel, the generator and the A end of the clutch have the same rotating speed), and can be implemented by the structure of more complex and flexible multi-parallel shaft and gear coupling (that is, the speed reducer, the flywheel and the A end of the clutch have the same rotating speed, and the rotating speed of the generator is higher). the mTC1 can be preferably coaxially connected, the mechanical connection mode is the simplest and efficient; However, at this time, the hundred-kilowatt-level generator 110 needs to use a large gauge motor with a large torque (the peak torque is more than 1000 meters), a low rotational speed (the maximum rotational speed is less than 3000 revolutions per minute) and a relatively high cost. at this time, the flywheel of the engine 101 is coaxially and directly connected with the A end of the clutch 111 (bidirectional mechanical connection with the same rotating speed), A hundred-kilowatt-level automotive grade generator 110 with higher cost-performance medium torque (the maximum torque is less than 500 meters) and medium-high rotating speed (the maximum rotating speed is less than 1000 revolutions per minute) can be selected, At this time, the mechanical shaft of the generator 110 is mechanically connected with the flywheel output end of the engine 101 and the A end of the clutch 111 through the mTC1 103 of the large speed reducer including the fixed tooth ratio (4-8); However, mTC1 103 may increase the complexity, cost, and reliability risks of the subsystem by using a parallel-axis structure with a speed reducer. a mechanical torque coupler (mTC1) 103, a clutch 111, The three mechanical devices of the mechanical torque coupler (mTC2) 104 are arranged in a straight line in front and back along the axle wire of the vehicle, and are mechanically connected in series in two directions, and the three mechanical devices are combined to form a mechanical power splitting device (mPSD) 124; The mPSD 124 is actually a hundred-kilowatt-level heavy drive-by-wire three-port combined mechanical device, cooperating with the hundred-kilowatt-level power divider (ePSD) 123, The closed loop path, amplitude and flow direction of the mechanical power flow of the hundred-kilowatt-level engine (101) or the battery pack (130a or 130b) power flow can be dynamically adjusted to meet the vehicle dynamic equation (1-1) and the series-hybrid equation (2-4) or the parallel-hybrid equation (3-3) in real time.

Referring to Fig. 1A, the output shaft of the automatic transmission 150a is bi-directionally mechanically coupled to the main drive axle 160 of the vehicle and is controlled by a transmission controller (TCU) 151. The mechanical shaft of the traction motor (MG2) 140 disposed at the position of the hybrid P2 is mechanically coupled with the B end (also called the driving end) of the clutch 111 and the input shaft of the transmission case 150a through the mechanical torque coupler (mTC2) 104, respectively; The B end of the clutch 111 and the input shaft of the transmission case 150a can preferably be coaxially and mechanically connected at the same rotating speed (i.e., the mTC2 is a single-shaft coaxial structure), and also can be bidirectionally connected by a parallel shaft gear or a chain (i.e., the mTC2 is a parallel shaft structure). If the mTC2104 adopts a parallel shaft coupling structure, the mechanical shaft of the traction motor (MG2) 140 can pass through a 100 kilowatt-level heavy single-speed speed reducer with a fixed gear ratio (preferably a speed ratio range: a speed ratio range: a speed ratio range: a speed ratio range: a speed ratio range: a speed ratio range: a speed ratio range: a speed ratio range: a speed ratio range: a speed ratio range: a speed 3 to 9) is connected with the input shaft of the transmission 150a and the B end of the clutch 111. The traction motor (MG2) 140 can be operated as: converting the electric energy into mechanical energy for driving the ACE heavy-truck (electrically driven), or converting the mechanical energy of the ACE heavy-truck into electric energy (regenerative braking), The battery pack 130a or 130b is then charged by the motor controller 122 and the chopper 132a or 132b inside the ePSD 123 to effectively recover energy.

The vehicle control unit (VCU) 201 communicates with the ECU 102, the TCU 151, the ePSD 123 and the battery pack 130 through a automotive grade data bus (such as CAN bus). It also communicates bidirectionally with the communication box 210, the satellite navigation unit (GNSS) 220, the front-view sensor (mWR) 230, the electronic map unit 240 and so on.

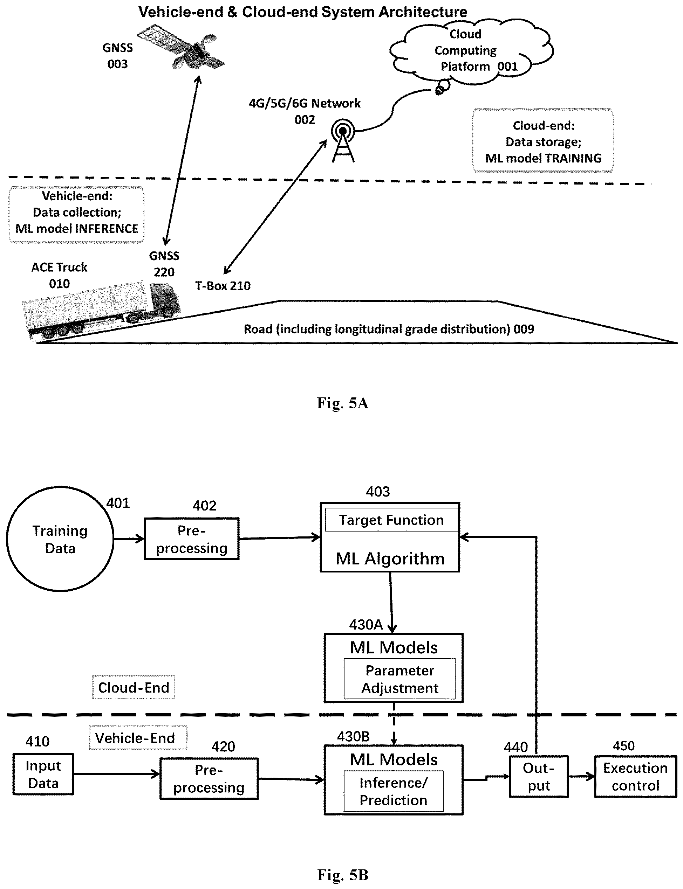

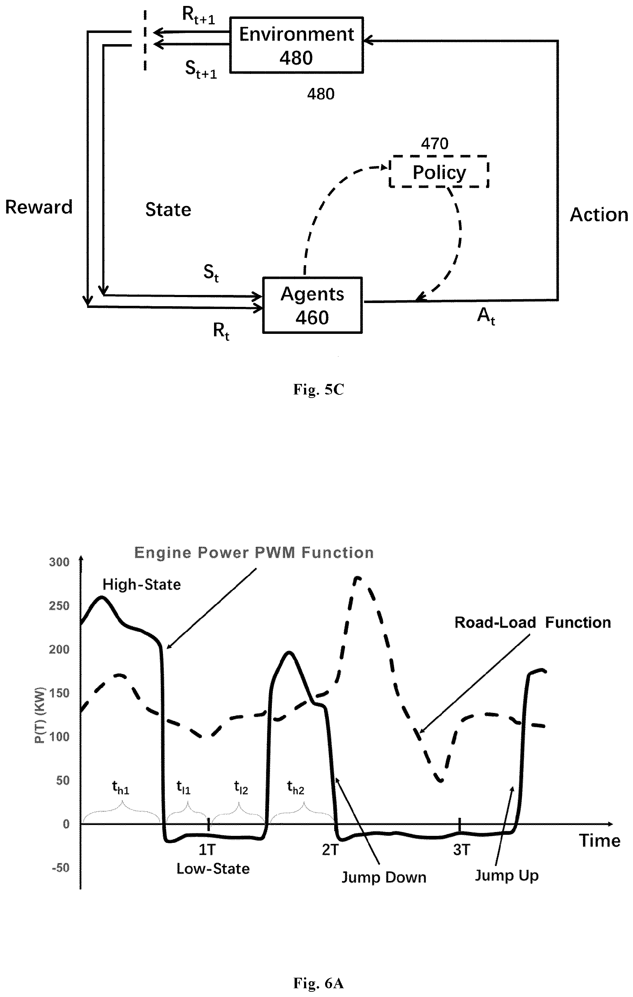

Fig. 1B is another system architecture of the ACE heavy-truck iMMH powertrain; The two iMMH assemblies are basically the same in other aspects except that the transmission main body and the input end are mechanically connected in different ways; The difference between the two iMMH assemblies of Fig. 1A and Fig. 1B will be described below, and it will be apparent that the difference between the two iMMH assemblies will be concentrated on the specific mechanical coupling and control details of the engine 101, the dual motors 110&140, the clutch 111 and the transmission input shaft, and the remaining subsystems will be the same. The transmission 150a in Fig. 1A is the current global mainstream single input shaft heavy-truck transmission, and the transmission 150b in Fig. 1B is a new advanced double input shaft heavy-truck transmission, the output shafts of the two are substantially the same; The specific mechanical coupling mode between the dual-motor (110 or 140) and the dual-input shaft of the transmission case 150b needs to be changed, as shown in Fig. 1B; At this time, the end A of the clutch 111 is only bidirectionally connected with the flywheel of the engine 101, and the generator 110 moves back to the hybrid P2 position, and is bidirectionally connected with the end B of the clutch 111 and the input shaft I of the transmission 150b through the mCT1 103; It is obvious that when the clutch 111 is closed, the flywheel of the engine 101 is also bidirectionally coupled with the shaft I of the transmission 150b; the traction motor 140 is still at the hybrid P2 position, and is bidirectionally connected with the input shaft II of the transmission 150b through the mCT2 104; The input shaft I and the input shaft II are hollow coaxial structures, a bearing is supported between the two input shafts, and the rotating speeds of the two input shafts can be different or the same. The advantage of the dual-shaft transmission 150b as compared to the mainstream single-shaft transmission 150a is that the maximum input torque of the former dual-shaft superposition may exceed 3600 meters, obviously higher than the 3000 meters of the latter; The former can ensure that there is driving power on at least one input shaft in the shifting process and completely eliminate the vehicle contusion caused by the torque interruption when shifting; However, the structure of b150b is more complex, the volume and weight are increased, and the cost is higher, and it only adapts to the hybrid heavy-truck with multiple power sources and does not adapt to the traditional heavy-truck with single power source; The dual-shaft transmission 150b is a new advanced heavy-truck transmission, which has not yet been commercially available in batches, and the worldwide commercialization of ACE heavy-truck will facilitate early commercial in batches of the dual-shaft transmission 150b. In Fig. 1A, the ACE heavy-truck selects the vehicle to operate in a series or parallel mode by opening or closing the clutch 111; In Fig. 1B, when the clutch 111 is disconnected, the vehicle is operated in the pure electric mode, and the double motors (110 and 140) can independently or cooperatively drive the vehicle, which is equivalent to series hybrid but does not generate electricity; Unless the biaxial transmission 150b is specifically indicated, in the Description of the embodiment of the present disclosure, the operation of the clutch 111 to switch the series and parallel mode of the vehicle is specified in the ACE heavy-truck of the traditional uniaxial transmission 150a in Fig. 1A; Configuring the ACE heavy-truck of the biaxial transmission 150b in Fig. 1B, it is necessary to switch the vehicle series and parallel modes by whether the input shaft I of the biaxial transmission is in neutral gear or whether the biaxial is coupled and locked (not operated by the clutch 111); The common technician, according to the context understanding, how to realize the ACE heavy-truck 010 (see Fig. 5) series-parallel parallel-hybrid mode switching, will not generate ambiguity; It is not the disclosure of how to achieve the ACE heavy-truck series or parallel operation by controlling the clutch 111 or the double-shaft transmission (containing a clutch) b150b. The double-shaft transmission 150b can effectively overcome the disadvantages of the traditional single-shaft transmission 150a (for example, the maximum input torque of the transmission is not high enough, the torque interruption in the vehicle shifting causes a sense of frustration and so on), increasing the flexibility of the ACE heavy-truck supervisory control strategy, the redundant total torque of the ACE heavy-truck engine 101 and the duo-motor 110 and 140 three-power source in the parallel-hybrid mode are used to cooperatively drive the vehicle, so as to improve the vehicle power performance, and further optimize the vehicle energy saving and emission reducing effect in the long-haul application scene; The dual-shaft transmission 150b is a new product and is currently not commercially available in the global long-haul heavy-truck field. It should be emphasized that there is no substantial difference between the ACE heavy-trucks in Fig. 1A and Fig. 1B from the perspective of the hybrid vehicle supervisory control strategy.

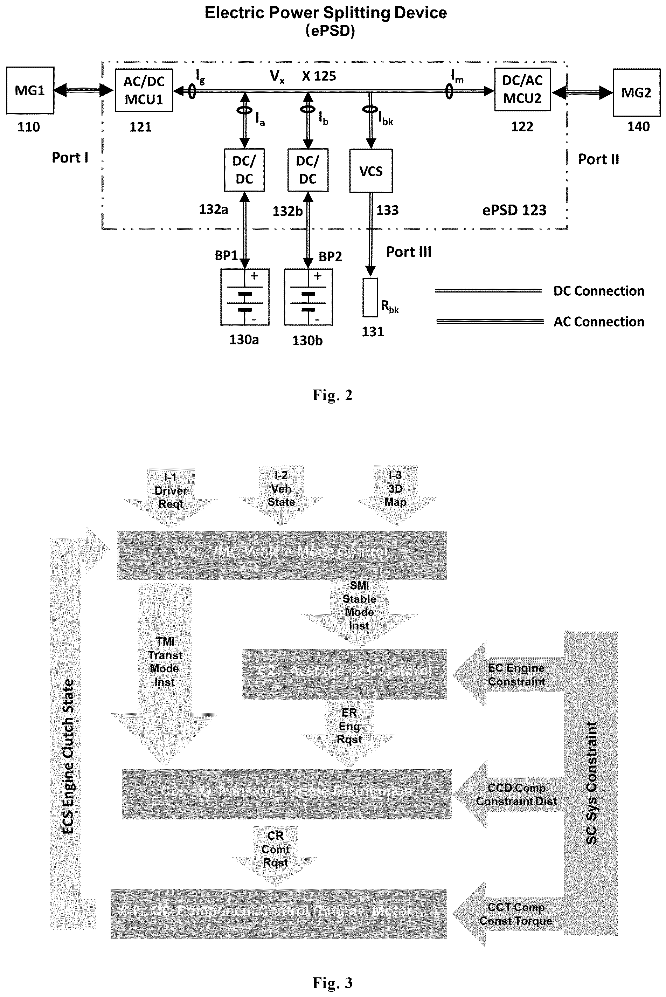

Referring to Fig. 2, an electric power splitting device (ePSD) 123 is a three-port PowerElectronics Network-PEN. the three-phase alternating current end of the motor controller (MCU1) 121 with the inverter of kilowatt level as the core module in the port I is electrically connected with the three-phase alternating current end of the external generator 110 in a bidirectional manner; An external battery pack 130a or 130b is coupled to a hundred-kilowatt-level DC chopper (DC Chopper; The low-voltage ends of the chopper (also called DC-DC converter) 132a or 132b are electrically connected in a bidirectional manner, respectively; The external hundred-kilowatt-level brake resistor 131 is electrically connected with the external connection end of the hundred-kilowatt-level voltage control switch (VCS) 133 in the port III. the three-phase alternating current end of the external hundred-kilowatt-level traction motor 140 is electrically connected with the alternating current end of the motor controller (MCU2) 122a with the hundred-kilowatt-level inverter as the core module in the port II of the ePSD; the direct current ends of the motor controller 121 or 122 are both bidirectionally electrically connected to the direct current bus bus junction point X (125) inside the ePSD; the internal connection end of the hundred-kilowatt level voltage control switch (VCS) 133 is one-way direct current electrically connected with the confluence point X; The high voltage end of the chopper 132a or 132b is electrically connected to the junction point X in bidirectional direct current. In the electric power splitting device (ePSD) 123, the necessary components include MCU1 121, MCU2 122 and chopper 132a. The packages include chopper 132b or VCS 133.

Referring to Fig. 1A or 1B, as one of the key components of the present disclosure, the vehicle controller (VCU) 201 of the ACE heavy-truck can pass through a vehicle-mounted data bus (shown in dashed lines in Fig. 1, no reference number; For example, CAN bus or wireless communication virtual data line and so on) and based on the vehicle-mounted satellite navigation unit (GNSS; The vehicle positioning and attitude three-dimensional data (longitude, latitude, longitudinal grade), the electronic horizon first road three-dimensional data (longitude, latitude, longitudinal grade) stored in the map unit (MU) 240, the vehicle configuration parameter and the dynamic working condition data (such as vehicle speed, vehicle acceleration and so on) vehicle longitudinal drive-by-wire signal (accelerator or brake signal responding to the driving intention of human driver or AI driver) and so on information, using vehicle dynamic equation (1-1), predicting vehicle transient state road-load power space-time-varying function distribution in electronic horizon with refreshing frequency higher than 1.0 Hz and kilowatt-level granularity, and according to the supervisory control algorithm (including machine learning (ML) algorithm) of the ACE heavy-truck, the engine 101, the generator 110, the ePSD123, the clutch 111, the traction motor 140, the automatic transmission 150a, and at least one of the battery pack 130 is dynamically controlled separately or simultaneously in a "independent" manner, while optimizing the real-world fuel consumption and emission at the same time on the premise of ensuring the leading of the vehicle propulsion performance industry.

In some embodiments, the vehicle controller (VCU) 201 may be a vehicle-scale high performance embedded single-core or multi-core microprocessor (preferably a 32-bit processor) with at least two CAN bus interactions. Similar to the early personal computer, in order to increase the image processing performance of the whole machine, the image processor is added, the VCU 201 can also be an AI inference chip (AIU, also called AI processor; Fig. 1A is not marked), improving the artificial intelligence (AI) inference operation ability when the ACE heavy-truck 010 vehicle-end executes the energy-saving and emission-reducing machine learning algorithm; At the same time, AIU can be upgraded to hardware computing platform supporting SAE L4 level automatic driving software stack. It can be understood that, without limitation, the VCU 201 or the AIU may also be heterogeneous microelectronic hardware logic components, including: General purpose microprocessor (CPU), field programmable gate array (FPGA), graphics processor (GPU), application specific integrated circuit (ASIC), digital processor (DSP), system-on-chip (SoC), complex programmable logic device (CPLD) and so on. The VCU 201 may be considered a domain controller of the power domain of the ACE heavy-truck.

Preferably, the engine 101 of the ACE heavy-truck is a mainstream six-cylinder diesel engine or a natural gas engine in the heavy-truck market with a displacement of 9-13 liters and a peak power range of 250 kW to 350 kW; a heavy-truck engine (diesel oil/natural gas) with larger discharge (13-16 liters) can also be selected, the peak power range is 350-520 kW, there is more power allowance, when the expressway working condition climbs high mountain (continuously climbing more than 10 kilometers, the longitudinal grade is more than 2.0 degrees), the vehicle climbing power performance is better, but the actual fuel-saving effect is basically not improved than the preferred engine, and the volume, weight and cost of the engine are obviously increased, the performance-price ratio is excellent; The engine with smaller displacement (less than 9 liters) can be selected, and the peak power is generally less than 260 kW, although the fuel-saving effect is good, the volume, weight and cost of the engine are low, the power allowance of the engine is not enough; When the vehicle freeway climbs high mountains, if the charge in the battery pack 130 is basically exhausted (SoC is less than LRL), it cannot continue to supply power to the traction motor, then it is directly driven by the engine 101, at this time, the power performance of the ACE heavy-truck 010 climbing slope will be obviously insufficient, it is necessary to change the low gear to reduce the speed so as to continuously upgrade the slope; at the same time, the small marathon large vehicle has unfavourable long actual service life (one million kilometers) for the engine, and the performance-price ratio is excellent. It will be appreciated that, alternatively, the engine 101 may also be a hydrogen engine or a gas turbine for a vehicle that meets the power requirements described above. The gasoline engine is obviously lower than the diesel engine in terms of combustion thermal efficiency, low rotating speed and large torque, and service life (B10 service life kilometer), and it is not suitable for the long-haul heavy-truck.

As shown in Fig. 1A, in various embodiments of the present disclosure, when the clutch 111 is disconnected, the ACE heavy-truck powertrain system is in a series-hybrid mode; At this time, there is no mechanical connection between the engine 101 and the driving bridge 160 or 180 of the vehicle, and the running condition of the engine is completely decoupled from the running condition of the vehicle, The engine 101 is enabled to stably operate for a long period of time at least one operating condition point (specified rotational speed/torque) specified in its universal characteristics curve high efficiency region (including the optimal fuel efficiency region and/or the optimal emission region). When the clutch 111 is closed, the ACE heavy-truck powertrain is switched to the parallel-hybrid mode, at this time, the engine 101 is directly and bi-directionally mechanically coupled with the main drive axle 160 or the secondary drive axle 180 of the vehicle through the transmission 150a; The rotating speed of the engine 101 is determined by the vehicle speed and the gear of the transmission 150a, and cannot be dynamically adjusted independently (as a dependent variable), but the output torque of the engine 101 can be dynamically adjusted independently, and is not limited by the running condition of the vehicle; The transient output power of the engine 101 is proportional to the product of its rotational speed and torque, and is still independently adjustable, except that at this time, the engine operates as a linear operating condition in the universal characteristics curve high-efficiency region, rather than as a simple point operating condition in the series-hybrid mode. The vehicle can always make the engine 101 work stably in the high-efficiency area through the gear-shifting control strategy of the transmission 150a under the expressway working condition; Most long-haul heavy-truck modern engine universal characteristics curve of the high efficiency area at rotating speed range 900 r/min to 1600 r/min, torque loading rate is more than 50 % (namely a certain rotating speed, actual torque/peak torque). The total peak power of the generator 110 (MG1) and the traction motor 140 (MG2) should be greater than the peak power of the engine 101, and the total drive power of the double motors (110&140) can be completely adjusted dynamically in the parallel-hybrid mode, According to the parallel equation (3-3) and the boundary condition, the dynamic accurate tracking of the difference between the vehicle 010 road-load transient power and the engine 101 transient power is realized, so as to satisfy the vehicle dynamic equation (1-1) in real time. The basic switch control strategy (On-Off) of a drive-by-wire clutch 111 is as follows: under the expressway working condition (the vehicle average speed per hour is higher than 50 kilometers per hour; less active acceleration or braking), preferably in a parallel-hybrid mode (clutch closed); the average speed of the vehicle is less than 45 kilometers per hour under the urban working condition or when the congested expressway is running; frequent active acceleration or braking), preferably a series-hybrid mode (clutch off); The intelligent mode switching strategy (iMS) may also be preferred, which belongs to the advanced intelligent dynamic switch control strategy of the drive-by-wire clutch 111. The actual vehicle energy-saving and emission-reduction effect of the iMS strategy is better than that of the switch control strategy, and the following detailed Description is given. In this disclosure, torque and torque are synonymous, "Tail-pipe Emission" refers to the tail pipe pollutant emission of vehicle 010 (including nitrogen oxide NOx, particulate matter PM, etc.), and "exhaust gas" refers to exhaust gas at the exhaust port of the engine 101.

The difficult point of the traditional heavy-truck AEC engine is that it must be under the global working condition (that is, all allowed rotating speed and torque range), dynamically satisfies the dynamic performance of the engine, saves oil, discharge performance, it meets the increasingly strict mandatory emission regulation (including pollutant emission and carbon emission) of each country in the world, belonging to the engineering problem of high-dimension non-linear multi-element optimization; In the past more than 20 years (2000-2022), the world's modern mass production heavy-truck engine, regardless of the minimum fuel consumption (BSFC; or thermal efficiency (BTE; %), or the actual comprehensive fuel consumption (L/100kM) of the two index, accumulated improvement amplitude is less than 20 %, has encountered the bottleneck of the internal combustion engine research technology and production technology; When the vehicle runs under different working conditions, the engine of the surface working condition cannot run with the best thermal efficiency (or minimum specific fuel consumption) in the high-efficiency area in most time, and the actual comprehensive thermal efficiency is obviously lower than the best thermal efficiency of the engine. the operation range of the engine can effectively break through the upper limit (46 %) of the current mass production heavy-truck engine thermal efficiency (BTE) in the actual application if the operation range of the engine can be simplified from the complex global surface working condition to several preset point working condition or line working condition in the high efficiency area, it develops a new technical route for optimizing the real-world fuel consumption and discharge performance of the whole vehicle to the largest extent with high performance-to-cost ratio; At the same time, it may also effectively correspond to the design and calibration of the engine main body of the counterheavy-truck, ECU, and after-treatment system (EATS) in the next 20 years, in order to meet the continuous introduction of more stringent new internal combustion engine automobile emission (pollutant emission and carbon emission), and the complexity of manufacturing and the severe challenges of increasing product costs, such as the ultra-low NOx combination of California diesel heavy-trucks mentioned above (2024 down 75 %, 2027 down 90 %).

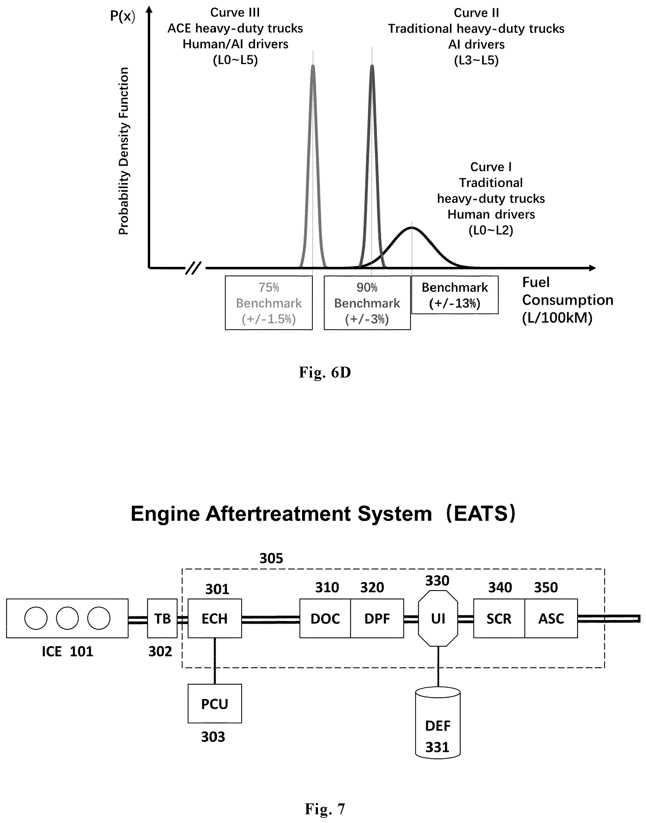

Compared with the ignition type gasoline engine (SI), the compression-ignition type large diesel engine (CI) has the advantages of fuel-saving, large torque at low rotating speed, solid and durable, over-long service life (B10 service life is more than one million kilometer), high performance-to-cost ratio and so on. it is the first choice of the engine of most road heavy-truck (more than 95 %) in the world. However, the diesel engine is inferior to the gasoline engine in terms of pollutant emissions, especially in terms of pollutants emissions such as nitrogen oxides (NOx) and micro-particles (PM) which are harmful to the atmospheric environment and human health. World mainstream post-processing technology routes that meet the US EPA-2010, Euro-VI, and China National -6 engine emission mandatory regulations, and reduce heavy-truck diesel engine exhaust pollutant NOx and PM emissions include diesel oxidation catalyst (DOC), selective catalytic reduction device (SCR), and a diesel particulate trap (DPF) (see Fig. 7); The SCR requires that the catalyst in the after-treatment system (EATS) can work normally and efficiently (the conversion efficiency is higher than 90 %) when the internal working temperature (also called exhaust gas temperature) reaches a light-off temperature of more than 250 degrees C; When the temperature of the exhaust gas is less than 200 degrees C, the catalytic conversion efficiency of the SCR catalyst is greatly reduced (less than 70 %), at this time, the engine pollutant emission (especially NOx emission) is multiplied; The SCR low-temperature catalyst with a high-efficiency working temperature of 150 degrees C is also in the early stage of laboratory research in Europe and US, and is computed in ten years from the commercial time of mass production. the diesel engine will greatly increase the pollutant emissions and specific fuel consumption (g/kWh) under the challenging working conditions of cold start, low load operation (loading rate is less than 30 %), idle operation, or output power or torque fast and greatly adjusted; Under the expressway working condition, the engine can basically work stably in the high efficiency area of the universal characteristics curve, at this time, the pollutant emissions and the fuel consumption of the diesel engine are lower. The traditional internal combustion engine heavy-truck is difficult to optimize fuel consumption and pollutant emissions in the range of all rotating speed/torque of the universal characteristics curve of the engine (namely surface working condition); At present, the European and American heavy-truck industry has not disclosed that it can meet the Federal GHG-II greenhouse gas emission regulations (CO2 emission) and California ultra-low NOx emission (90 % reduction; 0. 02g/bhp-hr).

The iMMH powertrain of the disclosure can make the pulse-control engine 101 work stably in the high-efficiency region (high-state or low-state line working condition) for a long time by the series-hybrid iSS control or parallel-hybrid iPS control technology; no matter how the running condition of the whole vehicle is, the efficient running time of the pulse-control engine is kept at more than 97 %; it also can reduce the operation time of all challenging low-efficiency working conditions such as cold starting of the engine, low rotating speed and low load by more than 95 % (based on the AEC diesel engine) and completely eliminate the combustion idle speed working condition of the engine (replaced by the non-combustion low-state working condition); while reducing the RDE fuel consumption (namely CO2 emission), it also can effectively improve and maintain the engine exhaust gas temperature, so that the after-treatment system (EATS) of the pulse-control engine 101 work stablys in the catalyst high temperature high efficiency area (more than 250 degrees C) for a long time, The disclosure greatly reduces the emission of the whole vehicle tail pipe RDE pollutant (NOx, PM) and realizes the beneficial effect of minimizing the fuel consumption and emission at the same time. In addition, because the ACE heavy-truck DPC engine 101 has low specific fuel consumption (BSFC) of the engine when it is running in high-state and the temperature of the exhaust gas is high, the SCR system keeps efficient operation, and also can reduce the dosage of the consumable urea (DEF) (gram/hundred kilometer), so as to further reduce the operation cost of the ACE heavy-truck; Moreover, both the diesel engine and diesel particulate filter (DPF) of the ACE heavy-truck can work stably in their respective high-efficiency areas for a long period of time, and can basically eradicate the long-term pain point of the industry user who is time-consuming and oil-consuming in the DPF system active regeneration. The disclosure further reduces the operation cost of the fleet and improves the freight efficiency.

The pollutant emission value of the modern diesel heavy-truck in ten minutes after cold starting is obviously higher than the emission value of the subsequent steady-state working condition; the high emission at the cold start stage has no substantial effect on meeting the current emission regulations (EPA-2010, Euro-VI, GB-6) of the US, Europe and China; However, if the emission limit value of the California diesel heavy-truck ultra-low NOx Omnibus regulations 2027 is to be satisfied, the actual pollutant emission value of the diesel heavy-truck under high challenging conditions such as cold start, low speed, low load, idle speed and so on must be greatly reduced (90 % reduction +), otherwise the diesel heavy-truck cannot reach the standard. Compared with the traditional diesel heavy-truck, the engine of the ACE heavy-truck can realize the clean cold start function (CCS-clean cold Start); The ACE heavy-truck can pre-set the vehicle cold start pre-heating time through the mobile communication network (such as intelligent mobile phone application program) when the engine is cold start after long-term parking (more than five hours) in the outdoor winter (such as environment temperature below zero degrees C), the vehicle VCU automatic command wire control clutch 111 is cut off, the vehicle enters the series-hybrid mode and is controlled by the series-hybrid iSS; The battery can be used to pack ten-kWh level-level effective electric energy, the inversion is completed by hundred-kilowatt level ePSD 123 and the alternating current (I or II port) is output or the hundred volt-level high voltage direct current is output from the junction point (X) 125, a large power (peak power range from 20 kW to 60 kW) at the front end of an ACE heavy-truck after-treatment system (EATS) 305 (see Fig. 7), an electro-catalytic heater (ECH) 301 (see Fig. -7), The integrated exhuast gas after-treatment system 305 comprises the SCR module 340 in each module for minute level fast pre-heating, the each module (301, 320, 340) the internal temperature substantially reaches 200 degrees C (that is, turning off the lamp temperature), then the generator 110 (MG1) in the electric propulsion mode, dragging the DPC engine 101 without fuel passive operation to 800 r/min to 1000 r/min between the appointed high idle speed point about ten seconds, then the fuel injection pressure is injected for the first time to ignite to apply work and enter the high-state working condition; at this time, the duty-cycle of the DPC engine power function PWM sequence is preferably greater than 50 %; At this time, the catalyst electric heater (ECH) 301 becomes the electric load of the gen-set(102 and 110) or the battery pack 130; it can greatly reduce the transition time from the cold start of the pulse-control engine to the first ignition to the exhuast gas after-treatment system reaching the high-efficiency working temperature (about 250 degrees C) (that is, the so-called "light off time", light-off time) from the ten-minute level of the electric control engine in the existing technology to ten-second level, it can reduce more than 95 % of the actual pollutant emissions amount when the AEC diesel engine is relocked and cold started; The CCS function described above is a cost-effective solution to achieve ACE heavy-truck RDE near-zero emission (reducing diesel NOx emission limits, particularly vehicle RDE emission values, by 90 % from the current EPA-2010 or GB-6 emission regulations). The power consumption of each clean cold start is about kilowatt hour, and the ACE heavy-truck kilowatt hour battery pack 130 (see Fig. 1A or Fig. B; The general indication is that the primary battery pack 130a or the secondary battery pack 130b can be easily supported. It should be emphasized that the engine 101, the generator 110 and the traction motor 140 are all stationary during the after-treatment system time of the electric preheating engine of the ACE heavy-truck, and there is no vibration or noise in the ACE heavy-truck at this time; the battery pack (130) can temporarily supply power, using the alternating current end or direct current confluence point (X) 125 of the motor controller 122 with hundred-kilowatt level rated power contained in the ePSD 123 to supply power to the ten kilowatt level electro-catalytic heater (ECH) 301, the internal temperature of the SCR module 340 is gradually increased to more than 200 degrees C from dozens of degrees C below zero in the minute level time; The VCU 201 can automatically adjust the heating power consumption curve of the ECH 301 according to the data of the temperature sensor in the EATS system 305. the outer surface of the vehicle after-treatment system 305 should be added with a high temperature resistant heat insulating insulating layer, so that the heat capacity of the system is improved, and it has minute-level heat preservation time; once the pulse-control engine reaches the EATS light-off temperature and enters the stable operation, the minute-level low-state working condition operation will not cause the internal working temperature of the after-treatment system (EATS) 305 to be quickly reduced below 200 degrees C; when the pulse-control engine is hot started or switched from the low-state working condition of the PWM pulse sequence to the high-state working condition (equivalent to the hot start), the ECH is basically not needed to start the electric heating function; the temperature of the exhaust gas is obviously higher than 250 degrees C when the pulse-control engine is operated in high-state working condition, at this time, the after-treatment system (EATS) can keep high temperature and high efficiency operation, ensuring the vehicle RDE tail pipe discharge stable standard. It should be emphasized that the clean cold start (CCS) function of the ACE heavy-truck is applicable to either an electrically controlled engine or a pulse-controlled engine, but the latter is simpler and more robust than the former emission control, and the real-world fuel consumption and emission are lower.

The power of the motor is proportional to the product of its rotational speed and torque, while the volume, weight, and cost of the motor are positively associated with its peak torque (i.e., maximum torque) height. Mixing or pure electric passenger car (total weight is less than 3. 5 ton) mostly adopt high rotating speed (peak value is more than 12000 r/min) low torque (peak value is less than 350 motor; The hybrid heavy-truck uses a large gauge motor with low rotational speed (peak value is less than 3000 rpm) and large torque (peak value is more than 1000 Nm). For example, the rated power (that is, the maximum continuous power) of the large motor I with a rotating speed of 1200 rpm and a peak torque of 2000 meters and the medium and small motor II with a rotating speed of 12000 rpm and a peak torque of 200 meters is 251 kW; However, the volume, weight and cost of the motor I are obviously higher than those of the motor II. Compared with the passenger vehicle application, the ACE heavy-truck has less limitation on the volume and weight of the motor and battery pack and other sub-systems, but it is highly sensitive to their cost, and the service life is long. In terms of annual production and sales of new energy vehicles around the world, the proportion of passenger vehicles is nearly dozens of times higher, and the supply chain of new energy cars is more mature. At present, the rated power of the high rotating speed-low torque motor used by the new energy passenger car is mostly less than 100 kW (peak power overloading rate is 50 % +), and the unit cost (US dollar/kilowatt) is obviously reduced year by year along with the increase of the yield; However, in the next 20 years, the unit cost (US dollar/kilowatt) of large motor vehicles with rated power of more than 100 kilowatt-large torque will still be relatively high, and it will be difficult to reduce obviously year by year. The disclosure Claims a new energy passenger car or a heavy-truck, which is basically the same as the power electronic core device such as IGBT or SiC, and the device with the same voltage platform can be used commonly. if the hybrid heavy-truck is on the large three-electric system (motor, battery, electric control) selection type (especially voltage platform, peak value torque, the peak power and so on) can be close to the technical requirement of the new energy passenger vehicle, even partially overlapped, which is very good for the large three-power system of the ACE heavy-truck to fully utilize the scale effect of the mature global supply chain of the new energy passenger vehicle, reducing the cost year by year, and keeping the quality.

Preferably, for the embodiment of Fig. 1 (A or B), it is preferable that the generator (MG1) 110 is a permanent magnet synchronous motor (PMSM) with a rated power between 125 kW and 175 kW. The traction motor (MG2) 140 is preferably a permanent magnet synchronous motor with a rated power of 175 kW to 250 kW, and may also be an AC asynchronous motor or a reluctance motor with the same power specification. In various embodiments of Figure 1, if the rated power of the two motors (110, 140) respectively exceeds the preferred parameter range described above, the ACE heavy-truck can still operate normally; when the rated power is lower than the preferred lower limit value, the cost, volume and weight of the motor are reduced, but the power performance and power redundancy of the vehicle, or the fuel saving rate under the small probability limit road condition or working condition (such as mountain area operation) may be reduced; when the rated power is higher than the preferred upper limit value, the power or fuel saving rate of the vehicle will be slightly increased only under the small probability limit road condition or working condition, the power redundancy is increased, but the cost, volume and weight of the motor (110 or 140) are obviously increased; Both are suboptimal choices. It should be emphasized that the peak power (10 seconds or 15 seconds pulse) of the motor or battery pack is obviously higher than its rated power, and the overloading rate (Over Loading) can reach 30 % to 60 % (based on the rated power; Overloading rate = peak power/rated power -1. ). Unless otherwise specified, the Description of the battery pack 130, the chopper 132, and the transmission 150 in the present disclosure includes a or b and a and b, etc.

The electric power splitting device (ePSD) 123 shown in Fig. 2 is a power electronic network (PEN) with three ports of rated power of a hundred-kilowatt level, including at least two insulated gate bipolar transistors (IGBTs) or silicon carbide (SiC) power modules. However, any kilowatt-level power supply or kilowatt-level energy storage device may not be included. There are multiple power electronic circuit topology designs, which can realize the input and output characteristics of the three-terminal PEN and the functions of various internal subsystems. It should be noted that the present disclosure is not intended to limit the specific circuit topology implementation of a three-terminal PEN including an IGBT or SiC power module, as long as various power electronic circuit topology designs are capable of implementing the key input/output functions and characteristics of the ePSD 123 described in the present disclosure. It should fall within the scope of this disclosure. In view of the flexibility of the integrated design and manufacturing of the power electronic module, in order to improve the system performance and/or reduce the cost, the motor controller (MCU1, MCU2) 121, 122, chopper 132, and a voltage-controlled switch (VCS) 133 and the like can be packaged in a single mechanical box, and also can be packaged in a plurality of mechanical boxes in a dispersed manner. At present, the IGBT is the global mainstream automotive grade power electronic power module with the highest performance-price ratio, the silicon carbide (SiC) power module is the latest one, although the performance is better, the cost is higher in the near future; With the increase of SiC output in the next ten years, the market share will be increased year by year, and the cost will be reduced year by year. The IGBT module in the disclosure can generally refer to various power electronic power modules including IGBT or SiC.

In the embodiment shown in Fig. 2, the alternating current terminal of the internal motor controller 121 of the port I of the ePSD is electrically connected with the three-phase alternating current output terminal of the external generator (MG1) 110 in a bidirectional manner; the alternating current end of the port II internal motor controller 122 is electrically connected with the three-phase alternating current output end of the external traction motor (MG2) 140; the lower end of the internal chopper 132a of the port III is electrically connected with the bidirectional direct current of the external battery pack 130a; The lower end of the chopper 132b is in bidirectional DC electrical connection with the external battery pack 130b. The DC ends of the two motor controllers (121, 122a) are both bi-directionally DC coupled to the DC bus bus junction point (X) 125 of the ePSD, and the high ends of the dual chopper (132a, 132b) are also bi-directionally DC coupled to the DC bus junction point (X) 125 inside the ePSD. one end of the voltage control switch (VCS) 133 with rated power of 100 kilowatt is electrically connected with the confluence point (X) 125 one-way direct current, and the other end is electrically connected with the brake resistor 131 one-way direct current of the external 100 kilowatt with radiator.

Preferably, the IGBT power module is used to implement the voltage-controlled switch (VCS) 133, and the direct current voltage triggering mode is used to control the voltage-controlled switch (VCS) to be turned on or off, and the specific control mode is defined by the software and is dynamically adjustable, so the intelligent voltage-controlled switch (iVS) is referred to as the intelligent voltage-controlled switch (iVS). The industry common technician can adopt multiple power electronic topology structure to realize VCS function. The embodiment of the iVS control policy is as follows: $V_{on} = (1 + k_{on}) V_{bus0}$; $V_{off} = (1 + k_{off}) V_{bus0}$; wherein Von is the on-voltage threshold, $V_{off}$ is the off-voltage threshold; $V_{bus0}$ is direct current bus rated voltage, preferably in the range of 600V to 750V; $k_{on}$ is the conduction bias coefficient, preferably in the range of 5 % to 15 %; $k_{off}$ is the off-bias coefficient, preferably in the range of -5 % to +3 %; $k_{on}$ is greater than $k_{off}$, both of which are defined by software and can be dynamically adjusted respectively; It is obvious that $V_{on}$ is greater than $V_{off}$; when the direct current voltage of the junction point 125 (X) rises to the on-state voltage $V_{on}$, the voltage control switch (VCS) 133 can quickly switch from the off-state to the on-state and keep the on-state in millisecond response time, making the hundred-kilowatt level brake resistor 131 become the effective electric load of the ePSD 123 junction point 125; When the direct current voltage at the junction point X drops to the off voltage $V_{off}$, the voltage control switch 133 can quickly switch from the on state to the off state and keep the off state in millisecond response time. When the transient state of charge (SoC) function value of the battery pack 130a or 130b exceeds the red line URL on it, for the protection of the battery pack, the chopper 132a or 132b will quickly cut off the charging path (ten millisecond level) of the battery pack; But at this time, if the ACE heavy-truck still needs to drive the regenerative braking function of the motor 140 from the active safety angle, and suddenly loses the effective electric load of the battery pack, it will cause the direct current voltage at the confluence point X to instantaneously and rapidly increase, Even more than the breakdown voltage of the IGBT module (e.g. 1200 V), a transient "limit voltage pulse" may occur, which may cause permanent damage to each IGBT module or other electronic component within the ePSD 123; The technical solution of the intelligent voltage control switch (iVS) is an effective measure for preventing the confluence point X from generating the limit voltage pulse. The intelligent voltage-controlled switch (iVS) control strategy can not only switch on the brake resistor 131 when the battery pack 130 is basically overfull (SoC = URL), and provide the non-friction steady-state retarder function when the ACE heavy-truck is in long slope, but also provide another important bus point X transient over-voltage protection function, In order to avoid the main electronic components of the internal IGBT module of the ePSD 123, such as the motor controllers 121,122 and the chopper 132a, 132b, etc., in some extreme working conditions of the ePSD 123, serious failure modes such as tripping interrupt operation or permanent damage (especially IGBT over-voltage breakdown damage) occur. Preferably, the rated power range of the voltage-controlled switch (VCS) 133 is 100 kW to 250 kW, and the voltage level is more than 1200 V; the rated power of the corresponding brake resistor 131 should be less than the rated power of the voltage-controlled switch 133, preferably the rated power of the brake resistor is 75 kW to 200 kW; From the consideration of increasing the system redundancy and reducing the cost, two sets of voltage-controlled switches 133 with rated power of about 125 kW and matched hundred-kilowatt-level brake resistors 131 are preferably connected in parallel to realize the intelligent voltage-controlled switch (iVS) function with rated power of 250 kW; It is apparent that the iVS function is defined by software and continuous upgrade iterations can be achieved by over-the-air technology (OTA).

Referring to Fig. 2, when the nominal voltage $V_{bp}$ of the battery pack 130a or 130b (that is, the open circuit voltage at the state of charge SoC = 50 % at the room temperature of the battery pack) is equal to the rated voltage $V_{bus0}$ of the direct current bus of the ePSD 123, in order to simplify the system and reduce the cost, It may be contemplated that the chopper 132a or 132b may be simplified as a special example of two hundred A high voltage metal busbars, substantially electrically coupling the battery pack 130a or 130b directly bi-directionally to the junction point (X) 125; However, in this particular example, the nominal voltage of the battery pack 130 must be fixed equal to the rated voltage of the direct current bus, and the battery pack will also lose the function of actively adjusting the amplitude or direction of the hundred-kilowatt-level transient charge/discharge power flow defined by the software; At the same time, the ePSD 123 also loses the ability to flexibly match high performance-to-cost ratio battery packs of various different rated voltages in the supply chain of new energy vehicles through software defined (field or OTA remote iteration); is a sub-preference. The battery pack 130a or 130b is one of the highest-cost subsystems of the ACE heavy-truck, and is also a potential short board for the dynamic, reliability, and durability of the vehicle; the high-rate partial SoC (HRPSoC) characteristics curve of the battery pack and the actual cycle life are highly associated with the dynamic working condition data such as the SoC (SoC) and the electric core temperature; Another advantage of using a hundred-kilowatt-level chopper 132a or 132b is that VCU 201 can be based on the cell HRPSoC digital characteristics curve list, cell condition data (SoC, temperature and so on), and ACE heavy-truck whole vehicle propulsion performance working condition data, software defined and dynamic adjusting (ten millisecond level time delay) battery pack (132a or 132b) of the transient charging and discharging multiplying power, making the battery pack to work stably in the high efficiency area for a long time under various temperature and SoC data, so as to reach the beneficial effect of optimizing the battery pack performance and cycle life; The chopper 132 may also be defined by software to add new functions without increasing any hardware cost, such as implementing a battery pack intelligent pulse warm-up function (iPH), followed by detailed description.

The direct current bus confluence point 125 (X) inside the ePSD 123 of the disclosure is the nerve centre of the power electronic network of the ACE heavy-truck hybrid powertrain, the only direct current voltage time-varying function of the point and the set of the direct current current time-varying function of all in and out of the branch circuit, The dynamic working state of the ACE heavy-truck power power loop is described mathematically and completely, which is the key node of the ACE heavy-truck operation energy saving, emission reducing and safety control. Although the bus point X is a point in the circuit topology, there are a number of physical implementations, such as a metal bus bar or a multi-joint high power cable distributor, and the like.

The ePSD 123 may be implemented by integrating a plurality of large power electronic functional modules (e.g., motor controllers 121,122; a chopper 132; the voltage control switch 133 and so on) performs digital pulse-control, realizing the dynamic adjustment of the path and amplitude of the power power flow between the three ports by ten millisecond-level response time, kilowatt-level granularity, and hundred-kilowatt-level power rated power amplitude, and direction, according to the series-hybrid equation (2-4) or parallel-hybrid equation (3-3) to fuse mechanical power flow and electric power flow, dynamically matching vehicle transient road-load power time-variable function Pv (t), real-time satisfy vehicle dynamic equation (1-1). The VCU 201 operates the clutch 111 and the ePSD 123 according to the ACE heavy-truck supervisory control strategy (including the machine learning (ML) algorithm), The vehicle can respectively realize the stable operation of one of the two different control modes of series-hybrid iSS and parallel-hybrid iPS or the dynamic switching between the two (that is, intelligent mode switching iMS), under the premise of ensuring the leading of ACE heavy-truck 010 performance (power/brake) industry, the RDE fuel consumption and emission of the DPC engine 101 are optimized at the same time; The ACE heavy-truck can start the iMS function under the long-haul application scene, the switching frequency between the series hybrid and parallel-hybrid modes is low, the average switching time is less than times per miles, it is automatically implemented, and the real-world fuel consumption is further reduced.

Alternatively or additionally, the ePSD 123 may also be configured with a plurality of vehicle-level sensors and memories, which can measure and record the dynamic voltage function Vbus (t) and the current function Ig (t), Im (t) at the DC bus bus bus point X at a frequency of not less than 5 Hz, Ib (t) time sequence, as a part of the fuel-saving data-set, and through vehicle communication box 210, in time (hour level time delay) uploaded to the cloud computing platform 001 for storage, for subsequent analysis processing. The implementation of the fuel-saving data-set is described in detail later.

It is known that the electric power balance equation at the junction point (X) 125 of the internal DC bus of the ePSD 123 is as follows:

$$P_g + P_{bat} + P_m + P_{br} = 0 \qquad\qquad (4\text{-}1)$$

wherein $P_g \in [-P_{igx}, P_{igx}]$, $P_{bat} \in [-P_{bx}, P_{bx}]$, $P_m \in [-P_{imx}, P_{imx}]$; $P_{igx}$ is the peak power of the generator controller (MCU1) 121, $P_{bx}$ is the total peak charge/discharge power of the primary battery pack 130a and the secondary battery pack 130b, and $P_{imx}$ is the peak power of the traction motor controller (MCU2) 122; The sub-system configuration parameters should satisfy the following inequalities: $P_{bx} > P_{imx} > P_{igx}$. $P_g$ is the transient electric power time-varying function of the generator (MG1) 110, controlled by the generator controller (MCU1) 121, $P_{gx}$ is the peak power ($P_{igx}$ is more than $P_{gx}$), the positive value is the driving power (electric energy changed into mechanical energy), the negative value is the generating power (the mechanical energy changed into the electric energy); $P_{bat}$ is battery pack 130 total transient electric power time-varying function, controlled by chopper 132, positive value is charging power (electric energy to chemical energy), negative value is discharging power (chemical energy to electric energy); $P_m$ is the transient electric power time-varying function of the traction motor (MG2) 140, controlled by the traction motor controller 122, $P_{mx}$ is the peak value power ($P_{imx}$ is more than $P_{mx}$), the positive value is the driving power (electric energy to mechanical energy), the negative value is the regenerative braking power (mechanical energy to electric energy, recycling energy; equivalent to the generated power); $P_{br}$ is the transient electrical power time-varying function of the brake resistor 131, controlled by the voltage-controlled switch (VCS) 133, is a non-negative number and has a peak power of one-hundred-kW level. In this disclosure, unless otherwise specified, the peak power refers to its maximum continuous mechanical power for mechanical subsystems such as engines or transmissions; For a electric subsystem such as a motor, a motor controller (i.e., an inverter), a chopper, or a battery pack, the peak electric power pulse is 10 seconds or 15 seconds; The peak power of the electric subsystem is obviously larger than the rated power (i.e., the maximum continuous electrical power), and the majority of the peak power can be up to over 150 % of the rated power.

The ACE heavy-truck can preferably close the clutch 111 under the high speed working condition, so as to realize the parallel-hybrid mode operation; In the city/suburb working condition and the congested highway running, the clutch 111 can be preferably disconnected to realize the series-hybrid mode operation; When the ACE heavy-truck encounters a long slope or a high mountain (the absolute value of the longitudinal grade is greater than 2.0 %, and the continuous uphill or downhill distance exceeds 5 kilometers), the hybrid mode should be preferred regardless of the average vehicle speed for the safety and power considerations of the vehicle. ACE heavy-truck in the long-haul application scene, nearly 90 % of mileage is high speed road working condition, the clutch 111 does not need frequent switching; at the same time, because of the dynamic cooperation of double motors (MG1 and MG2), both of them can quickly and accurately control the rotating speed or torque respectively, and can realize the function of parallel-hybrid mode without clutch shift (CGS); When the ACE heavy-truck shifts (even a single input shaft transmission), there is no obvious driving torque interruption and vehicle running contusion, and the dynamic performance, brake effectiveness and NVH performance of the whole truck are obviously better than those of the internal combustion engine heavy-truck in the prior art.

The battery pack 130 is one of the highest-cost subsystems of the ACE heavy-truck, and is also one of the potential shorts of power, reliability, and durability (i.e., long life) of the ACE heavy-truck, so the high performance-to-cost ratio design manufacturing of the battery pack is critical. The ACE heavy-truck has obvious difference with the technical requirement of the power battery pack compared with the hybrid light vehicle. The ACE heavy-truck has no rigid limitation on the volume and weight of the battery pack with a total capacity of dozens of kW, but is resistant to high and low temperatures for the battery pack (ambient temperature range: to degrees Celsius). from -30 degrees C to +50 degrees C) and shock resistance vibration requirement is higher, especially the equivalent depth cycle life of the battery pack under high-rate partial SoC (HRPSoC) working condition (namely equivalent full charging and discharging accumulated times; 100 % DOD). The power-type battery pack 132 used by the ACE heavy-truck needs to support the high-rate charge and discharge requirements of the dual-motor 110 & 140 total maximum continuous power of 300 kW + or 10 seconds pulse peak power of approximately 500 kW +; If the ACE heavy-truck is to realize the accumulated fuel saving of 30 % in the running mileage of 600,000 miles compared with the traditional diesel heavy-truck, the equivalent accumulated throughput electric charge in the whole life period of the battery pack (assuming 600,000 miles) should be more than 36,000 kWh; Evidently, the requirement of the ACE heavy-truck battery pack for the performance and service life of the electric core HRPSOC is obviously higher than that of the new energy passenger car battery pack. the actual performance and cycle life of the battery pack are closely related to the transient working condition (current, voltage, temperature, SoC, SOH and so on) of the electric core; The ACE heavy-truck needs the chopper 132 to communicate with the battery management system (BMS) of the battery pack 130 in real time, according to the transient state of charge (SoC) of the battery pack 130, the battery core temperature, The battery cell health state (SOH) and other data dynamically control the actual charging and discharging multiplying power of the battery pack so as to realize the optimization of the battery pack performance and the circulation service life.

The battery pack 130 preferably has a total initial capacity range of 50 kWh to 200 kWh, and can support an ACE heavy-truck pure electrical mileage range of 20 to 75 miles (full load full power). When the long-haul heavy-truck is fully loaded and running, the power consumption during pure electric propulsion is about 2.0 degrees per mile, even if the ACE heavy-truck is configured with a large power battery pack 130 with a total capacity of 90 kWh, the continuous running mileage of the pure electric propulsion is less than 45 miles (LRL < SoC < URL), a fraction of the vehicle's average mileage of 500 miles per day; It is clear that the engine 101 is still the main source of energy for the ACE heavy-truck 010 freight events. The larger the total effective capacity of the battery pack 130 is, the smaller the charge/discharge magnification (C Rate) and the equivalent cycle life of all the electric cores are, but at this time the volume, weight, and total cost of the battery pack are obviously increased; The overall performance-price ratio of the ultra-large capacity battery pack is not optimal, and it needs to be determined according to multiple factors such as the main duty-cycle working condition (Duty Cycle) of the ACE heavy-truck and the vehicle budget of the longitudinal grade distribution function level of the frequently-running highway. Unless specifically stated, the capacity of the battery pack refers to the initial capacity (BOL-Begin of Life), and the vehicle industry specifies that the end capacity (EOL - End of Life) is 80 % of the initial capacity.

By mixing the high performance (low-temperature high-rate charging and discharging), ultra-long service life, and high cost lithium titanate core (LTO) of the main battery pack 130a (capacity 20 to 35 kilowatt hour) with the low cost LFP or NCM power type cells of the secondary battery pack 130b (capacity 40 to 90 kilowatt hour), the performance-price ratio of the whole vehicle system can be optimized according to the specific application scene of the ACE heavy-truck 010. The LTO main battery pack 130a is cold-resistant after the vehicle is cold-started and can immediately participate in the high-rate charging and discharging work when the vehicle is stopped outdoor for more than 10 hours in the cold winter (lower than minus 10 degrees C); At this time, the secondary battery pack 130b using the LFP or ternary lithium battery core is controlled by the chopper 132b, which can temporarily not participate in working or only work with low multiplying power, after more than ten minutes of driving, gradually heating the temperature of the inner battery core of the secondary battery pack 130b to more than 10 °C, the secondary battery pack 130b starts high-rate charging and discharging; it is easy to use the hot water of the ACE heavy-truck engine radiator to gradually heat the battery pack to 10 degrees C in ten minutes, which has no negative effect on the fuel consumption or discharge of the whole vehicle; The disadvantage of the heating method of the battery pack is that the heating time is long (ten minutes grade), and the battery pack of the ACE heavy-truck cannot be charged with high multiplying power normally in a short time. Battery pack 130 is one of the most expensive sub-systems in the ACE heavy-truck, mixing two or more battery packs of different electrochemical cells, is beneficial to improving battery pack combination performance, reducing battery pack total cost, and is important for optimizing ACE heavy-truck combination performance-price ratio. chopper 132a or 132b, through pulse width modulation (PWM) technology and software defined and remote iteration upgrade (OTA), can according to the charging and discharging characteristics curve of the electric core at different temperatures and the protective limiting condition of various electric cores, The charge/discharge current value of the battery pack 130a or 130b is dynamically and continuously adjusted, and the performance, the electrical throughput and the equivalent cycle life of the battery pack are optimized under the premise of satisfying the power performance of the ACE heavy-truck.

The LTO single cell nominal voltage (SoC = 50 % open circuit voltage) was only 2.2 V, lower than the LFP single cell nominal voltage 3.3 V and the NCM single cell nominal voltage 3.7 V. The disclosure Claims a battery pack with the same capacity (kilowatt hour), wherein the high voltage battery pack solution is as follows: the electric cores are connected in series and are connected in parallel; the rated voltage is about 650 V) compared with the low-voltage battery pack solution (the electric core is connected in parallel and connected in series; the rated voltage is about 400V), the design and control of the former battery management system (BMS) is more complex, the material and manufacturing cost of the whole battery pack is higher, and the system redundancy and robustness are bad; at the same time, the latter is easier to obtain the battery pack with higher performance-price ratio by the main current new energy passenger car voltage platform (such as 300V-450V range), and it has multiple channels for quality guarantee. The ACE heavy-truck can preferably use at least two battery packs composed of different electrochemical cells in parallel, which is beneficial for improving the performance-price ratio of the ACE heavy-truck system. Currently, the rated voltage range of the lithium ion power battery pack adopted by the mainstream new energy passenger vehicles in the world is 300V to 500V (400V platform battery pack for short), and there is a mature supply chain, China, Japan and South Korea, more than ten leading manufacturers of China, Japan and the Republic of Korea, have annual production and sales of lithium ion power batteries, accounting for more than 85 % of the world market share. The global output of 400V platform batteries has rapidly climbed year by year, and the cost (US/kilowatt hour) has decreased obviously year by year; while the battery pack with rated voltage higher than 600V (800V platform battery pack for short) has an annual global output of more than one order of magnitude less than that of the former, the cost of the 800V platform battery pack is high, the qualified supplier is few, the annual price reduction range is low, but the demand of the electric passenger car fast-charging market is continuously increased, The 800V platform is also the future direction of the electric passenger car. The total peak charge/discharge power of the ePSD 123 of the present disclosure may be up to 500 kW, and the DC bus rated voltage is preferably in the range of 620 V to 750 V (i.e., 800 V platform). The battery pack (130) used in the present disclosure preferably has a rated voltage value between 350V and 450V, so as to coincide with the rated voltage range of the mainstream new energy passenger vehicle battery pack with a large total amount of annual production and sales as much as possible, it is convenient for fully using the mature 400V platform power battery supply chain of the current new energy passenger car, reducing the cost and keeping the supply; Of course, the rated voltage of the battery pack 130 can also be selected between 450V and 650V.

These battery packs 130 can be matched with the rated voltage of the DC bus of the ePSD 123 through the hundred-kilowatt-level bidirectional buck-boost DC-DC converter (Boost-Buck, also called chopper) 132 inside the ePSD 123 port III, respectively, as shown in Fig. -2. In addition to the direct current transformation function, the other beneficial function of the hundred-kilowatt-level chopper (132) is through pulse width modulation control (PWM), in the charging and discharging peak current range of the battery pack 130, according to the charging and discharging characteristics curves of various electric cores at different temperatures or different stages (SOH) of life cycle and various limiting conditions of the battery pack manufacturer to ensure the cycle life and safety of the electric core to the working condition, through the software defined and air upgrading (OTA) of the microprocessor contained in the chopper (132), automatically dynamically regulating the amplitude and direction of the charging and discharging direct current of the battery pack 130, so as to ensure that the performance and cycle life of the battery pack are optimized in the full life period; at the same time, under the premise of not increasing the hardware cost, the chopper 132 is used to perform intelligent pulse preheating (iPH) on the battery pack 130 in the cold winter, the technical measures with high performance-to-cost ratio and high energy efficiency are used to solve the lithium ion battery (especially other main electric core except LTO electric core, For example, LPF or NCM) is afraid of cold, but it is difficult to uniformly heat with high efficiency.

Preferably, the primary battery pack 130a may be combined with a lithium titanate cell (LTO) having a total capacity in the range of 20 kWh to 35 kWh. If a hundred-kilowatt level chopper 132a is configured, the nominal voltage of the battery pack 130a is preferably in the range of 300 V to 450 V (i.e., 400 V voltage platform); If the chopper 132a is not configured, the nominal voltage of the battery pack 130a is equal to the nominal voltage of the bus point X (i.e., the 800 V voltage stage). In the automobile specification power battery of various modern and commercialized electrochemical formulations in the world, only one set of lithium titanate core (LTO) can satisfy all the rigorous requirements of the ACE heavy-truck battery pack, In particular, the requirements of overlong cycle life (12000 times) and low temperature (15 degrees below zero) high magnification partial charge and discharge operation are required. The LTO cell has a lower specific energy (less than 90 Wh/KG), resulting in a higher volume or weight of the LTO cell package, which is not a problem for ACE heavy-truck applications; However, another drawback of the LTO battery pack is that the cost is high, and there are few global optional qualified suppliers, the cost per kilowatt-hour (kWh or kilowatt-hour) of the LTO battery pack is the cost per kilowatt-hour (kWh or kilowatt-hour) of other mainstream automotive grade lithium ion battery cells (such as LFP, NCM, LFP, NCM, LFP, LFP, LFP, LFP, LFP, LFP, LFP, LFP, LFP, LFP, LFP, LFP, LFP, LFP, NCA) cost is more than four times, which causes the cost of the LTO battery pack to be high and difficult to reduce for a long time, if all the LTO battery cores are used, the total cost of the battery pack is too high to limit the wide application of the ACE heavy-truck in the global range; The high cost problem of the whole life cycle of the LTO battery pack must be effectively solved. The main battery pack 130a can also be selected from the following power type cells suitable for high-rate partial charge/discharge (HRPSoC) application in severe working environment: a nickel-hydrogen battery (NiMH), lithium iron phosphate (LFP), a ternary lithium ion battery (NCM/NCA), or a carbon-lead battery (PbC); when the capacity of the battery pack is equivalent, the four kinds of electric cores need at least two sets of electric cores to meet the requirement of over-long equivalent cycle life; At the same time, the cost of the four electric cores is obviously lower than the cost of the lithium titanate electric core, although it needs two sets of systems to meet the requirement of the super-long cycle life, the cost of the four electric cores is more economical than one set of LTO electric core from the angle of battery pack equipment investment (Capex); It may also be contemplated that a battery pack consisting of the above two different electrochemical component cells may be parallel-hybrid (e.g., LTO and LFP collocation), as shown in Fig. 2.

Preferably, the secondary battery pack 130b may be a mainstream power type lithium ion core (continuous charge/discharge ratio 2C-4C), such as lithium iron phosphate (LFP) or ternary lithium (NCM or NCA) core, having a capacity in the range of 40 kWh to 95 kWh. Of course, the secondary battery pack 130b with a capacity greater than 95 kWh can also be selected, which is beneficial for enhancing the power performance of the whole vehicle under various operating conditions, and reducing the upper limit value of the equivalent cycle life of the battery pack and the peak value of the charging and discharging multiplying power; However, the weight, volume, and cost of the battery pack with large capacity will be obviously increased, and the overall performance-price ratio is not optimal, and the overall consideration is required. If the chopper 132b is configured, the battery pack 130b is preferably a 400V voltage platform in order to take full advantage of the sharing opportunities of the modern new energy vehicle battery pack industry chain; If the chopper 132b is not configured, the battery pack 130b should be a 800V voltage platform.

In the present disclosure, the function of the battery pack 130 is similar to that of a large power engine with a small fuel tank; In comparison with the diesel engine 101, the battery pack is characterized by super-strong acceleration force, extremely fast transient response speed, but seriously insufficient acceleration force. The battery pack 130 can continuously provide the 120 kW intermediate intensity electric drive power of the traction motor 140 for a longer period of time (in 10 minutes), and can continuously provide the high intensity electric drive power of the traction motor 140 exceeding 300 kW for a shorter period of time (in minutes). Assuming that the total effective capacity of the ACE heavy-truck battery pack 130 is 30 kWh, the total rated power of the double motors MG1 and MG2 is 300 kW, when the pulse-control engine 101 is in passive operation mode operation (PAM), The battery pack 130 continuously discharges from full flow (SoC = URL) at 10C to empty (SoC = LRL) in the charge depleting mode (CD), and the dual motors (110 and 140) can be individually powered at a strength of 300 kW for 6 minutes. the full load (total weight of 40 tons) and parallel-hybrid ACE heavy-truck 010 on the slow non-congestion of the expressway at speed of 90 kilometer/hour pure electric propulsion nearly 10 kilometer; In other words, based on the whole vehicle supervision and control strategy, ACE heavy-truck 010 is a high-inertia electromechanical system with five-minute or ten-kilometer buffer time.

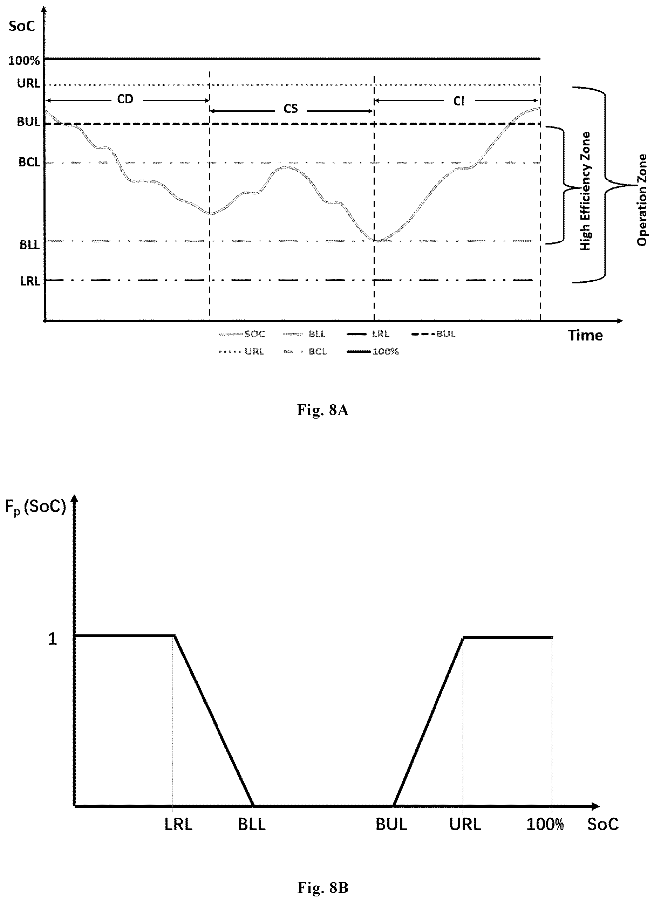

The power battery pack needs to ensure that the performance meets the standard and realize the ultra-long cycle life, according to the working condition data of the battery pack 130 (SoC, SoH, temperature, Voltage and so on), under the working condition of high-rate part charging and discharging (HRPSoC), dynamically adjusting the current amplitude and direction of the high-rate charging and discharging, strictly controlling the SoC (SoC) time-varying function distribution of all battery cores of the battery pack. The charge and disSoC SoC upper red line (URL) of the modern vehicle power type electric core is generally 85 % to 95 %, and the lower red line (LRL) is generally 10 % to 20 %; the best upper limit (BUL) of the high-efficiency area is 70 % to 85 %, the best lower limit (BLL) is 20 % to 35 %; It is obvious that the operation area of the battery pack SoC further comprises upper and lower two sections of non-high-efficiency areas besides the middle high-efficiency area. when the battery pack works in the SoC high-efficiency area (BLL < SoC < BUL), the performance, safety, and the cycle life is optimal, and when the battery pack runs in the red line area high-rate part charging and discharging (HRPSoC) with SoC higher than URL or lower than LRL, besides the battery pack performance is obviously reduced, it may also cause permanent damage to the electric core, reducing the cycle life, generating potential safety hazard, It must be avoided (see Fig. 8A). The disclosure performs the core of predictive state of charge control (PSC-Predicative SoC Control) on the battery pack 130, that is, in order to ensure that the ACE heavy-truck 010 can simultaneously optimize the power performance, fuel consumption, discharging the three main metrics, through the series-hybrid iSS or parallel-hybrid iPS control and intelligent cruise control (iCC) technology, dynamically and automatically adjusting the operation mode (CS, CD, CI (optional one from three), the battery pack 130 is made to work stably in the high-efficiency area to the maximum extent, and the total charge turnover rate and the regenerative charge turnover rate are maximized.

The ACE heavy-truck 010 is in the series-hybrid mode (the clutch 111 is cut off) or the parallel-hybrid mode (the clutch 111 is closed), the VCU201 according to the supervisory control strategy and algorithm, the vehicle configuration parameter, the operation condition of the whole vehicle and each related sub-system, and electronic horizon road three-dimensional information (especially longitudinal grade function) and road-load power prediction, the transient output power of the DPC engine 101 and the battery pack 130 is performed with serial-to-mix iSS or parallel-to-mix iPS control, it not only can satisfy the vehicle dynamic equation (1-1) and the series-hybrid equation (2-4) or the parallel-hybrid equation (3-3) in real time, but also can predictively adjust the average power function distribution of the pulse-control engine through the duty-cycle dynamic control, By controlling the dynamic distribution of the hundred-kilowatt-level electric power between the three ports of the ePSD 123 and the dynamic distribution of the hundred-kilowatt-level mechanical power between the three ports of the mPSD 124, the ACE heavy-truck battery pack (130) is realized in the following three charge modes (CS, CD, CI) a stable operation or dynamic switching between modes: 1) Under the charge sustaining mode (CS), the transient SoC time-varying function (transient SoC for short) and the average SoC function (average SoC for short) of the battery pack; With reference to equation (MTA)), it is necessary to continuously fluctuate up and down between the best line (BLL) and the best line (BUL) (i.e., in the high-efficiency region) all the time; At this time, the average power of the engine 101 is approximately equal to the average power of the vehicle on-way; The vehicle drive (series or parallel) takes the pulse-control engine 101 as the main, and the battery pack 130a or 130b as the auxiliary, satisfying the vehicle dynamic equation (1-1) and series-hybrid equation (2-4) or parallel-hybrid equation (3-3) in real time; 2) under the charge depleting mode (CD), in the high-efficiency region, the transient SoC of the battery pack fluctuates up and down along with the time, and the average SoC is continuously reduced along with the time; At this time, the average power of the pulse-control engine is obviously less than the average power of the road-load, the vehicle driving is assisted by the engine 101, and the power is mainly supplied to the motor 110 or 140 by the battery pack 130, and the equation (1-1) and (2-4) or (3-3) are satisfied in real time; 3) in the charge increasing mode (CI), in the high-efficiency area, the transient SoC of the battery pack fluctuates up and down to increase the average SoC continuously; At this time, the average power of the engine is obviously greater than the road-load average power, the vehicle driving (series or parallel) is mainly the engine 101, the mechanical power of the engine is directly or indirectly used for driving the vehicle in the parallel mode, The remaining mechanical power continuously charges the battery pack 130 through the motor 110 or 140 to ensure that the average value of the SoC of the battery pack rises continuously over time, satisfying equations (1-1) and (2-4) or (3-3) in real time.

The electric energy stored in the battery pack 130 can be divided into two types, one is "engine charge" generated by the engine 101 driving the generator 110 and is directly stored in the battery pack, which is "high cost electric energy", is also called "engine electric energy"; The other one is the "regenerative charge" (Regen Charge) generated by the vehicle mechanical energy recovery of the regenerative braking through the motor 110 or 140, which is "near-zero cost electric energy", also called "regenerative electric energy". To reduce the real-world fuel consumption (FC) of the ACE heavy-truck for the whole transportation event to the utmost extent possible, the disclosure is to reduce the real-world fuel-consumption (FC) of the ACE heavy-truck in the whole transportation event; The total electric energy (kWh is the sum of the electric energy of the engine and the regenerated electric energy) or the total charge turnover rate (defined as the ratio of the accumulated throughput total electric energy to the equivalent capacity of the battery pack) is maximized; secondly, it should improve the ratio of the regenerated electric energy in the total electric energy as much as possible (that is, the regenerated charge turnover rate is maximized), and grasp each opportunity of recycling the electric energy through the regenerated brake; at the same time, the ratio of the electric energy of the engine should be reduced as much as possible (that is, the charge turnover rate of the engine is minimized); In order to maximally avoid the situation that the newly added regenerative electric energy cannot be received due to the battery pack overflow (SoC = URL), the voltage control switch (VCS) 133 is triggered to be turned on, and the brake resistor 131 completely wastes the regenerative electric energy. according to the prior 3D road data and vehicle configuration parameter and dynamic working condition data stored in the vehicle-mounted map unit 240, ACE heavy-truck can according to kinetic equation (1-1) real time (sub-second level time delay) with kilowatt level granularity accurately measuring the vehicle electronic horizon in (hour level or hundred kilometer level) road-load transient power function and average power function of space-time distribution; Unless a vehicle encounters a downhill slope (e.g., a continuous downhill slope exceeding 10 miles), regenerative braking charge (i.e.,

near-zero price electric energy) is fully charged with battery pack 130 at one time, which is predictable but not common, the ACE heavy-truck will always be able to prepare for the rainy day. by dynamically adjusting the difference between the road-load average power of the vehicle 010 and the average power of the engine 101, and the mode of time production supply (JIT), the electric energy of the battery pack 130 is charged and discharged at the same time, so that the battery pack can work stably in the high efficiency area for a long time, It avoids the two bad situations that the battery pack is overfull (SoC = URL) and the regenerated electric energy cannot be recycled or the battery pack is overempty (SoC = LRL) and the power cannot be supplied to the motor to the maximum extent. The regenerative braking charge turnover rate and total charge turnover rate are maximized at the same time. Obviously, for an ACE heavy-truck operating in high mountain areas for a long period of time, a large capacity power battery pack (e.g., an effective capacity of 100 kWh or more) should be configured; the ACE heavy-truck running in the national range runs in the plain or hilly area in most time or mileage, and is configured with the power battery pack with the effective capacity of 50kWh, so the performance-price ratio is higher. The core of the ACE heavy-truck supervisory control strategy and algorithm of the disclosure is to fully utilize the prior road three-dimensional data in the electronic horizon and the vertical grade power positive and negative fluctuation of the hundred-kilowatt level caused by the vertical slope change of the road along the way under the premise condition of ensuring the vehicle propulsion performance property and braking performance industry leading, by changing the duty-cycle of the DPC engine to dynamically adjust the difference between the vehicle road-load average power function and the engine average power function, making the battery pack 130 to be in charge sustaining (CS), charge depleting (CD), and one of the three working modes of charge increase (CI) work stably or dynamically switches between modes, ensuring that the battery pack 130 work stablys in the high-efficiency area for a long time, so as to maximize the turnover rate of the regenerated electric charge of the battery pack or the total charge turnover rate, The disclosure realizes the predictive state of charge control function (PSC-Predicative SoC Control) of the battery pack so as to reach the beneficial effect of optimizing the energy-saving and emission-reduction of the vehicle at the same time.

The ACE heavy-truck 010 is in the series-hybrid mode (clutch 111 is open), the battery pack 130 supplies driving power to the ACE heavy-truck 010 through the traction motor 140 when discharging, and the energy is recycled through the traction motor 140 when charging; In the parallel-hybrid mode (clutch 111 is closed), in addition to the direct participation of the engine 101 in the vehicle drive or non-friction mechanical braking of the engine, the generator 110 may also be superimposed on the torque or power of the traction motor 140, equivalent to a motor with a larger aggregate peak torque or power. The disclosure takes part in the vehicle driving or regenerative braking to recover energy, which can further improve the regenerative braking charge throughput and improve the fuel saving effect. If the ACE heavy-truck is in a long slope in the parallel-hybrid mode and the battery pack 130 is substantially depleted before landing (SoC = URL), the vehicle propulsion performances is completely dependent on the peak power of the engine 101; If the peak power of the engine 101 is not large enough, the vehicle will have to change to low gear and slow down to continue climbing, so as to temporarily reduce the power and freight timeliness of the vehicle; The generator 110 and/or the traction motor 140 can only have the opportunity to recharge the battery pack 130 by regenerative braking or engine drive power generation until a flat road or downhill occurs in front of the vehicle, so as to recover the vehicle power. Obviously, the larger the capacity of the battery pack 130 is, the lower the probability of the basic exhaustion of the charge or the occurrence of the overflow situation is; The ACE heavy-truck on the normal mountain road should be adapted to a large battery pack with a capacity of more than 100 kWh.

In the next two decades, the power electronic (PE) power module based on silicon IGBT or silicon carbide (SiC) MOSFET has an obviously higher rate of improvement than that of the motor or battery pack. Continuing with reference to Fig. 2, when designing five hundred-kilowatt level PE power modules contained in the electric domain power divider ePSD123 (for example, port I is internally connected with standard MCU1 121, port II is internally connected with standard MCU2 122, port III is internally connected with voltage control switch 133, The main chopper 132a and the matching sub-chopper 132b) are configured according to the redundancy design principle in terms of the function and performance of the power electronic hardware (especially the rated power and the peak power), so as to reserve the over-design; The disclosure can continuously improve the existing performance and function of each sub-system or add new function through software remote upgrading iteration (OTA) in the ACE heavy-truck life cycle. The peak power Pigx of the MCU1 121 is higher than the peak power $P_{gx}$ of the generator 110 by more than 15 %, and the peak power $P_{imx}$ of the MCU2 122 is higher than the peak power $P_{pmx}$ of the main traction motor 140 by more than 15 %; The peak power of the main chopper 132a and the sub-chopper 132b should be higher than the peak power of the main battery pack 130a or the sub-battery pack 130b by more than 5 %, respectively, and the total peak power of the chopper 132 should be higher than the peak power $P_{pmx}$ of the main traction motor 140 by more than 20 %; the rated power of the voltage control switch 133 should be equivalent to the rated power of the main traction motor 140; If the design does not satisfy the above power inequality, the ePSD 123 can also operate normally, except that the design performance-price ratio or future expansibility is not optimal.

The average improving speed of the power semiconductor module such as IGBT or SiC performance-price ratio is obviously higher than the battery pack, the motor and the brake resistor. It can make full use of the continuous innovation and upgrade of the global power semiconductor industry, and adopts multiple power electronic circuit topological structures to realize the electric power splitting device ePSD 123 with high performance-to-cost ratio; The ePSD 123 with the hardware design remainder is a software-defined electrical domain power splitting device from the outset, which can continuously improve and evolve existing functions or add new functions by software remote upgrade iteration (OTA). Adopting the above modular design strategy, three ports of the ePSD 123 are connected with an external motor, a battery pack, or the electromechanical load such as brake resistor can use the mechanical and electric interface of the industry standard, which is convenient and flexible to match with various motors and battery packages provided by multiple high-quality automobile suppliers for satisfying the performance requirement and the target cost, continuously improving and improving the performance-price ratio of the ACE heavy-truck, and keeping the quality for a long time.

The inverter (invertor; the bidirectional DC-AC converter) is the core part of the modern motor controller (MCU); In the disclosure, the motor controller (MCU) should be understood as a complete automotive grade motor controller using the inverter as the core module and comprising a microprocessor, there are a plurality of mature circuit topology structures that can realize the MCU, the motor controller and the inverter can be broadly understood as synonyms, It will not be disambiguated to those skilled in the art. the motor controller (MCU1 121, MCU2 122) can dynamically and accurately control the rotating speed or torque of the three-phase AC motor (MG1 110, MG2 140) in the way of vector control, The amplitude and direction of the hundred-kilowatt power flow can be accurately adjusted in real time (ten millisecond time delay, 2 % precision) so as to realize the bidirectional conversion between the electric energy and the mechanical energy. the chopper (132a, 132b) is a bidirectional buck-boost DC-DC converter (Boost-Buck), the high voltage side bidirectional electrically connected with the direct current bus of the ePSD 123, preferably the rated voltage range of the direct current bus is 620V to 750V; the low-voltage side bidirectional electric connection battery pack 130, preferably the rated voltage range of the battery pack is 320V to 450V, overlapped with the 400V voltage platform of the main current new energy passenger car, so as to share; Of course, the rated voltage range can also be preferably selected: 450V TO 650V. multiple mature circuit topology structures can realize the chopper. The chopper 132 not only can flexibly match various battery packs 130 of different rated voltages (320V-700V) through software defined, but also can ensure the performance, safety, and the cycle life meets the standard, for the preferred charge and discharge curve proposed by the electric core under different electric core internal temperature and SoC, through software defined and the control program and parameter of the over-the-air downloading iteration (OTA) chopper, automatically customizing and dynamically updating the charge and discharge control scheme for each battery pack, The magnitude of the charge/discharge current is dynamically controlled, and the short plate of the battery pack 130 in terms of high and low temperature operating performance, reliability, cycle life and so on is dynamically compensated to the maximum extent.

The vehicle control unit 201 (VCU) of the ACE heavy-truck 010 can direct the ePSD 123 to continuously adjust three interrelated hundred-kilowatt level electric power time-varying functions in real time according to the vehicle supervisory control strategy and algorithm (including fuel-saving machine learning algorithm), It comprises independent variable generator power $P_g$ (t), independent variable traction motor power Pm (t), and non-independent variable battery pack charging and discharging power Pb (t), in real time satisfies the electric power balance equation at the ePSD direct current bus bus junction point X:

$$P_m(t) + P_g(t) - P_b(t) = 0 . \qquad (6\text{-}1)$$

The electric power balance equation (6-1) is equivalent to the previous series-hybrid equation (2-2) and the parallel-hybrid equation (3-2).

Preferably, the traction motor (MG2) 140 is a large permanent magnet synchronous motor with low rotating speed and high torque, the rated power range is 150 kW to 250 kW, the peak power range is 275 kW to 450 kW, and the peak torque range is 1500 NM to 2500 NM; The traction motor 140 may also be an alternating current induction motor or a reluctance motor meeting the above power and torque requirements. The peak power of the inverter 122 should be higher than the peak power of the traction motor by more than 15 %, leaving a balance. The annual sales of the fuel-electricity hybrid passenger vehicle is about two orders of magnitude higher than that of the fuel-electricity hybrid commercial vehicle, so it can choose to share some core components with the passenger vehicle as much as possible, which can effectively reduce the cost of the hybrid commercial vehicle and guarantee the batch supply. The rated power of a single motor and inverter for electric (including fuel-electricity hybrid) passenger vehicles is typically less than 150 kW. The traction motor 140 may also be a medium-high rotating speed permanent magnet synchronous motor for a large new energy passenger vehicle with a rated power of 160 kW to 230 kW and a maximum torque of 350 NM to 500 NM; At this time, the mechanical torque coupler (mTC2) 104 adopts a parallel shaft structure, and the B end of the clutch 111, the mechanical shaft of the traction motor 140, and the input shaft of the transmission case 150a are mechanically connected in a bidirectional manner through a heavy gear speed reducer with a gear speed ratio ranging from 4 to 8.

For the ACE heavy-truck system block diagram of Fig. 1A, the generator (MG1) 110 is mechanically coupled bidirectionally with the flywheel end of the engine 101 (i.e., the so-called hybrid P1 position) through a mechanical torque coupler (mTC1) 103, At the same time, it is also in bidirectional mechanical connection with the A end (driven end) of the clutch 111. The structure of mTC1 103 is divided into two types, I type is single shaft coaxial structure, three (engine, generator, clutch) are connected in series on the same mechanical rotating transmission shaft; At this time, the rotating speed of the generator 110 is completely the same as the rotating speed of the engine 101 (the rotating speed ratio is 1.0); The low-speed high-torque permanent magnet synchronous motor with rated power of 100 kW to 175 kW and peak torque of 1200 NM to 2000 NM can be preferred; II is parallel shaft structure (multi-shaft), through heavy gear speed reducer to connect the three bidirectional mechanical, at this time, the flywheel of the engine 101 is coaxially connected with the A end of the clutch 111, and the two are connected with the generator 110 through heavy gear speed reducer, the rotating speed ratio is fixed. The rotating speed range of the high-efficiency region of the mainstream heavy-truck engine (displacement 11L to 16L) is generally as follows: 1000 r/min to 1700 r/min, torque loading rate is 40 % to 90 %; when the diesel engine works stably in the high-efficiency area, the specific fuel consumption (BSFC; g/kWh) is lower (to a minimum of 182 g/kWh), while the temperature of the exhaust gas is higher than 250 degrees C, which facilitates efficient operation of the after-treatment system and reduces actual emissions. the power of the engine and the motor is directly proportional to the product of the rotating speed and the torque; The maximum torque of the engine and the generator is positively associated with its volume, weight, and price height. mechanical torque coupler (mTC1) 103 can adopt II type parallel shaft structure, the rotating speed ratio of the generator 110 and the engine 101 can be improved to the range of 3. 0 to 8. 0 through the fixed speed ratio heavy gear speed reducer, Therefore, it is possible to select the permanent magnet synchronous motor with high rotating speed, low torque and high power in the mature supply chain system of the new energy passenger car, which greatly reduces the volume, weight and price of the generator 110, and realizes the quality guarantee and supply with high performance-to-cost ratio. The generator 110 may also select a medium-high speed (the highest rotating speed is less than 12000 r/min) vehicle permanent magnet synchronous motor with rated power of 100 kW to 175 kW and peak torque of less than 500 NM, which is mechanically connected with the engine 101 through a parallel shaft structure.

The traction motor MG2 140 is mechanically connected with the B end of the clutch 111 in a bidirectional manner through the mTC2 104, and is also mechanically connected with the input shaft of the transmission 150a in a bidirectional manner; The B end of the clutch 111 and the single input shaft of the transmission 150a are preferably coaxially and bidirectionally mechanically coupled (rotation ratio 1: 1). The structure of mTC2 is divided into two types, I type is single shaft coaxial structure, three (clutch, traction motor, transmission) are connected in series on the same mechanical transmission shaft, at this time, the rotating speed of the traction motor 140 is completely the same as the rotating speed of the input shaft of the transmission 150a (namely rotating speed ratio is 1: 1); Type II is a parallel shaft structure (multi-shaft), the three are mechanically connected by a heavy gear speed reducer, at this time, the rotating speed ratio of the traction motor 140 and the input shaft of the transmission 150a is fixed, preferably the speed ratio range is 3 to 8. When the clutch 111 is closed, the flywheel of the engine 101 and the input shaft of the transmission 150a are coaxially and bidirectionally mechanically coupled with each other, and the rotating speed ratio of the two is 1:1. At present, the peak torque upper limit of the 16-liter diesel engine with the maximum displacement of the traditional heavy-truck is 2900NM (meter), so the maximum input torque of the input shaft of the heavy-truck transmission case 150a for the current mass production is 3000NM; In the parallel-hybrid mode, the engine 101 and the dual-motor 110& 140 can be torque-superposed to cooperate with each other, and the combined torque at the input shaft of the transmission case 150a can be easily exceeded 4000NM in theory, and the combined torque needs to be limited in practical application; Preferably, the enhanced heavy-truck automatic mechanical transmission (AMT) 150a (single input shaft) with specially enhanced design, the input peak torque can be as high as 3600NM, the total gear number can be reduced to below 8 gears, Preferably, it comprises a direct drive with a speed ratio of 1.0 and an overdrive with a speed ratio of less than 1.0; It also can choose main stream mass production truck single input shaft AMT transmission, active limit total effective peak torque is less than 3000NM, sacrifice part vehicle propulsion performance potential, so as to ensure the reliability and long service life of the vehicle rotating system. The mechanical design of the single input shaft transmission 150a has redundancy (e.g. 20 %), the hybrid powertrain can dynamically and accurately control the aggregate torque value and the change rate (i.e. the time derivative of the torque function) of the transmission 150a input shaft, it can effectively avoid the input peak torque jitter to generate violent mechanical impact on the transmission and other rotating system components, The total effective peak torque at the input end of the ACE heavy-truck mainstream transmission 150a can be raised to 3200NM in the high-efficiency rotational speed region (1000-1700RPM) of the engine 101, which further improves the power performance and gives consideration to the reliability and long service life of the rotating system. the II type parallel shaft structure can improve the ratio of the rotating speed of the main traction motor 140 and the rotating speed of the input shaft of the transmission 150a to 3.0 to 8.0 through the fixed speed ratio heavy speed reducer, so that it is possible to match the large power permanent magnet synchronous motor in the current new energy passenger car system, the volume, weight and price of the traction motor 140 are greatly reduced; The main traction motor (MG2) 140 may preferably be a permanent magnet synchronous motor or an alternating current asynchronous motor having a rated power of 150 kW to 225 kW; Under the mTC2 I type structure, the traction motor 140 is a permanent magnet synchronous motor or an alternating current asynchronous motor with low rotating speed (the highest rotating speed is less than 3000 rpm) and large torque (the peak torque is more than 1200 NM); In the II-type structure, the traction motor 140 is a permanent magnet synchronous motor or an AC asynchronous motor having a middle-high rotating speed (the highest rotating speed is less than 10000 rpm) and a middle torque (the peak torque is less than 500 NM); Obviously, the latter is smaller in volume and quality and lower in price than the former.

In Fig. 1A, the single input shaft of the transmission 150a is mechanically coupled to the B end of the clutch 111 and the output shaft of the main traction motor 140, respectively, through the mTC2 104, and the only output shaft is mechanically coupled to the first drive axle 160. Preferably, an automatic mechanical transmission (AMT-10 ~ AMT-12) with a heavy 10-12 speed of at least 2500 bovine meters of current mature batch commercial maximum input torque is used, it also can choose heavy double clutch transmission (DCT) or automatic transmission (AT) with hydraulic torque converter; 5-gear or 6-gear new heavy automatic mechanical transmission (AMT-5 or AMT-6) which is specially reinforced and designed can be selected, and the maximum input torque can reach 3600 NM. Different from the power characteristic of the engine 101 with low rotating speed (less than 800 RPM) and small peak torque, the maximum torque can be output when the traction motor 140 has zero rotating speed, and the total torque of the iMMH powertrain during parallel hybrid is obviously greater than the peak torque of the top 16-liter diesel engine and the maximum torque that the input shaft of the main transmission 150a can bear, which can greatly reduce the frequency of the transmission shifting downwards due to the insufficient driving torque of the input end of the transmission, Therefore, the ACE heavy-truck automatic transmission 150a only needs 5 to 6 forward gears, which is enough, and does not need more gears; It is obvious that AMT with a gear exceeding 12 can also be used, but the cost of the transmission of this option is increased but the performance of the whole vehicle is not changed, which is a sub-preferred option. It should be emphasized that in the present disclosure, the ACE heavy-truck 010 includes the transmission case 150a, and the driving rotation system is not the quasi-unidirectional mechanical power transmission (except the engine braking, the driving power unidirectional transmission) of the traditional internal combustion engine heavy-truck, but the frequent bidirectional mechanical power transmission, The maximum reverse torque during regenerative braking is substantially the same as the forward peak driving torque, so the main bearings and gears in the heavy-truck transmission 150a need special strengthening design and manufacture to ensure stable performance and service life.

The engine 101 of the ACE heavy-truck can select large heavy-truck diesel engine or natural gas engine with displacement of 13L to 16L, peak power of 320kW to 450kW and peak torque of 2000NM to 2800NM; it also can select displacement 9L to 13L, peak power 250kW to 320kW, peak torque 1500NM to 2100NM of the heavy-truck diesel engine or natural gas engine; The hybrid ACE heavy-truck preferably adopts the 11L-13L heavy-truck diesel engine of the current world mainstream, and the comprehensive performance-price ratio is the best. For example, the ACE truck is configured with a 11L diesel engine 101 (basic or advanced) with the largest current market usage, peak torque 2200NM @1200rpm, peak power 300kW @1800rpm; a permanent magnet synchronous generator (MG1) 110 with a rated power of 175 kW and a peak torque of 1400 NM; a permanent magnet synchronous traction motor (MG2) 140 with rated power of 200 kW and peak torque of 1600 NM; an overlong lifetime power battery pack 130 having a continuous charge/discharge power (i.e., rated power) greater than 250 kW and a total initial (BOL) capacity of 50 kWh; In the parallel-hybrid mode and in the high-efficiency area of the engine (such as the rotating speed of 1000-1600 RPM), the engine and the duo-motor can cooperatively generate force, the total continuous torque of the input shaft of the vehicle transmission 150a can easily exceed 4000NM, the vehicle power (high speed climbing, Accelerated overtaking and so on) is obviously better than the top configuration 16L diesel engine of the traditional high end heavy-truck, in order to prevent the transmission and rotating system due to the torque over-load caused by life, need to the iMMH powertrain under the parallel structure dynamic limit total torque; the ACE heavy-truck load, the actual comprehensive fuel consumption (L/100kM) of the same path freight event is reduced by more than 25 % than the diesel heavy-truck (basically the same vehicle year and power performance), and the best fuel consumption that the ACE heavy-truck can realize is completely determined by the fuel-saving algorithm, the RDE fuel consumption height is consistent (low statistical spread), It has nothing to do with the driving level of the driver, and it has nothing to do with the technical level and performance index of the engine 101.

The Supervisory Control Strategy (SCS) of any hybrid vehicle is also referred to as the "Energy Management Strategy" or the "Power Management Strategy", which is one of its core technologies; Fig. 3 depicts a hierarchical architecture of a hybrid vehicle supervisory control strategy; The purpose of the supervisory control strategy in the disclosure is to realize the minimum RDE fuel consumption under the premise of ensuring the vehicle propulsion performance property and braking performance industry leading and the RDE pollutant emission meeting the emission standard consistantly. As shown in Fig. 3, the highest layer C1 of the supervisory control strategy focuses on the vehicle analog-controlled; The input data can be divided into three types, driver's requirement I-1 (accelerator or brake pedal signal and so on), vehicle configuration parameter and driving data I-2 (vehicle total weight, wind resistance coefficient, wheel resistance coefficient, iMMH powertrain configuration parameter, transmission gear, vehicle speed, vehicle acceleration, vehicle locating and so on), three-dimensional map I-3 (electronic horizon road 3D data and so on, except road latitude and longitude two-dimensional information, especially comprises road longitudinal grade distribution information); The output is an instruction to select (serial or parallel) or dynamic mode switching for a steady state mode of vehicle operation.

According to the two dimensions of the connection mode of the vehicle electromechanical power source and the control strategy of the iMMH powertrain, the supervisory control strategy of the ACE heavy-truck can have the following several different operation modes: Mode I is the direct drive mode of engine 101 ("direct drive" for short) At this time, the engine 101 is in bidirectional mechanical connection with the input end of the transmission 150a (a or b), which is the only power source of the vehicle, while the double motors 110 and 140 are passively idle (neither electrically driven nor regenerative braking); Obviously, in the direct-drive mode, the engine 101 can only be controlled by an analog electronic control, and cannot be controlled by a digital pulse; the mode II is a parallel-hybrid mode, at this time, the engine 101, the generator 110, the three power sources of the traction motor 140 are mechanically connected with the input shaft of the transmission 150, the rotating speeds of the three (101, 110, 140) are all determined by the vehicle speed and the transmission gear (is dependent variable, cannot be independently adjusted), but the torque of the three are still independently and dynamically adjustable, At this time, the vehicle can still completely rely on the battery pack 130 to independently supply power (the duty-cycle of the pulse-controlled engine is zero, and the vehicle can completely operate in low-state) to realize the pure electric propulsion operation of zero exhaust emission; the mode II can be further subdivided into an analog electric control and parallel-hybrid mode II-A (abbreviated as analog-controlled and parallel-hybrid mode or AEC and parallel-hybrid mode) and a digital pulse-control and parallel-hybrid mode II-B (abbreviated as pulse-control and parallel-hybrid mode or DPC and parallel-hybrid mode); the mode III is a series-hybrid mode, at this time, the engine 101 and the generator 110 form a generator set, the gen-setis not mechanically connected with the transmission or the driving bridge, the rotating speed and the torque of the gen-setare independently and dynamically adjustable, The vehicle is purely electrically driven by the traction motor 140 through the transmission and the drive axle; the mode III can be further subdivided into analog electric control series-hybrid mode III-A (for short, analog control series-hybrid mode or AEC series-hybrid mode) and digital pulse-control parallel-hybrid mode II-B (for short, pulse-control parallel-hybrid mode or DPC series-hybrid mode); It should be emphasized that the novel pulse-control parallel hybrid II-B mode and pulse-control series hybrid III-B of the present disclosure have intrinsic differences and numerous advantages (as described above) with respect to the operating mode (II-A or III-A) of the hybrid vehicle of the prior art; In the long-haul scene, the pulse-control and parallel-hybrid mode or the pulse-control and parallel-hybrid mode is preferred, and the analog-controlled and direct drive mode is used as the redundancy alternative.

The output of the C1 layer includes a transient mode instruction (TMI) and a steady-state mode instruction (SMI); if the ACE heavy-truck is operated in the direct-drive mode, the multi-layer supervisory control strategy of the vehicle is simplified into the single-layer analog electronic control structure, which is the same as the analog electronic control of the traditional internal combustion engine heavy-truck. Obviously, the ACE heavy-truck realizes the redundancy of the power supply and the power source in the hardware and the software, which lays a solid foundation for realizing the function safety of the high-level vehicle, and it is the ideal platform vehicle of the future mass commercial highway (ODD) long-haul automatic driving (SAE L3 to L5); The ACE heavy-truck is a traditional internal combustion engine heavy-truck in the direct drive mode, which can effectively eliminate the worries of the fleet and the driver about the reliability and attendance rate of the hybrid heavy-truck in the emerging technology.

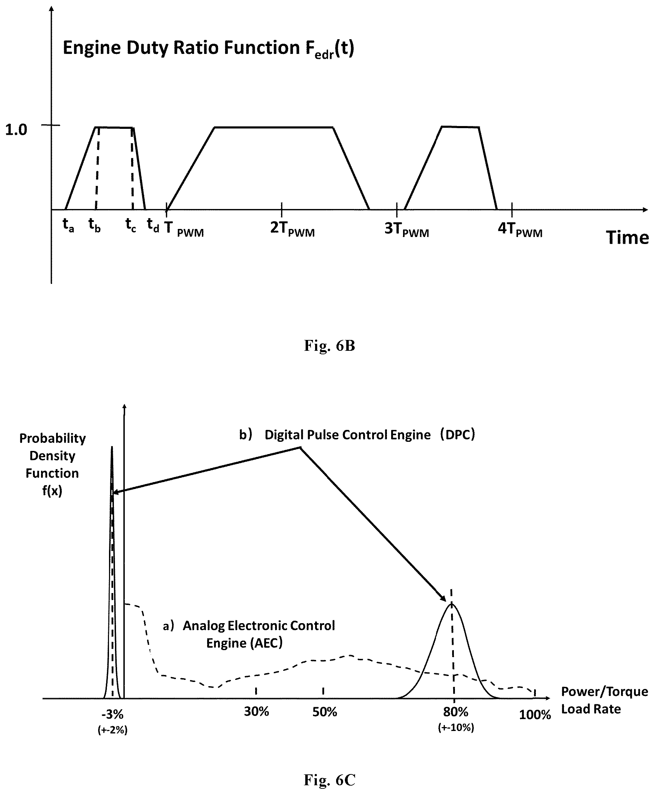

The C2 layer focusing battery pack 130 (a/b) average hybrid state control, the input of which includes a steady-state mode instruction (SMI) from the C1 layer and a constrained boundary condition SC (System Constraint; especially engine constraint EC), the output is engine requirement ER (Engine Request); The so-called steady state mode command (SMI) refers to the dynamic control of the transient torque of the engine when the vehicle is stably operating in a series or parallel mode; The constraint condition EC of the engine includes: The peak torque under each rotating speed of the AEC engine or the high-state torque value or low-state torque value which can be preset under each rotating speed of the DPC engine. One of the core invention points of the present disclosure is that the monitoring strategy deliberately avoids the technical problem of the complex version of the iMMH powertrain layer that directly controls the transient state of charge (SoC) time-varying function of the battery pack 130 (the absolute value of the function time derivative is large, which is easy to be interfered by various noises), directly controlling the average SoC function (equation (MTA)) of the battery pack (the absolute value of the function time derivative is small and the anti-noise ability is greatly improved); According to the kinetic equation (1-1) and the equation (MTA), the average power function distribution of the ACE heavy-truck road-load of the trunk stream is predicted by the second-level refreshing frequency and the kilowatt-level granularity, in combination with the series-hybrid equation (2-4) or the parallel-hybrid equation (3-3), through dynamically controlling the duty-cycle function of the DPC engine (see Fig. 6B) to actively control the battery pack 130 to work stably in the charge sustaining (CS), charge depleting (CD), The average SoC function distribution of the battery pack 130 is predictively controlled by one of the three modes of charge increase (CI) or simply switched mode, so as to ensure that the battery pack 130 works in the high efficiency region (see Fig. 8A) at most time (95 % +). It needs to be emphasized that the C2 layer of various battery pack average state of charge control method has no direct influence to the ACE heavy-truck external characteristics and transient power.

C3 layer focusing transient torque distribution strategy TD (Torque Distribution), its input comprises engine requirement ER from C2 layer, transient mode instruction (TMI; series hybrid or parallel hybrid stable operation or mode switching), the component constraint distribution strategy CCD (Constraint Component Distribution) in the system capability constraint SC, the output is the component requirement CR, That is, how to dynamically distribute the transient road-load torque of the ACE heavy-truck 010 between the engine 101 and the three power sources of the dual-motor 110&140; It should be emphasized that the torque distribution strategy of the C3 layer has a decisive effect on the transient dynamics of the vehicle, but has no direct effect (basic decoupling) with the average state-of-charge function of the active control battery pack 130; PDC supervisory control strategy of ACE heavy-truck (II-B or III-B mode) through C2 and C3 layered and novel DPC method, The disclosure greatly simplifies the complex multivariable nonlinear supervisory control problem of the traditional hybrid vehicle (AEC) into two quasi-linear control problems which are mutually decoupled and have different time scales; The average SoC function of the C2-layer battery pack is controlled at the minute level (slow control loop), and the transient torque distribution of the C3-layer vehicle is controlled at the sub-second level (fast control loop).

The bottommost C4 focusing component control CC (Component Control), the input of which comprises a constraint component torque output CCT (Constraint Component Torque) in the system capability constraint SC, the component from the C3 layer requires CR and so on; The ACE heavy-truck 010 controls the clutch 111 at the execution layer and dynamically distributes the transient road-load power of the vehicle to the three power sources of the engine 101 and the dual-motor 110 & 140 to meet the vehicle dynamic equation (1-1) in real time; The C4 layer output fed back to the C1 layer includes the state ECS (Engine Clutch Status) of the engine 101 and the clutch 111.

In the present disclosure, unless specifically indicated, "Supervision Control Policy/Algorithm" (also referred to as "Energy-saving and emission-reduction Policy/Algorithm") The disclosure mainly refers to a technical solution (side-weight system control method) containing said content, which is a set of multiple technical means for solving the technical problem of energy-saving and emission-reduction of ACE heavy-truck of long-haul and achieving the beneficial effects of optimized three dimensions of RDE power performance, fuel consumption and emission of the whole vehicle. It should be emphasized that the ACE heavy-truck supervisory control strategy of the present disclosure can be implemented on a computer through a plurality of disclosed hybrid vehicle supervisory control algorithms, the preferred algorithm comprises a plurality of algorithms based on rules (deterministic rules or fuzzy logic rules), a plurality of algorithms based on optimization methods, In particular, a variety of machine learning algorithms (supervised learning, non-supervised learning, intensified learning) are described in the following detailed Description.

The supervisory control strategy of the hybrid vehicle can be divided into the control strategy based on the rule (RB) or the control strategy based on the optimization (OB). wherein the RB control policy comprises a deterministic policy and a fuzzy logic (FL) control policy; the hybrid vehicle computes the control signal (namely the output variable) in real time on line based on the preset threshold value of the input variable and the explicit rule (deterministic or fuzzy logic); The threshold value is generally obtained based on expert experience or optimal control analysis and calculation of the duty-cycle of a specific hybrid vehicle. These rules define vehicle operating modes for ease of implementation and understanding. The rule (RB) - based control strategy is applied more on hybrid vehicles. Currently, there is also research to combine fuzzy logic (FL) and optimal control to improve the performance of the fuzzy logic (FL) without increasing computational load, such as neural-fuzzy logic (FL), fuzzy logic (FL), and genetic algorithm or evolutionary algorithm.

The rule-based (RB) supervisory control strategy (SCS) may be further subdivided into deterministic RB or fuzzy logic RB SCS.

The implementation method of the deterministic rule-based SCS algorithm of the pulse-control ACE truck is summarized as follows:

1) First, according to the driver's request I-1, the vehicle state I-2, 3D map I-3, the transient "demand torque" of the vehicle (i.e., the transient road-load torque or power) is determined and the longitudinal grade power function distribution in the electronic horizon is computed in real time (assuming the cruising speed function distribution on the expressway, using equation (1-4)); the transient demand torque may be provided cooperatively by the three power sources of the engine 101 and the dual-motor 110 & 140; the vehicle power characteristics curve of the ACE heavy-truck (that is, , the mapping between the accelerator pedal angle and the two input variables of the vehicle speed and the iMMH powertrain aggregate torque value) can be defined entirely by software (the pre-embedded system hardware with redundancy), independent of the specific configuration parameters of the engine 101 and the dual-motor 110 & 140;

2) The required torque is known, according to the predicative deterministic rule preset by the experts (such as battery pack SoC function and various threshold values; the threshold values of the SoC function will change adaptively according to the grade power function distribution in the electronic horizon and the box-dividing method of the determined rule), and the duty-cycle function value (high-state/low-state/switching state; that is, the transient torque value) of the DPC engine 101 is determined;), to make sure that the probability of the DPC engine operation in its high-efficiency region is always higher than 97 %, and the battery pack 130 operates stably in the high-efficiency region and increases the turnover rate of the electric charge;

3) Dynamically adjusting the torque of the double motor 110 or 140 to satisfy the vehicle dynamic equation (1-1), the series-hybrid equation (2-4) or the parallel-hybrid equation (3-3) in real-time.

The algorithm has the following advantages: the model is simple, the calculation amount is small, and it is convenient to deploy it on line; the disadvantages are as follows: the rules are formulated based on the experience of the engineers, and the real-time control result cannot be ensured to approach the global optimal solution.

The supervisory control strategy based on the fuzzy logic rule has stronger robustness and online real-time operation in the aspect of non-linearity and uncertainty of the processing system; Summary of the Implementation Method:

establishing a fuzzy logic controller; The input variable is: the vehicle speed, the horizontal line longitudinal grade function distribution, the vehicle demand torque, and the battery pack SoC, the output variable is: duty-cycle function value of pulse-control engine; Here, the fuzzy logic controller has different design methods, the input also has different parameters, some input variables are to be fuzzified, and the output variables are to be inverse fuzzified; the making of the fuzzy logic rule and the selection of the membership function are based on the expert knowledge of the hybrid vehicle field; the fuzzy logic is designed according to the distribution of the power function of the vertical slope of the horizon line so as to realize the predictive adaptive function; The algorithm has the following advantages: robustness and real-time performance; The disadvantages are as follows: The fuzzy logic rules and membership functions are complex, and based on expert experience, the real-time control result cannot be ensured to approach global optimization. It should be emphasized that the above embodiments all belong to the rule-based pulse-control ACE heavy-truck intelligent predictive supervisory control (iPSC) strategy, the disclosure point is that the road priori knowledge distributed by the horizon longitudinal grade function is fully used to dynamically predict the cruising speed of the vehicle, then according to the dynamic equation (1-1) continuously measuring and calculating the horizontal line load power function distribution or equation (1-4) continuously measuring and calculating the horizontal line longitudinal grade power function distribution (transient state or average (MTA)), The instantaneous value of the control variable (i.e., the instantaneous value of the duty-cycle function of the pulse-control engine 101) is determined by adding an optimization algorithm to the predicted horizontal line load power demand or longitudinal grade power demand; high-state, low-state, leap state), according to series-hybrid equation (2-4) or parallel-hybrid equation (3-3) combined with equation (MTA) to make the battery pack 130 in CS, CD, one of the CI three modes is stably operated or smoothly switched between the modes, under the premise of ensuring that the battery pack is stably operated in the high-efficiency area for a long time, the throughput regenerative electric charge turnover rate and the total electric charge turnover rate of the battery pack are increased, so as to minimize the fuel consumption of the vehicle RDE; It is obvious that at any time, the optimal average state of charge value of the battery pack 130 is not close to 50 %, which is related to the vehicle's horizontal line load power function distribution, in particular the longitudinal grade power function distribution height, for example, before the beginning of the long slope (the longitudinal grade is greater than 3 %, the slope distance is greater than 5 miles), The optimal SoC should be close to the BUL, when it reaches the top of the slope and starts to go downhill, the optimal SoC should be close to the BLL (see Fig. 8A), and the mechanical energy when the vehicle is braked downhill can be maximally recovered by regenerative braking charging.

For the plug-in hybrid electric vehicle, the energy management control strategy increases the charge Depleting (CD) mode because it can be charged by the external electric network. The CD-CS control strategy is simple and easy to apply, but the optimized space for energy consumption is very limited once entering the electric charge sustaining mode. In addition, the "Power Consumption-Power Maintenance" (CD-CS) control strategy generally matches with relatively large capacity and power levels of the electric drive system so as to achieve coverage of the full operating condition power performance in the CD mode using the battery discharge capability, thus increasing the vehicle cost by the electric drive system.

Another strategy adopted by the plug-in hybrid vehicle is a hybrid control strategy (Blended Mode), which gradually consumes the battery power by rationally distributing the power of the battery and the engine in real time in the whole duty-cycle working condition. The hybrid control strategy must be adjusted according to the running mileage length, under the condition that there is no travel mileage related information, compared with the established electric charge depleting-electric charge sustaining (CD-CS) strategy, the hybrid control strategy (Blended Mode) may have larger fuel consumption, This is one of the main reasons for hindering the actual application of the Blended Mode. However, if the required mileage information is known, the hybrid control strategy (Blended Mode) is more pronounced than the fuel economy optimization improvement of the power consumption-power maintenance (CD-CS) strategy, and the characteristics of PHEV are fully utilized.

The rule-based (RB) control strategy is more suitable for vehicles with low electrified level, and the energy-saving and emission-reduction performance of the control strategy based on optimization (OB) is generally better than the rule-based (higher level) strategy, only there are some engineering problems in the actual application, such as the complexity of the algorithm is high, the calculation amount is too large, the robustness is insufficient, the sensitivity of the optimization result to the vehicle working condition information and characteristic is high, how to realize the online global optimization of the hybrid vehicle under various working conditions is still the technical problem to be solved by the industry urgently. the OB control strategy or algorithm can be classified into four types according to two dimensions, the first dimension is the time of the optimization result, which is divided into online (vehicle-end operation, sub-second level calculation time delay) or offline (non-real time calculation, time delay is obviously higher than the second level; non-vehicle-end or vehicle-end operation); the second dimension is the application range of the optimized result, which is divided into local (minute level or kilometer level) or global (whole freight event, ten hours level or kilometer level); In the prior art, the OB control algorithm of the hybrid vehicle is concentrated in an offline global optimization algorithm (e.g. DP) or an online local optimization algorithm (e.g. ECMS); If a certain online optimization algorithm is not known in advance in the duty-cycle working condition of the hybrid vehicle, the optimal fuel consumption can be ensured to be less than 102 % of the optimal fuel consumption (theoretical minimum value) of the off-line global optimization algorithm DP, It can be considered that the online local optimization algorithm realizes the online global optimization (that is, the optimal solution of infinite approximation theory) in the engineering meaning; It should be emphasized that the real online global optimization algorithm of the hybrid vehicle in the existing technology belongs to the fengmai angle, which are in the stage of laboratory research or academic thesis publication, at present, no hybrid vehicle for mass production can stably realize the RDE fuel consumption online global optimization for a long time; The pulse-control (DPC) ACE heavy-truck and intelligent predictive supervisory control strategy (iPSC) of the disclosure can be adapted to a plurality of online optimization algorithms, before 2025 years, firstly landing in North American business, then popularizing to global mass production business, these ACE heavy-trucks are coordinated by cloud vehicle (see Fig. 5), The disclosure ensures that each long-haul ACE heavy-truck can stably realize the RDE fuel consumption online global optimization for a long time on the premise that the vehicle propulsion performance property and braking performance industry lead and the RDE emission meets the standard.

At present, a large number of optimization algorithms are applied to the energy management of PHEV, mainly in the simulation research stage, which can be divided into off-line global optimization and online local optimization; At present, the distinction is not clear, because it is limited by the algorithm itself, and influenced by factors such as sampling time, model precision, parameter definition and so on. The current main optimization algorithm includes a dynamic programming (DP-Dynamic Programming). The equivalent fuel consumption minimum strategy (ECMS-Equivalent ConsumptionMinimization Strategy), simulated annealing (SA-Simulated Annealing), GA-GeneticAlgorithm, PSO-Particle Swarm Optimization, DIRECT algorithm, NN-Neural Networks, GT-game theory, SMC-sliding Modecontrol, The present disclosure relates to the field of computer system, and more especially relates to a simplified algorithm of CP-convex programming and related algorithms, and model predictive control (MPC-Model Predictive Control) and the like.

The dynamic planning (DP) is a global optimal control method, the DP is supposed to obtain the complete information of the freight event before solving, and then the reverse optimal calculation is performed, the result is the theoretical global optimal solution; However, the mechanism seriously obstructs the actual application of DP in vehicle control, because the future working condition information (such as vehicle speed, level line longitudinal grade distribution and so on) of the vehicle is only partially foreseeable, and there is non-negligible random change component; DP is suitable for multiple fields such as non-linear constraint dynamic process and integer problem, it can manage state and input multiple complex constraints; However, the calculation load is increased exponentially along with the increase of the state and the control variable, and a "dimensional disaster" will be encountered; DP is widely used in off-line analysis at present, which is used for carrying out standard test for alternative energy management strategy, enlightening design based on rule strategy, adjusting control parameter, as training data of machine learning algorithm and so on.

The equivalent fuel consumption minimum strategy (ECMS) seeks to optimize the comprehensive fuel consumption of the hybrid vehicle by the equivalent factor (EF; The amount of fuel consumed by the charging of the battery pack is computed by the amount of fuel consumed by the charging of the battery pack, the regenerative braking recovery energy-saving fuel, that is, the amount of electricity accumulated in the battery pack from the start of the engine charging mode is not "free", including the high-priced engine amount and the almost free regenerative braking amount. the equivalent fuel quantity (the dimension is gram or milliliter) in each time step is the sum of the actual fuel quantity of the engine and the equivalent fuel quantity used by the motor. In application: The electric charge sustaining control strategy (CS) is used for configuring the hybrid vehicle with small capacity battery pack (kilowatt-hour level), and the equivalent factor is mainly used for preventing the electric charge of the battery pack from being exhausted (SoC is less than LRL); For a hybrid vehicle configured with a large capacity battery pack (ten-kWh level level), an intelligent predictive property (iPSC; a CS, a CD, a CI) power control policy (i.e., an advanced hybrid (Blended) power control policy), which ensures that most time (98 % +) of the battery pack runs in the high-efficiency area, and prevents the battery pack from power consumption (SoC <LRL); The algorithm is more efficient than the dynamic planning (DP) algorithm by simplifying the process, which can easily realize the online real-time local optimization, and generate the controller similar to the global optimal solution by properly adjusting the equivalent factor; The difficulty of the ECMS technology is that the value of the equivalent factor is highly correlated with the configuration (dynamic performance, total weight, battery pack capacity and so on) of the vehicle and the operation working condition, and the final performance of the algorithm is sensitive to the value of the equivalent factor; When the working condition of the freight event vehicle (especially the track of the speed time-varying function) cannot be completely known in advance and the prediction error is large, it is difficult to ensure that the online ECMS algorithm approaches the off-line global optimal solution by adaptively dynamically adjusting the equivalent factor.

The electric charge (i.e. charge) of the ACE heavy-truck battery pack 130 is all directly or indirectly derived from the engine 101, and the supervisory control optimization algorithm of the ACE heavy-truck is based on the following equations:

$$J(x,u) = \int_{t_0}^{t_f} [f(x(u,t),u,t) + K_{e2f}\, f_{bat}(x(u,t),u,t) \;] dt$$

$$(SC\text{-}1)$$

$$f(x(u,t),u,t) = K_{FC} f_{bsfc}(\omega, T_{eg}) \omega(t) T_{eg}(\omega, t) \qquad \text{(SC-2)}$$

$$f_{bat}(x(u,t),u,t) = C_{bat}(F_{P-bat}(SoC(t)) + (SoC(t_f) - SoC(t_0))) \qquad \text{(SC-3)}$$

$$u^* = argmin_u \{J(x,u)\} \qquad \text{(SC-4)}$$

$$x^\wedge(u,t) = L(x(u,t),u,t) \qquad \text{(SC-5)}$$

$$h(u,x(u,t)) <= 0 \qquad \text{(SC-6)}$$

wherein J(x, u) is the target function, and its physical meaning is the aggregate fuel consumption (in gram or ml) of the ACE heavy-truck completing the freight event; u(t) is a control variable, generally referred to as the engine torque (NM), and for a DPC engine, the control variable can be simplified as a duty-cycle function (see Fig. 6B); x(u, t) refers to the state variable, which is an indispensable part in solving the global optimization problem or the optimal problem approximately; the state variable x is usually a multi-dimensional vector, and the components thereof comprise the current SOC of the battery pack, vehicle speed, vehicle location and so on; f (x, u) refers to the cumulative fuel consumption (gram or milliliters) of the entire freight event of the engine 101 (see equation (SC-2)); $f_{bat}$ (x, u) refers to the accumulated equivalent electric charge of the whole freight event of the battery pack 130, and it should be emphasized that the equivalent electric charge comprises two components (see equation (SC-3)), the first component represents the accumulated penalty electric charge of the whole freight event of the battery pack (see Fig. 8A or B), is a non-negative number; if the battery pack is always operated in the high-efficiency area, the accumulated penalty electric charge is zero (that is, no penalty), the second component represents the electric charge SoC difference of the battery pack between that at the destination point and that at the starting point of the whole freight event, belonging to the compensation item, if the SoC difference of the battery pack is zero, the compensation item is also zero; Obviously, the accumulated equivalent electric charge item of the battery pack in the disclosure is substantially different from the accumulated charging and discharging electric charge items of the battery pack in the prior art; $K_{e2f}$ is an equivalent factor (EF), the equivalent electric charge is converted into fuel consumption (gram/watt-hour); in the existing ECMS technology, the value of the equivalent factor corresponding to the accumulated charging-discharging electric charge of the battery pack is highly correlated with the working condition of the vehicle, which changes in time; whereas the value of the equivalent factor (EF) in the present disclosure is basically not related to the working condition of the vehicle and is only correlated with the road longitudinal grade function distribution along the route of the freight event, and does not change along with time; $t_0$ is the starting time of the freight event, $t_f$ is the ending time of the freight event; u * represents the optimal control variable; for the ACE heavy-truck 010 under digital pulse-control, u * is actually the optimal duty-cycle function; at this time, the target function J has the global (namely the whole freight event) minimum value; the function L (x, u) refers to the mapping of the state variable-control variable pair x-u to the new state variable x^; h(u, x) represents a set of various equations or inequality constraints in the optimization process, including the rotational speed or torque constraints of the engine 101, the rotational speed or torque constraints of the motors 110 & 140, the charge/discharge current and voltage constraints of the battery pack 130, and the like.

The SCS of the hybrid vehicle of the disclosure can be expanded to the more complex multi-target optimization problem besides the single target optimization problem of minimum RDE fuel consumption, such as considering the power performance, pollutant emissions and battery pack health of the vehicle at the same time; Different from the analog-controlled ACE heavy-truck, the pulse-control ACE heavy-truck can realize the mutual orthogonal decoupling between the iMMH powertrain software and hardware decoupling and the multi-element control variable, The pulse-control ACE heavy-truck can greatly simplify the multi-element nonlinear complex multi-target optimization problem of the hybrid vehicle in the existing technology into a plurality of independent single target optimization problem, the requirement on the vehicle-mounted real-time calculation resource is lower, the algorithm convergence is faster, the robustness is stronger, the adaptability is higher, the final performance is better (approaching to the real-time global optimal solution), reaching the beneficial effect of half-effort multiple. Compared with the target function in the existing technology, the optimal solution (equation (SC-1, 2, 3)) of the target function J in the disclosure obviously minimizes the accumulated fuel consumption of the pulse-control engine 101, At the same time, the time-to-time ratio (i.e., probability) of operation of the battery pack 130 in the high-efficiency region is obviously maximized, thereby implicitly maximizing the total capacity turnover rate and the regenerative capacity turnover rate of the battery pack 130.

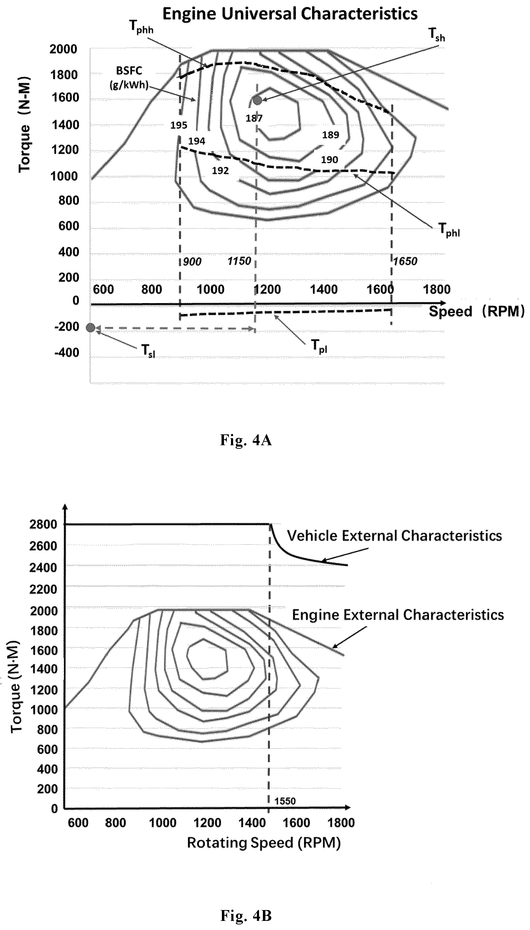

Fig. 4A is a fuel Map of a typical modern heavy-truck 11-liter diesel engine with a peak torque of 2000 meters, a peak power of 300 kW, and a minimum fuel consumption (BSFC) of 187 gram per kW. the picture is distributed with multiple irregular shape curves which are not crossed with each other, each curve is a specific fuel consumption (BSFC) contour line; The complete and detailed comprehensive characteristics curve of the engine is the commercial secret of the engine manufacturer and will be shared with the whole vehicle factory or the relevant first-level supplier after signing the secret agreement. At present, the minimum fuel consumption of the mainstream heavy-truck diesel engine used by the mass-production company is 182 g/kWh, and the corresponding thermal efficiency (BTE) is 46 %; A 50 %-55 % BTE diesel engine is currently in the research and development stage of the sample machine in Europe and USA, which is at least three to five years away from the mass production of Europe, USA, China and USA. if the high-efficiency area of the engine 101 is defined as the working condition area (i.e. 196 g/kWh) in the equal-height ratio fuel consumption curve with the minimum ratio fuel consumption value of 105 %, as shown in Fig. 4A, the rotating speed range corresponding to the high-efficiency area of the engine is 900 r/min to 1700 r/min, torque range 670 to 2000; In other words, the high-efficiency region of the diesel engine is at a rotational speed of 900-1700 rpm, and the equivalent torque is 33 %-100 % (i.e., the torque loading rate). It is easy to convert the discrete digitization of the universal characteristics curve of the engine high-efficiency area of Fig. 4A into a list (Look-up Table) which is convenient for computer processing. Preferably, a 140 x 100 matrix list describing the characteristics of the high efficiency region of the engine is generated at a rotational speed step pitch of 10 revolutions per minute and a torque step pitch of 10 meters, each row of the matrix corresponding to a constant torque and each column corresponding to a constant rotational speed; Each element in the table (i.e., a specific number of rows/columns) corresponds to a specific fuel consumption value (BSFC) of an engine operating point (i.e., a specific rotational speed/torque); ), called " original fuel consumption list " (" original fuel consumption table " for short) the original list reacts the original design index of the engine; The engine control unit (ECU) 102 of the ACE heavy-truck 010 can generate a "correction ratio fuel consumption list" (abbreviated as "update fuel consumption list") every two days or every 1,000 miles according to the actual operation data of the engine 101. the updated fuel consumption table not only reflects the original design performance index of the engine of the model number, but also reflects the current actual performance index after the special engine is worn and used for the energy-saving and emission-reduction algorithm of the ACE heavy-truck.

Referring to Fig. 4A, the universal characteristics curve of the engine 101 can be presented as a 101 * 51 specific fuel consumption matrix list (Look-up Table); the row number (1-101) of the matrix is corresponding to the engine torque, the column number (1-51) is corresponding to the rotating speed, each matrix element represents an engine working condition point, the element value is the ratio fuel consumption value (BSFC) of the working condition point; The effective ranges of engine torque or rotational speed are: - 500 NM-2000 NM or 500 RPM-1800 RPM; average division, torque step is 25NM, rotating speed step is 26RPM. For example, matrix elements (1, 1) correspond to (-500NM, 500RPM) operating conditions; (1, 51) corresponding to (-500NM, 1800RPM); (101, 1) corresponding to (2000NM, 500RPM); (101, 51) corresponding to (2000NM, 1800RPM); The optimal operating point (91, 26) corresponds (1840 NM, 1150 RPM) with an element value of 187 (g/kWh). Obviously, the specific fuel consumption value corresponding to all the fourth quadrant working points (that is, all the elements whose number of rows is less than 21) is set to 0; The specific fuel consumption value corresponding to the combustion working condition point beyond the maximum torque curve of the first quadrant engine can be set to be one hundred times of the minimum specific fuel consumption, namely 18, 700 (g/kWh), and the engineering is similar to infinite; the specific fuel consumption value of the other effective combustion working condition point is directly read from the universal characteristics curve of the engine of the factory. the horizontal working condition line of the engine with equal torque and variable rotating speed is composed of matrix elements with the same row number but variable column number; the vertical working condition line with equal rotating speed and variable torque is composed of matrix elements with different row numbers and same column number; The equal power curve is composed of adjacent matrix elements with different row number and line number but the same working condition point power (that is the product of rotating speed and torque). The fuel consumption matrix completely describes the universal characteristics of the engine 101 and is one of the key sub-system mathematical models in the implementation of various algorithms of the ACE heavy-truck 010 supervisory control strategy (SCS).

The intelligent Predictive Supervisory Control (iPSC) technology of the ACE heavy-truck has the following differentiating essential technical features of having a fast control loop and a slow control loop, whereas both control loops are mutually orthogonal and decoupled; the sub-second level fast control loop focusing on dynamic driving task (DDT) while the minute level slow control loop focusing on vehicle energy-saving and emission-reduction ($CO_2$ and NOx emission simultaneous minimization) and predicative control of the battery pack average SoC function (PSC); which is one of the main invention points of the present disclosure. The implementation steps of the iPSC method are summarized as follows:

1) The transient vehicle propulsion torque or power demand (i.e., transient road-load torque or power function per vehicle dynamic equation (1-1)) is determined by the vehicle speed and the angle of the accelerator or brake pedal reflecting the driving intention of the driver;

2) Actively and independently selecting the transient torque or power of the engine, the battery pack is used for power peak cutting and valley filling in order to satisfy the series-hybrid equation (2-4) or parallel-hybrid equation (3-3) in real-time (fast control loop);

3) Predicting the vehicle speed function distribution within the electronic horizon, according to the vehicle dynamic equation (1-1) and the moving average equation (MTA) and combined with the road longitudinal grade function distribution, calculating the instantaneous vehicle road-load transient power function distribution and the average power function distribution continuously on-line;

4) Actively selecting the engine torque or power function distribution and calculating the engine average power function distribution continuously on-line within the electronic horizon;

5) Through actively controlling the difference function between the road-load average power function distribution and the engine average power function distribution (series-hybrid equation (2-4A) or parallel-hybrid equation (3-3A)) to shape the battery pack average SoC function distribution in the electronic horizon in a predicative manner so that the battery pack operates stably in one of the three modes of CS, CD, and CI or switches dynamically among the three modes (that is to say, to realize the PSC function; the slow control loop);

It needs to be emphasized that the above iPSC or PSC technology is theoretically suitable for both the analog-electronic-controlled ACE heavy-truck or the digital-pulse-controlled ACE heavy-truck, however in real-world applications, the latter (DPC technology in the disclosure) completely exceeds the former (AEC technology in the prior art) in many metrics, the math model is simpler, the data sample efficiency is higher, the algorithm convergence speed is faster, the algorithm robustness is stronger, the final optimization result is better and can approach the theoretical global optimal solution (that is, the RDE fuel consumption is minimized) online with arbitrarily small error in the engineering sense. Compared with the supervisory control strategy of the hybrid vehicle in the existing technology and the RDE energy-saving and emission-reducing effects, the digital-pulse-controlled ACE heavy-truck combined with above iPSC algorithm has stronger generalization capability (that is, better generality) and the final optimization result is also better, which refers to for any mass-production & commercial-use heavy-truck engine and any freight event, the disclosure can approach the theoretical global optimal solution of the fuel saving and emission reduction in long-haul freight online limitlessly. (that is, the RDE CO2 and NOx emissions are minimized).

Referring to Fig. 4A, the BSFC change caused by the relative change of 5 % of the rotating speed or torque function in the combustion high-efficiency area of the engine is always much less than 5 %, but in the combustion non-high-efficiency area (for example, the torque loading rate is less than 30 % or the rotating speed is less than 800 RPM), rotating speed or torque change of 5 % can lead to the fuel consumption change much more than 5 %; In other words, for all modern heavy-truck engines, the combustion high-efficiency area not only has low fuel consumption and high engine exhaust temperature (more than 250 degrees C), but also has very stable fuel consumption and engine exhaust temperature changes (with small and slow changes in time); whereas the combustion low-speed or low-load non-high-efficiency area not only has high fuel consumption and low engine exhaust temperature (less than 250 degrees C), but also has rather unstable fuel consumption or engine exhaust temperature changes (with large and fast changes in time) along with the the working condition point changes of the engine; The technical features of the universal characteristics curve of the engine and the corresponding fuel consumption matrix are the physical foundation of the following advanced phenomena : the real-world fuel consumption of the DPC engine of the disclosure is obviously better than that of the AEC engine in the prior art, and the computation work-load of the vehicle energy-saving and emission-reduction optimization algorithm of the former is reduced by at least one order of magnitude than that of the latter, the former's convergence rate is faster and robustness is better. The engine, the motor, the transmission and the driving wheels are all provided with multiple speed sensors respectively; the real-time (sub-second time delay) rotating speed measurement relative precision can be stabilized within +-0.2 % for a long time; However, at present time, there are no automotive grade mass-production torque sensors available in the market, and the relative control precision of the effective torque at the flywheel-end indirectly measured by controlling the modern engine fuel injection amount is about +-3 %; The engine can directly and dynamically adjust the torque of the engine by precisely controlling the fuel injection amount in real-time, therefore the engine torque is an independent variable, but its relative error of the dynamic measurement is somewhat large (roughly 3 %); the rotating speed of the engine is determined by the transient torque and the mechanical load, the rotating speed is a dependent variable; In other words, the torque of the engine can be controlled directly & independently, but the relative error of control or indirect measurement is also higher (about 3 %), while the rotational speed can only be indirectly controlled by engine torque and load, but the relative error of direct measurement is much lower (less than 0.2 %). The DPC engine 101 of the disclosure can ensure that its high-efficiency operation time probability is always over 97% (high-state or low-state; regardless of the working condition of the ACE truck 010), while its low-efficiency operation time probability is compressed to less than 1.5 %; The energy-saving and emission-reduction online global optimization algorithm of the ACE heavy-truck 010 configured with the DPC engine 101 has the characteristics of " three high and two low " in comparison with that of the existing technology: It has high accuracy, high convergence, high robustness; low computation work-load and low fuel-consumption.

Several embodiments of a DPC engine 101 will be discussed below with reference to Fig. 4A. First, several series-hybrid iSS embodiments are described. Assuming that the rated power of the generator (MG1) 110 configured by the ACE heavy-truck iMMH powertrain is 175 kW, the rated torque is 1200 NM@1400RPM, and the peak torque is 1800 NM@1400RPM in 15-second pulse, peak power is 263kW (overloading rate is 50 %); the rated power of the traction motor (MG2) 140 is 200kW, the rated torque is 1370NM@1400RPM, the 15-second pulse peak torque is 2055NM@1400RPM, and the peak power is 300kW; The original design universal characteristics curve of the engine 101 is shown in Fig. 4A, the optimal rotational speed range is 1100 RPM to 1300 RPM, and the high-efficiency area rotational speed range is 1000 RPM to 1700 RPM; The operating point of the engine 101 original list or the correction list at 1200 RPM (rpm) and the torque 1400NM (ox) is selected preferably as the "best operating point" (BOP; or high-state point), the engine power corresponding to the BOP is 176 kW, which is also called the BOP " high-state point "; At the same time, it is preferable that the engine operates at the idle speed of 600 RPM (optional range of the series-hybrid idle speed point: 550RPM to 750RPM), at this time, the average resistance torque when the engine 101 is dragged to run is about -250NM, the engine power corresponding to the NCI point is -16kW, the so called NCI " low-state point "; The best working condition point (BOP) is a settable point (a vertical working condition line in the first quadrant) on the $L_{sh}$ of the preferred series-hybrid high-state working condition line in the high-efficiency area of the engine; For example, the rotating speed is 1200 RPM, and the variable torque range is: 1000 NM to 1800 NM); the NCI is a settable point on the preferred "series-hybrid low-state working condition line" $L_{sl}$ in its passive operating area (POM) (is a vertical working condition line in the fourth quadrant, such as fixed speed 600RPM, variable torque range: -500 NM TO -100 NM); the torque of the DPC engine is truly independent and adjustable in the first quadrant; However, the torque is a somewhat dependent variable within the fourth quadrant, which is completely dependent on the transient power consumption of all the engine accessory systems and cannot be truly independently adjusted. In other words, when the series-hybrid DPC engine runs in the first quadrant (high-state), it can be a point working condition or a line working condition; however, when operating in the fourth quadrant (low-state), it must be a line working condition, not a true working condition point. However, the absolute value of the average power function (equation (MTA)) of the series-hybrid DPC engine is slowly changed in the range of 5 kW to 35 kW (minute level) when the series-hybrid DPC engine operates in low-state; In order to simplify the supervisory control strategy of the ACE heavy-truck, the series-hybrid DPC engine low-state working condition line can be converted into the equivalent energy " low-state equivalent point working condition " (performing statistical weighted average calculation on a large number of freight event prior low-state transient power function time integral value (namely low-state energy consumption) set), as the non-combustion idle point (NCI) of the series-hybrid DPC motor; In Fig. 4A, the two working condition lines of the series-hybrid high-state and low-state are simplified as two working condition points $L_{sh}$ and $L_{sl}$.

ECU 102 controls the DPC engine 101 to operate stably in the best working condition point (BOP) or non-combustion idle point (NCI) or to switch between them dynamically and smoothly, The analog transient power time-varying function of the series hybrid engine 101 can be converted into a novel bipolar asymmetric equal amplitude (i.e., rectangular) pulse width modulation (PWM) pulse sequence function; Preferably, the period $T_s$ of the PWM pulse sequence is in the range of 60 seconds to 120 seconds, and the duty-cycle $k_s$ is independently dynamically adjustable between 0.0 and 1.0. Obviously, by dynamically adjusting the duty-cycle $k_s$, it is possible to ensure that the ACE heavy-truck meets the vehicle dynamic equation (1-1) and the series-hybrid power balance equation (2-4) in real time; the average power function value of the series-hybrid DPC engine 101 (see equation (MTA)) is independently continuously adjustable between -16kW and 176kW. If the electromechanical conversion efficiency of the generator (MG1) 110 is approximated to be equal to 1.0 (i.e., 100 %), the electrical power function of the series-hybrid gen-set is equivalent to the mechanical power function; According to the series-hybrid equation (2-4A), the electric power splitting device (ePSD) 123 and the power battery pack 130 collaborate to generate a synchronous complementary transient power pulse sequence, which is equal to the difference between the ACE heavy-truck 010 analog slow-changing road-load transient power function and the engine 101 transient power PWM pulse sequence function, in order to satisfy the vehicle dynamic equation (1-1) in real time. According to the equation (MTA), the window period $T_w$ of the rolling time average operation should be greater than the period $T_s$ of the PWM, and preferably $T_w = 2T_s$.

The above embodiment of the dual-point working condition of the pulse-controlled engine 101 is the simplest series-hybrid iSS control embodiment; at this time, the only dynamic adjustable parameter which can dynamically control the distribution of the average power function of the engine 101 is the duty-cycle $k_s$; It also can select more advanced flexible double-line working condition embodiment. For example, under the active operation mode (AOM), the engine 101 can operate at any working condition point on the series-hybrid high-state working condition line $L_{sh}$ (equal rotating speed 1200RPM) in the first quadrant high-efficiency area of the universal characteristics curve, the torque adjustable range is between 1000NM and 1900NM, the corresponding high-state power value range is between 126kW to 239kW, torque loading rate range is from 50 % to 95 %; Under the passive operation mode (POM), the engine 101 can operate at any working condition point on the fourth quadrant series-hybrid low-state working condition line $L_{sl}$ (equal rotating speed 600RPM), the torque adjustable range is from -500NM to -150NM, the corresponding low-state power value range is -31kW to -9kW; obviously at this time the engine 101 is driven by the generator 110 with zero fuel consumption and zero emissions; The actual torque value of the low-state working condition of the PDC engine completely depends on the transient power requirements of all auxiliary sub-systems (oil pump, water pump, air pump, fan, air conditioner compressor and so on) of the engine, and the absolute value of the low-state power in most time is less than 15 kW. The ECU 102 controls the DPC engine 101 to operate stably in the high-state working condition line $L_{sh}$ or the low-state working condition line $L_{sl}$ or to switch between them dynamically and smoothly. The traditional analog transient power time-varying function of the series-hybrid pulse-control engine 101 is converted into a novel bipolar asymmetric non-equal amplitude (i.e., non-rectangular) pulse width modulation (PWM) pulse sequence function; at this time, the independent adjustable parameters for dynamically controlling the average power function value of the engine 101 are the duty-cycle $k_s$ and the power amplitude; , the transient power pulse sequence function of the engine 101 generated by the actual double-line operating condition iSS control embodiment is equivalent to the superposition of the PWM sequence and the PAM sequence; the average power function of the engine 101 is arbitrarily adjustable between -31 kW and + 239 kW. It should be emphasized that in order to ensure that the NVH characteristic of the ACE heavy-truck is better than that of the diesel heavy-truck, it is better to perform pulse width modulation control (PWM) on the transient power function of the engine and control the transition state of the upper and lower transitions, and it is not preferred to use pulse amplitude modulation control (PAM); However, there is no mechanical movement when the battery pack 130 is charged or discharged, and the transient power function of the battery pack 130 can be either PWM-controlled or PAM-controlled. Obviously, the maximum continuous torque and power of the vehicle are limited by the traction motor 140 when the ACE heavy-truck 010 is operated in the series-hybrid mode, which are 1370 NM and 200 kW, respectively, the 15 seconds peak torque or power overloading rate can reach 50 %; Although it can basically satisfy the vehicle road-load power requirement of the middle and low speed urban working condition, the power performance at the high speed road working condition (average speed is higher than 45MPH) of the ACE heavy-truck series-hybrid mode is obviously insufficient, it should be switched to the parallel-hybrid mode.

Next, several parallel-hybrid intelligent power switching control (iPS) embodiments are discussed. The key configuration parameters of the ACE heavy-truck in parallel-hybrid mode are the same as those in the above example, and the clutch 111 is closed under parallel-hybrid mode; the gear-shifting control strategy of the transmission 150a can always control the rotating speed of the engine 101 in the high-efficiency area under the expressway working condition of the ACE heavy-truck; Referring to Fig. 4A, the engine speed range corresponding to the high efficiency region is between 1100 RPM and 1500 RPM (referred to as the "high efficiency speed region"). the base speed of the engine namely the central point of the peak torque corresponding to the rotating speed) is 1200RPM. When the ACE heavy-truck 010 is travelling normally on the expressway, the vehicle speed can be substantially maintained at an average cruising speed (e.g., 60 MPH) that fluctuates in a range of +-15 % above and below the center, i.e., the vehicle speed is slowly and continuously fluctuating at a small second level in a narrow speed band. In the parallel-hybrid iPS control mode, the rotational speed of the engine 101 is a dependent variable, which is determined by the instantaneous vehicle speed and the gear of the transmission, and slowly and continuously fluctuates in a narrow rotational speed band (1080RPM to 1320RMP) of about +110 % of the base speed (1200 rpm); The torque of the DPC engine is an independent variable, which can be rapidly and continuously changed under the peak torque. Referring to Fig. 4A, the DPC engine 101 is operable in the first quadrant of a universal characteristics curve (First Quadrant; positive rotation speed & positive torque) in the active operation area (AOM) or the fourth quadrant (fourth Quadrant) in the passive operation area (POM); under the parallel-hybrid architecture, corresponding to each engine transient speed dependent variable, from the original fuel-consumption table (see Fig. 4A) of the engine 101 or the updated fuel-consumption table, selecting different high-state working condition points in the engine high-efficiency area with minimum fuel consumption and maximum torque value to form a smooth working condition line, constituting a high-state working condition high line $L_{phh}$ (also called "first high-state working condition line"), different high-state working condition points in the engine high-efficiency area with low minimum fuel consumption and minimum torque can also be selected to form a smooth and slow-changing working condition line to form a high-state working condition line $L_{phl}$ (also called the second high-state working condition line); Obviously, the high-state working condition lines $L_{phh}$ and $L_{phl}$ are two irregular and disjoint curves in the high-efficiency area of the engine 101; the engine transient power corresponding to the $L_{phh}$ working condition line is between 230kW and 251kW, and the torque loading rate is between 80 % and 100 %; The engine transient power corresponding to the $L_{phl}$ working condition line is between 167kW and 173kW, and the torque loading rate is 53 % to 75 %. In the passive operation mode (POM), when the engine 101 is dragged in the low-state withzero fuel consumption and zero emissions, the resistance torque is a negative value, and the absolute value thereof is less than 250 NM; the actual distribution of each low-state working condition point in the high-efficiency rotating speed area (1100 RPM to 1500 RPM) is the surface working condition, the specific distribution is completely dependent on the total transient power consumption function of each subordinate sub-system of the engine; the absolute value of the low-state working condition point power is less than 35kW, and most likely (90 % +) to be less than 10kW; performing statistical weighted average calculation on the low-state transient power function time integral value (namely low-state energy consumption) set of a large number of freight events, which can deduce the power " low-state equivalent working condition line" $T_{pl}$ of equivalent energy, the line working condition can be similar to a constant power line of the fourth quadrant high-efficiency rotating speed area, The absolute value is less than 15 kW. Assuming that the absolute value of the low-state equivalent power consumption of the DPC engine 101 is 12 kW and the average road-load power is 180 kW under the expressway working condition of the ACE heavy-truck 010, the absolute value of the low-state equivalent power consumption of the DPC engine is only a small fraction (6.7 %) of the road-load power consumption.

In the parallel-hybrid iPS mode, the ECU 102 (through the instructions of the VCU 201 via the CAN bus) controls the DPC engine 101 to operate stably in a high-state working condition line ($L_{phh}$ or $L_{phl}$) or a low-state working condition line ($L_{pl}$) or to switch between the two dynamically smoothly, under the parallel-hybrid mode of the ACE heavy-truck, performing pulse width modulation (PWM) control on the transient power function of the engine 101 to generate a bipolar asymmetric non-constant amplitude (i.e., non-rectangular) pulse width modulation (PWM) pulse sequence function; The PWM pulse sequence period $T_p$ preferably has a value ranging from 60 seconds to 120 seconds, and the duty-cycle $k_p$ (that is, the ratio of high-state operation time within a period to the PWM period $T_p$) is continuously adjustable between 0 and 1; According to the rolling time average equation (MTA), by dynamically adjusting the PWM duty-cycle $k_p$, the average power function value of the engine 101 is continuously adjustable between -35kW and 251kW. The parallel-hybrid iPS engine only operates stably on the first high-state work condition line $L_{phh}$ or the low-state work condition line $L_{pl}$, and becomes a simplified "binary state machine"; it can also be operated in one of the three working condition lines ($L_{phh}$ or $L_{phl}$ or $L_{pl}$) to become a more complex "tri- state machine"; in each PWM period, the high-state stable operation is only on either $L_{phh}$ or $L_{phl}$, and cannot be dynamically switched between the two; But between the adjacent PWM periods, high-state operation can be on different high-state work condition line of either $L_{phh}$ or $L_{phl}$; the tri-state machine actually increases one degree of freedom in control, the control complexity and flexibility are higher than the binary state machine; However, the binary state machine and the tri-state machine have no substantial difference in terms of the energy-saving and emission-reduction optimization effect of the ACE heavy-truck and the NVH characteristic of the whole vehicle; The embodiment of the present disclosure focuses the binary state machine, and the ordinary technical personnel can expand to the tri-state machine in without inventive work.

The VCU 201 can, according to the parallel equation (3-3A), direct the electrical power divider (ePSD) 123 and the mechanical power divider (mPSD) 124 to collaborate and to generate a synchronous complementary transient electrical power pulse sequence function of the battery pack 130, which is equal to the difference between the ACE heavy-truck 010 analog slow-changing road-load transient power function and the engine 101 transient power PWM pulse train function, to satisfy the vehicle dynamic equation (1-1) in real time. The window period of the power function rolling time average operation (see equation (MTA)) should be greater than that of the PWM, preferably $T_w=2T_p$. At this time, the adjustable parameter which can dynamically control the average power function value of the engine 101 can add an additional degree of freedom ($L_{phh}$ or $L_{phl}$) of the power amplitude adjustment in addition to the duty-cycle $k_p$; The transient power pulse sequence function of the tri-state machine in the parallel-hybrid iPS control embodiment is equivalent to the superposition of the PWM sequence and the PAM sequence, and the binary state machine is just the special example of the former; The binary state machine is simpler than the tri-state machine, and there is no substantial difference between the two in terms of energy-saving and emission-reduction optimization results at the vehicle layer, therefore the former is preferred. The engine 101, the generator 110, and the traction motor 140 can collaborate to drive the vehicle (torque superposition) when the ACE heavy-truck 010 is operated in parrallel-hybrid mode; The theoretical limits of maximum continuous torque and power of the vehicle can be up to 4570 NM and 675 kW; However, the maximum torque of the input shaft of the transmission 150 of the main-stream heavy-truck in the current global market is less than 3000 NM, and in order to ensure the reliability and durability of the vehicle transmission and driveline systems, the torque of the iMMH powertrain must be limited to 3000 NM; In the whole high-efficiency rotating speed area of the engine 101 (such as from 1000RPM to 1650RPM), the ACE heavy-truck total maximum continuous driving torque can be as high as 3000NM, the maximum continuous driving power can be as high as 518kW (@ 1650RPM; In addition, regenerative braking power of 600 kW of ten seconds-level duration of the whole vehicle layer can also be provided by the dual motors 110 & 140 within a super-fast response time of 50 milliseconds; It is apparent that the driving and braking performance of the parallel-hybrid ACE heavy-truck is significantly better than that of the top-of-the-line 16L diesel heavy-truck in the market today. In the parallel-hybrid iPS mode, the total 60 second peak torque of the ACE heavy-truck 010 double motors 110 & 140 is significantly greater than 3500 NM, in each PWM period, no matter whether the pulse-control motor 101 is running in high-state or low-state, the total effective maximum torque of the powertrain at the input shaft of the transmission 150a can reach 3000 NM; In other words, as long as the battery pack 130 has electricity (SoC > LRL), and regardless of whether the parallel-hybrid pulse-control engine 101 is operated in high-sate or low-state or is dynamically switched between the two, there is no impact on the transient dynamic performance of the ACE heavy-truck. The ACE heavy-truck is always better than the power of the 16-liter diesel heavy-truck in the existing technology in terms of vehicle gradeability and braking performance.

When the pulse-control engine 101 (series-hybrid iSS or parallel-hybrid iPS) operates in a high-state, the ECU 102 can directly and dynamically control the torque of the engine 101 by quickly and accurately controlling the fuel injection amount and phase distribution, in combination with the actual load of the engine, to achieve the effect of indirectly controlling the rotating speed of the engine, therefore the rotating speed of the engine 101 cannot be directly controlled in a closed loop; When the engine runs in a low-state, the pulse-control engine 101 becomes the mechanical load of the generator (MG1) 110, at this time, the ECU 102 does not actively control the engine 101 directly, but let the generator 110 to drag the engine 101 to run in low-state in the driving mode, at this time, the engine has zero fuel consumption and zero emission, but it consumes electricity; The MCU1 121 can directly, quickly and accurately control the rotating speed or torque of the generator 110, satisfying the dynamic power requirement of the engine, so as to indirectly control the torque or rotating speed of the pulse-control engine in low-state. In other words, for the engine electrical control, the torque control is the cause, while the rotation speed control is the effect, and the rotation speed value is determined by the dynamic load power of the engine; for the AC motor vector control (Vector Control), not only the torque control is the cause and the speed control is the effect, but also the speed control is the cause and torque control is the effect, that is, the rotating speed and the torque of the electric motor can be controlled in two closed-loops independently. It is obvious that the control precision or response speed of the rotating speed and torque of the vector controlled AC motor is significantly higher than that of the electric controlled engine; and the on-road transient power function of the ACE heavy-truck, except for the low probability special cases of emergency braking or rapid acceleration, is most likely (95 % + probability) the space-time-varying function of the analog slow-changing in the second-level time; In other words, no matter how fast the transient power function of the pulse-control engine 101 (i.e., the PWM pulse sequence) changes, the VCU 201 and the ePSD 123 can easily collaborate and dynamically adjust the transient power function of the battery pack 130, cutting the peak and filling the valley, to satisfy the series-hybrid equation (2-4A) or the parallel-hybrid equation (3-3A) in real time. The disclosure, under the premise that the hardware system is not changed, can convert the prior art analog electric control (AEC) engine in the iMMH powertrain into the novel digital pulse-control (DPC) engine by the series-hybrid iSS control or parallel-hybrid iPS control technical means; under the premise of ensuring that the power of the ACE heavy-truck under any duty-cycle working condition exceeds that of the current global top-of-the-line mass-production diesel heavy-truck, the complex surface working condition of the AEC engine 101 is greatly simplified into one or two pre-defined high-state working condition point or line in the engine high-efficiency area, at the same time, an equivalent low-state working condition point or line with zero fuel consumption and zero emission is added; fully leveraging the existing mass-produced automobile technologies and products, the disclosure solves the technical problem of how the modern diesel heavy-truck meets the US federal greenhouse gas emission regulation (GHG-II; that is, the RDE fuel consumption meets the standard or the $CO_2$ emission meets the standard) and the ultra-low NOx emission Omnibus regulations of California on diesel heavy-truck (that is, the RDE pollutant NOx emission meets the standard) simultaneously in high performance-price ratio and provide a novel production-ready technical pathway and solution. The disclosure can optimize the energy-saving and emission-reduction of the ACE heavy-truck under the actual driving environment (RDE) at the same time, and can satisfy the ACE heavy-truck $CO_2$ and NOx emission 2027 limit value of the US Federal GHG-II and California Omnibus regulation by 2025. It should be emphasized that the pulse-control engine technology is essentially an advanced dynamic engine start-stop technology, while the static engine start-stop technology in the prior art belongs to a special example of the DPC engine technology of the disclosure (that is, the low-state working condition point is the origin with zero torque and zero rotating speed).

The control speed and precision of the transient power function of the battery pack 130 is significantly higher than that of the transient mechanical power function of the engine 101, the road-load transient power is a second-level analog slow-changing function, the transient power of the pulse-control engine is a bipolar non-constant amplitude PWM pulse sequence function, through the control software of the ePSD 123, the battery pack 130 can easily generate a synchronous complementary electric power pulse sequence function in its SoC high-efficiency region or operation region, and can accurately satisfy the series-hybrid equation (2-4A) or the parallel-hybrid equation (3-3A) in real time.

Referring to Fig. 4B, in the direct drive mode I, the external characteristics of the engine 101 is the same as that of the ACE heavy-truck 010 (i.e., a curve of the total peak torque or peak power of the iMMH powertrain as a function of the rotational speed of the input shaft of the transmission); in the series-hybrid mode III (A or B), the external characteristics of the whole vehicle is the same as the external characteristics of the traction motor 140, which is lower than that of the mode I, because the series-hybrid mode is mainly suitable for the urban working condition and the average vehicle speed is not high, therefore the power performance of the whole vehicle is enough; under the parallel-hybrid mode II (A or B), the three power sources of the engine 101 and the dual-motor 110&140 can be cooperatively driven, theoretically at the input end of the transmission 150, the total maximum continuous torque can easily exceed 4000 NM, significantly higher than the continuous torque upper limit of most mass-production on-road heavy-truck transmissions in the current market must and the total actual propulsion torque (at the input shaft of the transmission) must be limited; at this time, the external characteristics of the whole vehicle depends on the maximum input torque of the transmission 150 (for example, the input torque upper limit of the single-shaft transmission 150a is 3000 NM, the upper limit of the input torque of the double-shaft transmission 150b can be up to 3600 NM); and the external characteristics of the hybrid vehicle (in parallel-hybrid mode) is constant torque operation (uniaxial 3000NM or biaxial 3600NM) in the engine 101 rotating speed high efficiency area (900 ~ 1650RPM), constant power operation (uniaxial 518kW or biaxial 605kW) in the engine speed range of 1650 ~ 2000RPM; at this time, the external characteristics curve of the hybrid vehicle is an ideal curve (constant torque before the base speed of 1550RPM and constant power after the base speed of 1550RPM), which is significantly better than that of all the traditional long-haul heavy-trucks of the current mass production commercial in the world, and can be called the-best-in-industry; Comparing the two external characteristics curves in Figure 4B, it is apparent that the external characteristics curve of the ACE heavy-truck (mode II-A or B) is obviously better than that of the direct-drive ACE heavy-truck (mode I); under the parallel-hybrid mode (A or B), the ACE heavy-truck can define the vehicle external characteristics response curve of the electronic accelerator pedal through software, according to the personal preference of the driver and the service requirement of the vehicle fleet, the vehicle propulsion performance response curve with different styles can be customized without changing any system hardware, the software is used for realizing the beneficial effects of "a thousand vehicle a thousand face" of the vehicle propulsion performance property and the drivability. The angle of the accelerator pedal represents the requirement of the driver for the vehicle driving torque, in combination with the external characteristics curve of the ACE heavy-truck 010 (Fig. 4B), the characteristics curve of the accelerator pedal of the ACE heavy-truck 010 can be determined by software, The curve is a function of two variables of the accelerator angle and the rotating speed of the input shaft of the transmission 150 (main) (in direct proportion to the vehicle speed; equal to the engine speed in parallel-hybrid mode); a matrix can be used for representing the discrete accelerator characteristics curve, the row number represents the discrete accelerator pedal angle, the column number represents the discrete rotating speed, the numerical value of the matrix element represents the relative torque value (torque value/external characteristics peak torque value); It is apparent that the throttle characteristics curve can be customized by software except for several default throttle characteristics curves (e.g., high performance curves or normal curves).

The supervisory control strategy of the hybrid vehicle can be divided into two types, the first type is a rule-based strategy (RB-Rule Based), comprising fuel-saving algorithms of various deterministic rules or fuzzy logic rules, the advantages are that it is easy to implement the RB rule at the vehicle-end in real-time, the vehicle-end calculation resource requirement is low, the algorithm convergence and robustness are assured, the disadvantage is that it is not adaptive to different application scenes, and it is difficult to ensure the result (such as RDE fuel consumption) to be globally or even partially optimal; the second type is the optimization based strategy (OB-Optimization Based), including various machine learning (ML) algorithms; in general, the OB algorithm has higher requirements on vehicle-end computing resources than that of the RB algorithm, and it is more likely to achieve global or local optimization results, but the OB algorithm usually encounters "Curse of Dimensionality", it is difficult to complete real-time computation at the vehicle-end and obtain the optimized result; at present, the most technical challenge and the one the most practical value are various OB algorithms capable of computing in real time at the vehicle-end and approaching to the global optimal solution; The disclosure uses various mainstream machine learning (ML) algorithms and ACE heavy-truck fuel-saving big data to obtain the beneficial effects that the global optimal solution can be approached with decreasing small error via vehicle-end computation in real time , and the detailed description to follow later. It should be emphasized that the above various supervisory control algorithms (RB algorithm or OB algorithm) of the hybrid vehicle are applicable to the four operation modes (II-A or B, III-A or B) of the ACE heavy-truck; however, in engineering practice, comparing the novel DPC strategy (II-B or III-B mode) of ACE heavy-truck with the prior art AEC strategy (II-A or III-A mode), the former has many significant advantages over the later in terms of the on-vehicle computing resource requirements (computing power and memory), the convergence and robustness , and the actual optimal result of the fuel-saving algorithm, and detailed description to follow.

Referring to Fig. 5A, the following describes how to utilize the fuel-saving data-set collected by the ACE heavy-truck 010 during the freight event and stored locally, after desensitization and encryption, the data is uploaded to the cloud computing platform 001 in time (minute or hour-level time delay) via the mobile internet 002 via the vehicle-mounted T-box (also called wireless gateway) 210 for subsequent analysis and processing. Cloud platform 001, through several preferred machine learning (ML) fuel-saving algorithms (supervised learning algorithm, non-supervised learning algorithm, reinforcement learning algorithm, deep reinforcement learning algorithm and so on), directs enough computing power of the public cloud or private cloud, leverages the increasingly accumulated ACE heavy-truck fuel saving data-set stored at the cloud platform, trains the cloud platform fuel-saving AI algorithm, sets up automatically and improves continuously the ML model based on the algorithm, searching for the optimal fuel saving control strategy; through the wireless mobile communication network, downloading the fuel consumption benchmark value and the default optimal fuel-saving control strategy aiming at the special path of a certain freight event to each ACE truck, then performing real-time supervisory control computation at the vehicle-end, each ACE heavy-truck makes full use of the collective wisdom of all ACE heavy-trucks, to optimize energy-saving and emission-reduction simultaneously; Each ACE heavy-truck can use its VCU 201 to perform vehicle-end AI inference & prediction operations, according to the local environment, road condition and vehicle operation dynamic data of the ACE heavy-truck, dynamically modifying the default optimal fuel-saving control strategy in real time, realizing the real-world fuel consumption minimization of the vehicle freight event.

In some embodiments, during ACE heavy-truck 010 travel, from the above gen-set (including engine 101, ECU 102, generator 110, MCU1 121), ePSD 123, clutch 111, traction motor 140 or 170, automatic transmission 150, TCU 151, brake resistor 131, and various configuration parameters or dynamic operation data of each main powertrain sub-system such as battery pack 130 and so on, can be measured and collected in real time by the "Internet of Things" composed of multiple sensors on the ACE heavy-truck 010 vehicle (preferably the measured and recorded refreshing frequency is more than 5 Hz), The above measurement data can also be stored in the memory of the microprocessor corresponding to the plurality of sub-systems dispersedly. The so-called "fuel-saving structured big data" (abbreviated as "fuel-saving data-set") means a multi-dimensional time series set of dynamic data for each subsystem running during ACE heavy-truck travel recorded "in association" with a certain "mapping relationship" on a computer readable storage medium.

By way of example, the ten nanosecond ultra-high precision timing of the vehicle-mounted satellite navigation unit (GNSS) 220 can be used as the only system reference clock for the ACE heavy-truck. The clock of each vehicle-mounted microprocessor, including the clock of the VCU 201, is calibrated repeatedly all the time (e.g., ten minute level intervals), using an ordered unique vehicle system run time sequence, the disclosure automatically labels and synchronizes the dynamic operation data of each sub-system of the ACE heavy-truck, which is convenient for splicing and combining the multi-dimensional time sequence and generating the fuel-saving data-set aiming at the special ACE heavy-truck and the special freight event. As shown in Figs. 1 to 5, the vehicle 010 comprises a VCU 201, an engine 101, an ECU 102, a generator 110, an electric power splitting device (ePSD) 123 (including motor controllers 121, 122, a voltage control switch 133, a double chopper 132 and so on), clutch 111, traction motor 140&170, battery pack 130, brake resistor 131, transmission 150, TCU 151, millimeter wave radar 230, communication box 210, map unit 240, satellite navigation unit 220 and other important sub-systems all have corresponding special microprocessor, memory, or sensor; These subsystems can measure, compute, and record or store the time series of the main dynamic operating data marked by the unique vehicle operating time of each subsystem in real time at the local vehicle-end within the measuring frequency ($f_m$) range of $1.0\,Hz < f_m < 50.0\,Hz$. For example, ECU 102 can measure and record dynamic operation data such as longitudinal vehicle speed, rotating speed of engine 101, torque, specific fuel consumption (BSFC) and so on at a measurement frequency of 5 Hz or more; MCU1 121 can measure and record the rotating speed and torque of the generator 110, the internal temperature of the generator, or the DC voltage or current of the generator controller 121, and the internal temperature and other dynamic data at a measurement frequency of 10 Hz or more; the ePSD 123 can measure and record the dynamic data such as the unique DC voltage function at the DC bus junction point X and the DC current functions of all branch circuits at the frequency of 10 Hz; the battery management module (BMS) of the battery pack 130 can record the DC voltage, current, temperature, SoC and other dynamic data of its output terminal at a measurement frequency of 10.0 Hz, at the internal battery cell and battery module level; MCU2 122 can compute and record the dynamic data such as the rotating speed and torque of the mechanical shaft of the traction motor 140, the internal temperature of the motor, the DC current and voltage with a frequency of more than 10 Hz; the chopper 132 can measure and record the DC voltage and current dynamic data of the high voltage end or the low voltage end with a measuring frequency of more than 10 Hz; the TCU 151 can record the dynamic data such as the gear, the input shaft rotating speed and the output shaft rotating speed of the transmission 150 at the measuring frequency of more than 2.0 Hz; The satellite navigation unit 220 can compute and record the longitudinal vehicle speed and acceleration, latitude and longitude, longitudinal grade, time service and other dynamic data of the vehicle at a measurement frequency of over 5 Hz; the millimeter-wave radar 230 can compute and record dynamic data such as absolute distance and relative speed between the ego-vehicle and the leading vehicle in the same road lane at a frequency of over 10 Hz; the voltage-controlled switch 133 can record the dynamic data such as the DC voltage and the current at a frequency of over 10 Hz. The sensor measurement data of each sub-system may be partially overlapped with each other, and the data overlapping redundancy helps to improve the fault tolerance and error correction of the whole system measurement.

Next, as shown in Fig. 1 to Fig. 5, the VCU 201 unidirectionally and uniquely marks the vehicle operation reference time sequence as the reference of all sub-system measurement data time sequence, through automatic assembly, integration, and after desensitization encryption, generating the " fuel-saving data-set " generated in the ACE heavy-truck 010 operation process and highly associated with the ACE heavy-truck vehicle energy-saving and emission-reducing control strategy; The fuel-saving data-set can be uploaded to the Internet cloud computing platform 001 for centralized or distributed storage via the mobile Internet 002 or the wired Internet in real time (sub-second-level time delay) or in time (hour-level time delay) for subsequent data analysis and processing.

For example, as shown in Figs. 1 to 5, the ACE heavy-truck fuel-saving data-set can be uploaded to the cloud computing platform 001 on the Internet in time (minute-level or hour-level time delay) through the communication box 210 and the cellular mobile communication network 002 for distributed or centralized storage for subsequent data processing. Alternatively, the data packet may be desensitized and encrypted prior to the upload to ensure data security, protect the privacy and commercial secret of the client (driver or fleet). The cloud platform 001 will gather the fuel-saving data-set generated when using the plurality of ACE heavy-trucks of the present disclosure. By using these ACE heavy-truck clusters to increasingly accumulate increased operating structured big data (i.e., fuel-saving data-set), through the preferred ML mode (supervised learning, non-supervised learning, reinforcement learning) and ML algorithm, allocating the corresponding cloud platform computer computing power, automatically training and continuously perfecting the ML model of the fuel-saving algorithm, searching for the best fuel-saving control strategy aiming at each ACE heavy-truck and each freight event, The real-world fuel consumption of the long-haul ACE heavy-truck is reduced by more than 25 % compared with the real-world fuel consumption of the modern diesel heavy-truck, and is basically decoupled from the driving level of the driver and the performance of the engine. The cloud 001 preferably adopts a commercial AI training chip, which is characterized by high-commonality, high-performance, high power-consumption and high cost; The vehicle-end preferably adopts AI inference chip, wherein it has high specialness, proper performance, low power consumption and low cost. the vehicle-end fuel-saving AI inference chip (such as contained in VCU 201) and the cloud platform fuel-saving AI training chip are linked in real time or in time, capable of according to the continuously changing ACE heavy-truck driving condition, searching the dynamic optimal fuel-saving control strategy of each second or each minute period (corresponding to the travelling distance of - meters); When the pulse-control engine 101 runs in high-state, the fuel consumption has no lag effect or memory effect, the microcosmic lowest fuel consumption (liter/one-hundred-kilometer ) can be obtained in each time period, the microcosmic lowest fuel consumption can be accumulated continuously, and the linear superposition can finally realize the macroscopic lowest fuel consumption of the ACE heavy-truck 010 in the whole freight event. when the VCU 201 commands the ACE heavy-truck 010 to run on the expressway ODD, the intelligent cruise control technology (iCC) is used for realizing the 1D longitudinal L1 automatic driving function, which can convert the ACE heavy-truck energy-saving and emission-reduction optimization problem into the equivalent narrow AI problem of the computer playing chess; The iMMH powertrain of the present disclosure, in addition to VCU 201, iCC function and fuel-saving AI algorithm, is equivalent to an unmanned industrial robot, which can be called "fuel-saving robot of ACE heavy-truck"; The ACE heavy-truck fuel-saving robot of the disclosure can surpass the human driver in the aspect of the real-world fuel consumption and emission index of the long-haul heavy-truck. At the same time, it is emphasized that the fuel-saving robot of the disclosure is only in charge of vehicle energy-saving and emission-reduction optimization, not in charge of vehicle propulsion performance driving task (DDT), will not replace the human driver, but is the reliable co-driver or assistant of the long-haul heavy-truck driver.

The starting point and the ending point of each cargo event (Freight Event) of the long-haul heavy-truck are clearly predictable, the total weight of the vehicle (including the cargo weight) is also known and is basically fixed during the freight event, with little temporary random changes; The mileage of each freight event is from several hundred kilometers to several thousand kilometers, and the time is from several hours to several days. Before each shipment incident, The fuel-saving robot (VCU 201) of the ACE heavy-truck 010 or the driver can automatically download the optimal fuel-saving control default (Default) solution aiming at the freight event journey and the industry optimal fuel consumption benchmark (L/100kM) aiming at the route through the communication box 210 or the mobile phone, as the initial value or reference when the vehicle VCU 201 fuel-saving machine learning algorithm implements the local real-time operation and dynamic adjustment; In this way, each ACE heavy-truck can take the collective wisdom of the ACE heavy-truck running in the same road section of the whole industry for me to enjoy, so as to reach the best fuel-saving effect. when the driver opens the ACE heavy-truck on the controlled-access expressway, the sub-mode of the iCC function can be selected (normal mode N/ fuel-saving mode Eco/high performance mode P), the intelligent cruise control function (iCC) is started, the VCU 201 replaces part of the driving function of the driver, realizing the one-dimensional longitudinal movement (speeding/cruising/sliding/decelerating) continuous automatic control (namely SAE L1 level automatic driving) of the heavy-truck, namely releasing the feet of the driver for a long time, reducing the labour intensity of long-distance driving of the driver, it also can realize the RDE fuel consumption and emission (CO2 and NOx) optimization (namely minimization) and decoupling with the driving level of the driver at the same time; It should be emphasized that at this time, the hand, eyes, ears and brain of the driver still need to work, which is responsible for the target and event detection and response (OEDR) around the vehicle, continuously controlling the steering or emergency braking of the vehicle in real time, and fully responsible for the driving safety of the heavy-truck. The other beneficial effect of the disclosure is that the fuel-saving robot realizes energy-saving and emission reduction simultaneous optimization of the ACE heavy-truck through iCC function, which can effectively solve the well-known long-term problem of the long-haul freight industry that the actual comprehensive fuel-consumption value (L/100km) can have a wide spread of 25% because of various human-related factors (freight route familiarity, driver's skill level, work attitude, fatigue and so on), ensure that every ACE heavy-truck and any driver can reach the lowest RDE fuel-consumption with high consistency when running on the same road section, and the bright-spot is very important for the transportation company to reduce the cost and increase the efficiency.

In summary, the intrinsic difference of the ACE heavy-truck 010 with intelligent cruise control (iCC) function in the disclosure compared with any fuel-electricity hybrid vehicle or traditional diesel heavy-truck with similar function in the prior art is that the former hihgly focuses on long-haul heavy-truck energy-saving & emission-reduction simultaneous optimization, effectively solves the world-wide problem recognized by the global automobile and transportation industry, that is, under the working condition of expressway, the fuel-electricity hybrid heavy-truck doesn't have significant fuel-saving effect compared with the traditional diesel heavy-truck, with RDE fuel-saving rate less than 10 % inthe long-haul application scene; the actual comprehensive fuel consumption is reduced by more than 25 %, at the same time, it also can significantly improve the vehicle power performance and brake effectiveness, and ensures that the ACE heavy-truck has multiple beneficial effects such as meeting the pollutant emission and carbon emission regulation metrics under the actual driving environment (RDE) of the three major global heavy-truck markets of China/US/EU, steadily and with long service life (700 thousand kilometers emission standard useful life). In other words, when the ACE heavy-truck 010 is running on the non-congested expressway, the driver can only be responsible for the object and event detection response (OEDR) around the vehicle in the dynamic driving task (DDT) and the lateral control of the vehicle, The heavy-truck fuel-saving robot realizes the vehicle 1D longitudinal L1 level automatic driving function through the intelligent cruise control (iCC) technical measure, and realizes the vehicle energy-saving and emission-reduction simultaneous optimization.

Under the intelligent cruise control (iCC) driver preset sub-mode (refers to normal mode N/ fuel-saving mode Eco/high-performance mode P; one-out-of-three), the heavy-truck fuel-saving robot, according to the performance characteristics and configuration parameters of the vehicle key sub-system, vehicle driving condition dynamic data, an electronic horizon 3D road priori map data, based on the hybrid vehicle supervisory control strategy and algorithm and vehicle-mounted real-time computing power, applies various control methods on the transient output power of the engine 101 such as serial-hybrid intelligent start-stop control (iSS), or parallel-hybrid intelligent power switching control (iPS), or intelligent mode switching control (iMS) to adjust dynamically the average power function of the battery pack 130 (equal to the difference function between the vehicle road-load average power function and the engine average power function), so that the battery pack 130 either operates stably in one of the three modes of charge sustaining (CS), charge depleting (CD), charge increase (CI) or switches smoothly among the three modes, under the constraint conditions of satisfying the requirements of vehicle power performance, active safety, RDE emissions meeting the mandatory emission regulations stably for a long time , the vehicle dynamic equation (1-1) and the series-hybrid equation (2-4) or the parallel-hybrid equation (3-3) are satisfied in real time, the real-world fuel consumption of the whole freight event is minimized, compared with the traditional diesel engine heavy-truck, the actual comprehensive fuel saving rate of the ACE heavy-truck can reach 30 %, and the pollutant emission can reach the standard stably for a long time in any RDE environment (EPA-2010, Euro-VI, GB-6).

The adaptive cruise control (ACC) function of the passenger vehicle or commercial vehicle in the prior art mainly provides the driving convenience, improves the active safety, and has small reduction (less than 2 %) to the actual comprehensive fuel saving rate of the vehicle; Although the "predictive cruise control" (PCC) of the conventional ICE heavy-truck focuses on the vehicle energy management control strategy, the actual fuel-saving effect is also less than 3 % because the vehicle energy cannot be effectively recovered by regenerative braking; at the same time, the modern diesel vehicle cannot guarantee that the actual pollutant emissions meet the regulatory standard stably for a long time under any RDE, especially under the challenging low-speed low-load working condition and idle speed working condition with a certain non-negligible probability; At present, no diesel vehicle has found a feasible technical solution (that is, high performance-to-cost ratio, production ready) in the three major global markets of US, Europe, can stably meet the current limits of pollutant emission regulations (EPA-2010, Euro-VI, and GB-6) for a long time under any RDE; there is total lacking of any practical technical solution with high performance-price ratio and ready for production that can satisfy the ultra-low emission (NOx further reduction of 90 %) California Omnibus Regulations (Omnibus Regulations) by 2027. The technical problem solved by the present disclosure is how to ensure that the RDE fuel-consumption and pollutant-emissions of the ACE diesel vehicle (especially the ACE diesel heavy-truck) are optimized at the same time, that is, the RDE emissions of vehicle CO2 and NOx are minimized at the same time. It will be apparent that the power performance of the vehicle generally refers to power performance of the powertrain (e.g., the iMMH powertrain of an ACE heavy-truck) to include engine 101, dual motors 110 & 140, mPSD 124, ePSD 123, battery pack 130, clutch 111, transmission 150, the power of the drive axle 160&180 subsystem; i.e., the total electromechanical torque or power of the powertrain) and not just that of the engine 101 alone; Although the fuel consumption and emission of the vehicle generally refers to the actual (RDE) fuel consumption and pollutant (NOx and PM) emissions of the powertrain, the battery pack has zero fuel consumption and zero emission and the electric energy stored are mostly directly or indirectly produced by the engine, which actually refers to the fuel consumption and emission of the engine 101.

The difference between the intelligent cruise control (iCC) of the present disclosure and the predicted cruise control (PCC) or the adaptive cruise control (ACC) in the prior art comprises: 1) the effective space-time range of the electronic horizon of the iCC can be more than 100 miles or one hour, the whole vehicle level supervisory control strategy (SCS), which comprises a sub-second level fast control loop (focusing on transient power and transient SoC), it further comprises a minute-level slow control loop (focusing on average power and average SoC); the effective range of the electronic horizon of the PCC in the prior art is only one mile level or one minute level, the whole vehicle SCS in the prior art only comprises a second-level fast control loop, and there is no minute-level slow control loop; 2) iCC can, according to vehicle configuration parameters (especially total weight), vehicle speed, weather and road condition, adjust the safe following distance $L_s$ (L1 > L2 > L3) automatically and dynamically, while the safe following distance of ACC is the pre-set static parameter and cannot be adjusted dynamically; The iCC technology of the disclosure is significantly better than the PCC and ACC combination in prior art in terms of RDE fuel-consumption and pollutant-emissions simultaneous minimization, freight timeliness, and braking performance.

The technical solution of the present disclosure is a set of multiple technical measures focusing on simultaneously optimizing the three key technical metrics of the ACE heavy-truck, power performance, fuel consumption, and pollutant-emissions; comprises a combination of at least two of the following technical measures, such as series-hybrid iSS, parallel-hybrid iPS, intelligent mode switching control technology (iMS), intelligent cruise control technology (iCC), engine clean cold starting technology (CCS), clutch-less gear shift control technology (CGS), predictive state of charge control technology (PSC), DPC engine adaptive pre-brake technology (APB), after-treatment system intelligent thermal management technology (iTM), engine binary cylinder deactivation technology (bCDA) and so on. Although several embodiments of the disclosure focus on long-haul ACE diesel truck, the iMMH powertrain technology is also suitable for various types and tonnage of road or non-road vehicles (passenger vehicle, light/mid/heavy commercial vehicle and so on) and various internal combustion engines (ignition type gasoline engine, compression ignition type diesel engine, ignition type, compression ignition type natural gas engine, hydrogen engine and so on); The combined technical measures can be adopted to reach the beneficial effects of optimizing fuel-consumption and pollutant-emissions of the vehicle under any RDE at the same time.

The embodiment of the converted ACE heavy-truck is as follows: 1) selecting a suitable second-hand truck (Used Truck) in USA; preferably satisfying the US Federal EPA-2010 emission regulation, and the total mileage (Milage) is less than 600,000 miles, second-hand diesel or natural-gas heavy-truck with good vehicle condition, the engine 101 can be used as long as its state is good, the engine displacement is 11-16 L, the transmission 150 must be an automatic mechanical transmission (AMT) in good state; if the transmission of the second-hand heavy-truck is a manual type, it needs to be changed into a re-manufactured AMT; if even the engine 101 and the transmission case 150 require a major overhaul (Powertrain Out-of-frame Overhaul), only the chassis and the cab of the whole vehicle are in good condition; 2) preparing a hybrid conversion kit (HCK), comprising a duo-motor 110&140 (low rotating speed high torque permanent magnet synchronous or AC asynchronous motor, rated power is 100 to 200kW), battery pack 130 (power type liquid cooling battery pack, total capacity 60 to 200kWh, can be composed of two groups of different electric core combination in parallel), clutch 111 (heavy wire control clutch), electric power divider (ePSD) 123, hundred-kilowatt level brake resistor 131; it further comprises a vehicle controller (VCU) 201, a satellite navigation unit (GNSS) 220, a wireless gateway 210, a millimeter wave radar 230, a map unit 240 (including national road ADAS three-dimensional electronic map), and various electromechanical accessories required for the modification of the key sub-system; 3) completing the conversion of the ACE heavy-truck 010 by the trained technicians who has obtained the required credentials for the conversion job. Regardless of the size of the displacement of the engine 101, the total continuous driving power of each converted ACE heavy-truck in the parallel-hybrid mode is greater than 500 kW, and the vehicle power performance and braking performance are significantly better than that of any diesel heavy-truck oftop-level configuration mass-production and commercial-use in the world today, and the actual (RDE) fuel-consumption (CO2) is reduced by 25 % to 30 %, and the RDE emission (NOx) is reduced by more than 75 %. The ACE heavy-truck technology of the disclosure is not only suitable for the new heavy-truck, but also capable of converting more than 20 % of the 2.5 million second-hand Class 8 heavy-trucks (more than 500,000 vehicles) in USA and Canada into converted ACE heavy-trucks with high power performance and ultra-low fuel-consumption and pollutant-emissions by 2027, with great economic and social benefits. The OEM new ACE heavy-truck can also be configured with a diesel engine with binary cylinder deactivation function (dCDA) and a prior art single-box integrated after-treatment system (EATS) with added intelligent thermal management function (iTM), be able to simultaneously meet the ACE heavy-trucks' CO2 limits of the US GHG-II regulations and the California ultra-low emission Omnibus regulations (NOx is 90 % less than the EPA-2010 limit) by 2027.

The machine learning (ML) is an important branch in the field of artificial intelligence (AI), and the machine learning (ML) algorithm is an data-driven end-to-end optimization algorithm; under the condition of sufficient data, the ML algorithm can achieve real-time global optimal solution in the engineering sense theoretically; However, during the engineering application of the hybrid vehicle supervision control strategy, since various optimization algorithms (including ML algorithms) will encounter "Curse of Dimensionality", it is difficult to obtain a complete learning data-set, and vehicle-end computing resource limitation and so on, in the existing technology, the supervisory control strategy of the hybrid vehicle can only realize online real-time (computing time delay sub-second level) local optimization or offline non-real-time (computing time delay exceeding minute level) global optimization; It is difficult to approach the final technical target of global optimal solution with continuously shrinking small error in real-time (sub-second level computing time delay).

If machine learning is a science, then the "feature engineering" of the input data-set is the art in this science; The feature engineering mainly refers to the discovery of an independent variable X (that is, useful data attribute) with obvious effect or physical meaning that has significant influence on the dependent variable Y (such as the fuel-consumption cost function, NOx emission cost function, the loss function of the operation of the battery pack and so on of the ACE heavy-truck); the purpose of the feature engineering is to find or construct the "main feature" to simplify the machine learning (ML) model, avoid or slow down the dimensional disaster, make the ML model training task to be half the effort and twice the success, the ML model to have strong generalization ability and excellent prediction performance in inference stage; otherwise (poor choice of the main feature), the ML model training is double the effort and half the success, the over-fitting is easy to occur, the model inference generalization ability is weak, the prediction performance is not good; The main methods of the feature engineering comprises feature selection, feature extraction, and feature construction, from easy to difficult in sequence. If there is no special indication in the present disclosure, "feature engineering" mainly refers to the above meaning in the field of machine learning, whereas "technical feature" mainly refers to the minimum technical unit (device, method and sub-system) capable of relatively independently performing a certain technical function and generating relatively independent beneficial technical effects at each system layer in the present disclosure (such as ePSD and other sub-system layers, iMMH powertrain layer, the ACE heavy-truck layer), and one skilled in the art can judge the meaning according to the context without generating ambiguity.

The energy-saving and emission-reduction optimization problem of the ACE heavy-truck can be solved by means of an increasingly mature machine learning paradigm (Paradigm). Fig. 5B is a block diagram of the ML system of the ACE heavy-truck (in this disclosure, ML mainly refers to supervised learning SL, and also includes unsupervised learning UL, but generally does not include reinforcement learning RL unless specified explicitly), including the virtual module chain combination at the vehicle-end focusing on real-time application of the ML model (410, 420, 430B, 440, 450) and the virtual module chain combination at the cloud-end focusing on off-line ML model training (401, 402, 403, 430A); wherein the input data-set 410 comprises configuration parameters and dynamic running data of the ACE truck; the vehicle-end pre-processing module 420 performs various data processing procedures (particularly including feature engineering) on the vehicle input data-set 410, and then delivers the feature set to the machine learning (ML) model 430B (ML model for short) to complete the vehicle-end real-time inference or prediction, then the computed result ("output result") transmitting to the output module 440; the output module 440 converts the output result into the instructions of each sub-system of the ACE heavy-truck to be executed by the execution or control module 450; It should be emphasized that the modules 420, 430B, 440, 450 and so on are not hardware physical modules, but should be understood as software virtual modules for converting the input data corresponding to each module into the output result thereof; The module chain combination (410, 420, 430B, 440, 450) represents the key step of implementing ML model real-time inference or prediction at the vehicle-end.

The configuration parameters of the vehicle are constants, mainly referring to the configuration parameters or performance parameters of the vehicle main subsystem, such as the displacement and universal characteristics curve of the engine 101, the universal characteristics curve of the motor 110&140, the capacity and weight of the battery pack 130 and its charging and discharging characteristics curve, the maximum input torque and various gear ratios of the transmission 150, the wind resistance coefficient and the wheel resistance coefficient of the ACE heavy-truck 010, etc.; all these configuration parameters may be stored in at least one microprocessor at the vehicle-end (201, 102, 151, 121, 122, etc.); the dynamic operation data of the vehicle is a time variable (most of the dynamic data is directly collected by a large number of sensors at the vehicle-end or is computed by the microprocessor in real time), and the feature set obtained after the "feature selection" operation of the pre-processing module 420 at least comprises the following five time-varying functions: a longitudinal vehicle speed function (vehicle speed for short), an engine flywheel rotating speed function (engine speed for short), a vehicle geographical location function (longitude and latitude; vehicle location for short), a road longitudinal grade (road grade for short) at the gravity center point of the vehicle, and a battery pack SoC function (SoC for short); many other vehicle operation data (such as the temperature function from various temperature sensors at the vehicle-end and the pressure function in the pneumatic brake air tank and so on) have very little correlation with the technical problem of solving vehicle energy-saving and emission-reduction optimization ; in order to highlight and simplify the technical problem, excluding these unrelated or redundant variables from the selected set of data features of the present disclosure; However, these operating data are highly relevant to the different technical problems of "vehicle intelligent operation maintenance". Obviously, the dynamic running data of the ACE heavy-truck are labelled data (by the unique system time clock).

After the "feature extraction" operation of the pre-processing module 420, the following features can be obtained: 1) according to the input data-set and the vehicle dynamic equation set (1-1, 1-2, 1-3, 1-4, 1-5), respectively calculating each transient power item of the vehicle at time t, comprising wheel resistance power, wind resistance power, longitudinal grade power, acceleration power, and road-load power, obviously the road-load power is equal to the algebraic sum of the former four powers; the vehicle transient road-load power function is one member in the data feature set, which is an important feature; 2) according to the two variables of the parking space and the longitudinal grade, combined with the road three-dimensional electronic map stored by the map unit 240, can obtain the road longitudinal grade function distribution in the electronic horizontal line of the vehicle (abbreviated as the "horizontal line longitudinal grade distribution"); Different from the unique one-dimensional variable of the vehicle speed function or the positioning function, at any time t, the longitudinal grade distribution of the horizon is not a determined function value, but is within a section of the longitudinal appointed distance in front of the vehicle (preferably the length range of the electronic horizon: 45 to 90 miles) known and determined road longitudinal grade spatial distribution (i.e., two-dimensional variable), which is essentially a time-varying function with the dynamic positioning of the vehicle as an independent variable; It should be emphasized that the horizontal line longitudinal grade distribution time-varying function is one of the core input variables of the ACE heavy-truck intelligent predictive supervisory control strategy (iPSC) of the disclosure, which is an important feature.

The pre-processing module 420 can also perform a novel "feature construction" operation, and the main operation steps are as follows: according to the transient state SoC function FSoC (t) in the input history data-set, the transient state road-load power function Pv (t) and the rolling time average equation (MTA), respectively calculating the average SoC function of the ACE heavy-truck at t time and an average road-load power function then dynamically predicting the future horizon vehicle speed function track (namely two-dimensional variable) and the track of the pulse-control engine duty-cycle function, and according to the dynamic equation (1-1), the series-hybrid equation (2-4), the parallel-hybrid equation (3-3), equation (MTA) and so on online calculating (second level time delay) level line load power function distribution (transient or average), level line pulse-control engine average power function distribution, level line average SoC function distribution and so on two-dimensional variable; the horizontal line average SoC function distribution, the horizontal line average road-load power function distribution and the horizontal line average engine power function are the members in the feature set; It should be emphasized that the horizon average engine power function distribution and the average road-load power function distribution are the core input variables of the ACE heavy-truck intelligent predictive supervisory control strategy (iPSC) of the disclosure, especially two key control variables of the vehicle predictive state of charge control slow control loop, is an important feature (see average SOC control C2 layer in Fig. 3); the average SoC function of the horizon is distributed as the key response variable of the slow control loop. It should be emphasized that one of the distinguishing technical features of the disclosure is to add three novel data features of horizon longitudinal grade distribution, average road-load power and average SoC in the data feature set by the technical means of feature engineering; In addition, the various feature engineering operations of the above pre-processing module 420 are applicable to the analog-controlled ACE trucks (Mode II-A and III-A) or the pulse-controlled ACE trucks (Mode II-B and Mode III-B). The duty-cycle time-varying function (see Fig. 6B) of the pulse-control engine can also be regarded as a data feature by the feature construction operation for the pulse-control ACE heavy-truck. In the disclosure, the "power function distribution" of the horizon and the "power function track" of the horizon are synonyms, which both represent the projection curve of the power function along the time axis or the longitudinal distance axis in the range of the hour-level or hundred-kilometer-level electronic horizon in front of the vehicle, belonging to the two-dimensional variable; "Function" refers to a function value at a specific space-time point, which belongs to a one-dimensional variable; If the power function value of a space-time point is similar to a picture, the power function distribution in the horizon may be similar to a video segment, consisting of at least 27 frames of sequentially arranged and associated pictures per second.

The vehicle-end data-set ("data segment" - Data Episode for short) of each freight event of the ACE heavy-truck can be uploaded to the cloud platform 001 (see Fig. 5A) for long-term storage and subsequent processing through the communication box 210 in time (hour-level time delay), The data segments of different freight events can be regarded as random variables (IID-Independent & Identics; the cloud platform training data module 401 selects the data segments with diversified representative boxes from the data segment cluster (Ensemble) of multiple ACE heavy-trucks at the cloud platform, and sends the training data-set to the cloud platform pre-processing module 402, the cloud platform 402 module implements the feature engineering in the method steps similar to the vehicle-end pre-processing module 420 to obtain the feature set of the training data-set; The objective function in the module 403 mainly refers to the cumulative fuel consumption (liter or kilogram) of the engine 101 from the starting point of the freight event to the time t or the fuel consumption (FC) per unit distance; RDE fuel consumption can be computed according to the universal characteristics curve of the engine 101, the rotation speed time-varying function of the engine in the whole freight event and the track of the transient power time-varying function (Trajectory) (see equation (SC-1 to 3)); When the ML model (430A) is established at the cloud, the module 403 has multiple mature ML algorithms (supervised learning algorithm or unsupervised learning algorithm) for selection; the module 430A uses the ML algorithm provided by the module 403, the huge arithmetic of the cloud computing platform 001, and the training data feature set provided by the module 401 and the module 402 to dynamically adjust the parameter of the ML model, and autonomously learns and establishes the ML model of ACE heavy-truck energy-saving and emission-reduction; Then, the vehicle-end module 430B can download the trained ML model from the cloud platform module 430A in non-real-time, perform real-time inference or prediction for the fresh input data-set, and then send the output result to the output module 440; With the continuous accumulation of the actual operation data of the multiple ACE heavy-trucks at the cloud platform, the training data of the module 401 can be continuously increased, the module 401 can also try different ML algorithms, and the module 430A can continuously improve the ML model of the ACE heavy-truck for energy-saving and emission-reduction through continuous iterative learning; In other words, the energy-saving and emission-reduction optimization of the ACE heavy-truck 010 can be fully automatically controlled by the ML model, which is independent of the driving level and style of the human driver, at this time, each ACE heavy-truck can fully utilize the collective experience of all ACE heavy-truck and the super human wisdom of the ML model in the energy-saving and emission-reduction optimization.

Referring to the series-hybrid equation (2-4) or the parallel-hybrid equation (3-3), the core technology of the hybrid vehicle supervisory control strategy is how to dynamically allocate the road-load power requirements of the vehicle to the engine and the battery pack (including the motor); The supervisory control strategy of the analog-controlled (AEC) hybrid vehicle mainly takes the charging and discharging power of the battery pack 130 as the control variable (i.e., the independent variable), the power of the AEC engine as the controlled variable (i.e., the dependent variable), the distribution of the operating working condition point of the AEC engine is still the surface working condition, the time ratio (i.e. probability) of the low-efficiency working condition of the AEC engine (the torque or power loading rate is less than 30 %) is obviously higher than 2 %, and sometimes can be as high as 20 % +; The monitoring and control strategy of the analog-controlled (DPC) hybrid vehicle of the disclosure completely takes the power of the AEC engine 101 as the control variable (i.e., independent variable), the charging and discharging power of the battery pack 130 as the controlled variable (i.e., dependent variable), The working condition distribution height of the AEC engine is simplified into at least two line working conditions (high-state or low-state) of the high-efficiency area, no matter how the ACE heavy-truck operation working condition is, the time ratio (probability) of the low-efficiency working condition (torque or power loading rate is less than 30 %) of the AEC engine can be ensured to be less than 2 %.

In Fig. 5B, the output result may refer to the three-dimensional spatial distribution of the torque function T (w, t) or the power function P (w, t) of the engine 101 over the two independent arguments of the freight time t and the engine speed w during a complete freight event; for the ACE heavy-truck of the single driver, the actual driving time of only 11 hours is allowed 24 hours per day in Europe and US, the freight time refers to the accumulated effective driving time of each working day of the ACE heavy-truck, and does not include the time of parking and resting or waiting for loading and unloading goods; the effective change range of the freight time t is [0, 39600] seconds, the effective change range of the engine rotating speed w is [0, 2500] r/min, the flywheel rotating speed sensor configured by the engine 101 can accurately measure the rotating speed w (relative precision is better than 0. 1 %) in real time; The torque or power of the engine is a random variable, ranging from [-0.15 peak, peak] (regardless of engine braking). for the analog-controlled ACE heavy-truck (mode II-A or III-A), the output result is the optimization solution of the power function P (omega, t) of the engine 101 aiming at a certain freight event, corresponding to the complex surface working condition of the AEC engine , The time trace of the power function is a second-order graded non-negative analog function (regardless of engine braking); According to the series-hybrid equation (2-4) or the parallel-hybrid equation (3-3), the (charge-discharge) power function of the battery pack 130 can be easily obtained, so as to control the motor 110 or 140. for the pulse-control ACE heavy-truck (mode II-B or III-B), the output result is the optimized solution of the power function P (w, t) of the engine 101 for a certain freight event, corresponding to at least two preset working condition lines (II-B) or working condition points (III-B), at this time, the optimal solution (that is, the RDE fuel consumption is minimized) is actually the optimal solution of the dimensionless duty-cycle function; The time trace of the power function is a bipolar non-constant amplitude pulse width modulation sequence function (regardless of engine braking); According to the series-hybrid equation (2-4) or the parallel-hybrid equation (3-3), the (charge-discharge) power function of the battery pack 130 can be easily obtained, so as to control the motor 110 or 140. After the output module 440 transmits the optimization to the execution module 450, it is decomposed into an engine 101, a generator 110, a traction motor 140, a battery pack 130, a clutch 111, The transient control instructions of the transmission 150 or the like subsystem are executed by a data bus (e.g., a CAN bus) of the vehicle (see C4 component control in Fig. 3). The output result also can be the RDE fuel consumption (that is, the RDE fuel consumption of unit mileage) of ACE heavy-truck finishing a certain freight event; per one-hundred-kilometer ; See equation (SC-1 ~ 3); The energy-saving and emission-reduction optimization problem of ACE heavy-truck is solved by supervised learning mode, belonging to the Regression analysis of prediction continuous result (RDE fuel consumption), wherein the characteristic set is high-dimensional prediction variable (namely input variable), The output result is a continuous response variable (RDE fuel consumption).

In addition to the above supervised learning or non-supervised learning paradigm, Reinforcement Learning (RL) is also an effective method for solving the ACE heavy-truck energy-saving and emission-reduction optimization problem, RL solves the problem of learning useful knowledge from past experience, and it is used for the problem of the sequential decision in the future; The energy-saving and emission-reduction optimization problem of ACE heavy-truck is a typical sequential time decision problem, which satisfies the condition (no memory) of Markov decision (MDP); The ACE heavy-truck energy-saving and emission-reduction optimization technical problem to be solved by the disclosure has the following five characteristics: the scene is fixed (road long-haul), the target is clear (RDE fuel consumption is minimized, RDE emission is stable and meets the standard), the data is mass (fuel-saving data-set), the process is complex (belongs to the real-time global optimization control of multi-variable non-linear system, the human driver cannot do it, the RL algorithm is top beam), The disclosure has high degree of freedom (large selection space and less limitation) and is very suitable for solving the problem by the classical RL algorithm or deep reinforcement learning (DRL) algorithm; the RL algorithm can be iterated and evolved continuously, the real-time robust calculation is realized at the vehicle-end, and the final result is infinitely close to the real-time global optimal solution; The computer can play I-go, AI can be better than human. Fig. 5C is a block diagram of an reinforcement learning system of an ACE heavy-truck; wherein the agent 460 (also called agent, Agent) is actually the software implementation (namely learner or decision maker) of the hybrid vehicle monitoring management control strategy, the agent comprises at least one of the following three elements, strategy function/value function/environment model; Environment 480 (Enviroment) is composed of ACE heavy-truck 010 (including human driver (L0 ~ L2) or AI driver (L3 ~ L5)), selected route of freight event, road traffic state near the vehicle, The environment is fully observable, and its state space is limited in nature. aiming at each freight event, the time trace of the speed function or locating function of the vehicle reflects the driving intention of the driver (that is, the driver directly actively controls; an independent variable belonging to the environment); The policy 470 (Policy) is that the agent 460 selects the thinking process of the action vector according to the state vector of the current environment 480, that is, the mapping relationship from the environment state space to the action space. In the disclosure, the value function and the value function are synonyms, the action and action are synonyms; A or a represents an action, S or s represents a state, and R or r represents a reward.

Each freight event has clear space-time starting point and end point, so the machine learning (including reinforcement learning) is used for solving the energy-saving and emission-reduction optimization problem of ACE heavy-truck of long-haul, which belongs to the Episodic Task; The particle size of freight events is generally per working day. There are clear regulations in USA, and drivers can drive for up to 11 hours per day (24 hours). the machine learning problem of the target (Goal) is to ensure the vehicle performance (power/brake) industry leading and RDE pollutant emission stable standard under the premise, realizing ACE heavy-truck 010 the RDE fuel consumption minimization; Preferably, the main line target function is that the ACE heavy-truck finishes the RDE (actual) fuel consumption (L/100kM) of the engine 101 in a certain freight event, obviously the lower the real-world fuel consumption is, the better; At present, the annual average real-world fuel consumption (FC) probability (95 % +) of the North American long-haul heavy-truck is obviously higher than 23.5 liters/100 kilometers (corresponding to fuel economical efficiency FE: 10.0 miles/gallon); The average fuel economy (FE) of North American Heavy-truck 2020 was 6.5 miles per gallon (corresponding to fuel consumption FC: 36.2 liters per one-hundred-kilometer ); RDE fuel economy of long-haul heavy-truck is better than 10.0 miles per gallon (fuel consumption is less than 23.5 liters per one-hundred-kilometer ), which is the energy-saving and emission-reduction target pursued by the North American heavy-truck industry for nearly 20 years. At present, only 2 % of the drivers of the long-haul diesel heavy-truck at the top of the industry can stably realize FE=10.0 miles per gallon when the total weight of the vehicle is less than 32 tons (the statutory upper limit is 36 tons); The iMMH powertrain technical solution of the disclosure enables the drivers of most (95 % +) long-haul ACE heavy-truck to stably realize FE=10.0 miles/gallon.

When the reinforcement learning mode is adopted to solve the vehicle energy-saving and emission-reduction optimization problem, the state space, the action space and the reward function are designed to directly determine whether the RL algorithm can converge, converge speed, robustness and final performance; In order to let the agent learn the knowledge we hope to learn, the premise is to input the state information in the correct form; The following is a Description of how to manually define and design the state space, the action space, and the reward function, respectively, to achieve the beneficial effect of half-effort.

It is preferable that the time step A is one second for solving the MDP problem, and the time step for each freight event (working day) is ten thousand. With reference to the operation of the feature engineering, the state vector of the environment 480 can be preferably designed as a six-dimensional vector, including a vehicle speed, an engine speed, a transient state of charge, a horizontal line longitudinal grade distribution, an average road-load power, an average state of charge and so on. obviously the state space is continuous space; the continuous state space can be converted into discrete space, at this time, additional discrete error can be introduced; The state space is large, and it is difficult to reduce dimension or simplify. the vehicle speed and the engine speed component in the state vector are from the vehicle-mounted sensor (wheel speed sensor, GNSS 220 and so on), the transient state SoC component is the original data from the BMS (battery management system) in the vehicle-mounted battery pack 130, and the other three components (horizontal line longitudinal grade distribution, average road-load power, average SoC) are operated by using characteristic engineering (characteristic extraction, The novel state feature generated after the secondary processing calculation of the input original data is one of the disclosure points of the disclosure. The horizon longitudinal grade distribution contains ACE heavy-truck 010 dynamic positioning attitude information (latitude and longitude, longitudinal grade) from a vehicle-mounted navigator (GNSS 220).

Aiming at the energy-saving and emission-reduction optimization problem of the ACE heavy-truck 010, the action vector of the agent 460 can be preferably designed as a one-dimensional vector, that is, the torque time-varying function of the engine 101, which is actually the active selection of the agent 460 to the transient working condition point of the engine 101. In response to any state vector st, the agent 460 selects the action at according to the policy 470, and the environment 480 gives the reward rt and transfers to the next state $s_{t+1}$. Physical, the rotational speed of the engine 101 is a dependent variable and cannot be directly controlled, but is indirectly controlled by the transient torque and mechanical load of the engine (the relative error of the torque or rotational speed control is 3 %); however, the rotating speed can be accurately measured in real time by the rotating speed sensor at the engine flywheel (the relative precision is better than 0.1 %); the torque of the engine is an independent variable, which can be directly controlled in real time by the fuel injection amount of the engine (the relative precision is 2-4 %); The rotation speed and the torque of the dual-motor 110 or 140 can be directly controlled by the controller 121 or 122, respectively, and the vector-controlled AC motor is obviously better than the engine in terms of the relative precision and the response speed of the rotation speed or the torque control; In the present disclosure, the total peak power of the double motors 110&140 or the battery pack 130 is also obviously higher than the peak power of the engine 101; Once the hybrid vehicle has selected action at, the battery pack 130 (via the dual motors 110& 140) can meet the vehicle dynamic equation (1-1) plus a series mix equation (2-4) or a parallel mix equation (3-3) in real time; In other words, aiming at the transient working condition of the ACE heavy-truck 010, once the agent 460 actively selects the transient working condition of the engine 101, the transient working condition of the battery pack 130 is also uniquely determined. and can ensure that the ACE heavy-truck can satisfy the vehicle dynamic equation (1-1) and the series-hybrid equation (2-4) or the parallel-hybrid equation (3-3) in real time; It should be emphasized that the respective transient operating conditions of the dual motors 110 and 140 can still be adjusted under a mixed architecture (mode II-A or II-B), but the combined operating conditions of the dual motors are uniquely determined.

The torque of the analog-controlled (AEC) engine (II-A or III-A mode) is continuously adjustable, at this time, the action space is a continuous space; the continuous space can be discretized, the torque control relative error of the modern heavy-truck internal combustion engine is higher than 2.5 %, assuming that 2.5 % of the engine peak torque is the discretized particle size, then in the discrete space, the torque value of the AEC engine at a certain rotating speed is one selected from forty-one (see Fig. 6C); The selectable torque of the pulse-control (DPC) engine (II-B or III-B mode) is discrete, and the value of the torque at a certain rotating speed is one selected from two (high-state and low-state; the torque value is the total probability of the upper state or the lower state (that is, a certain value between the high-state and the low-state), and the total probability is less than 3 %; Obviously, the action space of the pulse-controlled engine is greatly simplified than the action space of the AEC engine (two-in-one-in-one-in-one-compared-four-in-one), and the time ratio (that is, probability) of the pulse-controlled engine running in the high-efficiency area of the engine is also obviously higher than that of the AEC engine , Therefore, the RL algorithm of the pulse-control engine is more efficient than the RL algorithm of the AEC engine (the convergence speed is fast), more robust (stable anti-noise), and the final performance is better (the real-world fuel consumption is lower). It should be emphasized that the pulse-control engine (mode II-B or III-B) is used to replace the AEC engine (mode II-A or III-A) to greatly simplify the action space, so that the RL algorithm has the beneficial effect of half-effort and half-effort, which is one of the disclosure points of the disclosure;

The design of the reward function (Reward) is an extremely important ring in the RL application, by materializing and quantizing the target of the RL task, the reward signal is just like a special language, realizing the communication between the target and the RL algorithm, The algorithm engineer (that is the inventor) takes the role of translation, the good or bad translation represents the understanding depth of the task logic, determines whether the agent can learn the expected skill, and directly influences the convergence speed, robustness and final performance of the RL algorithm; The design of the reward function is associated with the design height of the state space, which should be comprehensively considered.

Aiming at the energy-saving and emission-reduction optimization problem of the ACE heavy-truck, the preferable design of the instant reward function comprises a main reward item (Main Reward) $R_m$ and an auxiliary reward item (Auxiliary Reward) $R_{ax}$, referring to the following formulas (RL-1a to 1c); wherein $f_{bsfc}$ is the brake-specific fuel consumption (gram/kilowatt hour) of the engine, which is determined by the engine universal characteristics curve; $\omega$ (t) is the rotating speed time-varying function (r/min) of the engine, the rotating speed sensor real time accurately measuring (precision 0. 1 %); $T_{eg}$ is the transient torque (in NM) of the engine at a certain rotational speed of a specific time, and is dynamically controlled by the ECM 102 of the engine 101 by controlling the fuel injection amount of each cylinder accurately in real time (the control precision is about 3 %); $K_{FC}$ is a dimensionless constant, its specific value is determined by the three items of $f_{bsfc}$, $\omega$, $T_{eg}$; $\Delta$ is the time step of reinforcement learning, preferably set at one second; It is obvious that $R_m$ is essentially the negative value of the fuel-consumption amount of the transient state (from t-$\Delta$ to t) generated by the engine 101 taking action at in the environment state st; $C_{bat}$ is the aggregate rated capacity (in kilowatt-hour) of the battery pack 130; $F_p$ is the loss function of the battery pack (see Fig. 8B, a dimensionless number); $K_{FC}$ is a settable fuel-electricity conversion coefficient (gram/kilowatt hour; a positive real number), its physical meaning is the equivalent fuel-consumption amount generated by the loss function due to the transient SoC function beyond the high-efficiency area of the battery pack 130 in the environment state $s_t$ adopting action $a_t$, ; the larger the $K_{FC}$ value is, the higher the penalty (that is, the higher the equivalent fuel consumption) when the battery pack operates outside its high-efficiency area; different from many normal reward functions being sparse and having high feedback time delay, the reward function of the present disclosure is very dense; in essence at each step of the MDP, the environment 480 can provide immediate and definite positive/negative feedback to the agent 460 (reducing the accumulated fuel consumption of the engine 101 as much as possible AND ensuring the long-term stable operation of the battery pack 130 in its high-efficiency area), which effectively reflects the internal logic of the task target, and is helpful for the agent 460 to combine the RL algorithm to efficiently find the best strategy or the best value function to realize the target. The total return $G_t$ (Return) is defined as the accumulated discounted future reward at time t, wherein T represents the end time of the freight event, see formula (RL-2); The goal of the maximum return RL task for each episode of task is that the agent 460 automatically finds the optimal strategy 470 by continuously interacting with the environment 480 to realize the maximum return (i.e., the RDE fuel consumption of each freight event is minimized); Preferably, the discount factor $\gamma$ in reinforcement learning is preferably set in a range of greater than 0.99 and less than or equal to 1.0; It means that we are not very concerned about the size of the instant fuel consumption reduction, but are more concerned about the minimization of the RDE fuel consumption (i.e. maximization of the overall return) of the entire freight event. Because the environment 480 is a MDP, $R_t$, $R_m$, $R_{ax}$, $G_t$ are all random variables. It should be emphasized that the dimension of the engine fuel consumption amount is actually gram, representing the absolute weight of the engine fuel consumed; For convenient comparison of the fuel-consumption amount of different freight events or different vehicles, the fuel-consumption amount of different freight events of the vehicle can be easily converted into the single metrics of the fuel consumption (the dimension is L/100kM; fuel consumption of vehicle unit mileage); minimization of fuel consumption amount is equivalent to minimization of fuel consumption; Sometimes, the fuel consumption amount is also loosely called fuel consumption.

$$R_t = R(s_t, a_t) = R_m(s_t, a_t) + R_{ax}(s_t, a_t) \qquad\qquad (\text{RL-1a})$$

$$R_m(s_t, a_t) = \quad (-1)\int_{t-\Delta}^{t} K_{FC}\, f_{bsfc}\big(\omega, T_{eg}\big)\, \omega(t)\, T_{eg}(\omega, t)dt \qquad \text{(RL-1b)}$$

$$R_{ax}(s_t, a_t) = \quad (-1)\, K_{e2f}\, C_{bat}\, F_p(SoC(t)) \qquad\qquad \text{(RL-lc)}$$

$$G_t = [\textstyle\sum_{k=0}^{T-1}\gamma^k R_{t+k}\,|\,S_t = s, A_t = a] \qquad\qquad \text{(RL-2)}$$

The thinking process of how the action is selected by the agent 460 according to the state of the environment 480 is referred to as the policy 470 (Policy), and the policy $\pi(a|s)$ is essentially the mapping from the environment state S to the action space A; for the AEC engine (complex surface working condition; the continuous action space), strategy $\pi$ (a | s) is a probability density function of analog slow change and irregular shape; referring to the curve of a) analog electric control engine (AEC) dashed line in Fig. 6C, obviously the area under the curve, where the relative torque is between 0 % and 100 %, is equal to 1; The operation probability of the AEC engine in the combustion low-efficiency region (relative torque of 0 % to 30 %) is obviously higher than 3 %, and can be even higher than 20 % under certain vehicle working conditions; whereas for the DPC engine (simple working condition lines; discrete action space, either-or), strategy $\pi$ (a | s) is greatly simplified as a probability density function with two peaks near the relative torque - 3 % (low-state) and + 80 % (high-state), referring to the curve of b) digital pulse-control engine (DPC) solid line in Fig. 6C; It is apparent now that the valid relative torque range is from -5 % to 100 %, and the area under the curve is equal to 1; It should be emphasized that no matter what the actual working condition of the ACE heavy-truck 010 is, the total probability of the high-efficiency operation of the DPC engine 101 (that is, the probability of either the high or the low-state) is greater than 97 %, the total probability of the bidirectional switching between the high-state and the low-state is less than 3 %; during the switching-up (from low-state to high-state) or switching-down (from high-state to low state), the relative torque value can be considered to be evenly distributed between -3 % and 80 %, therefore the probability of the DPC engine running in the combustion low-efficiency area (0 % to 30 % of the relative torque) is less than 1.1 %; Obviously compared with the AEC engine of the prior art , the DPC engine of the present disclosure has simpler policy, higher probability of high-efficiency operation time, lower probability of low-efficiency operation time, faster convergence , stronger robustness, and better final result (that is, minimum fuel consumption) of the energy-saving & emission reduction RL algorithm; The engine speed time-varying function is one component of the state vector, and the optimal strategy of the DPC engine ensures that the RDE fuel consumption of the ACE heavy-truck is the lowest, which is essentially a specific optimal duty-cycle function (see Fig. 6B).

The formula (RL-3) defines the state value function (State Value Function) $V_\pi(s)$, wherein $E_\pi$ represents the probability expectation of the random variable $G_t$ under the policy $\pi$; The formula (RL-4) defines the action-value function (State-Action Value Function) $Q_\pi$ (s, a); the relationship between the state value function V and the action value function Q is defined by the formula (RL-5); the formula (RL-8) defines the best state value function V*; formula (RL-7) defines the best action value function Q*; the formula (RL-6) defines the best strategy $\pi$*; Obviously, if the agent can find and execute the best (or optimal) strategy, it can ensure that the best value functions V* and Q* can be realized. The so-called environment model comprises two parts of both the state transition probability and the reward function, whereas formula (RL-9) defines the state transition probability function, and formula (RL-10) defines the reward function; The establishment of the environment model with high fidelity and low error is also a challenging task, and some environments cannot establish the math model; and the environment model is highly related to the task target; once the target is changed, the environment model is changed, with multiple published RL algorithms (RL algorithm based on model or RL algorithm without a model) to select to solve the best strategy or best value function in the disclosure; In general, RL algorithm based on model has high computing efficiency but low generality, RL algorithm without model has high commonality but low computing efficiency.

$$V_\pi(s) = E_\pi[G_t|S_t = s] = E_\pi[\textstyle\sum_{k=0}^{T-1}\gamma^k R_{t+k}|S_t = s]\,;\ For\ s \in S \qquad \text{(RL-3)}$$

$$Q_\pi(s,a) = E_\pi[G_t|S_t = s, A_t = a] = E_\pi[\textstyle\sum_{k=0}^{T-1}\gamma^k R_{t+k}|S_t = s, A_t = a]\,;\ For\ s \in S, a \in A \quad \text{(RL-4)}$$

$$V_\pi(s) = \textstyle\sum_{a \in A_t} Q_\pi(s,a) \qquad\qquad\qquad \text{(RL-5)}$$

$$\pi^*(s) = argmax_\pi\, V_\pi\,(s) \qquad\qquad \text{(RL-6)}$$

$$Q^*(s,a) = max_\pi\, Q_\pi(s,a) \qquad\qquad \text{(RL-7)}$$

$$V^*(s) = max_a \quad Q^* (s,a) = max_\pi \quad V_\pi (s) \qquad \text{(RL-8)}$$

$$P_{ss'}^a = P[S_{t+1} = s' | S_t = s, A_t = a] \qquad \text{(RL-9)}$$

$$R_s^a = E[R_{t+1} | S_t = s, A_t = a] \qquad \text{(RL-10)}$$

Aiming at the energy-saving and emission-reduction optimization problem of the ACE heavy-truck, it can be considered that the four time-varying functions of the transient (instantaneous) vehicle speed, the transient (instantaneous) rotating speed of the engine, the longitudinal grade function distribution (implied vehicle transient space location) and the average road-load power function distribution in the electronic horizon ( implied the predicted vehicle speed function distribution and the transient road-load power function distribution in the electronic horizon) are directly controlled by the driver, who is in full charge of the vehicle dynamic driving task (DDT) in the environment, and is not directly controlled by the agent 460; the above four items can be seen as an embodiments of the intrinsic randomness within the environment 480, all of which are random variables; The state vector can be designed to include the above four terms, which have a direct effect on how the agent 460 at time t selects the action vector, however the selection of the action vector has no effect on the above four components of the state vector at time t + 1 (i.e., the effect from the four components of the state space to the action space is unidirectional); Nontheless, the transient SoC function or the average SoC function of the battery pack 130 (the other two components of the state vector) is controlled by both the environment 480 (including the driver) and the agent 460 at the same time, and at this time, the two SoC components of the state vector and the action vector can influence each other bi-directionally; In other words, the present disclosure can completely decouple the dynamic driving task (DDT) (focusing on short-term path planning and driving safety) of the ACE heavy-truck driver and the episode task (focusing on long-term cumulative reward maximization of each freight event) of the agent 460; The agent 460 automatically searches and executes the optimal strategy through the RL algorithm so as to minimize the RDE fuel consumption of the vehicle. Compared with the RL state space design of the existing technologies (prior art), the RL state space design of the disclosure comprises not only the normal components such as vehicle speed, engine rotating speed, vehicle location, transient state SoC and so on, but also the novel components such as longitudinal grade function distribution, average SoC function distribution, average road-load power function distribution and so on in the electronic horizon; The state vector of RL corresponds to the feature set of ML.

The reinforcement learning (RL) is to make a decision according to the environment information identified by the agent and execute the action to obtain the maximization of the long-term accumulated benefits; Specifically, the reinforcement learning fits a specific environment, a specific reward function, and a value function, under the current policy, from the specific input environment state to the final return (at the end of the episode task), and then in turn optimizes the policy according to the value function so that the output action thereof maximizes the value function; This is a process of alternative updating, the value function and the policyyou are intertwined and interact with each other until some kind of Nash equilibrium is reached. The disclosure solves the energy-saving and emission-reduction optimization problem of the ACE heavy-truck by using the reinforcement learning paradigm, the inventive points are focused on to the novel designs of the state space, the action space, the reward function, the modelled or modeless environment, and the physical implementation methods of the optimal policy and so on, and it can use many well-known RL or DRL algorithms. The reinforcement learning is a balanced game of exploration and exploitation; The training process of RL is in fact a transition process from exploration focus to utilization focus; Referring to Fig. 5A, the prior experience and data of multiple ACE trucks can be collected on the cloud platform 001, and the policy, the value function (V or Q), the environmental model and other core elements can be continuously and iteratively trained and improved. The default optimal policy and optimal value function (the lowest RDE fuel consumption) for each freight event are sent from the cloud platform to the vehicle-end timely (minute-level time delay), so that each ACE heavy-truck can fully utilize the group wisdom; The minimum RDE fuel consumption (see Fig. 6D) is achieved with high consistency, achieving the beneficial technical effect of reducing the RDE fuel consumption by about 30 % in the long-haul application compared with that of the traditional diesel heavy-truck.

Fig. 6A illustrates a transient power PWM pulse sequence function of a DPC engine 101. It is obvious that the DPC engine 101 can generate a similar bipolar non-constant amplitude PWM pulse sequence transient power function under the control of the series-hybrid iSS or the parallel-hybrid iPS control; One cannot infer backward to judge whether the DPC engine runs in the series-hybrid iSS mode or the parallel-hybrid iPS mode by viewing the PWM power function alone. In the period 1 in Fig. 6A, the duty-cycle $k_1 = t_{h1}/T$; in the period 2, the duty-cycle $k_2 = t_{h2}/T$; In the period 3, the duty-cycle $k_3 = t_{h3}/T = 0$. There is an intrinsic difference between the transient power function of the pulse-control (DPC) engine 101 and that of the conventional analog control (AEC) engine 101; from the perspective of mathematics, the former is a bipolar non-equal amplitude pulse sequence time-varying function, comprising multiple second-level ascending or descending sharpe edges, the latter is a second-level analog slow-changing function; from the perspective of physics, the former engine is operated in the pre-defined first quadrant high-state working condition line or the fourth quadrant low-state working condition line, and the latter engine is operated in the first quadrant surface working condition. Regardless of any vehicle duty-cycle working condition, the working condition of the DPC engine is almost completely decoupled from that of the ACE truck 010, almost completely operates (namely more than 98.0 % of time probability) in the combustion high-efficiency area of either a high-state working condition point (high efficiency rotating speed range; the torque or power loading rate is more than 40 %) or a zero fuel consumption zero emission low-state working condition point, and almost completely avoids (namely less than 1.2 % of time probability) various low rotating speed or low load working condition points (rotating speed is less than 800RPM; torque or power loading rate is less than 30 %) or the idle speed point (rotating speed is less than 850RPM; the torque or power loading rate is less than 3 %), which are very challenging for whole vehicle energy saving and emission-reducing; The working condition of the analog electric control (AEC) engine of the parallel-hybrid vehicle of the prior art is highly coupled with that of the vehicle, besides that the AEC engine operates in the combustion high-efficiency area in the majority of the time (in the high-efficiency rotating speed range, the torque or power loading rate is more than 40 %), it still cannot avoid the low rotating speed or low load working condition point (rotating speed is less than 800RPM; torque or power loading rate is less than 30 %) or idle speed point (rotating speed is less than 850RPM; the torque or the power loading rate are less than 5 %), the operating time ratio of the working condition point in the non-combustion high-efficiency area is likely to be higher than 5 %, which still belongs to the complex surface working condition; only the vehicle driving power peak-cutting and valley-filling is realized by the electric motor and the battery pack, the actual working condition point of the engine is moved and concentrated more to the high-efficiency area of the engine, however it cannot completely eliminate the non-high-efficiency operation point; Compared with the analog-controlled (AEC) engine of the existing technology, the pulse-control (DPC) engine of the disclosure not only greatly simplifies the problem of minimizing the RDE fuel consumption of the ACE heavy-truck, but also skillfully realizes the decoupling between the two challenging technical problems of fuel-consumption optimization (namely CO2 emission optimization) and NOx emission optimization, which can respectively and independently optimize the fuel consumption and emission of the pulse-control engine, and realizes the simultaneous optimization of the actual (RDE) fuel-consumption and emission of the DPC engine.

Although theoretically, the duty-cycle ($k_s$ or $k_p$) of the PWM pulse train function of the transient power of the DPC engine 101 is continuously adjustable between 0 and 1, in practice, from the perspective of vibration noise performance (NVH) optimization of the engine 101 or the ACE heavy-truck 010 or the RDE emission optimization (mainly referring to the dynamic temperature control of the after-treatment system of the diesel engine), it should be avoided as much as possible to switch the engine 101 between the high-state and the low-state too often (for example, more than 1 time per minute), and to operate in the high-state working condition too short (for example, less than 30 seconds), and therefore it is necessary to further limit the allowable dynamic value range of the duty-cycle; In each PWM pulse period, it is preferable that the high-state operating time of the engine 101 is either zero (i.e., the duty-cycle is zero) or greater than 30 seconds; if the PWM pulse period is selected to be 60 seconds, the value range of the preferred duty-cycle is either 0 or greater than 50 %; in one PWM period, at most one switching-up from the low-state to the high-state or one switching-down from the high-state to the low-state is allowed, at least zero switching is allowed (the duty-cycle is zero or one); Besides the middle priority active switching request (switch-up or switch-down) based on the hybrid-vehicle supervisory control strategy, the forced switch-down or the switch-up prohibition request of the DPC engine caused by the braking preparation or braking demand of the vehicle has the highest priority, therefore the actual duty-cycle may still be less than 50 % due to the forced switch-down with the highest priority. In order to ensure that the NVH performance of the pulse-controlled ACE heavy-truck is obviously better than that of the traditional analog-controlled ACE heavy-truck, it is preferable that the transition time of the PWM pulse sequence from the high-state to the low-state is 1 second, whereas the transition time from the low-state to the high-state is 2 seconds (that is, the switching strategy of slow-up and fast-down); If the speed of the pulse-controlled engine 101 is 1200 RPM at this time, it means that each cylinder of the engine can have 10 combustion power strokes per second (the crankshaft is rotated 2 cycles as one complete engine cycle); the DPC engine can have either the power step of 10 % of PWM high-lowstate power difference value (about 25 kW) during switch-down, or the power step of 5 % of PWM high-low-state power difference value (about 12.5 kW) during the switch-up, so as to finish the smooth switching between the high-state and the low-state; If the transition time between the high-state and low-states is too short (e.g., less than 0.1 second), it means that a large rapid power change exceeding 250 kW will be completed within one four-stroke engine cycle, which will obviously deteriorate the NVH performance of the whole vehicle. Obviously, the setup or control of the switching transition time and power adjustment granularity of the DPC engine 101 between high-state and low-state mainly relates to the whole vehicle NVH performance optimization, and has no direct association with the simultaneous optimization of the three key metrics of vehicle power performance, fuel-consumption, and pollutant emissions; The period of the PWM pulse sequence of the DPC engine 101, the transition time between high-state and low-state, the power adjustment granularity and so on are all defined by the software and dynamically adjustable, which can effectively avoid the production of additional mechanical vibration and noise when the DPC engine 101 of the ACE heavy-truck 010 is operated (especially during the high-state and low-state bidirectional switching), especially the mechanical resonance of the vehicle system, dynamically optimizing the actual NVH performance of the DPC engine and the ACE heavy-truck; whereas for the battery pack 130, although the charging and discharging of the battery pack does not involve any mechanical movement and the transition time is at ten-millisecond level, the real-world charging and discharging switching transition time of the battery pack must be synchronized with the high-state and low-state switching of the engine at the second level rather than the ten-millisecond level, which is advantageous to reducing the generation of electromagnetic interference (EMI). The fully loaded ACE heavy-truck (total vehicle weight no more than 36 tons) travels normally at a cruising speed of 65 miles per hour on the expressway in USA, among the four power components of the vehicle road-load power, the sum of the three items of the wheel resistance power, the wind resistance power, and the acceleration power is a minute-level slow-changing analog function (the fluctuation amplitude is +-10 kW), and the numerical value is always a positive number less than 150 kW; whereas the longitudinal grade power item is a minute-level fast-changing analog function, the change amplitude is from -400 kilowatt (downhill travel) to +400 kilowatt (uphill travel), for most non-mountainous road, the average value of the longitudinal grade power item is roughly equal to zero; In addition, when the ACE heavy-truck runs on the non-congested highway normally, the actual vehicle speed has very high probability (95 % +) to fluctuate up and down in the narrow speed band of +-15 % around the cruising speed, so the vehicle cruising speed is used to predict the future vehicle speed track in the electronic horizon with relatively small error (+ -15 %), Even if an emergency braking situation happens occasionally, the vehicle can re-accelerate and recover to the pre-set cruising speed (or the instant road vehicle average speed) in the minute-level time; the road grade function distribution in the electronic horizon is the 3D priori knowledge of the road, which is known in advance and does not change with the time (absent of road repair or renovation); according to the dynamic equation (1-1 to 1-5) combined with the ACE heavy-truck configuration parameters (total vehicle weight, wind resistance coefficient, the wheel rolling resistance coefficient and so on) and the predicted vehicle speed function distribution in the electronic horizon, the VCU 201 can compute the longitudinal grade power function distribution or the road-load power function distribution (transient power or average power (MTA)) in the electronic horizon by 10 kilowatt level granularity in real-time (sub-second time delay); In other words, the long-haul ACE heavy-truck 010 can predict the vehicle road-load power function distribution or longitudinal grade power function distribution in the electronic horizon (hour level in travel time or hundred kilometer level in travel distance) with high confidence (90 % +) and 10 kilowatt level absolute error; The characteristics of the road-load power function distribution within the electronic horizon comprises a direct-current (DC) component of a hundred-kilowatt level (mainly composed of the sum of the wheel resistance power + the wind resistance power + the acceleration power) and an alternating-current (AC) component with a maximum amplitude of more than 300 kilowatt (mainly composed of the longitudinal grade power, and its average value is roughly equal to zero for most non-hilly or non-mountainous roads); It is obvious that the high-frequency analog noise contained in the transient power function is obviously higher than that in the rolling average power function, but the two are substantially the same in terms of the direct current component of the whole freight event, and the amplitude of the alternating current component of the transient power item is slightly higher than that of the average power item; Online prediction of the road-load power function distribution or the longitudinal grade power function distribution in the electronic horizon is the technical foundation of implementing the intelligent Predictive Supervisory Control strategy (iPSC) for the ACE truck.

The dotted line in Fig. 6A represents a time trace of the ACE heavy-truck 010 transient road-load power function, on a relatively flat road (the longitudinal grade is less than 2 %), the transient road-load power is an analog (second-level) slow-changing function, its numerical value is mostly (with high probability) less than the high-state power (namely less than 200 kilowatt) of the DPC engine but more than zero; if the equivalent duty-cycle of the DPC engine is about 1 during the minute-level period, the average power of the DPC engine is greater than the road-load average power (per equation (MTA)) during the period, the DPC engine drives the vehicle, and the remaining surplus engine power charges the battery pack 130 (series-hybrid equation (2-4A) or parallel-hybrid equation (3-3A)), at this time, the battery pack 130 operates in the electric charge increasing mode (CI) stably; if the equivalent duty-cycle is close to 0, the average power of the DPC engine in the time period is obviously less than the road-load average power (equation (MTA)), the power of the DPC engine is insufficient to drive the vehicle, and the battery pack 130 is required to provide electricity to the motors 110& 140 to drive the vehicle, at which time the battery pack 130 operates in the electric charge depleting mode (CD) stably; By predicting the road-load power function distribution (transient or average) in the electronic horizon and actively adjusting the duty-cycle function of the DPC engine, the predictive SoC control (PSC) function of the battery pack 130 can be effectively realized (that is, the average SoC function of the battery pack 130 can be actively controlled; the battery pack is operated stably in one of the three modes of CS, CD, and CI or switched smoothly and dynamically among the three modes). It should be emphasized that the sub-second-level fast control loop of the pulse-controlled ACE heavy-truck total torque or power must ensure that the dynamic equation (1-1) and the series-hybrid equation (2-4) or the parallel-hybrid equation (3-3) are satisfied in real time, therefore the second-level time and hundred-kilowatt-level charging and discharging power function of the battery pack 130 is a dependent variable, and cannot be actively & independently controlled; each 400 kilowatt and 10 seconds pulse peak discharge only consumes 1. 1 kilowatt-hour electric charge, its influence on the battery pack SoC (with capacity over 55kWh) is less than 2 %; from the perspective of macro control of the battery pack SoC function, there is no practical need to actively control the second-level time transient change of the SoC function; however, it is essential to actively control the minute-level variations of the average SoC function (equation (MTA)) of the battery pack 130 by the slow control loop and the dynamic adjustment of the duty-cycle function of the DPC engine; In theory, the intelligent predictive supervisory control strategy (iPSC) and the battery pack predictive SoC control strategy (PSC) of the present disclosure are both applicable to the analog-controlled ACE heavy-truck (mode II-A or III-A) or the pulse-control ACE heavy-truck (mode II-B or III-B), However, in actual applications, the latter (pulse-control) completely exceeds the former (analog-controlled) in many fronts, for example, the model and algorithm are simpler, the data sampling efficiency is higher, the algorithm convergence speed is faster, the robustness is stronger, the self-adaptability is stronger, the generalization ability of the model is stronger, and the final performance is better (approaching to the online global optimal solution without limit in the engineering sense); One of the main inventive points of the present disclosure is the intelligent predictive supervisory control technology (iPSC) and the predictive SoC control technology (PSC) for the ACE heavy-truck configured with the DPC engine (the pulse-controlled ACE truck).

It should be emphasized that all (that is, 100 %) of the heavy-truck engines currently used by the mass-production heavy-truck industry in the world are analog electric control (AEC) engines; The digital pulse-control (DPC) engine of the disclosure has no intrinsic difference with the analog electric control (AEC) engine of the existing technology in terms of hardware and intrinsic calibration software (Intrinsic Calibration Firmware), it can even be completely identical (that is, the software and hardware are the same, the universal characteristics curve of the engine is the same); the essential difference between the two is concentrated on the supervisory control strategy and the software algorithms at the iMMH powertrain or the whole vehicle layer; That is, the specific control measures for the transient power time-varying functions of the engine 101 are different, and the operating conditions of the engine 101 in actual operations are different (the AEC engine has a complex surface operating condition; whereas the DPC engine operates on at least two pre-defined working condition lines or points), and the shapes of the transient power time-varying functions of the engine 101 are different (see Fig. 6A; The AEC engine is an analog (second-level) slow-changing function and the DPC engine is a PWM pulse train), and the resulting engine relative torque data or relative power probability density functions are different (see Fig. 6C); The transient power function of the analog-controlled (AEC) engine in the prior art is a time-domain second-level continuous slow-changing function, its function value is a non-negative number (excluding the special working condition such as engine braking), which is essentially the complex surface working condition in the first quadrant of the engine fuel map; whereas the transient power function of the pulse-control (DPC) engine of the disclosure is a time-domain bipolar non-rectangular PWM pulse sequence function, its function value can be either a positive number or a negative number, most of the time in each pulse period is a continuous slow-changing function (stable operation in high-state or low-state), however, a hundred-kilowatt-level bidirectional jump between a high-state (positive number) and a low-state (negative number) may occur one or two times back and forth during each PWM period, corresponding to the simple line operating condition of the DPC engine in the first quadrant or the fourth quadrant of the engine fuel map. In other words, any analog-controlled (AEC) engine that has been in volume-production and commercial-applications can be converted into a pulse-control (DPC) engine by keeping the hardware the same and only modifying the supervisory control strategy in software at the hybrid vehicle layer of the VCU 201 (from AEC to DPC; that is, the series-hybrid iSS or parallel-hybrid iPS); It is obvious that the traditional internal combustion engine vehicle cannot support the pulse-control (DPC) engine application, and the fuel-electricity hybrid powertrain (series-hybrid, parallel-hybrid, and series-parallel hybrid) with at least one large electric motor is the necessary hardware platform for realizing the DPC engine. In the series-hybrid or parallel-hybrid vehicle prior art, although the analog-controlled (AEC) engine can realize the many-to-many bidirectional mapping between the engine working condition and the whole vehicle working condition, the mutual influence between the engine working condition and the whole vehicle working condition cannot be neglected, and the two cannot be completely decoupled; Therefore, the AEC engine of the hybrid vehicle (especially the parallel-hybrid vehicle) still works in the complex surface working condition of the first quadrant of the universal characteristics curve, except that the distribution number (or the high-efficiency running time probability) of the working condition point in the combustion high-efficiency area is higher than the AEC engine of the traditional ICE vehicle (see Fig. 6C). Referring to Fig. 1~3, the present disclosure converts the engine 101 of the ACE heavy-truck 010 from a conventional analog-controlled (AEC) engine into a novel pulse-control (DPC) engine through a series-hybrid iSS or parallel-hybrid iPS control strategy; In the engineering sense, the working condition of the DPC engine 101 is completely decoupled from that of the whole vehicle 010 no matter under the series-hybrid or parallel-hybrid mode, and the powertrain system also realizes the hardware generalization, abstraction and soft-ware &hard-ware decoupling, so as to realize the software defined hybrid powertrain; The hardware functions and performances of the iMMH powertrain have redundancy & surplus, and the hardware (engine 101, dual-motor 110&140, etc.) can be generalized or abstracted; Under the actual driving environment (RDE), the three key metrics of the iMMH powertrain's power performance, fuel consumption, pollutant emissions are independently and dynamically defined and controlled by the software of VCU 201, and is substantially independent of the specification and level of the specific hardware configurations of the ACE heavy-truck (in particular, the performance and price of the engine 101 and the dual motors 110 & 140), and can be implemented as a "thousand-vehicle thousand-face" (mass-customization); The ACE heavy-truck (global OEM new hybrid heavy-truck or North American converted hybrid heavy-truck ) is guaranteed to be much better in terms of vehicle power performance, fuel-consumption, and pollutant emissions than that of any top-of-the-line 16-liter diesel heavy-truck of similar age under any duty-cycle working condition.

Each type of modern engine in volume-production & commercial-use (generally referring to EPA-2010, Euro-VI, and the GB-6 compliant engines) refers to integration of the hardware of both the engine 101 (including the engine body and the after-treatment system) and the ECU 102 and the calibration software (a firmware,), corresponding to the unique universal characteristics curve of the engine; It is obvious that the hardware of the engine of the same model number can be configured with different calibration software so as to generate engines of different types (or model numbers); The mass-production modern engine must meet the emission regulations stably for a long period of time within its effective life cycle of 700,000 kilometers (about 435,000 miles); However, after a certain type of engine passed the government emission certification and went into mass production, the hardware or calibration software of the engine 101 (including the ECU 102) is not allowed to be changed without recertification; even if the hardware of the engine is unchanged, and only the calibration software is changed, the engine must go pass government emission certification again, or else it is illegal. The existing vehicle technology (internal combustion engine vehicle or hybrid vehicle prior art) uses the only fixed universal characteristics curve of the analog electric control engine in volume production (that is, complex surface working condition characteristics) to adapt to the endlessly changing actual working conditions of the vehicle (various vehicle duty-cycles), it is very difficult to realize agile customization of the supervisory control strategy at the whole vehicle layer to realize thousand-vehicle thousand-face and to achieve simultaneous optimization of the three key metrics of the power performance, fuel consumption, and pollutant emissions of the vehicle; whereas the DPC engine technology of the present disclosure and the optimization based supervisory control algorithms can effectively overcome the weakness of the prior art supervisory control strategy of the hybrid vehicle, realize the thousand-vehicle thousand-face, and achieve the simultaneous optimization of the three metrics of power performance, fuel consumption, and emission of the vehicle.

The government's mandatory emission certification for global passenger vehicles (road vehicles with a total weight of less than 3.5 tons) generally adopts the mode of "vehicle-engine integration" (that is, the joint certification of both engine and vehicle chassis together), whereas the emission certification of large commercial vehicles (on-road or non-road vehicles with a total vehicle weight over 6 tons) generally adopts the mode of "vehicle-engine separation" (i.e. only for the bench emission certification of the engine, excluding the chassis of the vehicle); In other words, the engine after the government emission certification can be adapted to various large commercial vehicles of different types, and each whole vehicle type does not need to pass the emission certification again. Referring to Fig. 4A, each emission-certified mass-produced engine has specific hardware and firmware (Firmware = the calibration software) corresponding to the fixed universal characteristics curve of the engine; It is obvious that changing the engine hardware will change the universal characteristics curve, and only changing the engine calibration software can also change the universal characteristics curve. From the perspective of the VCU 201 to the iMMH powertrain control, the engine 101 and the dual motors 110& 140 can be abstracted as actuators that provide the whole vehicle driving torque; The disclosure converts the AEC engine of prior art into the novel DPC engine under the premise that the engine hardware and the universal characteristics curve are not changed by the series-hybrid iSS or parallel-hybrid iPS control methods; The actual operation conditions of the engine 101 are greatly simplified from the complex surface working condition of the former (AEC) to at least two pre-defined line working conditions (high-state or low-state) in the generalized high-efficiency area of the latter (DPC); analogous to the analog signal processing/communication to be upgraded to the digital signal processing/communication or the software drivers of the sub-systems in the computer system; The intelligent Cruise Control method (iCC) of the disclosure is composed of VCU 201 according to the configuration parameters and dynamic operation data (including vehicle speed, vehicle location, road grade measurement and so on) of the ACE heavy-truck 010, the road 3D data in the hundred-mile level electronic horizon stored in the vehicle-mounted MU 240, in combination with the vehicle dynamic equation (1-1), dynamically measures and computes the future hour-level road-load power time-variable function distribution (relative error 5 %) of the ACE heavy-truck in real-time (sub-second-level time delay), then according to the series-hybrid equation (2-4) or the parallel-hybrid equation (3-3), dynamically controls the operation condition of the engine 101 by dynamically adjusting the transient power split between the engine 101 and the battery pack 130; dynamically controls the average SoC function (SoC) of the battery pack by dynamically adjusting the average power split between the engine and the battery pack (see equation (MTA)) , finally converts the energy-saving and emission-reduction optimization problem of the ACE heavy-truck 010 operating in the expressway design operation domain (ODD) into the equivalent AI problem of the computer playing Go; The energy-saving and emission-reduction algorithm of VCU 201 can realize vehicle actual (RDE) fuel consumption ($CO_2$) and pollutant emission (NOx, PM) minimization at the same time under the premise of best-in-industry ACE heavy-truck power performance, Its function is similar to the application program in the computer system.

The main chip of the VCU 201 is preferably a 32-bit automotive grade multi-core embedded processor, the main system frequency is higher than 100 MHz, the security level is ASIL-C, and the MB level flash memory, supporting multiple or multi-path data buses (at least two paths of CAN); The mature 16-bit automotive grade processor with lower cost can also be selected, but at this time, it is limited by the upper limit of the chip's performance, the system has poor expanding performance potential and low performance-price ratio; the future production-ready 64-bit automotive grade processor can be selected, at this time, the hardware is obviously overmatched, and the future expansibility is strong, but such chip is expensive and the performance-price ratio is sub-optimal. The VCU 201 can operate control programs such as iSS, iPS, iCC and so on, through the CAN bus to direct the dynamic cooperations of the engine 101, the double motors 110&140, the battery pack 130, the transmission 150, the clutch 111 and so on, realizing the series-hybrid iSS, and parallel-hybrid iPS, intelligent cruise iCC and other functions.

The above embodiments of the DPC engine 101 (series-hybrid iSS or parallel-hybrid iPS) describe how to effectively decouple the whole vehicle working condition of the ACE heavy-truck 010 from that of the engine 101, so as to realize the software defined series-parallel powertrain; Next, it will be further described how to utilize the structured operation big data (abbreviated as " data-set ", Data-set) of the ACE heavy-trucks stored in the vehicle-mounted map unit (MU) 240, the vehicle-mounted satellite navigation unit (GNSS) 220, and cloud computing platform 001 (see Fig. 5A) (for example, cloud server) combined with fuel-saving machine learning (ML) algorithm and cloud platform computing power, trains the fuel-saving AI brain (namely ML model) at the cloud platform and at the vehicle-end, implementing the intelligent cruise control technology (iCC) of the ACE heavy-truck in the same lane on the expressway, realizing the beneficial effects of the ACE heavy-truck energy-saving and emission-reduction simultaneous optimization.

In some embodiments of Fig. 1A, the ACE truck is configured with a map unit (MU) 240 and a satellite navigation unit (GNSS) 220. A prior three-dimensional electronic map (or a 3D map) covering the national expressway and other semi-closed main-streams is pre-stored in the map unit 240; The 3D map information includes, but is not limited to: the longitude and latitude of the absolute geographical position of the ego-vehicle are described, and in particular information showing the longitudinal grade of the road (such as the upslope angle $\alpha_u$ and the downslope angle $\alpha_d$ shown in Fig. 5A). For example, as shown in Fig. 1A, the memory of the vehicle-mounted map unit 240 may include a 3D road map of meter-level or ten-meter-level absolute geographical positioning precision (latitude and longitude) and road longitudinal grade of 0.1 degree level absolute precision; The various advanced driving assistance system (ADAS) maps containing the said road 3D information have been commercially available in various major automobile markets around the world; High definition map (HD Map) capable of supporting SAE L3 or L4 autonomous driving system, at present, also enters early commercial stage; In the the present disclosure, ADAS maps should be broadly understood to include the HD maps.

The satellite navigation unit (GNSS) 220 is used for real-time measurement of vehicle geographical positioning and operating condition data such as longitude, latitude, altitude, longitudinal road slope, longitudinal linear velocity, longitudinal linear acceleration, system absolute time and so on of the ACE heavy-truck 010. In some embodiments, a satellite navigation unit ("RTK receiver" for short) 220, which may employ dual antenna input carrier phase dynamic real-time differential (RTK) technology. The ACE heavy-truck can be accurately located and measured in real time at a measuring speed of more than five times per second (that is, the measuring refreshing frequency is higher than 5 Hz). The international satellite navigation system (GNSS) currently has four independent systems: GPS in USA, Glonass in Russia, Galileo in the European Union, and Beidou (BD) in China; China's Beidou system has signed a compatible agreement with three other satellite navigation systems. Preferably, a satellite navigation unit (GNSS) 220 with the latest Beidou-3 RTK chip is used, two satellite antennas which are matched and installed at the top of the heavy-truck cab at a distance of at least one meter apart are used, the time service, vehicle speed and position (longitude/latitude), and a longitudinal orientation (i.e., road longitudinal grade) of the vehicle are dynamically measured in real time. The RTK chip can finish the satellite navigation positioning and the calculation of the attitude measurement according to the independent signals of the four navigation satellites combined randomly in the GNSS four systems. the time service precision is 50 nanoseconds, the speed measuring precision is 0.2 meters per second, the horizontal plane latitude and longitude locating precision is less than 2.5 meters, the road longitudinal grade precision is less than 0.15 degrees, and the measuring frequency is 10 Hz; The RTK navigator is difficult to measure the vertical altitude of the road surface under the wheel of the vehicle in real time and accurately, at the same time, many countries in the world can strictly control the surveying and mapping of the accurate altitude information and the issuing of the accurate altitude information; Fortunately, the present disclosure does not require high accuracy in measuring the absolute altitude of the vehicle road surface, and the accuracy is 10 meters. However, the measurement precision of the road longitudinal grade is very high, and the measurement precision of the road longitudinal grade in front of the vehicle should be better than 0.2 degrees. In some embodiments, a single-antenna satellite navigation receiver plus an inertial navigation unit (IMU) may be used to complete the three-dimensional positioning and navigation of the vehicle; The automotive grade production IMU based on multiple micro-electromechanical system (MEMS) acceleration sensors and gyroscope (Gyro) plus dedicated processing chips can measure the longitudinal grade function of the road in front of the ACE heavy-truck in real time at a measurement frequency higher than 10 Hz and a measurement precision better than 0.2 degrees. The GNSS220 in the present disclosure should be understood to be either a dual-antenna RTK receiver or a single-antenna satellite navigation unit plus an inertial navigation IMU. when the ACE heavy-truck runs at high speed, the ten kilowatt level longitudinal grade power function change caused by the 0.1 degree level micro change of the road longitudinal grade function is the secret source of the ACE heavy-truck greatly saving fuel and reducing emission; the GNSS 220 is used to accurately measure the distribution function of the longitudinal grade along the highway in real time, and the electronic horizon stored by the map unit (MU) 240 firstly checks the 3D information, which is crucial to the implementation of the disclosure; It should be emphasized that the road longitudinal grade measurement precision and refreshing speed of the GNSS 220 are obviously higher than that of the conventional longitudinal grade sensor configured by the heavy-truck automatic transmission in the prior art.

The real-world (RDE) fuel-consumption of each ACE heavy-truck in a transportation (freight) event (from the starting point to the end point) is highly correlated with the following static parameters and variables such as the configuration parameters of every important sub-system of the heavy-truck (including various parameters of the series-parallel powertrain, vehicle wind resistance coefficient, friction coefficient and so on), the discrete variable of the vehicle total weight (tractor plus trailer with payload), two continuous variables of longitudinal vehicle speed and acceleration, and three continuous variables of vehicle longitude and latitude along the driving route, and the longitudinal grade function distribution; and is basically unrelated to the macroscopic average fuel-consumption of all ACE heavy-trucks running on all roads. The driver of the ACE heavy-truck, before the freight departure, can input the starting point and end point of this freight event, then the ACE heavy-truck can automatically plan the driving route of the freight event, and request the cloud 001 fuel-saving artificial intelligence (AI) brain, referring to all fuel-saving data-sets stored in the cloud platform and operated by ACE heavy-truck in history on the relevant road sections, calculating and downloading the default (Default) optimal fuel-saving control strategy customized for the vehicle and the specific freight route in real time, then combining with the on-vehicle AI inference chip (contained in VCU 201) to perform local computing, modifying and optimizing the vehicle default fuel-saving strategy real-time, performing intelligent cruise control (iCC) on the ACE heavy-truck, it can realize the highway same lane SAE L1 level automatic driving function including the predictive power control function and the adaptive cruise control function; Each ACE heavy-truck, no matter whether the driver has the driving experience of the specific freight route, can rely on the collective experience and wisdom of all ACE heavy-trucks, and can consistently realize the best fuel-consumption of the industry, which can reduce RDE fuel-consumption by 30 % compared with that of the modern internal combustion engine heavy-truck, and the energy-saving and emission-reduction result is decoupled from the skill level of the driver and the performance of the engine 101, and is consistently better than that of the human driver.

The ACE heavy-truck 010 can automatically collect, label, store at the vehicle-end, and upload to the cloud platform the fuel-saving data-set of the whole freight event; The so-called "fuel-saving data-set" includes the configuration parameters and the overall dynamic operation data in the whole freight event of key sub-systems of the ACE heavy-truck 010 including, the engine 101, the transmission 150, the generator 110, the traction motor 140, the battery pack 130, the clutch 111, the satellite navigation unit (GNSS) 220, the electric power splitting device (ePSD) 123 and so on and is the special structured big data related to ACE heavy-truck energy management, it is the "data oil" of the training and continuous independent evolution of the machine learning (ML) algorithm for the ACE heavy-truck; The structured big data is called "fuel-saving data-set" for short.

One of the core elements of the ACE heavy-truck 010 fuel-saving data-set is the operating data of the electric power splitting device (ePSD 123), which may include the following: the sampling and recording frequency is at least 5. 0Hz, leveraging the precise time service (10 nanosecond absolute precision) of the satellite navigation unit 220, as the unique system clock reference of the whole vehicle system, to calibrate and synchronize the clock of all other vehicle-mounted sub-system microprocessors regularly,; At each sampling time point $t_i$, the respective microprocessor of the ACE truck directs the associated sensor to locally collect and store at least the following variable values: current longitude $L_{lg} (t_i)$, latitude $L_{lat} (t_i)$, longitudinal grade $G_d (t_i)$, longitudinal vehicle speed $v (t_i)$, longitudinal vehicle acceleration $a (t_i)$, direct current $I_g (t_i)$ of generator 110, the total direct current $I_m (t_i)$ of the traction motor 140 &170, the total direct current $T_{bat} (t_i)$ of the battery pack 130, the direct current voltage $V_{bus} (t_i)$ at the direct current bus junction point X, the respective state of charge (SoC) $C_{bat} (t_i)$ of the battery pack 130, the direct current $I_{bk} (t_i)$ of the brake resistor 131, the external environment temperature $T (t_i)$, the environment wind speed and the wind direction $v_{xyz} (t_i)$; It is also possible to locally sample and store the sampling time point $(t_i)$ of each motor (generator 110, main traction motor 140, secondary traction motor 170), engine 101, the key time-varying dynamic operation data of the automatic transmission 150 such as rotating speed, torque, gear, and so on; It is also possible to collect and store the transient amplitude value, pulse period, duty-cycle at sampling time $(t_i)$ of the instantaneous mechanical power PWM pulse function of the DPC engine 101 (series-hybrid iSS or parallel-hybrid iPS) , and the transient amplitude value, pulse period, duty-cycle at sampling time $(t_i)$ of the transient electric power PAM or PWM pulse sequence function for the battery pack 130. It should be emphasized that the fuel-saving data-set of the ACE heavy-truck must use the ACE heavy-truck system shown in Fig. 1A-B and the pulse-control engine technical solution (series-hybrid iSS or parallel-hybrid iPS), and dynamically collect and store the original data) of the ACE heavy-truck 010 all at one; The synthesized data generated by fusing the simulated data and distributed operational data (generally referring to time-sharing, space-sharing, modular systems or vehicle-sharing) will introduce non-negligible extra input errors in post-processing.

Initial training and subsequent continuous improvement of cloud platform or vehicle-end fuel-saving artificial intelligence (AI) model can adopt multiple open source or proprietary machine learning (ML) algorithms and online cloud platform computing power purchased at will, combining the proprietary fuel-saving data-set to finish the modelling, training and optimization of the fuel-saving algorithm deep neural network (DNN). The fuel-saving data-set for the ACE heavy-truck is non-public and proprietary data asset, the bigger the data-set is, the larger the value is, analogous to the data oil; The disclosure can continuously reduce the cost and increase the efficiency of the ACE heavy-trucks, and continuously improve and keep the competitive advantages of the long-haul fleets for a long time. In some embodiments, the vehicle controller (VCU) 201 of the ACE heavy-truck 010 may be configured to: based on the latitude and longitude (equivalent meter-level or ten meter-level absolute geolocation precision) of the freight event along the electronic horizon (meter-level interval density) provided by the prior 3D map pre-stored in the map unit 240, longitudinal road slope (" longitudinal grade " for short, 0. 1 degree precision) and road information, and/or based on the longitude, latitude, elevation height of the vehicle at the position measured by the satellite navigation unit (GNSS) 220, longitudinal grade and other dynamic data, or based on the configuration parameters of ACE heavy-truck 010 and key sub-system dynamic working condition data, according to the vehicle dynamic equation (1-1) and the predicted future vehicle speed function distribution in the electronic horizon, calculating the vehicle road-load power function time sequence value (kilowatt-level precision) in real time (sub-second level) and together with the fuel-saving AI algorithm performs predictive dynamic power control in an "independent" manner for at least one of the following sub-systems, the ePSD 123, the engine 101, the generator 110, the traction motor 140, the clutch 111, the transmission 150, and the battery pack 130, and seeks to minimize the real-world fuel consumption and/or pollutant emissions of the ACE heavy-truck under the premise of ensuring the industry leading vehicle driving power and safety.

Optionally or additionally, the VCU 201 can perform a second-level time average operation or other filtering and noise reduction measures on the actually measured longitudinal grade time-varying function, so as to improve the accuracy and robustness of the longitudinal grade function measurement; When the absolute value of the deviation between the prior road information pre-stored in the 3D map in the map unit 240 and the road information actually measured by the satellite navigation unit (GNSS) 220 exceeds the allowable tolerance range, especially as one of the key information of the fuel-saving ML algorithm, when the absolute value of the deviation of the current longitudinal grade data of the vehicle exceeds the allowable tolerance range, the VCU 201 can first control the transient power distribution between the three ports of the ePSD123 based on the longitudinal grade data actually measured by the GNSS 220, the vehicle dynamic equation (1-1) is satisfied in real time; if the actual speed or acceleration of the vehicle at this time is obviously deviated from the control expected value, then it is indicated that the actual situation is that the measured data of the GNSS 220 is wrong, and the prior data of the 3D map is correct, The VCU 201 may be based on the transient power distribution parameters of the three ports of the ACE heavy-truck ePSD 123. The vehicle 010 longitudinal linear speed and acceleration, combined with vehicle dynamic equation, the vehicle in the ring (VIL) simulation calculation after making judgment, selecting vehicle three-dimensional electronic map as the standard, realizing ACE heavy-truck locating measuring posture automatic error detection or error correction function.

The GNSS using double-antenna RTK receiver solution system is complex, although the performance is excellent, but the cost is high. Of course, in order to reduce the system cost, a single-antenna common satellite navigation unit 220 can also be used, and a single-axis or multi-axis dynamic inclination angle sensor (the measurement precision is better than 0.15 degrees; the measuring range is more than positive and negative 15 degrees; An inertial navigator (IMU) with a frequency higher than 5 Hz) is refreshed to measure the absolute positioning (longitude/latitude) and road longitudinal grade of the travelling vehicle in real time. the dynamic inclination angle sensor has multiple realizing methods; One of the embodiments with high performance-to-cost ratio is Acceleration Sensor (Accelerometer), Gyroscope (Gyroscope) and special chip integration of the vehicle micro-electromechanical system (MEMS). In the following several embodiments, it will be explained in an exemplary manner how VCU 201 makes use of vehicle three-dimensional dynamic positioning and orientation information (especially the road longitudinal grade distribution function) to achieve automated predictive fuel saving control. It should be noted again that the following specific examples are not to be construed as limiting the scope of the present disclosure, but are for the purpose of better understanding the present disclosure by those skilled in the art.

In some embodiments, when there is no long slope or high mountain (i.e., the slope grade is less than a predefined second grade threshold; e.g., less than 3.0 °) and the length of the slope section is less than a predefined second length threshold (e.g., less than 10 km, or even less than 2 km), VCU 201 can adjust the transient power function and/or average power function of the DPC engine 101 by series-hybrid iSS or parallel-hybrid iPS, so that the battery pack (130) operates stably one of the three working modes of charge depleting (CD), charge sustaining (CS), or charge increasing (CI) or switches dynamically among the three modes, so as to realize the predicative SoC control (PSC) function; This is especially suitable for the applications of "short slope" (also can be called "small slope") in the electronic horizon; Because the slope length is short (e.g., less than 2 km), the vehicle can easily climb up to the top of the slope before the battery pack 130 releases most of the stored electric energy, and in the subsequent downhill stage, the battery pack 130 can be quickly recharged by the hundred-kilowatt level regenerative braking power of the traction motor 140, recycling kilowatt-hour level energy, charging or discharging just-in-time; In this way, the electric energy throughput turnover rate of the power-type battery pack 130 with limited capacity (ten-kilowatt-hour level) can be increased, in particular, the maximum value of the near-zero cost regenerative charge turnover rate and the minimum value of the high-cost engine charge turnover rate can be achieved; The performance-price ratio of this exampleis higher than that of the energy-type battery pack (volume/weight larger, higher price) with large capacity of hundred-kilowatt-hour level. The expressway in relatively flat area or hilly area doesn't have long slope or high mountain (the absolute value of the longitudinal grade is greater than 2.0 degrees and slope length over 10 km); at this time, the novel intelligent Mode-Switching control method can be used to switch between the series-hybrid iSS control and the parallel-hybrid iPS control dynamically, allowing the fuel-saving machine learning algorithm to explore and find out the best fuel-saving control strategy aiming at the designated route automatically.

Referring back to Fig. 1A, in some embodiments, the ACE heavy-truck may also include a automotive grade millimeter-wave radar module (mWR) 230 mounted at the front end of the heavy-truck for driving safety considerations. It is used for measuring the absolute distance between the heavy-truck and the Leading vehicle and the relative speed between the two vehicles in real time; The maximum detection distance in front of the long-distance millimeter-wave radar (LRR) exceeds 250 meters, and the horizontal viewing angle (FOV) range: +/- 10 degrees; The millimeter-wave radar 230 may also include a gauge-level short-range large-viewing-angle radar (SRR) with a maximum detection distance of 70 meters and a viewing-angle range of +/- 65 degrees. it also can adopt the vehicle level front view monocular or binocular camera and processing chip, the maximum detection distance is more than 250 m, with front view millimeter wave radar (LRR & SRR) fusion, strengthening the vehicle front end speed measuring and distance measuring performance and system robustness; If it is necessary to ensure the vehicle forward speed and the redundancy and robustness of the distance sensor system, a low-cost laser radar (LiDAR) with a small horizontal angle of view (FOV + /-10 degrees) above 16 lines can be added, and the farthest detection distance is more than 200 meters. The millimeter-wave radar mWR230 in Fig. 1A of this disclosure is to be understood as any combination of the above three types of multiple sensors (millimeter-wave radar, laser radar, camera) for measuring, tracking, or identifying the relative speed and absolute distance of the vehicle, in particular a front object or event.

In some embodiments, the truck also includes a T-Box 210, which passes through the current fourth/fifth generation or future sixth generation (4G/5G/6G) cellular mobile communication network 002 (see Fig. 5A). The heavy-truck 010 with cloud computing platform 001 wide area wireless or wired network, also can support C-V2X (vehicle-road, vehicle-vehicle, vehicle-network, vehicle-person and so on) real-time communication.

The VCU 201 can communicate with a plurality of vehicular sub-systems including the satellite receiver 220 and the millimeter wave radar 230 in real time in one way or two ways through a vehicular data bus (such as CAN bus), so as to control the engine 101 and its control module (ECU) 102 in real time, a generator 110, a clutch 111, an electric power splitting device ePSD 123 (including MCU1 121, MCU2 122, a voltage control switch (VCS) 133, a chopper 132), a battery pack 130, traction motors 140 and 170, automatic transmission 150 and transmission controller (TCU) 151, a map unit 240 and other modules or any combination of sub-systems, realizing the intelligent cruise control function (iCC) in the same lane of the ACE heavy-truck highway, namely SAE L1 or L2 level automatic driving function, liberating the feet of the driver, The disclosure reduces the driving labour intensity, at the same time optimizes the power performance of the vehicle and saves energy and reduces emission, and ensures the vehicle actual exhuast gas pollutant emission stable standard in the period of validity of the 700 thousand kilometer after-treatment system (GB-6, ohm-VI, EPA-2010). VCU 201 can effectively utilize (hundred-kilometer level) electronic horizon 3D road information, through accumulating the ACE heavy-truck intelligent cruise control (iCC) of the sequential kilometer level granularity (Granularity) road section, under the premise of ensuring the vehicle power, The disclosure can minimize the comprehensive fuel consumption of the whole freight event of the vehicle.

In addition, when the ACE heavy-truck is running on the controlled-access expressway, the driver can manually start or close the intelligent cruise control (iCC) function, in combination with the advanced auxiliary driving system ADAS used by the mass producer, realizing SAE L1 or L2 level automatic driving function, it basically releases the feet of the driver and reduces the driving labour intensity; The iCC function can be started in the highway ODD and in the non-ultimate weather (without heavy rain, heavy snow, hail, flood and so on).

In some embodiments, the above intelligent cruise control (iCC) may include the following three sub-modes of operation: 1) normal mode N; 2) fuel-saving mode Eco (Eco Mode); and 3) high performance mode P (Power Mode); generally referred to as the iCC sub-mode.

For example, the total weight of a passenger vehicle is less than 3.0 tons, while the maximum driving power can exceed 125 kW; whereas the total weight of a loaded heavy-truck can be as high as 40 tons, but the maximum driving power of the mainstream heavy-truck in Europe and US is less than 420 kW; obviously, the unit weight driving power (kilowatt/ton) of the heavy-truck is far less than that of the passenger vehicle; In other words, the acceleration performance of the heavy-truck is far lower than that of the passenger car, and the emergency brake distance of the heavy-truck is also far higher than that of the passenger car; The dynamic driving characteristics of the two vehicles are obviously different. When the loaded heavy-truck runs on the non-congested expressway normally, it is difficult to travel at a constant speed up and down the road section with grade over 2.0 degree; and it is also difficult to follow the passenger vehicle in front of the truck with a constant distance; If the vehicle were to keep a constant speed, the heavy-truck must increase fueling to go uphill or brake to go downhill every time, equivalent to many active accelerations or brakings, resulting in higher fuel consumption and pollutant emissions of the engine. When the ACE heavy-truck enters the intelligent cruise control (iCC) in the expressway design operation domain (ODD), the upper limit and the lower limit of the cruising-speed band are reasonably set according to the vehicle rated cruising speed $V_c$ and the sub-mode selected by the driver, and the vehicle is controlled in the cruising-speed band; the end points of the three iCC sub-modes are different, the normal mode (N) is for both vehicle fuel-saving and freight timeliness (on-time delivery); the fuel-saving mode (Eco) emphasizes fuel-saving and relaxes the freight on-time requirement (that is, cruising speed can be lower but must save oil); the high performance mode (P) emphasizes freight timeliness and relaxes the fuel saving requirements (i.e., fuel consumption can be higher but must be fast). Preferably, the upper and lower limits of the cruising speed band of each of the following iCC sub-modes can be selected:

In the normal mode (N), the cruising speed $(1.0-0.05)V_c < V < (1.0 + 0.05)V_c$ and cannot be higher than 103 % of the legal maximum vehicle speed of the road section; under the fuel-saving mode (Eco), the cruise vehicle speed $(1.0-0.10)V_c < V < (1.0 + 0.05)V_c$ and cannot be higher than 103 % of the statutory maximum vehicle speed of the road section; in the high performance mode (P), the cruising speed $(1.0-0.03)V_c < V < (1.0 + 0.03)V_c$ and cannot be higher than 105 % of the statutory maximum speed of the road section. If the speed band of the heavy-truck cruise control is set to be too narrow (for example, the up-down floating rate is less than 2 %), it is not good for the energy-saving and emission-reduction optimization of the heavy-truck.

The VCU 201 can compute and adjust in real-time (hundred millisecond time delay) the safe tracking distance time-varying function $L_s(t)$ (safe distance function for short) of the adaptive cruise control based on the static configuration parameters (especially the total vehicle weight) and the dynamic operation data (especially the longitudinal vehicle speed) of the ACE heavy-truck 010, the current vehicle location 3D road information (longitude, latitude, longitudinal grade), the 3D road data such as the road grade function distribution and curvature in the electronic horizon (especially km level road section in front of the ego-vehicle) stored in the map unit 240; different from the adaptive cruise control of the passenger car with a predefined fixed safe following distance in the prior art, the longitudinal grade function distribution of the expressway in the electronic horizon has great influence on the gradeability (vehicle power performance) or deceleration (vehicle braking performance) of the ACE heavy-truck running at high speed; Because the driving power (kilowatt/ton) and brake power of the passenger car in unit vehicle weight are several times higher than that of the heavy-truck, it is unnecessary to dynamically adjust the safe following distance $L_s$ according to the longitudinal grade distribution function of the road in front of the passenger car; However, the dynamic adjustment of $L_s$ is important to the active safety of the ACE truck in any iCC sub-mode. The safe vehicle-following distance $L_s$ can be further subdivided into three specific distances: L1 is the pre-warning distance (Alert Distance), L2 is the warning distance (Warning Distance), L3 is an emergency braking distance (Emergency Braking Distance), wherein L1 > L2 > L3. The VCU 201 can compute the above three following distance functions L1, L2, or L3 dynamically with a refreshing frequency higher than 10 Hz and a meter-level precision based on vehicle static configuration parameters and dynamic operation condition data (e.g., vehicle total weight, vehicle speed, etc.), real-time weather conditions (wind, rain, snow, ice, temperature, etc.), and 3D road data (longitude, latitude, road grade) and in combination with the vehicle dynamic equation (1-1). Obviously, the safety distance function $L_s(t)$ has high positive correlation with the known data such as the transient speed function of the ACE heavy-truck, the longitudinal grade function distribution within the kilometer level road section in front of the ego-vehicle and the gross weight of the whole vehicle; In the flat road section without long slope or high mountain, for the fully loaded heavy-truck driving at 60 mph speed, the pre-warning distance L1 is about 250 meters, the warning distance L2 is about 150 meters, and the emergency braking distance L3 is about 60 meters; Obviously, the higher the total weight of the ACE heavy-truck or the higher the vehicle speed is, the longer the above three distances (L1, L2, L3) are.

Under the expressway working condition, the ACE heavy-truck is mainly controlled by parallel-hybrid iPS; When the safe distance function $L_s$ = L1 and the relative speed v > 0 (representing the continuous shortening of the vehicle safe following distance between the two vehicles) of the parallel-hybrid ACE heavy-truck 010, the VCU 201 issues a pre-warning prompt through at least one of a plurality of physical signals such as tin-vehicle sound, visual, or tactile sensation; at the same time, (within 0.1 second time delay) the transient power PWM pulse sequence duty-cycle of the DPC engine 101 is reduced to less than 50 %, the average power function of the engine is reduced, the vehicle driving is mainly by the battery pack 130 with the engine as the auxiliary power source, and the battery pack 130 operates stably in the charge sustaining (CS) mode or the charge depleting (CD) mode, so as to prepare for the fast (ten millisecond level time delay) regenerative braking; when the safety distance function $L_s$=L2 and the relative speed v is more than 0, the VCU 201 issues a higher intensity warning prompt through at least two of a plurality of physical signals such as in-vehicle sound, visual, or tactile sensation at the same time, the duty-cycle of the PWM pulse sequence of the DPC engine 101 is now set to zero (that is, 0 %), at this time, the DPC engine can only work in the predefined low-state, the average power function value is a negative number; the engine 101 now becomes the mechanical load of the generator 110, causing the battery pack 130 to operate stably in a charge sustaining (CS) mode or a charge depleting (CD) mode and provide all vehicle drive electrical power; the capability of the traction motor 140 plus the battery pack 130 to rapidly switch between one-hundred-kilowatt-level driving power and regenerative braking power within a ten-millisecond-level response time can be utilized, and the vehicle-following distance $L_s$ can be maintained between the warning distance L2 and the emergency braking distance L3 as much as possible, and preparing for immediately implementing the emergency braking; when the safety distance function $L_s$=L3 and the relative speed v is more than 0, the VCU 201 issues a plurality of physical signals such as such as in-vehicle sound, visual, or tactile sensation simultaneously and at even higher intensity and gives the driver the high intensity emergency brake request of the highest priority , maintains the pulse-control engine 101 running in a low-state (either the PWM duty-cycle is zero; or a regenerative braking), and immediately starts the engine braking function; at this time, the average power function value of the engine is a negative value, after second-level time delay, the braking power of the engine can reach a-hundred-kilowatt level; and immediately implement (ten millisecond level time delay) regenerative braking auxiliary emergency braking function of the double motor 110&140 with total peak regen power of nearly 500 kilowatt, at the same time, also can start (sub-second level time delay) one-megawatt level mechanical braking emergency brake; electric motor regenerative braking and engine braking belong to emergency braking auxiliary function, both are non-friction braking, the total braking power (about 700 kW) is not enough to quickly bring the heavy-truck running at high speed to a full stop, but they can obviously reduce vehicle speed and will not cause the driving wheels to be locked to cause the vehicle to lose traction control; It is a quick and effective redundancy supplement to the mechanical brake system of the ACE heavy-truck, which obviously improves the braking performance of the ACE heavy-truck; The maximum regenerative braking power of the double motors (110, 140 or 170) is 500 kW in total, and for the full-load heavy-truck running at high speed, it can only satisfiy the auxiliary braking deceleration requirement when the acceleration absolute value is less than 0.1 G (G is gravity acceleration; G = 9.8 M/S$^2$); In case of an emergency, it is necessary for the driver to step on the brake pedal or the ADAS system drive-by-wire signal to start the friction mechanical brake system (at one megawatt level) of the heavy-truck, so as to realize the emergency brake with the deceleration absolute value exceeding 0.2G. The total time delay of the driver brake reaction time and the response time of the heavy-truck mechanical brake (pneumatic brake) system is more than 500 milliseconds; and the system response time of the ACE heavy-truck to switch quickly from the hundred-kilowatt-level driving power to the hundred-kilowatt-level regenerative braking power is within 25.0 milliseconds, which is at least one order of magnitude faster than that of the traditional heavy-truck driver and the mechanical braking system, which can make the vehicle decelerate more quickly and safely (without locking the wheels), the electric regenerative braking system and the mechanical braking system are completely independent from each other; The motor regenerative braking function of the ACE heavy-truck not only improves the comprehensive braking performance of the vehicle, but also provides safety redundancy. The foregoing set of multiple technical measures for dynamically controlling the vehicle cruising speed zone or the safe vehicle tracking distance is collectively referred to as an intelligent cruise control (iCC) technology or function; wherein when the safe distance function $L_s$=L2 and the relative speed v is greater than 0, the pulse-control engine 101 is forcibly controlled to operate stably in the pre-defined low-state (ten-second level time; forced switch-down or the switch-up prohibition) is called the adaptive pre-brake function (APB), the APB function is beneficial to the vehicle braking performance and the regenerative braking and does not affect the drivability of the vehicle or the energy-saving and emission-reduction overall optimization; Obviously, comparing the intelligent cruise control (iCC) of the present disclosure with the adaptive cruise control (ACC) of the vehicle or the traditional diesel heavy-truck in the existing technology set, there are essential differences in terms of the specific technical measures and the technical effects; The ACE heavy-truck of the disclosure is compared with the top-of-the-line modern Europe and US heavy-truck with a 16L diesel engine of the, the former has obvious advantages over the later in the power performance of the whole vehicle, energy-saving and emission-reduction, brake effectiveness and system safety redundancy.

The intelligent cruise control function (iCC) working scene of the ACE heavy-truck can be divided into two types. The first type is that when there is no other vehicle within 250 meters in front of the ego-vehicle in the same lane, the VCU 201 controls the ACE heavy-truck to run within the selected vehicle speed band according to the fuel-saving AI algorithm, without considering the three safe vehicle following distances $L_s$; the second type is that when there are other vehicles within 250 meters in front of the ego-vehicle in the same lane, the ACE heavy-truck is tightly controlled within the three safe vehicle following distances $L_s$ first, and then the fuel-saving AI algorithm is considered; In other words, the priority or weight of the control algorithm or drive-by-wire signal related to vehicle driving safety is always obviously higher than that related to energy-saving and emission-reduction. The ACE heavy-truck intelligent cruise control technology (iCC) of the disclosure is compared with the traditional diesel heavy-truck predictive adaptive cruise control technology (namely the existing technologies), the most significant difference point is through the DPC engine 101 (series-hybrid iSS or parallel-hybrid iPS), according to the vehicle positioning and longitudinal orientation measurement, the 3D road information in the electronic horizon, and the fuel-saving AI algorithm, dynamically adjusting the safe vehicle-following distance L1/L2/L3 and performing predictive SoC control (PSC) on the battery pack 130, under the premise of ensuring vehicle power performance, timeliness, and safety, to optimize the vehicle fuel-consumption and pollutant emissions simultaneously, so the RDE vehicle CO2 and NOx emissions are minimized at the same time.

The long-haul heavy-truck occasionally encounters congested road section urban working condition caused by rush-hour traffic, road repair, extreme weather, or traffic accidents (average vehicle speed is less than 40 kilometers per hour; active acceleration and deceleration are frequent), at this time, the driver's labour intensity, vehicle fuel-consumption and pollutant emissions are all increased obviously. The congested expressway is one of the long-term "pain points" of the global road freight industry, and the average highway congestion degree of China is higher than that of the US, and the average vehicle speed is lower (the average vehicle speed of heavy-truck China is 60 kilometers per hour; The average speed in USA is 90 kilometers per hour). The ACE heavy-truck can start the intelligent vehicle-following function at this time, this function is only suitable for the controlled-access road (such as highway or city overhead road and so on) when driving at low speed (the average speed is less than 40 kilometer/hour), whereas it is not suitable for the open city or suburb roads. Using the front-view radar (SRR) and the camera 230, in the congested highway section, keeping the pre-defined safe vehicle following distance $L_0$ with the pilot vehicle in front of the ego-vehicle in the same lane, the VCU 201 directs the ACE heavy-truck to disconnect the clutch 111, now the DPC the engine 101 is controlled by the series-hybrid iSS technology, the battery pack 130 is controlled to operate mainly in a charge sustaining (CS) or charge depleting (CD) mode, and the vehicle is frequently accelerated or decelerated by the traction motor 140 (driving or regen braking). The maximum torque output of the traction motor 140 can be maintained in the range from zero rotational speed to the rated rotational speed, at this time, the acceleration and deceleration of the ACE heavy-truck are both obviously higher than that of the conventional ICE heavy-truck, and is even comparable to the power performance of the conventional engine light truck; at this time, the heavy-truck brakes frequently and runs at low speed, which is very good for recycling the vehicle energy efficiently by the hundred-kilowatt level regenerative braking power; The ACE heavy-truck has better fuel-saving than that of the traditional ICE heavy-truck under the intelligent vehicle-following mode, at this time, the actual fuel-saving rate can be obviously higher than 30 % and the actual NOx emission is greatly reduced at the same time, the driver's labour intensity can also be greatly reduced.

When the heavy-truck runs downhill along a long slope (more than 10 km and less than -2 % longitudinal grade) of the expressway, the mechanical brake system can suffer brake fade because of the intense heat generated by friction braking for a long time, and the traffic risk of losing the mechanical braking function completely is not negligible; At present, the European law requires that the long-haul heavy-truck must have a heavy-truck non-friction retarder; USA and China have no mandatory requirements for heavy-truck retarder, but more and more heavy-truck users choose to install heavy-truck retarders. Existing commercial retarder, such as eddy current retarder, hydraulic retarder and engine brake retarder, has advantages and disadvantages. The eddy current retarder and the hydraulic retarder have only one retarding function, does not take part in the vehicle driving, and also increases the weight of the vehicle and the extra cost is more than ten thousand RMB, and the retarding effect is obviously reduced when the vehicle runs at low speed. The in-the--cylinder or out-of-the-cylinder type of engine brake retarder can be used for multiple purposes, but the in-the-cylinder brake retarder creates high noise when working, the brake power is lower than the peak power of the engine, and the retarding effect is obviously reduced when the vehicle runs at low speed. The ACE heavy-truck of the disclosure is preferred to be under parallel-hybrid iPS control when descending the long slope, besides optimizing the beneficial effects of fuel-saving and emission-reducing at the same time, it also can pass through the duo-motor (110, 140) regenerative braking and engine 101 incylinder or out-of-cylinder engine braking, realizing the non-friction retarder function of more than 500 kilowatt for the ACE heavy-truck running downhill a long slope, without adding any extra hardware, can completely replace the eddy current retarder or hydraulic retarder; the performance-price ratio of the disclosure is higher than that of the heavy-truck retarder products commercially available today.

When the ACE heavy-truck 010 meets the long slope section (the absolute value of the longitudinal grade is greater than 2 degrees, the slope length is greater than 5 kilometers) descending, the longitudinal grade power alone is enough to overcome the wheel resistance power and wind resistance power, driving the vehicle to descend at constant speed, the redundant longitudinal grade power needs to pass through the motor (110, 140) regenerative braking to generate electricity to recover energy, avoiding the vehicle continuously accelerating downhill or starting mechanical brake to change the residual mechanical energy into heat energy waste; The VCU 201 can command the clutch 111 to close and lock, the vehicle works in the parallel-hybrid mode, at this time, the engine 101 works in a special example of the intelligent power switching control mode (iPS), that is, the duty-cycle of the engine transient power PWM pulse sequence is reduced to zero, entering the zero fuel consumption and zero emission low-state line working condition of low-load low-state operation (not starting the engine braking function) or high-load low-state operation (starting the engine braking function), the generator 110 and the traction motor 140 can be used for recycling the mechanical energy when the vehicle is downhill through regenerative braking power generation, the battery pack 130 is charged by the ePSD 123; when the battery pack 130 is full (i.e. SoC = URL), the chopper 132 cuts off the battery pack 130, at the same time, the voltage control switch (VCS) 133 is switched from the off state to the on state, the one-way electric connection is electrically connected with the hundred-kilowatt-level brake resistor 131, as the effective power load of regenerative braking power generation, The redundant electric energy is converted into heat energy to be consumed. under the parallel-hybrid mode, the engine braking power and the motor regenerative braking power can be superposed, which not only can greatly improve the total power of the friction-free retarder function, but also can provide two sets of independent and redundant slow-speed systems, and improve the active safety when the ACE heavy-truck runs downhill. The regenerative brake can recover energy, save oil and reduce emission near zero cost, and also can greatly prolong the service life of the mechanical brake block, and obviously reduce the total operation and maintenance cost of the mechanical brake system in the ACE heavy-truck 010 full life period. From the driving safety point of view, when the ACE heavy-truck is on the long slope, no matter the vehicle speed is high or low, the parallel-hybrid mode should be preferred so as to avoid the parallel-hybrid mode as much as possible.

The iMMH powertrain system of ACE heavy-truck 010 of the disclosure can convert the modern analog-controlled (AEC) engine upgrade used by any one of the mass manufacturers into pulse-control (DPC) engine through series hybrid iS or parallel-hybrid iPS control technology, it realizes the powertrain system (SDPt) defined by the full digital software; The necessary technical feature of the SDPt comprises the working condition of the engine 101 and the working condition decoupling of the whole vehicle 010 and the software and hardware decoupling of the assembly system; In other words, as long as each hardware subsystem of the assembly system (such as: an engine 101, a generator 110, a clutch 111, a traction motor 140, a transmission 150, an electric power splitting device 123, a battery pack 130 and so on) satisfy the threshold technical condition, then the actual (RDE) power performance, fuel consumption, the three technical metrics of the emission are completely defined by software and can be dynamically and sensibly customized, so that the three technical metrics of the whole vehicle are basically independent of the specific technical performance and price of the key sub-system hardware such as the engine 101 and the dual-motor 110&140; the software defines that the performance of each hardware sub-system in the series-parallel powertrain (SDPt) meets the standard (that is, the hardware can be generalized and abstracted); Hardware large super-paired ACE heavy-truck 010 current vehicle propulsion performance optimization is not beneficial and harmless, but can improve the redundancy and future upgrading potential of the system, In particular, the potential for the three target peaks of the vehicle system is increased by replacing the future mass-production reinforced transmission 150 (maximum input torque exceeding 3600 meters) and the matched reinforced drive axles 160&180. The ACE heavy-truck focus optimizes the energy saving and emission reducing highway ODD intelligent cruise control (iCC) function, actually is the 1D longitudinal L1 level automatic driving function, and has the potential of upgrading to L2 level, L3 level, or L4 level automatic driving function. The ACE heavy-truck configured with SDPt of the disclosure naturally has system redundancy of whole vehicle driving, power supply and brake, which is easy to pass through a plurality of environment sensing sensors, a drive-by-wire automatic steering device, automatic driving AI chip and other hardware and software upgrading, the L1 level ACE heavy-truck is upgraded to L3 or L4 level automatic driving heavy-truck, which is the preferred vehicle platform of the future batch commercial L4 level long-haul heavy-truck, The future batch business of the L4-level ACE heavy-truck will have an impact on the global long-haul heavy-truck industry, which can be similar to the enormous and far-reaching impact of the upgrading and upgrading of the global mobile communication industry from 2G function mobile phone to 3G intelligent mobile phone.

Industry experts unanimously believe that it is difficult for the L5-level unpiloted heavy-truck to enter bulk business in the world's major markets by 2030. The L1 to L4 level automatic driving heavy-truck must comply with the road vehicle function safety standard ISO26262, reaching the appointed vehicle safety level (ASIL safety level), the higher the level, the higher the system reliability and redundancy requirement. ACE heavy-truck 010 based on system integration comprising double motors 110 and 140, battery pack 130, and ePSD 123, to realize high performance pure electric propulsion driving, regenerative braking energy recovery, automatic emergency brake auxiliary function (AEBA), besides the traditional engine and the mechanical brake system of the vehicle, a set of completely independent and redundant electric regenerative brake active safety system is added, at the same time, a redundant vehicle electric propulsion system (the engine is added with multiple motors) and a redundant power supply are added; In other words, the ACE heavy-truck 010 of the present disclosure naturally has redundant power system, brake system, steering system, and multi-voltage power supply system, and is a preferred basic vehicle platform for future development and mass production of L4 level automatic driving heavy-truck in highway ODD. The ACE heavy-truck of the disclosure can improve the three ultimate targets of the automobile industry at the same time with a higher performance-price ratio under the premise of ensuring the optimal power performance of the whole vehicle compared with the modern internal combustion engine heavy-truck used by all the mass manufacturers: It is safe, energy-saving and environment-friendly.

It should be emphasized that the ACE heavy-truck of the present disclosure passes through a pulse-control engine (series-hybrid iSS or parallel-hybrid iPS), an intelligent cruise control (iCC) and other technical measures, realizing the one-dimensional (1D) longitudinal SAE L1 automatic driving function in the highway ODD, reaching the beneficial effect of reducing the comprehensive fuel consumption (liter/100 kilometer) by about 30 % compared with the traditional diesel heavy-truck, mainly depending on the series-parallel powertrain technology, In particular, the ePSD of the electric power splitting device makes full use of the prior data of the 3D map of the electronic horizon, the data of the dynamic working condition of the vehicle, the fuel-saving data-set of the vehicle-cloud cooperation and the fuel-saving machine learning (ML) algorithm; Even if the human driver manually drives the ACE heavy-truck (that is, L0 level), the fuel saving rate can be nearly 25 %, that is, about 80 % of the optimized potential of energy-saving and emission-reduction can be achieved; through the iCC function of the ACE heavy-truck, the longitudinal L1 level automatic driving in the highway ODD can be realized, so as to ensure the comprehensive fuel consumption (liter/100 kilometer) of each ACE heavy-truck and the technical level and performance of the vehicle engine and the personal driving level of the driver (capacity, road experience, and working attitude and so on) high decoupling, the actual fuel saving effect and consistency are obviously better than human driver (see Figure 6D). The ACE heavy-truck of the disclosure adopts mature and mass-produced commercial core parts and system integrated technology, has significant fuel-saving effect, high performance-to-cost ratio, the vehicle fleet does not depend on government subsidy, only depends on actual fuel cost saving, it can realize 2 years return (that is, the difference between the ACE heavy-truck and the traditional diesel heavy-truck), 5 years accumulated bicycle profit double; ACE Heavy-trucks are the first to be commercially available in North America in three years by way of refitting second-hand heavy-trucks. Other commercialized various long-haul heavy-truck non-powertrain fuel-saving technology, such as low rolling friction tires, light weight, reducing wind resistance coefficient (tractor head and trailer) and so on, can be directly overlapped and applied to ACE heavy-truck; It should be emphasized that, different from the modern diesel heavy-truck, the above various non-powertrain fuel-saving technologies can generate 1 + 1 > 2 energy-saving and emission-reduction synergistic effect (Synergy) on the ACE heavy-truck, and has low wheel resistance, light weight, the fuel-saving effect with low wind resistance is more obvious, the synergistic effect of ACE heavy-truck is stronger; in addition, because the ACE heavy-truck has super-strong capability of regenerative braking and energy recovery, when the ACE heavy-truck operates in the high performance mode (P) or the average cruising speed exceeds 65 miles/hour (within the legal highest speed in USA), it not only can improve the freight timeliness, ensure that the real-world fuel consumption does not increase, and the large probability can further reduce the real-world fuel consumption, effectively break the zero-sum balance between the modern diesel heavy-truck timeliness (namely the highest cruising speed) and the fuel consumption. It is expected that the real-world fuel consumption (+ /100 km) of the modern diesel heavy-truck of the 2019 edition will drop by more than 25 % before and after 2024 in USA. The actual NOx emission value (g/bhp-hr) is reduced by more than 75 %, and the dynamic and braking properties are obviously improved.

Unlike the prior art, the ACE heavy-truck 010 of the embodiment shown in FIGS. 1A to 8B of the disclosure relies on full digital software to define a hybrid powertrain, which is commanded by VCU 201, according to the vehicle configuration parameter and dynamic working condition data (such as total vehicle quality, longitudinal vehicle speed and acceleration, The vehicle propulsion performance positioning and attitude measurement and so on), in combination with the map unit (MU) 240 electronic horizontal line prior 3D road data and machine learning (ML) fuel-saving algorithm (AI fuel-saving algorithm), by performing pulse modulation control (PM) on the transient power function of the engine 101, It comprises series hybrid intelligent start-stop control (iSS) or parallel hybrid intelligent power switching control (iPS), adding intelligent mode switching control (iMS) and clutch-less gear shift control (CGS), dynamically and continuously adjusting engine average power function value (according to equation (MTA)); also through controlling the electric power distributor (ePSD 123), between the three-port power electronic network thereof is externally connected with a plurality of power supply or load (such as generator 110, traction motor 140, battery pack 130, brake resistor 131 and so on), dynamically adjusting the flow direction, path of the hundred-kilowatt level electric power, and amplitude; According to the series-hybrid equation (2-4) or the parallel-hybrid equation (3-3), the transient power function of the battery pack 130 is subjected to pulse modulation control (PAM or PWM), so that the battery pack 130 is kept at charge (CS), charge depleting (CD), or one of the three modes of charge increase (CI) work stablys or smoothly switches between them, realizing predictive control (PSC) of the average SoC function of the battery pack, so that the battery pack 130 work stablys in the high efficiency area (BLL < SoC < BUL) for a long time, the total charge turnover rate and regenerative braking charge turnover rate are maximized at the same time, the vehicle dynamic equation (1-1) is satisfied in real time; then combined with the intelligent cruise control (iCC) function, the fuel consumption (L/100kM) of the diesel heavy-truck RDE is reduced by more than 25 %, obviously improving the power performance and brake effectiveness of the vehicle, ensuring the actual discharge to reach the standard for a long time, reducing the labour intensity of the driver driving, The utility model improves multiple beneficial effects such as resting experience when the driver stops at the anti-idle speed (Anti-Idling). The disclosure configures the software to define the ACE heavy-truck of the hybrid powertrain, through the intelligent cruise control (iCC) technical measures, the power management problem of the ACE heavy-truck in the expressway design operation domain (ODD), an equivalent narrow artificial intelligent problem (NarrowAI) of computer down-wall chess, which is very suitable for using machine learning (ML) fuel-saving algorithm and the computer readable medium of the disclosure to store and upload the fuel-saving data-set at the cloud platform, through the linkage (training or inference) of the cloud platform and the vehicle-mounted fuel-saving AI chip, the AI fuel-saving algorithm of ACE heavy-truck is better than the human driver in the aspect of actual energy-saving and emission-reduction optimization, and the consistency is very strong, which can be the precious assistant of the human driver.

As mentioned above, when the ACE heavy-truck 010 is travelling on the cargo expressway, the power generation is regenerated and braked by the duo-motor 110&140 by skillfully utilizing the frequently occurring downhill longitudinal grade power of dozens of kW to hundreds of kW generated by the fine change of 0.1 degree particle size of the longitudinal grade along the road, After being rectified by the ePSD 123 of the electric power splitting device, the battery pack 130 is charged, and from the downhill of each hundred meters to several kilometers along the way, the "zero cost electric energy" (that is, regenerative braking charge) of the hundred-watt or kilowatt-hour level can be harvested, and the fine water flows in a long flow, and the volume is reduced to a large number. In addition, the closed-loop integrated efficiency (vehicle mechanical energy-battery electric energy-vehicle mechanical energy) of the ACE heavy-truck for recovering energy from regenerative braking is about 72 %, and the integrated efficiency of actual operation of the diesel engine is about 36 %; In other words, the regenerated electric energy in the ACE heavy-truck battery pack is compared with the chemical energy of the fuel in the fuel tank. The fuel-saving secret under the ACE heavy-truck high speed working condition is to maximally utilize the zero-cost "regenerative braking charge" accumulated in the battery pack 130, to provide the driving power of a part of vehicle, through the quick turnover mode of random charging and random discharging, The accumulated throughput electric energy turnover rate of the battery pack 130 in the whole transportation event is improved, especially the regenerative braking charge turnover rate, at the same time, the engine charge turnover rate is reduced, and the best fuel-saving effect is achieved.

VCU 201 pre-checks 3D road data in real time according to the vehicle map unit (MU) 240 electronic horizon, to prepare for rainy days, to ensure that when the vehicle encounters a long slope with a length of more than ten kilometers and a longitudinal grade of more than 2.0 %, there is sufficient advance time to direct the clutch 111 to be engaged and locked, Under switching to the parallel-hybrid mode, the engine 101 and the generator (MG1) 110 are implemented with parallel hybrid intelligent power switching control (iPS), before the vehicle reaches the long slope, the battery pack 130 is full (SoC reaches URL) in time (JIT), and the speed of the vehicle is raised to the upper limit of the statutory vehicle speed, so as to maximally delay and reduce the climbing of the ACE heavy-truck 010, after the electric energy of the battery pack is exhausted, because the peak value power of the engine is not enough to independently support the vehicle to climb at a high speed and a constant speed, it is only necessary to shift the low gear to decelerate and upgrade, The vehicle propulsion performances and transportation timeliness are affected. According to the 3D map stored in the vehicle MU 240, especially the high-precision longitudinal grade space distribution function in the electronic horizon, and the configuration parameter and dynamic working condition and positioning data of the vehicle, VCU 201 can pass through the vehicle dynamic equation (1-1), using kilowatt-level precision and refreshing frequency higher than 1 Hz to dynamically predict the longitudinal grade power time-varying function and road-load transient power time-varying function of the vehicle in the electronic horizon (hour level or hundred kilometer level), so as to perform pulse modulation (PAM or PWM) on the transient power function of the battery pack 130 by performing pulse modulation (PM) control (series-hybrid iSS or parallel-hybrid iPS) on the transient power function of the engine 101, realizing predictive control of the average SoC function of the battery pack 130; according to the different sub-modes of the vehicle intelligent cruise control (iCC) selected by the driver, under the precondition of ensuring the driving active safety and the actual (RDE) emission always reaching the standard, seeking the positive-sum balance between the ACE heavy-truck fuel-saving performance and the dynamic performance (that is, simultaneous optimization), The disclosure can meet the vehicle dynamic equation (1-1) and the series-hybrid equation (2-4) or the parallel-hybrid equation (3-3) in real time, and can reach the beneficial effect of optimizing ACE heavy-truck energy-saving and emission-reduction. What needs to be emphasized is that a certain ACE heavy-truck completes the comprehensive fuel consumption (L/100kM) minimum value (that is, the optimal value) of the specific freight event and the configuration parameter (especially the total weight) of the vehicle, the longitudinal grade space function of the specific journey (or route) along the road, the weather condition along the day, It is highly related to the dynamic working condition data (especially the longitudinal speed or acceleration) of the vehicle along the way, and it is basically unrelated to the macro big data average fuel consumption value of the heavy-truck similar to the configuration and load in the national range. When the ACE heavy-truck runs every minute or every kilometer, the average fuel consumption is minimized and the linear superposition can ensure that the accumulated comprehensive fuel consumption of the ACE heavy-truck is optimal in every day, every month, every year and whole life period. All ACE heavy-truck clusters with different configurations and different loads are operated in the national or full-continental highway network, and the long-haul fuel-saving data-set formed by accumulating daily is a precious "data oil" for training machine learning fuel-saving algorithm, and the default fuel-saving control strategy recommended by cloud fuel-saving algorithm, The disclosure has common reference and guidance meaning for each ACE heavy-truck operated by the special route.

Referring to Fig. 4A, the low-state operation mode of the pulse-controlled engine 101 in the fourth quadrant of its universal characteristics curve (positive rotation speed, negative torque) can be subdivided into two types according to the specific operation mode of the specific cylinder in a complete four-stroke cycle period of the engine. The first type is "oil-break mode" (CCO-cylinders Cut-Off), and the second type is "cylinder-stop mode" (CDA); The so-called CCO means that the specific cylinder completely cuts off the fuel injection in the combustion stroke, but the air inlet valve and the air outlet valve of the cylinder are normally operated on and off, obviously the CCO is suitable for all mass-production commercial engines, which is actually a specific engine fuel injection control strategy, which is completely realized by software, there is no need for complex variable valve actuation mechanism (VVA) of engine configuration; As for the so-called CDA, it means that the engine part but not all of the specified cylinders are kept continuously closed in the engine four-stroke cycle (Four-Strock Engine Cycle) except that the fuel injection is completely cut off in the combustion stroke, the intake valve and the exhaust valve corresponding to the oil-cut cylinder are kept continuously closed in the engine four-stroke cycle. It is obvious that the CDA control strategy is only suitable for the advanced engine with complex variable valve actuation mechanism (VVA), while the common engine without VVA mechanism cannot realize the CDA function.

The "combustion factor" (CF-CombusFactor) of the engine is defined as the ratio of the number of cylinders in which combustion work is completed within an engine cycle of four-stroke engine. For example, for the in-line six-cylinder (I6) diesel engine of the modern heavy-truck, CF= 1 corresponds to the normal combustion of all six cylinders of the engine; CF= 1/2, corresponding to the engine, there are only three cylinders which work normally, and the other three cylinders do not work passively (CCO or CDA); CF= 1/3, corresponding to the engine, there are only two cylinders which work normally, and the other four cylinders work passively (CCO or CDA); CF= 0 corresponds to the passive operation of all six cylinders of the engine (CCO or CDA). In the existing engine CDA technology, the combustion factor CF is a positive number not greater than 1; In other words, in the existing analog electric control engine technology (including CDA technology), when the engine 101 is normally operated, the CF of the engine is not allowed to be zero except the special zero point of the zero rotating speed and the torque (that is, the static point of the engine), that is, the engine is not allowed to be operated passively, It works in the fourth quadrant of the universal characteristics curve (except the brake mode of the engine).

Taking the I6 engine as an example, in order to realize the CDA function, the engine must be configured with a VVA mechanism; The simplest embodiment of the existing CDA technology requires a VVA mechanism (VVA-2) of two independent drive-by-wire channels, which can be divided into two groups to control the intake and exhaust valves of six cylinders; most of them are VVA-6 with six independent drive-by-wire channels, which can control the intake and exhaust valves of six cylinders in groups; The most complex embodiment needs the VVA-12 of twelve independent wire control channels, which can independently control the air inlet valve or air outlet valve of six cylinders, respectively; Obviously, the higher the number of the drive-by-wire channel, the more complex the VVA mechanism of the engine, the higher the cost, the higher the control dimension and the better the performance; At the same time, VVA mechanism functions are downwards compatible rather than upwards compatible, for example, VVA-12 can be compatible with all functions of VVA-6, while VVA-6 can be compatible with all functions of VA-2, and vice versa. different from the modern gasoline engine adopting CDA technology to focus and reduce RDE fuel consumption, the modern heavy-truck diesel engine adopts CDA technology, the main purpose is to add an effective method for thermal management of diesel engine after treatment system, under the premise of maintaining the RDE fuel consumption basically unchanged, The diesel engine RDE emissions (NOx and PM) are obviously reduced.

Engine cylinder deactivation technology (CDA) has been commercially available on light vehicle gasoline engines or diesel engines, but on heavy-truck diesel engines, by the end of 2021, the world-wide heavy-truck diesel engine CDA technology is still at the stage of research and development, and there is no mass production for commercial use. The challenge of heavy-truck diesel engine CDA technology is not only that the engine needs to be redesigned, the complex VVA mechanism and cost are increased, and the calibration is redemarcated, the engineering challenge to be verified is not only the long-term service life of VVA mechanism (millions of miles), Also, there is a problem of vibration noise (NVH) at the whole vehicle level caused by the switching of the CDA engine mode (i.e., the dynamic switching between the normal operation of the engine (CF= 1) and various CDA modes (0 <CF <1)); The NVH problem of the CDA engine cannot be effectively solved by adjusting and testing on the engine bench, and it must be solved by customized adjusting and testing on the whole vehicle layer, which wastes time and cost. The disclosure focuses a novel pulse-control engine CDA technical solution - "binary cylinder deactivation" (bCDA-binary cylinder deactivation), the specific technical measures are as follows: Preferably, a set of VVA-1 mechanism is configured by improving and upgrading the fixed air inlet and outlet mechanism of the pulse-control engine; The mechanism includes a VtC-Valve-train Clutch, which is controlled by a digital signal (e.g., high-state 1, low-state 0), with two stable VtC operating conditions, open or closed; When the drive-by-wire signal is 1 (i.e., when the clutch (VtC) is closed), all the intake and exhaust valves of the engine are normally operated by the camshaft of the engine, at this time, CF= 1 (high-state) or 0 (low-state); when the drive-by-wire signal is 0, the clutch (VtC) is disconnected (that is, all the intake and exhaust valves of the engine are mechanically decoupled from the camshaft of the engine), all the intake and exhaust valves are continuously closed in the four-stroke period of the engine, CF= 0 (low-state); Obviously, for the six-cylinder heavy-truck CDA pulse-control engine 101, the single-channel VA-1 mechanism is more than the multi-channel VA-2, VVA-6, VA-6, VA-6, VA-6, VA-6, VA-6, VA-6, VA-6, VA-6, VA-6, VA-6, VA-6, the VVA-12 and other mechanisms are more simple and durable, the control strategy is simple and practical, the cost increment (Cost Delta) is lower, which is the bCDA optimal embodiment; Of course, various multi-channel VVA mechanisms (such as VVA-2, VA-6, VVA-12, etc.) can also be compatible downwards to implement all functions of the VA-1 mechanism, but the performance-price ratio is not as good as VA-1, which is a suboptimal embodiment. The technicians in the engine industry can realize VtC device by adopting variable valve starting technical solution used by various mass manufacturers, and single channel VA-1 mechanism configured with VtC device, it is the simplest VVA device with the highest performance-price ratio in multiple feasible technical solutions for implementing the engine binary cylinder deactivation technology (bCDA); The disclosure takes the abstracted VtC as a system part, and the focusing software defines the powertrain and the ACE heavy-truck. It needs to stress that the binary cylinder deactivation technology (bCDA) is combined with the pulse-control engine technology (iSS or iPS) so as to furthest exert the beneficial effect of optimizing the energy-saving and emission-reduction of the engine at the same time; In the prior art, the cylinder-deactivation technical solution of the engine (i.e., the CDA of the conventional AEC engine ) does not include the binary cylinder-deactivation technical solution of the present disclosure; In other words, the binary cylinder deactivation technology (bCDA) is a significant improvement of the existing cylinder deactivation technology (CDA), under the premise of keeping the engine performance (reducing fuel consumption, engine after treatment system heat preservation and so on), the mechanical structure of bCDA is simpler, the cost is lower, the durability is longer, The NVH characteristic is better, especially the effect of saving fuel and reducing discharge is better. In addition, the turbocharger (Turbo) of the pulse-control engine and the binary cylinder-deactivation technology heavy-truck engine puts forward obviously different and more strict technical requirements; Specifically, more than 97 % of the pulse-controlled engine runs in a simple high-efficiency line working condition (high-state is medium-high loading rate combustion; the low-state is zero fuel consumption and emission), does not need to match the turbocharger with variable section, and does not care about the hysteresis effect of the turbocharger; but the exhaust gas pressure or flow rate of the pulse-control engine is also a certain pulse sequence function, at this time, the operation condition of the turbocharger is obviously different from the operation condition of the turbocharger of the traditional AEC engine, a fixed section turbocharger with motor assistance can be preferred, The new type turbocharger design can weaken the requirement of high performance dessert working condition covering area and hysteresis effect, but it especially needs to increase the requirement of reliability and long service life; It has higher requirement to the starting motor and lead-acid battery and other parts of the vehicle when the passenger vehicle static start-stop technology is used by the commercial.

The DPC engine (series-hybrid iSS or parallel-hybrid iPS) of the disclosure also can obviously improve the deterioration problem of the vibration noise characteristic (NVH) of the engine or the whole vehicle layer caused by the cylinder deactivation technology (including binary cylinder deactivation technology), especially the CDA mode dynamic switching; The specific technical measures are as follows: The transient transition time for switching the CDA mode of the pulse-control engine is controlled within the low-state time period of the pulse-control engine 101 (the duty-cycle is equal to zero); For example, when the engine is switched between a high-state (CF= 1) and a low-state (CF= 0) in a bidirectional manner, the oil-break mode (CCO) is firstly implemented, after the pulse-control engine is stably operated in the low-state for at least 0.5 seconds, then the binary cylinder-stop mode (bCDA) is started, at this time, the air inlet and outlet valves of all the cylinders enter the continuously closedcontinuously closed state; then before the low-state operation of the pulse-control engine is finished, at least 0.5 seconds is exited from the binary cylinder-deactivation mode, at this time, the air inlet and outlet valves of all the cylinders are recovered to the normal switch working state, the air inlet and outlet valves of each cylinder, CDA mode bidirectional switching will occur after at least one complete engine period in the low-state operation mode; In other words, under the control of VCU 201 and/or ECU 102, the CDA mode switching of the pulse-control engine 101 is only allowed to occur in the low-state working condition time period, and is not allowed to occur in the high-state working condition time period, Therefore, it greatly avoids the smooth switching problem or mechanical vibration noise problem (NVH) of a series of engines or whole vehicle layers caused by the direct coupling and mutual influence between the CDA mode switching of the engine and each cylinder combustion stroke (Combustion Strock) of the engine; Another advantage of the pulse-control (DPC) engine of the disclosure compared with the analog-controlled (AEC) engine of the existing technology is that the former can completely avoid the whole vehicle layer vibration noise problem (NVH) caused by the latter CDA mode switching and the corresponding engine and the whole vehicle engineering adaptation combined problem.

Fig. 6B is a duty-cycle time-varying function (duty-cycle function for short) of the pulse-control engine, and the value range of the function is as follows: [0, 1] (inclusive); wherein the duty-cycle function value is equal to 1.0, which represents that the engine 101 stably operates in the high-state working condition in the full period, and the duty-cycle is equal to 0, which represents that the engine stably operates in the low-state working condition; (tb-ta) represents the transition time of the upper transition ("the upper transition edge" for short) (td-tc) represents the transition time of the lower transition ("the lower transition edge" for short) TPWM is a pulse width modulation period; Preferably, the TPWM range is 60-120 seconds, preferably the upper jump edge range is 1-3 seconds, the lower jump edge range is 0.5-1.5 seconds, and the track line of the upper and lower edges is preferably an inclined straight line; in the first period, the duty-cycle is equal to (tc-tb)

/TPWM. The physical meaning of the duty-cycle function is to completely describe all working conditions of the pulse-controlled engine 101 with a simple normalized dimensionless one-dimensional time-variable function plus the engine speed function w (t); Under the normal driving condition that the gear of the ACE heavy-truck transmission is determined and the wheel does not skid, the rotating speed of the flywheel of the engine 101 is in direct proportion to the vehicle speed, and the time variable and the vehicle speed, the rotating speed of the engine and the vehicle location all have one-way one-to-one mapping relationship; In other words, each time of the ACE heavy-truck corresponds to the only determined vehicle speed, engine speed and space location, but one vehicle speed, engine speed or location of the ACE heavy-truck can correspond to different times.

The transient torque function $T_{dpc}(\omega,t)$ of the pulse-controlled engine 101 is a bi-variable real function of the engine flywheel rotational speed $\omega$ and the time t, which may be expressed as the following equation:

$$T_{dpc}(\omega,t) = (T_h(\omega) - T_l(\omega)) F_{edr}(t) + T_l(\omega) \qquad (6B\text{-}1)$$

wherein $\omega$ is the rotating speed of the engine flywheel at t time, $T_h(\omega)$ is the deterministic high-state working condition line (a pre-defined positive value and does not change with the time) which can be preset by the pulse-control engine, $T_1(\omega)$ is the deterministic low-state working condition line (a negative value and does not change with the time) which can be preset by the pulse-control engine, all auxiliary sub-systems for obtaining mechanical energy from the engine of the vehicle are determined together; In the series-hybrid mode, the rotation speed of the pulse-controlled engine 101 can be simplified to two pre-determined values (i.e., two point conditions) corresponding to the high-state or the low-state, at this time, $T_{dpc}$ is simplified to a single variable function of time t; See three parallel hybrid line conditions and two series hybrid point conditions shown in Fig. 4A; the dimension of all torque functions is Newton Meter, and the duty-cycle function has no dimension;

The transient power function $P_{dpc}(\omega, t)$ of the pulse-controlled engine 101 is also a bi-variable real function of the engine flywheel rotational speed $\omega$ and the time t, which can be expressed as the following equation:

$$P_{dpc}(\omega,t) = (\omega\ T_{dpc}(\omega,t))/9550 \qquad (6B\text{-}2)$$

wherein $P_{dpc}(\omega,t)$ is the transient power function of the pulse-control engine, the dimension is kilowatt; $\omega$ is the rotating speed of the flywheel of the engine, and the dimension is the rotating speed per minute; $T_{dpc}(\omega,t)$ is the transient torque function of the pulse-control engine, and the dimension is Newton meter. It does not skid for the normal running vehicle (the wheel is not skid; the gear of the transmission is determined), the rotating speed w of the engine is proportional to the speed of the vehicle, and the speed of the vehicle is determined by the driver; Each time t has a corresponding unique determined vehicle speed or rotating speed, but at this time, the specific value of the vehicle speed or rotating speed time-varying function is random, according to a certain probability distribution.

For the pulse-control engine 101, at most one upper transition edge or one lower transition edge (i.e., at most one complete upper and lower transition) is allowed to occur in each period TPWM, and the priority of some lower transition commands is higher than that of the upper transition command (there is a forced lower transition when the vehicle is preparing for braking or braking; there is no forced transition); Regardless of the specific traffic condition of the freight event, the pulse-control engine can ensure that most of the time (e.g., the probability is greater than 97 %) runs in the high-efficiency area (high or low), the total running time of the upper and lower transitions is very small (e.g., the probability is less than 3 %), and in the total transition time, Only about 40 % of the time pulse-control engine actually operates in the most challenging low-efficiency working condition (loading rate is less than 30 %) for energy-saving and emission-reduction; In other words, regardless of the operating condition of the ACE heavy-truck 010, the actual operating time ratio (or probability) of the pulse-control engine 101 in the low-efficiency operating condition (i.e., low load) is less than 1.2 %; while the operation condition of the AEC engine is highly associated with the whole vehicle condition, the low-efficiency condition ratio is obviously higher than 1.2 %, even more than 15 %; It should be emphasized that the ACE heavy-truck can completely eliminate the idle speed working condition of the engine 101 (the loading rate is more than 0 % and less than 6 %) because of the continuous power supply of the large-capacity battery pack 130, no matter the engine 101 is controlled by the analog-controlled (AEC) or the pulse-control (DPC) strategy, which is beneficial for saving energy and reducing emission. The pulse-controlled ACE heavy-truck (mode II-B or III-B) is lower than the traditional heavy-truck (mode I equivalent to the ACE heavy-truck) or the analog-controlled ACE heavy-truck (mode II-A or III-A) in the real-world fuel consumption emission, and the bottom technical logic is that no matter any vehicle working condition, the pulse-control engine can ensure that the efficient operation time ratio is more than 97 % and the low-efficient working condition time ratio is less than 1.2 %; various intelligent predictive supervisory control strategies (iPSC) based on rules can realize about 80 % of the minimum potential of RDE fuel consumption emission in the physical distribution scene of the analog-controlled ACE heavy-truck trunk line, but cannot approach the real-time global optimal solution; and various iPSC strategies based on optimization (especially the energy-saving and emission-reduction machine learning (ML) algorithm driven by data), through self-learning and continuous iteration improvement, can ensure that the pulse-control ACE heavy-truck is under any application scene mainly with long-haul, the vehicle-end can compute the infinite approximation global optimal solution in real time, releasing nearly 100 % of the vehicle RDE energy-saving and emission-reduction minimization potential; The analog-controlled ACE heavy-truck and the analog-controlled ACE heavy-truck can be adapted to various energy-saving and emission-reduction ML algorithms, but the latter ML algorithm can achieve the beneficial effect of half-effort, which is one of the main invention points of the disclosure.

Fig. 6C shows a probability density function (PDF) of the relative torque or power of the two engines of the ACE heavy-truck 010; Curve a is PDF of the AEC engine, wherein the relative torque or power may be any real number between 0 and 1, the area of the curve under the variable (relative torque or power) value [0, 100 %] is 1 (namely the global probability is 100 %), the area under the variable value [0, 30 %] is obviously higher than 10 % (namely the probability of the low-efficiency area of the AEC engine containing the parking idle speed is higher than 10 %), if the engine braking condition is not considered, the AEC engine of the existing technology will not have negative relative torque or power; Curve b is PDF of the DPC engine of the disclosure, wherein there is obvious bimodal near two points of variable -3 % and 80 %, bimodal is not normal distribution, can be approximately two equilateral triangles; 3 % is pulse-control engine low-state of the maximum power density point, all low-state 99 % in the variable range [-5 %, -1 %]; + 80 % is pulse-control engine high-state of the maximum power density point, all high-state 99 % in the variable range [+ 70 %, + 90 %]; the probability of the pulse-control engine running in the high efficiency area (high-state or low-state) is more than 97 %, the probability of running in the low efficiency area (variable value [0, 30 %]) is less than 1.0 %; It is obvious that the prior art AEC engine and the pulse-control engine of the disclosure have significant differences in the probability density function of relative torque or power. It should be emphasized that the peak torque or power of the engine at different rotational speeds is not constant (see the external characteristics curve in Fig. 4B), and the information that the peak torque or power varies with the rotational speed of the engine is implicit in the torque or power loading rate of Fig. 6C; If the rotational speed of the engine can be fixed (e.g., mixed in series), the PDF of the pulse-control engine is transformed into two pulse functions at the low-state equivalent variable point and the high-state preset variable point, and the area of the sum of the two pulse functions (i.e., the integral to the variable) is still greater than 97 %.

Fig. 6D shows probability density functions of relative fuel consumption of three different heavy-trucks; the traditional diesel heavy-truck (SAE L0 to L2) driven by the human driver is used as the comparison standard; One of the long-term pain of the global long-haul industry is that human drivers drive traditional internal combustion engines on the same road. under the premise of total weight and freight time, RDE fuel consumption varies according to people and has high statistical spread, as shown in curve I in Fig. 6D, the real-world fuel consumption of the human driver driving the traditional heavy-truck (that is, the traditional heavy-truck of L0 to L2) can be approximately in normal distribution, the RDE fuel consumption value has a large probability of 99 %, which is distributed at 13 % of the reference fuel consumption; if the AI driver drives the traditional heavy-truck (that is, the traditional heavy-truck of L3 to L5), the statistical spread of the RDE fuel consumption can be greatly reduced (from 13 % to 3 %), at this time, the average RDE fuel consumption is 90 % of reference fuel consumption, RDE fuel consumption value has 99 % of large probability distribution on 90 % reference 3 %, as shown in curve II; A number of L4 heavy-truck technology providers Claim that the traditional heavy-truck of L4 level automatic driving is about 10 % less than the traditional heavy-truck of L0 ~ L2 level human driving. However, the non-linear coupling between the dynamic driving task (DDT) with safe focusing and the energy saving and emission reducing task of the focusing vehicle of the L3 to L5 level traditional heavy-truck (using the AEC engine) cannot be ignored, which can only save about 10 % oil than most human drivers, the lowest fuel consumption of AI driver cannot surpass the best human driver; ACE heavy-truck (analog-controlled or pulse-control) can completely decouple the DDT task in the second-level period from the vehicle energy-saving and emission-reduction task in the hour instant period, and further has a regenerative braking energy recovery function of more than 500 kW, Therefore, the average fuel consumption of the ACE heavy-truck (i.e., the ACE heavy-truck of L0 to L5) driven by the human or AI driver is further reduced to 75 % of the standard, at this time, the RDE fuel consumption of the ACE heavy-truck is 99 % of the large probability distribution of 1.5 % above and below the 75 % standard, as shown in curve III; Obviously, in the aspect of vehicle energy-saving and emission-reduction, the ACE heavy-truck of L0 to L5 is obviously better than the traditional heavy-truck of L0 to L5. It needs to be emphasized that the dynamic driving task (DDT; focusing the second-level time or hundred-meter-level distance of the current part; the first driving safety, super-high reliability 99. 9999 % +) and energy-saving and emission-reduction optimization task (focusing the future global ten hour level time or kilometer level distance; completely orthogonal decoupling, the pulse-control ACE heavy-truck intelligent predictive supervisory control (iPSC) technical solution of the disclosure combined with the supervisory control algorithm based on optimization can globally optimize vehicle energy-saving and emission-reduction on line, RDE fuel consumption infinitely approaches the global optimal solution (that is, RDE fuel consumption minimization), which can be adapted to any human or AI driver (that is, L0 to L5); In addition, the advanced automatic driving (L3-L5) full stack technology has no correlation with the energy-saving and emission-reduction optimization task of the pulse-control ACE heavy-truck, under the condition that the vehicle total weight, route and freight time are the same, the L3-L5 level automatic driving system has no influence on the RDE fuel consumption of the pulse-control ACE heavy-truck.

Referring to Fig. 7, the after-treatment system of the modern diesel engine 101 of the ACE heavy-truck 010 may include the following modules: The exhaust gas outlet of the turbocharger (T) 302 may be viewed as a mechanical interface between the engine body and the aftertreatment system, a catalyst electric heater (ECH; "catalytic electric heater" for short) The configuration of 301 may be a section of exhaust gas outlet coupled to turbocharger 302 and integrated aftertreatment system 305 ("single-tank system" for short). the inlet of the stainless steel pipe with heat-resistant insulating outer layer, the ECH inner part comprises a automotive grade electric heater with small engine exhaust flow pressure drop, controlled by the power controller (PCU) 303, the engine engine exhaust passing through the ECH 301 can be quickly heated (second level) to more than 250 degrees C, The individual catalyst modules, such as DOC 310, DPF 320, SCR 340, and the like, within the single-tank system 305 may also be rapidly heated. Preferably, the power controller 303 based on the IGBT power electronic technology obtains the high voltage direct current from the junction point (X) 125 of the ePSD 123, which can adopt the pulse width modulation (PWM) control strategy and configure the communication capability of the CAN bus, The rated power of ECH 301 and PCU 303 should be at least 35 kW. Unless specifically indicated, the strong power controller or weak power microprocessor or microcontroller based on IGBT power electronic technology in the disclosure has bidirectional CAN bus communication capability. satisfying the current emission regulation (US EPA-2010; Oro-VI; A mainstream diesel engine integrated after-treatment system 305 of (-6) comprises the following modules: a diesel oxidation catalyst (DOC) 310, a diesel particulate trap (DPF) 320 connected in series, a selective catalytic reduction (SCR) 340 connected in series, a urea leakage catalyst (ASC) connected in series, and an exhaust pipe 360 connected in series; The urea nozzle (UI) 330 is located between the outlet of the DPF 320 and the inlet of the SCR 340, which can dynamically and accurately control the discharge of the liquid tank (DEF; the urea spraying time and dosage of the urea tank) 331.

Preferably, the rated electric power of the catalytic electric heater (ECH) 301 is in the range of 35 kW to 70 kW, and the rated electric power of the power controller (PCU) 303 is in the range of 30 kW to 60 kW; the ECH and PCU whose rated power is less than the lower limit are lower in cost, but the quick heating ability is limited, which is a suboptimal solution; the ECH and PCU with rated power greater than the upper limit have high quick heating ability, but the cost is obviously increased, which is a suboptimal solution; Because the cost of the PCU 301 is obviously higher than that of the ECH 301, the rated power of the ECH should be greater than that of the PCU, and the power is over-matched moderately. Other embodiments also include moving the location of the ECH 301 in Figure 7 back into the interior of the single-box system 305, after the DPF 320 and before the SCR 340. The urea nozzle (UI) 330 may include a kilowatt-level electrical heating function. The engine after treatment system (EATS) intelligent thermal management technology (iTM) in the present disclosure adopts the ECH 301, PCU 303, the UI 330 and other modules dynamically adjust the working temperature range (250 degrees C to 550 degrees C) of various catalysts (especially SCR 340) in the single-box system 305 through electric electronic control and electric heating, so as to ensure no matter how the working condition of the whole vehicle is, The engine after treatment system always works in the high-efficiency area of various catalysts so as to reduce the pollutant emission of the whole vehicle to the utmost extent.

At present, the US heavy-truck industry has not yet found a technical solution capable of satisfying the CO2 emission limit (i.e., fuel consumption) of the GHG-II regulation of the diesel heavy-truck 2027 and the ultra-low NOx emission limit (90 % lower than the EPA-2010 limit) of the California ultra-low NOx emission limit; Industry experts generally believe that feasible technical solutions should include global design upgrading (hardware and software aspects) of modern diesel engine ontology after-treatment systems, such as engine cylinder deactivation technology (CDA), A prepositive "off-lamp selective catalytic reductor" (LO-SCR, including another urea nozzle) or the like is added between the outlet of the turbocharger 108 and the inlet of the integrated aftertreatment system 305; The main function of LO-SCR is that when the temperature of the exhaust gas at the outlet of the turbocharger of the diesel engine (ToT-Turbo Out Temperature) is lower than 250 degrees C (the "turn-off" LO-Light Out), which heats up at a faster speed and takes on the main task of reducing NOx emission under the low-load (power or torque loading rate is less than 30 %) of the diesel engine or under the idle speed working condition; the LO-SCR is configured to increase the volume, weight, complexity of the after-treatment system, Besides the cost, because the LO-SCR is arranged in front of the DOC and DPF, it will obviously reduce the performance and service life of the LO-SCR in order to bear the adverse effect of the substance in the exhaust gas, such as particulate matter or sulphur, etc. The intermittent high temperature (500 + degrees C) desulfurization regeneration (Desulfation) of the LO-SCR by changing the working condition of the engine will consume the fuel to improve the CO2 emission.

The disclosure Claims a diesel engine and other automotive grade electromechanical components based on the current global production capacity, The technical solution of the pulse-controlled ACE heavy-truck iMMH powertrain capable of satisfying the CO2 limit of American GHG-II regulation and the NOx limit of ultra-low emission Omnibus regulations of California diesel engine (90 % lower than EPA-2010) at the same time in 2027 mass production and commercial production, the specific technical measures are as follows: The mass commercial engine 101 (diesel or natural gas) with VVA mechanism is selected, with reference to Figs. 1A or B and Fig. 2 and the foregoing embodiment, to build an iMMH powertrain system of ACE heavy-truck 010; using the series-hybrid iSS or parallel-hybrid iPS control strategy to convert the AEC engine (AEC) of the existing technology into a pulse-control engine (DPC); The VVA pulse-controlled engine is implemented with a binary cylinder deactivation (bCDA) control strategy (see Fig. 7 and the foregoing embodiment); building an engine after treatment system with intelligent thermal management function (iTM); by VCU 201 and ECU 102, ePSD 123, BMS (battery management system) of battery pack 130, TCU 151, PCU 303b, UIU 330 and other control modules cooperate with each other, according to the intelligent predictive supervisory control (iPSC) strategy and algorithm of ACE heavy-truck 010, dynamically controlling the pulse-control engine 101, double motor 110&140, clutch 111, transmission 150, battery pack 130, catalytic electric heater (ECH) 301, the urea nozzle (UI) 330 and other sub-system of the operation condition, respectively independently optimizing vehicle energy-saving and emission-reduction, realizing ACE heavy-truck RDE fuel consumption (CO2) and emission (NOx) at the same time, satisfies the US mandatory law (federal GHG-II law; California's Ultra Low Emission Combining Law) limits on CO2 and NOx in new diesel heavy-trucks since 2027; The technical solution is diesel oil NZE for short.

If the ACE heavy-truck 010 needs to meet the US Federal GHG-II (CO2 emission) regulation and EPA-2010 regulation (NOx regulation) at the same time, in the optimal performance-price ratio embodiment, the iMMH powertrain of the common engine 101 without VVA mechanism can be used (see Fig. 1 and Fig. 2), using serial-to-mix iSS or parallel-to-mix iPS control strategy to add iPSC strategy and algorithm; The common type pulse-control engine can not implement binary cylinder stop control (bCDA), but still can implement binary oil-break control strategy (bCCO-binary-cylinder-cylinder-Cut-Off), At this time, the common single-box system 305 without the intelligent thermal management function (iTM) is the after-treatment system; In North America, the modern second-hand diesel heavy-truck (satisfying the EPA-2010 regulation) can be legally and irregularly converted into ACE heavy-truck, preferably the technical solution of the embodiment (common pulse-control engine + bCCO control strategy), The converted ACE heavy-truck not only can reduce the RDE fuel consumption by 25 % to 30 %, but also can reduce the RDE emission by 75 % +. Obviously, in comparison with the binary oil-cutting technology (bCCO), the binary cylinder-deactivation technology (bCDA) has the following advantages: firstly, it can completely avoid the machine-out cold engine exhaust in the low-state operation mode of the pulse-controlled engine to reduce the temperature of each catalyst module in the single-box system 305 to below 250 degrees C, ensuring that the after-treatment system always operates in the high-efficiency area (EATS heat preservation strategy), which is beneficial for emission reduction; secondly, it reduces the loss of the pump under the low-state operation mode of the pulse-control engine, which is good for saving energy; The disadvantage is that the former needs to upgrade the hardware of the modern mass-production common engine to replace the advanced engine configured with VVA mechanism, and the system cost is slightly increased.

In the disclosure, the near-zero emission (NZE) diesel heavy-truck especially refers to the diesel heavy-truck capable of being used by mass production merchants satisfying the US federal GHG-II regulation 2027 and California ultra-low NOx emission Omnibus regulations (NOx ratio EPA-2010 limit value is reduced by 90 %), Currently, the industry is actively looking for NZE diesel heavy-truck technical solution with high performance-to-cost ratio and available for commercial use. In the diesel NZE technical embodiment, a large six-cylinder diesel engine with a single-channel variable valve actuation mechanism (VVA-1) is preferably used; A large six-cylinder diesel engine with a multi-channel variable valve actuation mechanism may also be used, such as VVA-2, VVA-3, VVA-6, VVA-12, and the like.

It needs to stress, aiming at implementing iPS control technology for the hybrid vehicle, in fact, only one large motor (mixed P1 or P2 position) with peak torque or power equivalent to the engine is needed to be connected in parallel with the engine 101, so as to jointly drive the vehicle by means of torque superposition, the analog electric control engine of the vehicle can be converted into a digital pulse-control engine through the software of the VCU 201 to realize the parallel hybrid powertrain defined by the software; it is not forced to use double motors (110 and 140) and clutch 111; It is apparent that the ACE parallel heavy-truck of a single motor can be seen as an example of the configuration of the dual-motor iMMH powertrain shown in Figure 1A. Referring to Fig. 1A and Fig. 2, an embodiment of a single-motor parallel-hybrid powertrain is as follows: the generator (MG1) 110 and the motor controller (MCU1) 121 are cancelled, but the torque coupler (mTC1) 103, the clutch 111, the torque coupler (mTC2) 104, a traction motor (MG2) 140; At this time, the electric power splitting device (ePSD) 123 is simplified from a three-port power electronic network to a dual-port network (closed port I; reserving port II&III); Preferably, the maximum continuous power value (i.e., rated power) of the permanent magnet synchronous (PMSM) or alternating current asynchronous (ACIM) motor (MG2) 140 is in the range of: 175kW to 250kW, the maximum pulse power value (10 seconds) range: 250 kW to 420 kW; The maximum continuous power value and the maximum pulse power value of the motor controller (MCU2) 122 should be slightly higher (at least 10 % higher) than the corresponding limit value of the motor (MG2); The remaining standard or selected sub-systems in Figures 1A and 2 remain the same as the above-described dual-motor hybrid embodiment. It will be apparent that the maximum power (continuous or pulsed) of the motor (MG2) 140 can also normally operate beyond the preferred range system; However, the motor is too small (less than 175 kW) to reduce the weight and cost, but the vehicle propulsion performance property and energy-saving and emission-reduction optimization effect are also reduced; but the motor is too large (more than 250kW), which can improve the vehicle power performance and energy-saving and emission-reduction optimization effect, but the weight and cost are obviously increased; both are suboptimal; Other single-motor mixed embodiments further include arranging the traction motor (MG2) in the mixed motion P1, P3, The P4 position, but at the P3 or P4 position, because the motor (GM2) cannot amplify the torque through the transmission 150, has a negative effect on the ACE heavy-truck 010 vehicle power performance and the normal operation of the DPC engine 101, which is a sub-preferred. In the disclosure, unless it is specifically stated, the duo-motor iMMH powertrain comprises two special examples of duo-motor pure series hybrid or pure parallel hybrid, and also comprises the special example of single-motor parallel hybrid powertrain.

Fig. 8A shows various operating areas and modes of the battery pack 130, wherein the lower red line LRL, the best lower limit BLL, the best middle line BCL, the best upper limit BUL, The five SoC values of the upper red line URL are determined by the battery pack supplier, the simplest is five positive numbers less than 100 % arranged in order from small to large, the more advanced and complex is five known parameters considering that the battery cell aging mechanism changes along with the battery pack SoH (health state), showing in the form of a table or a matrix; The high-efficiency region of the battery pack is BLL <SoC <BUL, the safe operation region is LRL <SoC <URL, and the optimum center line BCL represents the SoC value (preferably ranging from 50 % to 60 %) with the optimum charging and discharging performance and the longest cycle life of the battery pack 130. The transient SoC function of the online precise control battery pack 130 has high technical difficulty (low signal-to-noise ratio, sub-second time delay, slow algorithm convergence and bad robustness), and has no practical meaning for the energy-saving and emission-reduction optimization of the ACE heavy-truck 010, and belongs to the double-effort half; The average SoC function (equation (MTA)) of the battery pack 130 is accurately controlled on line, and the technical difficulty is obviously reduced (the signal-to-noise ratio is high, the time delay is minute level, the algorithm is fast in convergence, strong in robustness), the key for realizing energy-saving and emission-reduction optimization for the ACE heavy-truck stably for a long time (at least five years or one million kilometers), belonging to the half-effort double; The ACE heavy-truck can adopt mutually independent dual-ring control strategy: 1) realizing dynamic driving task (DDT) by (sub-second level) fast control loop, 2) realizing predictive SoC control of battery pack and vehicle RDE fuel consumption minimization by (minute level) slow control loop, belonging to half-effort multiple, One of the inventive points of the present disclosure is to dynamically control the average SOC function of the battery pack 130 without actively controlling the transient SOC function; The three-stage curve in Fig. 8A represents an average SoC, and, unlike the prior art, the three operating modes of the battery pack 130 of the present disclosure are defined by the average SoC (which is not a transient state and belongs to half the effort), including a charge depleting CD, a charge retention CS, and a charge increase CI; The charge and electric charge in the disclosure can be regarded as synonym; The average SoC function is dynamically adjusted by the unique control variable of the duty-cycle function of the pulse-control engine 101 and the predictive SoC control function (slow control loop) of the battery pack 130 is one of the main inventive points of the present disclosure. Fig. 6B shows a normalized battery pack loss function, the transverse axis independent variable is preferably a transient SoC function of the battery pack 130, and an average SoC function may also be used; when the battery pack is operated in the high-efficiency region (BLL <SoC <BUL), the loss function value is zero (i.e., no penalty), and when the battery pack is operated in the non-high-efficiency region (i.e., the operable region in the operation region but outside the high-efficiency region), the SoC function value is closer to the lower red line LRL or the upper red line URL, the higher the penalty value is, the higher the equivalent fuel consumption is; The battery management system (BMS) of the battery pack 130 has a self-protection function outside the red line (i.e., outside the safe operation area), and can automatically cut off the charging and discharging of the battery pack (LRL can be charged but is prohibited from discharging; URL can discharge but forbid charging), in fact, the battery pack cannot be operated out of the red line; The primary function of the loss function is to provide the vehicle supervisory control strategy with a multi-area constraint condition for the operation of the battery pack, and in the optimized supervision control algorithm, the constraint condition for the operation of the battery pack is converted into an equivalent fuel consumption item (equation (SC-3) or (RL-lc)) in the target function.

Referring to Fig. 1 and Fig. 2, the advantages and disadvantages of the following two embodiments are compared; One embodiment is a dual-motor series-parallel powertrain, the peak power of the engine 101 is 300 kW, and the rated powers of the dual-motor (MG1/MG2) 110 and 140 are 125 kW and 175 kW, respectively; Another embodiment is a single motor parallel powertrain, the peak power of the engine 101 is 300 kW, and the rated power of the motor (MG2) is 300 kW; the other sub-systems (matching or selecting) of the two sets of systems are the same; According to the current development situation of the global low rotating speed large torque automotive grade motor industry, double motor system (125kW + 175kW; the cost probability of the motor controller) is lower than the single large motor (300kW; comprising a motor controller), the former is obviously better than the latter in the aspects of diversification of the supplier, ensuring low cost and high quality supply; The two systems have substantially the same comprehensive power, and can convert the analog electric control (AEC) engine 101 of the prior art into a digital pulse-control (DPC) engine through the technical measures of pulse modulation (serial-to-mix iSS or parallel-to-mix iPS); However, the former has several more system functions (such as intelligent mode switching (iMS), series-parallel mode, duo-motor redundancy and so on) than the latter, in the aspect of optimizing the energy-saving and emission-reduction of the whole vehicle at the same time, the former (duo-motor parallel connection) has more control grips than the latter (single-motor parallel connection), and the performance is better; Therefore, the former (parallel to parallel) is higher than the latter (parallel to parallel) in comprehensive performance-price ratio, which is a preferred embodiment.

One of the long-term pain points of the global heavy-truck industry is as follows: under the same vehicle configuration parameter (engine displacement, total weight and so on) and freight route, the real-world fuel consumption of the long-haul heavy-truck is closely related to the driving style and level of the driver, the statistical spread of the RDE fuel consumption value is as high as 25 % (see Fig. 6D); The fuel-saving driver is good at making full use of the huge inertia of the high speed heavy-truck and the observation and memory of the longitudinal grade function distribution of the forward mile-level road section, reducing as much as possible stepping on the accelerator or braking, stably controlling the vehicle speed in a narrow speed band, However, the fuel-saving driving mode requires the driver to pay extra brainwork (that is, wasting money); The fuel-consuming driver will not make full use of the huge inertia of the high-speed heavy-truck, and will not observe and remember the longitudinal grade function distribution of the front mile level road section, and will step on the accelerator or brake at high frequency to maintain the vehicle speed or overtake, each accelerator or brake means to increase the fuel consumption-fuel charge or discharge. The human must fly in the sky, and cannot simply imitate the birds and design the aircraft with vibrating wings, but designs the aircraft according to the aerodynamics first principle and control theory; In the same way, human needs to automate the energy-saving and emission-reduction optimizing task of the long-haul heavy-truck, and cannot simply imitate the experienced driver, so as to find the first principle for solving the energy-saving and emission-reduction problem of the long-haul heavy-truck.

The first principle of optimizing energy-saving and emission-reduction of the long-haul heavy-truck is the vehicle dynamic equation (1-1); the human driver cannot solve mentally or through pen and paper the vehicle dynamic equation in real-time (second-level time delay), It cannot quantitatively (relative error is less than 10 %) dynamically predict the distribution of (minute level or mile level) vehicle road power space-time-varying function in the electronic horizon, and the fuel-saving driver can only have rough memory for the longitudinal grade distribution of the familiar road section in the national range; the vehicle-mounted computer (such as VCU 201) can according to the static parameter of ACE heavy-truck 010 (engine displacement and power, motor power, battery pack capacity, vehicle total weight, 3D map, wind resistance coefficient, wheel resistance coefficient and so on) and dynamic data (vehicle speed, acceleration, road longitudinal grade, time, The vehicle positioning and the like), the vehicle dynamic equation (1-1) is easily dynamically solved with a refreshing frequency of at least 0.2 Hz and a relative error of less than 10 %, real-timely and accurately predicting the vehicle road power space-time-varying function distribution (predicting the road power for short) in the electronic horizon (hour level or hundred miles level); at the same time, various sensors and controllers (such as ECU 102, GNSS 220, VCU 201, MCU1 121, MCU2 122, battery pack 130 and so on) of the ACE heavy-truck 010 can be measured and computed at a refreshing frequency higher than 2 Hz, the vehicle is stored, the cloud platform uploads the heavy-truck to actually measure the fuel-saving data-set. Obviously, the fuel-saving data-set can contain the actual transient road-load power; The actual road-load power space-time-varying function and the predicted road-load power space-time-varying function are projected to the longitudinal one-dimensional space of the vehicle driving road and the difference value is computed, and the vehicle-end and the cloud platform can cooperate with each other (see Fig. 5A) by means of the machine learning (ML) algorithm, so as to automatically and continuously improve the precision of the VCU 201 for predicting the road-load power; The real-time and accurate prediction of the distribution of the road-load power function in the Baiyingli electronic horizon is the technical basis for optimizing the energy-saving and emission-reduction of the vehicle at the same time by the long-haul ACE heavy-truck 010 through the intelligent cruise control (iCC) technical measure; VCU 201 needs an hour-level or a hundred miles-level electronic horizon as the planning space for the whole vehicle's regulatory control strategy (SCS) to prepare for the rainy days. The average SoC function (SoC) of the battery pack 130 is predictively controlled by dynamically controlling the duty-cycle of the transient power function of the DPC engine 101 and real-time predicting the distribution of the electronic horizontal line inner road-load average power and the engine average power (equation (MTA)), The battery pack 130 is made to be in charge sustaining (CS), charge depleting (CD), one of the three modes of charge increase (CI) stably operates or smoothly switches between modes, ensuring that the battery pack 130 works in its high-efficiency region (BLL <SoC <BUL) for most of the time (90 % +), The whole time (100 %) runs in its safe running area (LRL <SoC <URL), realizing that the DPC engine 101 of the ACE heavy-truck minimizes the real-world fuel consumption emission in the whole freight event, and the actual energy-saving and emission-reducing effect of the ACE heavy-truck is basically unrelated to the level of the driver and the performance of the engine; In other words, any driver can realize the lowest fuel consumption of the industry in accordance with the pulse-control ACE heavy-truck and full-automatic fuel-saving ML algorithm of the disclosure, and the bright spot is very valuable for all vehicle fleets.

The essence of the energy-saving and emission-reduction optimization problem of ACE heavy-truck 010 is the technical problem of the whole vehicle seeking the best supervisory control strategy (SCS), the disclosure uses the combined technical measures such as intelligent cruise control (iCC) of ACE heavy-truck 010, the whole vehicle online real-time global best supervisory control strategy is realized in industrialization; the iCC passes through two mutually decoupled control rings (i.e., sub-second-level fast ring or minute-level slow ring), under the premise of ensuring the power performance and brake effectiveness of the whole vehicle, the ACE heavy-truck 010 aiming at each freight event customization (mize) and implement real-time global (Real-time & Global) energy-saving emission-reduction optimization control strategy; the inner layer of the iCC is a sub-second level fast control loop, at any time, no matter the working condition point of the DPC engine 101 is in high-state, low-state, or transient state transition, the VCU201 can dynamically direct the ePSD 123, the duo-motor 110&140, the battery pack 130, the clutch 111 and so on, generating synchronous complementary hundred-kilowatt level electric power function, the pulse-control engine of the hundred-kilowatt level mechanical power function cutting peak filling valley, real-time satisfy vehicle dynamic equation (1-1) and series-hybrid equation (2-4) or parallel-hybrid equation (3-3); It is obvious that the fast ring only pays attention to how to dynamically distribute the transient power between the engine 101 and the battery pack 130 at the present time, so as to ensure the transient power of the ACE heavy-truck 010. the braking performance and the transient local optimization of the engine energy-saving and emission-reduction are not directly related to the real-time global energy-saving and emission-reduction optimization of the engine; the outer layer of the iCC is a minute-level or sub-hour-level slow control loop, the VCU 201 firstly computes (hour-level or hundred miles-level) electronic horizon intra-prediction road-load transient power function and prediction road-load average power function (see equation (MTA)) at a refreshing frequency higher than 0.5 Hz, then according to the specific energy-saving and emission-reduction algorithm (based on rule or based on optimization) to dynamically adjust and predict the difference distribution between the average road-load power and the average power function of the DPC engine 101 in the electronic horizon (hour level or hundred miles level) (adjusting the duty-cycle of the DPC engine; series-hybrid equation (2-4A) or parallel hybrid management equation (3-3A)), active control battery pack 130 in CS, CD, one of the three modes of CI works stably or smoothly switches among the three modes (that is, predictive state of charge control PSC), so as to ensure that the battery pack 130 works stably in its high-efficiency area for a long time and seek global maximization of the regenerated electric energy of the battery pack or the accumulated throughput of the total electric energy, Finally, the global energy-saving and emission-reduction optimization (Real-time and GlobalOptimizationin real time) of the DPC engine 101 with specific freight event is realized; (RDE fuel consumption is minimized); Obviously, the slow control loop only pays attention to the energy-saving and emission-reduction of the real-time global optimized vehicle, and does not pay attention to the transient torque or power distribution between the engine and the battery pack (that is, between the engine and the motor); and the slow ring and the fast ring are decoupled, and they can be independently controlled. It needs to be emphasized that the combined technology of said pulse-control engine and predictive state of charge control and so on makes the dynamic driving task (DDT; especially transient dynamic performance and braking performance of vehicle; the real-time global energy-saving and emission-reduction optimization task (controlled by the slow-speed ring) controlled by the fast ring) and the vehicle is completely decoupled, the two can be independently controlled; In other words, the DDT is charged by human drivers (SAE L0 ~ L2) or AI drivers (L3 ~ L5), and the energy-saving and emission-reduction optimization task of the ACE heavy-truck is completely charged by the fuel-saving robot (namely the supervisory control algorithm of the focusing energy-saving and emission-reduction of the pulse-control ACE heavy-truck); the energy-saving and emission-reduction optimization task of the pulse-control ACE heavy-truck is equivalent to the I-go under the computer; According to the vehicle RDE fuel consumption and emission minimization performance index, the fuel-saving robot can be better than the human driver.

In the preferred embodiment, the PWM period TPWM of the DPC engine 101 is one minute, the rolling average window TMAW is three minutes (i.e., three PWM periods), and the electronic horizon time period Tehz is one hour or less in the vehicle arrival time Tttd; ACE heavy-truck 010 when the expressway is normally running (average vehicle speed is higher than 50 miles per hour), due to the sudden deceleration of the vehicle in front of the same lane or other traffic conditions, ACE heavy-truck 010 may need to be suddenly decelerated to maintain the driving safety distance, However, most of the sudden drop in the transient speed is temporary disturbance, and the speed of the ACE heavy-truck will recover to the speed of the highway traffic flow (higher than 50 miles per hour) within one minute; Because the ACE heavy-truck 010 has super-strong regenerative braking capability (the 10-second pulse regenerative braking power can exceed 500 kW in the parallel-hybrid mode), the vehicle kinetic energy at the time of braking can be recovered with a closed-loop comprehensive efficiency of about 72 %, such temporary disturbance only has a significant effect on the transient vehicle speed, the influence on the global fuel consumption emission of the whole vehicle can be ignored; the quick ring of the supervisory control strategy (SCS) is in charge of dynamically adjusting the transient speed and acceleration of the vehicle, ensuring the transient dynamic performance and braking performance of the vehicle, the response time of the whole vehicle layer total torque kilometer level jump or total power hundred-kilowatt level jump is ten millisecond level (due to the motor and battery pack); Obviously, the relative error of the VCU 201 for predicting the distribution of the average predicted road-load power function in the electronic horizon in the next hour is obviously lower than the relative error of the transient predicted road-load power function (i.e., the variance between the predicted value and the actual value), at the same time, the robustness of the average prediction road-load power function to various noises and errors is obviously better than the transient state prediction road-load power function; The slow speed ring has sufficient time (sub-hour level) to dynamically control the battery pack 130 at CS, CD, one of the three modes of CI is stably operated or smoothly switched, the battery pack is subjected to predictive charge control (PSC), the maximum value of the regenerative charge turnover rate or the maximum value of the total charge turnover rate is sought, so as to realize ACE heavy-truck 010 real-time global optimization RDE energy-saving and emission-reduction; It should be emphasized that the energy-saving and emission-reduction optimization algorithm based on the iCC and other combination technologies of the disclosure is an online real-time global (On-line Real-time Global) optimization algorithm, which is substantially different from the supervisory control strategy adopted by the internal combustion engine vehicle or hybrid vehicle in the existing technology, The former (iCC) has lower vehicle-end computing power and storage requirement than the latter (existing technology), the algorithm convergence is faster and the robustness is higher, the final performance index of the algorithm is better, the vehicle RDE fuel consumption emission ($CO_2$ and $NO_x$) can be minimized at the same time, and multiple benefits such as "thousand vehicle surface" can be realized.

In the present disclosure, the operating point of the engine 101 is uniquely determined by the instantaneous rotational speed and torque at the engine flywheel, the iMMH powertrain (including the engine 101, the motor 110 & 140, the ePSD123, the battery pack 130, the clutch 111, the transmission 150, The operating condition of the drive axle 160&180 etc.) or the ACE heavy-truck 010 refers to the instantaneous rotational speed and the total torque of all the driving wheelsss of the vehicle; For the ACE heavy-truck 010, the vehicle condition is equivalent to that of the iMMH powertrain, but not equivalent to that of the engine 101; the ACE heavy-truck working condition and the engine working condition are independent from each other and can be independently controlled. The point working condition, line working condition or surface working condition of the engine respectively refers to the projection set of all transient working condition points in the universal characteristics curve plane (the rotating speed is the transverse shaft and the torque is the longitudinal shaft) in the running time of the engine, which is several ( to ) fixed points, lines or surfaces; Obviously, the running condition of the vehicle is always the surface condition. Referring to Fig. 4A, one of the distinguishing features of the present disclosure from the prior art is that the digital pulse-control (DPC) engine 101 of the ACE heavy-truck 010 can always operate in a line condition (series hybrid or parallel hybrid), wherein at least one line condition is in the high-state high-efficiency region of the engine, the other line working condition is in the low-state high-efficiency area of zero emission and zero fuel consumption of the engine, and the two line working conditions can be smoothly switched in second level; The traditional analog electric control (AEC) engine of the internal combustion engine heavy-truck or hybrid heavy-truck (especially mixed or hybrid heavy-truck) in the existing technology is surface working condition, which cannot stably operate in one of two pre-set fixed line working conditions (including quick switching) for a long time.

In the existing technology, the transient power function of the analog electric control (AEC) engine 101 of the internal combustion engine heavy-truck or the hybrid heavy-truck is similar to the vehicle road-load power function, which are both analog slow change time-varying function, when the vehicle normally runs (except for emergency brake), The transient power function of the engine rarely appears the jump of the hundred-kilowatt level in the second level time (especially the jump from the low-state to the high-state; See Fig. 4A and Fig. 6A); The transient power function of the digital pulse-control (DPC) engine 101 configured by the ACE heavy-truck of the disclosure is a bipolar non-equal amplitude pulse width modulation (PWM) function, in each PWM period (minute level period), At most two hundred-kilowatt-level second-level jumps (one low-state to high-state jumps and/or one high-state to low-state jumps) can occur; One of the necessary technical features of the DPC engine of the present disclosure is that no matter how the actual duty-cycle of the ACE heavy-truck 010 is, the transient power function of the engine is not only the second-level analog slow-changing function at most time, It also frequently (minute level interval) appears hundred-kilowatt level jump (second level transition time). Obviously, the transient power function of the DPC engine and the transient power function of the AEC engine of the existing technology have the intrinsic difference in the representation form of the time domain; The physical explanation corresponding to the above two different engine transient power function expression forms is as follows: In the prior art, all operating working conditions of the AEC engine 101 are shown in the first quadrant of the universal characteristics curve of the engine in a complex surface working condition of point cloud distribution, wherein some non-negligible working condition points (10 % + time probability) are located outside the combustion high-efficiency area of the engine; and all operating operating condition points of the DPC engine 101 are presented in at least two simple line operating conditions within the first quadrant or the fourth quadrant of the engine universal characteristics curve (see Fig. 4A), wherein the high-state working condition point in the first quadrant almost all (99 % + time probability) in the combustion high-efficiency area of the engine can be preset working condition line, ensuring DPC engine can optimize the real-world fuel consumption and discharge at the same time; the low-state working condition point in the fourth quadrant is all in the preset zero-fuel consumption zero-discharge working condition line (that is, another high-efficiency working condition point); The time probability that the transient combustion low-efficiency working condition point appears during the bidirectional switching between the high-state and the low-state of the engine is less than 1.5 %, and the influence of the low-efficiency working condition point with small probability to the actual accumulated fuel consumption and emission of the DPC engine is basically negligible.

An intelligent mode switching (iMS) technology is a member of an intelligent cruise control (iCC) combination technology set, and the preferred embodiment is as follows: VCU 201 dynamically computes the transient prediction road-load power function distribution and the average prediction road-load power function distribution in the hour-level electronic horizon at a refreshing frequency of not less than 0.5 Hz, In the highway section where the absolute value of the space-time-varying function of the average predicted road-load power is less than 100 kW and the longitudinal distance is greater than 0.5 miles, it is preferable to switch from the parallel-hybrid mode (the clutch 111 is closed) to the series-hybrid mode (the clutch 111 is disconnected), when the average prediction road-load power absolute value or average actual road-load power is more than 100kW, preferably switching back to the parallel-hybrid mode; Obviously, the mechanical power consumption or power consumption of the DPC engine 101 in the series-hybrid iSS low-state working condition is lower than the mechanical power consumption or power consumption of the series hybrid iPS low-state working condition, and the iMS can further reduce the fuel consumption by 1 %; Because the traction motor 140 is always mechanically connected with the transmission 150, the transmission will never be in neutral gear operation, the iMS and the heavy-truck neutral gear sliding (commercial name eCoast or Smart-Coast) of the existing technology have obvious difference in technical measures and effect, The former is more effective than the latter, and the fuel-saving effect is better.

The technical problem to be solved by the disclosure is how the long-haul ACE heavy-truck aims at any path or traffic condition, under the premise of ensuring vehicle performance (power/brake) industry leading and RDE pollutant emission stable standard, the RDE fuel consumption (that is, the accumulated fuel consumption is minimized) of the vehicle is completely optimized on line, which is a long-term problem of the road freight industry; the adopted " technical solution " - based on pulse-control engine, pulse-control iMMH powertrain, pulse-control ACE heavy-truck, intelligent predictive supervisory control strategy (iPSC), and battery pack predictive SoC control (PSC) and so on; The achieved "technical effect" - taking the modern diesel heavy-truck as the comparison reference, the ACE heavy-truck vehicle power performance and brake effectiveness industry is leading, the RDE fuel consumption (CO2) of the ACE heavy-truck is reduced by 25 % to 30 % and the fuel consumption statistical spread is reduced by 85 % +, The fuel-saving effect is independent of the level of the driver and the configuration of the engine (displacement, peak power and so on), and the emission of the RDE pollutant (NOx) is reduced by 75 % to 90 %; The disclosure easily and stably satisfies the current fuel consumption and emission regulation of the internal combustion engine heavy-truck in the three places in the US and Europe, which is a novel technical solution capable of satisfying the strict enforcement regulation of greenhouse gas emission and pollutant emission in the three places in the US and Europe aiming at the new original heavy-truck after 2027. It should be emphasized that the pulse-control engine technology in the disclosure is the basic core technology of the energy-saving and emission-reduction optimization integral technical solution of the hybrid vehicle, the pulse-control engine technology is actually an advanced dynamic engine start-stop technology, the engine static start-stop technology of the existing technology can be regarded as a special example of the pulse-control engine technology; As mentioned above, compared with the static engine start-stop technology, the pulse-control engine technology has unique technical features and obvious technical advantages.

Although the present disclosure describes the subject matter in a language specific to structural features and/or method logic actions, it is to be understood that the subject matter defined in the appended Claims may not be limited to the specific features or actions described above; On the contrary, the specific features and actions described above are merely exemplary forms of implementation of the Claims.

**Claims**

1. A hybrid heavy-duty truck, comprising:

a driving motor mechanically connected to the drive-shaft of the hybrid heavy-duty truck;
a generator set and at least one battery pack, each capable of independently providing electric power to the driving motor, wherein the generator set includes an engine and a generator mechanically connected bi-directionally, and the engine can be mechanically connected to or disconnected from the drive-shaft; and
a vehicle controller configured to:

compute the vehicle average road-load power function distribution based on the predicted vehicle speed function distribution within the electronic horizon; control the transient torque function distribution of the engine to adjust the engine average power function distribution, and to control the battery pack average state of charge function distribution based on the difference between the vehicle average road-load power function distribution and the engine average power function distribution within the electronic horizon, so as to maximize the regenerative state of charge turnover rate or the total state of charge turnover rate and enable the battery pack to operate in the high-efficient zone with a high probability,
wherein the average power function is the result of taking a rolling average of the transient power function with a pre-defined rolling time window,
wherein the length of the rolling time window is much less than the time length of the electronic horizon,
wherein the value of the vehicle transient road-load power function distribution is calculated based on the vehicle configuration parameters, the vehicle dynamics equation, the predicted vehicle speed function distribution, and the 3D road map data in the electronic horizon.

2. The hybrid heavy-duty truck of claim 1, wherein the vehicle controller is further configured to:
predictively adjust the average state of charge (SOC) function distribution of the battery pack by dynamically controlling the difference between the vehicle average road-load power function distribution and the engine average power function distribution within the electronic horizon, so that the battery pack either operates stably in one of the three working modes of charge sustaining (CS), charge depleting (CD), and charge increasing (CI), or switches dynamically among these three modes.

3. A hybrid heavy-duty truck, comprising:

a driving motor mechanically connected to the drive-shaft of the hybrid heavy-duty truck;
a generator set and at least one battery pack, each capable of independently providing electric power to the driving motor, wherein the generator set includes an engine and a generator mechanically connected bi-directionally, and the engine can be mechanically connected to or disconnected from the drive-shaft; and
a vehicle controller configured to:

control the engine to operate stably at least one pre-set high-state operating point or a pre-set low-state operating point at any moment and rotational speed, or to switch between the high-state operating point and the low-state operating point bi-directionally, where the probability of the engine stable operation at either the high-state or the low-state is significantly greater than that of engine switching, and
regulate the engine average power function distribution by dynamically adjusting the duty cycle of the pulse-controlled engine within each PWM period, based on the vehicle average road-load power function distribution within the electronic horizon, to adjust the difference between the vehicle average road-load power function distribution and the engine average power function distribution within the electronic horizon, and to predictively shape the battery pack average state of charge function distribution within the electronic horizon, so as to maximize the regenerative state of charge turnover rate or the total state of charge turnover rate and enable the battery pack to operate in the high-efficiency zone with a very high probability,
wherein the duty cycle is the ratio of the time length during which the engine operates stably at the high-state within each PWM period to the PWM period,
wherein the average power function is the result of taking a rolling average of the transient power function with a pre-set rolling time window,
wherein the length of the rolling time window is greater than that of the PWM period and much less than that of the electronic horizon,
wherein the value of the vehicle transient road-load power function distribution is calculated based on the vehicle configuration parameters, the vehicle dynamics equation, the predicted vehicle speed function distribution, and the 3D road map data in the electronic horizon.

4. The hybrid heavy-duty truck of claim 3, wherein the vehicle controller is further configured to:
regulate the engine average power function distribution by dynamically adjusting the duty cycle of the DPC engine within each PWM period, to control the difference between the vehicle average road-load power function distribution and the engine average power function distribution within the electronic horizon dynamically and continuously, and to predictively shape the battery pack average state of charge function distribution in the electronic horizon, so that the battery pack operates stably in one of the three working modes of charge sustaining (CS), charge depleting (CD), and charge increasing (CI), or switches dynamically among the three modes.

5. A control method for regulating a hybrid heavy-duty truck according to any of claims 1 to 4, comprising:

- determining the vehicle transient road-load power function value based on the vehicle speed and geographical position, the accelerator or brake-pedal operation reflecting the driver's driving intention, vehicle configuration parameters, 3D road data in the electronic horizon, and the vehicle dynamic equation;
- selecting the transient torque of the engine to adjust the difference between the vehicle transient road-load power and the engine transient power, thereby controlling the transient charging and discharging power of the battery pack to meet the transient power balance requirements of the hybrid heavy-duty truck in real time;
- predicting the speed function distribution of the hybrid heavy-duty truck within the electronic horizon;
- calculating the vehicle transient road-load power function distribution and average road-load power function distribution within the electronic horizon based on the vehicle dynamics equation and in combination with the 3D road data and the predicted speed function distribution;
- selecting the transient torque function distribution of the engine within the electronic horizon to adjust the engine transient power function distribution and average power function distribution;
- adjusting the difference between the vehicle average road-load power function distribution and the engine average power function distribution within the electronic horizon to predictively shape the average state of charge function distribution of the battery pack within the electronic horizon, so that the battery pack stably operates stably in one of the three modes of charge sustaining (CS), charge depleting (CD), and charge increasing (CI) working modes or dynamically switches between the three modes.

6. A supervisory control method based on supervised learning or unsupervised learning for a hybrid heavy-duty truck according to claim 3 or 4, the method comprising:

- creating an input data set, the input data set including dynamic operation data of the hybrid heavy-duty truck;
- obtaining a feature set based on the input data set, the feature set including at least: longitudinal vehicle speed function, vehicle positioning function, and battery pack state of charge function, and road grade function within the electronic horizon;
- preprocessing the feature set to obtain a preprocessed feature set, the preprocessed feature set including at least the following functional distributions within the electronic horizon: the vehicle average road-load power function, the engine average power function, and the battery pack average state of charge function; and
- inputting the preprocessed feature set into a machine learning model to obtain an output result to be provided to the vehicle controller, wherein the output result is the optimal solution of the duty cycle function of the DPC engine,

wherein the machine learning model is a model obtained by optimizing an objective function during training, and the objective function includes the cumulative fuel consumption of the engine from the start point of a given freight event to a certain moment or the fuel consumption per unit distance.

7. A reinforcement learning-based supervisory control method for a hybrid heavy-duty truck according to claim 3 or 4 to implement the supervisory control method according to claim 5, the method comprising:

designing a state space, an action space, and a reward function,
wherein the state space is designed to include a multi-dimensional state vector, the state vector including at least the following functional distributions within the electronic horizon: vehicle speed, road longitudinal grade, average vehicle road-load power, and average battery pack state of charge.

8. The reinforcement learning-based supervisory control method according to claim 7, wherein,
the action space is designed to include a four-dimensional action vector comprising: the engine operating stably at a pre-defined high-state operating point, the engine operating stably at a pre-defined low-state operating point, the engine switching from a high-state down to a low-state, and the engine switching from a low-state up to a high-state.

9. The reinforcement learning-based supervisory control method according to claim 7, wherein,

the reward function is designed to include a main reward term and an auxiliary reward term,
wherein the main reward term is the negative value of the transient fuel consumption of the engine when taking an action in the state, and
wherein the auxiliary reward term is associated with a penalty function, the penalty function being used to indicate the negative value of the penalty generated when the transient state of charge function of the battery pack falls outside of the high-efficiency zone while taking an action in the state, and within the high-efficiency zone, the penalty is set to be zero.

## ACE Heavy Truck System (a)

**210**
T-Box

**201**
VCU

**230**
mWR

**102**
ECU
ICE 101

**103**
mTC1

**111**
A [ ] B
mPSD **124**

**104**
mTC2

**151**
TCU
T
**150a**

GNSS
**220**

MU
**240**

RW1

RW2

AX1
**160**

AX2
**180**

FW
Front wheel

MG1
**110**

ePSD
**123**

MG2
**140**

BP1
**130a**

BP2
**130b**

R_bk
**131**

Rear wheel 1

Rear wheel 2

——————— Mechanical M
═══════ DC Connection
═══════ AC Connection

Fig. 1A

## ACE Heavy Truck System (b)

**210**
T-Box

**201**
VCU

**230**
mWR

**102**
ECU
ICE 101

**111**
A [ ] B

**103**
mTC1

mPSD **124**

**104** mTC2

**151**
TCU
T
**150b**

GNSS **220**

MU
**240**

RW1

RW2

AX1
**160**

AX2
**180**

FW
Front wheel

MG1
**110**

ePSD
**123**

MG2
**140**

BP1
**130a**

BP2
**130b**

R_bk
**131**

Rear wheel 1

Rear wheel 2

——————— Mechanical M
═══════ DC Connection
═══════ AC Connection

Fig. 1B

116

**Electric Power Splitting Device**
**(ePSD)**

Fig. 2

Fig. 3

Fig. 4A

Fig. 4B

## Vehicle-end & Cloud-end System Architecture

Fig. 5A

Fig. 5B

**Fig. 5C**

**Fig. 6A**

**Engine Duty Ratio Function $F_{edr}(t)$**

1.0

$t_a$  $t_b$    $t_c$  $t_d$ T $_{PWM}$        2T$_{PWM}$        3T$_{PWM}$        4T$_{PWM}$        Time

Fig. 6B

Probability
Density
Function
f(x)

b) Digital Pulse Control Engine (DPC)

a) Analog Electronic Control
Engine (AEC)

Power/Torque
Load Rate

-3%              30%       50%              80%         100%
(+-2%)                                      (+-10%)

Fig. 6C

P(x)

Probability Density Function

Curve III
ACE heavy-duty trucks
Human/AI drivers
(L0~L5)

Curve II
Traditional heavy-duty trucks
AI drivers
(L3~L5)

Curve I
Traditional
heavy-duty trucks
Human drivers
(L0~L2)

| 75% Benchmark (+/-1.5%) | 90% Benchmark (+/-3%) | Benchmark (+/-13%) |
|---|---|---|

Fuel
Consumption
(L/100kM)

**Fig. 6D**

# Engine Aftertreatment System (EATS)

305

301        310    320    330      340    350

ICE 101 | TB 302 | ECH | DOC | DPF | UI | SCR | ASC

PCU
303

DEF
331

**Fig. 7**

Fig. 8A

Fig. 8B

## INTERNATIONAL SEARCH REPORT

| International application No. |
| --- |
| **PCT/CN2023/107593** |

| | |
| --- | --- |
| **A.** | **CLASSIFICATION OF SUBJECT MATTER** |
| | B60W20/10(2016.01)i; B60K6/44(2007.10)i; B60W30/18(2012.01)i; B60W50/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)

    IPC: B60W, B60K

Documentation searched other than minimum documentation to the extent that such documents are included in the fields searched

Electronic data base consulted during the international search (name of data base and, where practicable, search terms used)

    CNKI, CNTXT, WPABSC, ENTXTC, WPABS, DWPI: 乾碳国际公司, 格桑旺杰, 查为, 混合动力, 混动, 卡车, 控制, 电子地平线, 函数, 功率, 平均, 瞬时, 瞬态, 扭矩, 荷电, 电荷, 差, 高效, 纵坡, 车速, 速度, 脉冲, 脉控, 占空比; hybrid, truck, control+, horizon, function, power, average, transient, instant+, torque, charg+, difference, high, efficiency, slope, speed, pulse, duty

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 113525340 A (GANTAN INTERNATIONAL CO. et al.) 22 October 2021 (2021-10-22) description, paragraphs [0023]-[0034] and [0163]-[0270], and figures 1-5 | 1-9 |
| A | CN 113147731 A (GANTAN INTERNATIONAL CO. et al.) 23 July 2021 (2021-07-23) entire document | 1-9 |
| A | CN 108973979 A (GANTAN INTERNATIONAL CO. et al.) 11 December 2018 (2018-12-11) entire document | 1-9 |
| A | CN 114103924 A (ZHENGZHOU YUTONG BUS CO., LTD.) 01 March 2022 (2022-03-01) entire document | 1-9 |
| A | CN 114312845 A (CHONGQING UNIVERSITY) 12 April 2022 (2022-04-12) entire document | 1-9 |
| A | WO 2018104850 A1 (KPIT TECHNOLOGIES LTD.) 14 June 2018 (2018-06-14) entire document | 1-9 |

☑ Further documents are listed in the continuation of Box C.     ☑ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
| --- | --- |
| **22 September 2023** | **07 October 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/107593** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2020391721 A1 (GM GLOBAL TECHNOLOGY OPERATIONS L.L.C. et al.) 17 December 2020 (2020-12-17)<br>entire document | 1-9 |

Form PCT/ISA/210 (second sheet) (July 2022)

**INTERNATIONAL SEARCH REPORT**
Information on patent family members

International application No.

**PCT/CN2023/107593**

| Patent document cited in search report | | | Publication date (day/month/year) | Patent family member(s) | | | Publication date (day/month/year) |
|---|---|---|---|---|---|---|---|
| CN | 113525340 | A | 22 October 2021 | WO | 2021213253 | A1 | 28 October 2021 |
| | | | | EP | 4140841 | A1 | 01 March 2023 |
| CN | 113147731 | A | 23 July 2021 | EP | 4091893 | A1 | 23 November 2022 |
| | | | | WO | 2021143594 | A1 | 22 July 2021 |
| CN | 108973979 | A | 11 December 2018 | WO | 2020015762 | A1 | 23 January 2020 |
| | | | | US | 2021291803 | A1 | 23 September 2021 |
| CN | 114103924 | A | 01 March 2022 | None | | | |
| CN | 114312845 | A | 12 April 2022 | None | | | |
| WO | 2018104850 | A1 | 14 June 2018 | IN | 201621041900 | A | 29 December 2017 |
| US | 2020391721 | A1 | 17 December 2020 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Heavy Vehicle Technology Potential and Cost Analysis. Final Report for ICCT. Ritrucko, 2017
- **OSCAR DELGADO**. *European Heavy-Duty Vehicles: Cost Effectiveness Fuel-Efficiency Technologies for Long-Haul Tractor-Trailers in the 2025-2030 Timeframe*, January 2018
- **FELIPE RRODRIGUEZ**. *HDV Fuel-Efficiency Technologies*, 28 June 2018
- *Adoption of New Fuel-Efficient Technologies from SuperTruck*, June 2016
- *Pure electric, Mixing, or Alternative Fuel Heavy-trucks*, 2019
- Viable Class 7/8Electric, Hybrid and Alternative Fuel Tractors. North American Council for Freight Efficiency, 2019
- In-use NOx Evaluation and Compliance Evaluation for Modern Heavy-Duty Vehicles in Europe and United States. White Paper. ICCT, May 2020
- Comments on CARB Heavy-Duty Engine and Vehicle Omnibus Regulations. Truck and Engine Manufacturers The Association, 13 August 2020, 342